# EUROPEAN PATENT SPECIFICATION

(11) **EP 3 828 208 B1**
(45) Date of publication and mention of the grant of the patent: **23.09.2026**
(21) Application number: 19840194.5
(22) Date of filing: 23.07.2019
(51) Int. Cl.: C08F 14/26, C08J 5/18, C08J 9/00

(54) **POLYTETRAFLUOROETHYLENE AND STRETCHED BODY**
POLYTETRAFLUORETHYLEN UND GESTRECKTER KÖRPER
POLYTÉTRAFLUOROÉTHYLÈNE ET CORPS ÉTIRÉ

(30) Priority: 23.07.2018 JP 2018137567; 21.09.2018 JP 2018177519; 01.02.2019 JP 2019017364
(43) Date of publication of application: 02.06.2021
(60) Divisional application: 26199609.4
(73) Proprietor: DAIKIN INDUSTRIES, LTD., Osaka-Shi, Osaka 530-0001 (JP)
(72) Inventor: KATO, Taketo, Osaka-Shi, Osaka 530-8323 (JP); FUJIMOTO, Yohei, Osaka-Shi, Osaka 530-8323 (JP); ICHIKAWA, Kenji, Osaka-Shi, Osaka 530-8323 (JP); SATO, Hiroyuki, Osaka-Shi, Osaka 530-8323 (JP); USAMI, Ryota, Osaka-Shi, Osaka 530-8323 (JP); NANBA, Yoshinori, Osaka-Shi, Osaka 530-8323 (JP); YOSHIDA, Hirotoshi, Osaka-Shi, Osaka 530-8323 (JP); ITO, Kengo, Osaka-Shi, Osaka 530-8323 (JP); OKUI, Chiaki, Osaka-Shi, Osaka 530-8323 (JP); SUKEGAWA, Masamichi, Osaka-Shi, Osaka 530-8323 (JP); YAMANAKA, Taku, Osaka-Shi, Osaka 530-8323 (JP); KISHIKAWA, Yosuke, Osaka-Shi, Osaka 530-8323 (JP); AOYAMA, Hirokazu, Osaka-Shi, Osaka 530-8323 (JP); YONEDA, Satoru, Osaka-Shi, Osaka 530-8323 (JP); ISHIHARA, Sumi, Osaka-Shi, Osaka 530-8323 (JP); HIGASHI, Masahiro, Osaka-Shi, Osaka 530-8323 (JP); YAMAUCHI, Akiyoshi, Osaka-Shi, Osaka 530-8323 (JP); NITTA, Shinnosuke, Osaka-Shi, Osaka 530-8323 (JP); NAKANO, Marina, Osaka-Shi, Osaka 530-8323 (JP)
(74) Representative: Hoffmann Eitle
(86) International application number: PCT/JP2019/028926
(87) International publication number: WO 2020/022355

(56) References cited:
- EP-A1- 3 604 350
- EP-A1- 3 604 350
- EP-A1- 3 666 802
- EP-A1- 3 763 747
- EP-A2- 0 257 644
- WO-A1-2018/181898
- WO-A1-2019/031617
- WO-A1-2019/131633
- WO-A1-2019/172382
- JP-A- 2009 521 586
- JP-A- 2013 528 663
- JP-A- 2013 542 308
- JP-A- 2013 542 309
- JP-A- 2013 542 310
- JP-A- 2015 232 082
- US-A1- 2021 388 126

## Description

### TECHNICAL FIELD

The present disclosure relates to a polytetrafluoroethylene and a stretched body.

### BACKGROUND ART

When polytetrafluoroethylene is molded and highly stretched in a non-sintered state, a porous polytetrafluoroethylene film can be obtained. This porous film allows gas such as water vapor to pass through, but does not allow water droplets to pass through due to the strong water-repellency of polytetrafluoroethylene. Utilizing this unique property, it is applied to clothing and separation membranes.

Patent Document 1 discloses a method for polymerizing fluoromonomer to form a dispersion of fluoropolymer particles in an aqueous medium in a polymerization reactor comprising an initial period and a stabilization period subsequent to the initial period, wherein the initial period comprises: preparing an initial dispersion of fluoropolymer particles in the aqueous medium in the polymerization reactor, and the stabilization period comprises: polymerizing fluoromonomer in the polymerization reactor, and adding hydrocarbon-containing surfactant to the polymerization reactor, wherein during the stabilization period no fluorosurfactant is added.

Patent Document 2 discloses a method for polymerizing fluoromonomer to form a dispersion of fluoropolymer particles in an aqueous medium in a polymerization reactor the method comprising an initial period which comprises adding to the polymerization reactor: (a) aqueous medium, (b) water-soluble hydrocarbon-containing compound, (c) degradation agent, (d) fluoromonomer, and (e) polymerization initiator, wherein during the initial period no fluorosurfactant is added, and wherein the degradation agent is added prior to the polymerization initiator.

Patent Document 3 discloses a method for polymerizing fluoromonomer to form a dispersion of fluoropolymer particles in an aqueous medium in a polymerization reactor, which comprises adding to the polymerization reactor: aqueous medium, polymerization initiator, fluoromonomer, and hydrocarbon-containing surfactant, and passivating the hydrocarbon-containing surfactant.

Patent Document 4 discloses a method for reducing thermally induced discoloration of fluoropolymer resin, the fluoropolymer resin produced by polymerizing fluoromonomer in an aqueous dispersion medium to form aqueous fluoropolymer dispersion and isolating the fluoropolymer from the aqueous medium by separating fluoropolymer resin in wet form from the aqueous medium and drying to produce fluoropolymer resin in dry form, the method comprising: exposing the fluoropolymer resin in wet or dry form to oxidizing agent.

Patent Document 5 discloses a modified PTFE fine powder which comprises primary particles having an average particle size of 0.1 to 0.6 µm and contains 0.01 to 0.15 % by weight, based on the whole weight of the particles, of at least one olefinically unsaturated compound selected from the group consisting of a fluoroalkyl vinyl ether of the formula: X(CF₂)nOCF=CF₂ (I) wherein X is a hydrogen atom, a fluorine atom or a chlorine atom and n is an integer of 1 to 6, and a fluoroalkyl vinyl ether of the formula: C₃F₇(OCF₂CF₂CF₂)m[OCF(CF₃)CF₂]ℓOCF=CF₂ (II) wherein m is an integer of 0 to 2 and ℓ is an integer of 0 to 2 mainly in core parts of the particles and 0.04 to 0.25 % by weight, based on the whole weight of the particles, of chlorotrifluoroethylene in shell parts.

### RELATED ART

### PATENT DOCUMENTS

Patent Document 1: National Publication of International Patent Application No. 2013-542308
Patent Document 2: National Publication of International Patent Application No. 2013-542309
Patent Document 3: National Publication of International Patent Application No. 2013-542310
Patent Document 4: International Publication No. WO2013/169581
Patent Document 5: Publication of European Application No. EP 0 257 644 A2

### SUMMARY OF THE INVENTION

### PROBLEM TO BE SOLVED BY THE INVENTION

The present disclosure provides polytetrafluoroethylene having excellent stretchability and a stretched body containing the polytetrafluoroethylene. The present disclosure preferably provides a stretched body having excellent breaking strength and stress relaxation time.

### MEANS FOR SOLVING THE PROBLEM

The present disclosure relates to a polytetrafluoroethylene which is a tetrafluoroethylene (TFE) homopolymer or a copolymer of TFE and 0.00001-1.0 mass% of units of a modifying monomer, and which
(i) has a breaking strength of 10.0 N or more;
(ii) has a 0.1% mass loss temperature of 400°C or lower, or
   a 1.0% mass loss temperature of 492°C or lower, or
   a thermal instability index (TII) of 20 or more; and
(iii) contains 10 ppm or less of fluorine-containing surfactant.

The polytetrafluoroethylene of the present disclosure preferably has a stress relaxation time of 50 seconds or more.

The polytetrafluoroethylene of the present disclosure preferably has an extrusion pressure of 30.0 MPa or less.

In the polytetrafluoroethylene of the present disclosure, it is preferable that a sheet cut out from a sintered body obtained by molding the polytetrafluoroethylene and heat-treating at 100°C for 2 hours, at 200°C for 4 hours, and at 370°C for 5 hours has a lightness L* of 90.0 or less.

In the polytetrafluoroethylene of the present disclosure, it is preferable that a sintered body obtained by molding the polytetrafluoroethylene and heat-treating at 100°C for 2 hours, at 200°C for 4 hours, and at 370°C for 5 hours has a thermal shrinkage rate of 7.0% or more.

In the polytetrafluoroethylene of the present disclosure, it is preferable that a contact angle of a surface corresponding to an inner side of a sintered body of a sheet cut out from the sintered body, the sintered body being obtained by molding the polytetrafluoroethylene and heat-treating at 100°C for 2 hours, at 200°C for 4 hours, and at 370°C for 5 hours, is 107° or more.

The polytetrafluoroethylene of the present disclosure is preferably powder.

The present disclosure also relates to a stretched body comprising the polytetrafluoroethylene.

### EFFECTS OF INVENTION

The polytetrafluoroethylene of the present disclosure has the above configuration, and thus has excellent stretchability. The stretched body of the present disclosure has the above structure, and thus has excellent breaking strength and stress relaxation time.

### DESCRIPTION OF EMBODIMENTS

The term "organic group" as used herein, unless otherwise specified, means a group containing one or more carbon atoms or a group obtainable by removing one hydrogen atom from an organic compound.

Examples of the "organic group" include:
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,
R^{a}O-,
R^{a}CO-,
R^{a}SO₂-,
R^{a}COO-,
R^{a}NRaCO-,
R^{a}CONRa-,
R^{a}OCO-,
R^{a}OSO₂-, and
R^{a}NRbSO₂-,
wherein each R^{a} is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
each R^{b} is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxyamino group, a carbamoylamino group, a sulfamoyl amino group, a halogen atom, a sulfamoyl carbamoyl group, a carbamoyl sulfamoyl group, a dialiphatic oxyphosphinyl group, and a diaromatic oxyphosphinyl group.

The aliphatic group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, or a carbamoylamino group. Examples of the aliphatic group include alkyl groups having 1 to 8, preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, or a carbamoylamino group. Examples of the aromatic group include aryl groups having 6 to 12 carbon atoms, preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, or a carbamoylamino group. Examples of the heterocyclic group include 5- or 6-membered heterocyclic groups having 2 to 12, preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, or a carbamoylamino group. Examples of the acyl group include acyl groups having 2 to 8, preferably 2 to 4 carbon atoms in total, such as an acetyl group, a propanoyl group, a benzoyl group, and a 3-pyridinecarbonyl group.

The acylamino group may have an aliphatic group, an aromatic group, or a heterocyclic group, and may have, for example, an acetylamino group, a benzoylamino group, a 2-pyridinecarbonylamino group, or a propanoylamino group. Examples of the acylamino group include acylamino groups having 2 to 12, preferably 2 to 8 carbon atoms in total, and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, or a carbamoylamino group. Examples of the aliphatic oxycarbonyl group include alkoxycarbonyl groups having 2 to 8, preferably 2 to 4 carbon atoms in total, such as a methoxycarbonyl group, an ethoxycarbonyl group, and a (t)-butoxycarbonyl group.

The carbamoyl group may have an aliphatic group, an aromatic group, or a heterocyclic group. Examples of the carbamoyl group include an unsubstituted carbamoyl group and alkylcarbamoyl groups having 2 to 9 carbon atoms in total, preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, or a carbamoylamino group. Examples of the aliphatic sulfonyl group include alkylsulfonyl groups having 1 to 6 carbon atoms in total, preferably 1 to 4 carbon atoms in total, such as methanesulfonyl.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, or a carbamoylamino group. Examples of the aromatic sulfonyl group include arylsulfonyl groups having 6 to 10 carbon atoms in total, such as a benzenesulfonyl group.

The amino group may have an aliphatic group, an aromatic group, or a heterocyclic group.

The acylamino group may have, for example, an acetylamino group, a benzoylamino group, a 2-pyridinecarbonylamino group, or a propanoylamino group. Examples of the acylamino group include acylamino groups having 2 to 12 carbon atoms in total, preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, aromatic sulfonamide group, and heterocyclic sulfonamide group may be, for example, a methanesulfonamide group, a benzenesulfonamide group, a 2-pyridinesulfonamide group, respectively.

The sulfamoyl group may have an aliphatic group, an aromatic group, or a heterocyclic group. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, or a methoxyethoxy group. Examples of the aliphatic oxy group include alkoxy groups having 1 to 8, preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group each may have an aliphatic group, an aliphatic oxy group, a halogen atom, a carbamoyl group, a heterocyclic group ring-fused with the aryl group, and an aliphatic oxycarbonyl group, preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples thereof include alkylthio groups having 1 to 8 carbon atoms in total, more preferably 1 to 6 carbon atoms in total, such as a methylthio group, an ethylthio group, a carbamoylmethylthio group, and a t-butylthio group.

The carbamoylamino group may have an aliphatic group, an aryl group, or a heterocyclic group. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino group having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

The ranges expressed by the endpoints as used herein each further include all numerical values within the range (for example, the range of 1 to 10 includes 1.4, 1.9, 2.33, 5.75, and 9.98).

The phrase "at least one" as used herein further includes all numerical values equal to or greater than 1 (e.g., at least 2, at least 4, at least 6, at least 8, at least 10, at least 25, at least 50, and at least 100).

Next, the polytetrafluoroethylene of the present disclosure will be specifically described.

The polytetrafluoroethylene of the present disclosure (hereinafter, may be referred to as "PTFE") has a breaking strength of 10.0 N or more and a thermal instability index (TII) of 20 or more. (Hereinafter, it may be referred to as first PTFE of the present disclosure.)

The first PTFE of the present disclosure preferably has a standard specific gravity of 2.175 or less. The first PTFE of the present disclosure may have a 0.1% mass loss temperature of 400°C or lower. The first PTFE of the present disclosure may have a 1.0% mass loss temperature of 492°C or lower.

The PTFE of the present disclosure also has a breaking strength of 10.0 N or more and a 0.1% mass loss temperature of 400°C or lower. (Hereinafter, it may be referred to as second PTFE of the present disclosure.)

The second PTFE of the present disclosure preferably has a standard specific gravity of 2.175 or less. The second PTFE of the present disclosure preferably has a thermal instability index (TII) of 20 or more. The second PTFE of the present disclosure may have a 1.0% mass loss temperature of 492°C or lower.

The PTFE of the present disclosure also has a breaking strength of 10.0 N or more and a 1.0% mass loss temperature of 492°C or lower. (Hereinafter, it may be referred to as third PTFE of the present disclosure.)

The third PTFE of the present disclosure preferably has a standard specific gravity of 2.175 or less. The third PTFE of the present disclosure preferably has a thermal instability index (TII) of 20 or more. The third PTFE of the present disclosure may have a 0.1% mass loss temperature of 400°C or lower.

The first to third PTFE of the present disclosure are suitable for stretch molding because the breaking strength thereof is 10.0 N or more. It is also possible to obtain a stretched body having excellent breaking strength and stress relaxation time.

The first to third PTFE of the present disclosure also has a breaking strength of 10.0 N or more and is substantially free from a fluorine-containing surfactant.

The first to third PTFE of the present disclosure are suitable for stretch molding because they are substantially free from a fluorine-containing surfactant. It is also possible to obtain a stretched body having excellent breaking strength and stress relaxation time.

Unless otherwise specified in the present specification, "PTFE of the present disclosure" means the first to third PTFE of the present disclosure.

The PTFE of the present disclosure preferably has a standard specific gravity (SSG) of 2.175, more preferably 2.170 or less, still more preferably 2.165 or less, even still more preferably 2.160 or less, and may be 2.155 or less. The SSG is determined by the water replacement method in conformity with ASTM D-792 using a sample molded in conformity with ASTM D 4895-89.

PTFE having a thermal instability index (TII) of 20 or more can be obtained by using a hydrocarbon surfactant. The TII is preferably 25 or more, more preferably 30 or more, and still more preferably 35 or more. The TII is particularly preferably 40 or more. The TII is measured in conformity with ASTM D 4895-89.

PTFE having a 0.1% mass loss temperature of 400°C or lower can be obtained by using a hydrocarbon surfactant. The 0.1% mass loss temperature is a value measured by the following method.

Approximately 10 mg of PTFE powder, which has no history of heating to a temperature of 300°C or higher, is precisely weighed and stored in a dedicated aluminum pan to measure TG-DTA (thermogravimetric - differential thermal analyzer). The 0.1% mass loss temperature is the temperature corresponding to the point at which the weight of the aluminum pan is reduced by 0.1% by mass by heating the aluminum pan under the condition of 10°C/min in the temperature range from 25°C to 600°C in the air atmosphere.

PTFE having a 1.0% mass loss temperature of 492°C or lower can be obtained by using a hydrocarbon surfactant. The 1.0% mass loss temperature is a value measured by the following method.

Approximately 10 mg of PTFE powder, which has no history of heating to a temperature of 300°C or higher, is precisely weighed and stored in a dedicated aluminum pan to measure TG-DTA (thermogravimetric - differential thermal analyzer). The 1.0% mass loss temperature is the temperature corresponding to the point at which the weight of the aluminum pan is reduced by 1.0% by mass by heating the aluminum pan under the condition of 10°C/min in the temperature range from 25°C to 600°C in the air atmosphere.

The PTFE of the present disclosure preferably has an average primary particle size of 150 nm or more, and more preferably 180 nm or more. The larger the average primary particle size of PTFE, the more the increase in paste extrusion pressure can be suppressed and the film-formability is excellent when paste extrusion molding is performed using the powder. The upper limit thereof may be, but is not limited to, 500 nm. From the viewpoint of productivity in the polymerization step, the upper limit is preferably 350 nm. The average primary particle size is determined by diluting an aqueous dispersion of PTFE with water to a solid content of 0.15% by mass, measuring the transmittance of projected light at 550 nm to the unit length of the obtained diluted latex, and measuring the number-reference length average particle size determined by measuring the directional diameter by transmission electron microscope to prepare a calibration curve, and determining the particle size from the measured transmittance of projected light of 550 nm of each sample using the calibration curve.

The PTFE of the present disclosure preferably has an extrusion pressure of 30.0 MPa or less, more preferably 29.0 MPa or less, still more preferably 28.0 MPa or less, and further preferably 25.0 MPa or less, and preferably 5.0 MPa or more, and more preferably 10.0 MPa or more. The extrusion pressure is a value determined by the following method according to a method disclosed in Japanese Patent Laid-Open No. 2002-201217.

To 100 g of PTFE powder, 21.7 g of a lubricant (trade name: Isopar H (R), manufactured by Exxon) is added and mixed for 3 minutes in a glass bottle at room temperature. Then, the glass bottle is left to stand at room temperature (25°C) for at least 1 hour before extrusion to obtain a lubricated resin. The lubricated resin is paste extruded at a reduction ratio of 100:1 at room temperature through an orifice (diameter 2.5 mm, land length 11 mm, entrance angle 30°) into a uniform beading (beading: extruded body). The extrusion speed, i.e. ram speed, is 20 inch/min (51 cm/min). The extrusion pressure is a value obtained by measuring the load when the extrusion load becomes balanced in the paste extrusion and dividing the measured load by the cross-sectional area of the cylinder used in the paste extrusion.

The PTFE of the present disclosure is preferably stretchable. The term "stretchable" as used herein is determined based on the following criteria.

The beading obtained by paste extrusion is heated at 230°C for 30 minutes to remove the lubricant from the beading. Next, an appropriate length of the beading (extruded body) is cut and clamped at each end leaving a space of 1.5 inch (38 mm) between clamps, and heated to 300°C in an air circulation furnace. Then, the clamps are moved apart from each other at a desired rate (stretch rate) until the separation distance corresponds to a desired stretch (total stretch) to perform the stretching test. This stretch method essentially followed a method disclosed in U.S. Patent No. 4,576,869, except that the extrusion speed is different (51 cm/min instead of 84 cm/min). "Stretch" is an increase in length due to stretching, usually expressed in relation to original length. In the production method, the stretching rate was 1,000%/sec, and the total stretching was 2,400%. This means that a stretched beading having a uniform appearance can be obtained without being cut in this stretching test.

The PTFE of the present disclosure more preferably has a breaking strength of 13.0 N or more, still more preferably 16.0 N or more, further preferably 19.0 N or more, further preferably 22.0 N or more, further preferably 23.0 N or more, further preferably 25.0 N or more, further preferably 28.0 N or more, further preferably 29.0 N or more, further preferably 30.0 N or more, further preferably 32.0 N or more, further preferably 35.0 N or more, further preferably 37.0 N or more, and further preferably 40.0 N or more. The higher the breaking strength, the better, and it may be 100.0 N or less, 80.0 N or less, or 50.0 N or less. The breaking strength is a value determined by the following method.

The stretched beading obtained in the stretching test (produced by stretching the beading) is clamped by movable jaws having a gauge length of 5.0 cm, and a tensile test is performed at 25°C at a rate of 300 mm/min, and the strength at the time of breaking is taken as the breaking strength.

The PTFE of the present disclosure preferably has a stress relaxation time of 50 seconds or more, more preferably 80 seconds or more, still more preferably 100 seconds or more, and may be preferably 120 seconds or more, 150 seconds or more, 190 seconds or more, 200 seconds or more, 220 seconds or more, 240 seconds or more, or 300 seconds or more. The stress relaxation time is a value measured by the following method.

Both ends of the stretched beading obtained in the stretching test are tied to a fixture to form a tightly stretched beading sample having an overall length of 8 inches (20 cm). The fixture is placed in an oven through a (covered) slit on the side of the oven, while keeping the oven at 390°C. The time it takes for the beading sample to break after it is placed in the oven is taken as the stress relaxation time.

In PTFE of the present disclosure, a sheet cut out from a sintered body obtained by molding PTFE and heat-treating at 100°C for 2 hours, at 200°C for 4 hours, and at 370°C for 5 hours may have a lightness L* of 90.0 or less, 80 or less, 70 or less, 60 or less, or 50 or less. The lightness L* is a value measured by the following method.

A mold having an inner diameter of 50 mm is filled with 210 g of powder, pressure is applied over 30 seconds until the final pressure reaches 200 kg/cm², and the pressure is maintained for another 5 minutes to produce a preform. The preform is taken out from the mold, and the preform is heat-treated in a hot air circulation electric furnace at 100°C for 2 hours, 200°C for 4 hours, and 370°C for 5 hours, and then cooled to room temperature at a rate of 50°C/hour to obtain a columnar sintered body. This sintered body is cut along the side surface to produce a strip-shaped sheet having a thickness of 0.5 mm. A test piece is cut from this strip-shaped sheet to a size of 100 mm × 50 mm, and the lightness (L*) of the strip-shaped sheet is measured using a color difference meter (CR-400 manufactured by Konica Minolta Optics Inc.).

In PTFE of the present disclosure, a sintered body obtained by molding PTFE and heat-treating at 100°C for 2 hours, at 200°C for 4 hours, and at 370°C for 5 hours may have a thermal shrinkage rate of 7.0% or more, or 6.5% or more. The thermal shrinkage rate is a value measured by the following method.

A mold having an inner diameter of 50 mm is filled with 210 g of powder, pressure is applied over 30 seconds until the final pressure reaches 200 kg/cm², and the pressure is maintained for another 5 minutes to produce a preform. The preform is taken out from the mold, and the diameter (A) of the preform is measured. Thereafter, the preform is heat-treated in a hot air circulation electric furnace at 100°C for 2 hours, 200°C for 4 hours, and 370°C for 5 hours, and then cooled to room temperature at a rate of 50°C/hour to obtain a columnar sintered body. The diameter (B) of the obtained sintered body is measured, and the thermal shrinkage rate is calculated by the following formula.$Thermal shrinkage rate = \left(\left(A\right)-\left(B\right)\right) / \left(A\right) * 100$

In PTFE of the present disclosure, a contact angle of a surface corresponding to an inner side of a sintered body of a sheet cut out from the sintered body, the sintered body being obtained by molding PTFE and heat-treating at 100°C for 2 hours, at 200°C for 4 hours, and at 370°C for 5 hours, is preferably 107° or more, more preferably 108° or more, still more preferably 109° or more, and particularly preferably 110° or more. The contact angle is a value measured by the following method.

A mold having an inner diameter of 50 mm is filled with 210 g of powder, pressure is applied over 30 seconds until the final pressure reaches 200 kg/cm², and the pressure is maintained for another 5 minutes to produce a preform. The preform is taken out from the mold, and the preform is heat-treated in a hot air circulation electric furnace at 100°C for 2 hours, 200°C for 4 hours, and 370°C for 5 hours, and then cooled to room temperature at a rate of 50°C/hour to obtain a columnar sintered body. This sintered body is cut along the side surface to produce a strip-shaped sheet having a thickness of 0.5 mm. A test piece is cut from this strip-shaped sheet to a size of 50 mm × 50 mm, and the contact angle of the surface corresponding to the inside of the strip-shaped sheet is measured using a portable contact angle meter (PCA-1 manufactured by Kyowa Interface Science Co., Ltd.). The contact angle is calculated by depositing a water droplet on a test piece, capturing the droplet shape as an image by a CCD camera, obtaining the radius (r) and height (h) of the droplet image by image processing, and substituting them into the following equation. (θ/2 method)$θ = 2 arctan \left(h/r\right)$

The PTFE of the present disclosure preferably has a peak temperature of 348°C or lower, more preferably 346°C or lower, and still more preferably 344°C or lower. The peak temperature is a value measured by the following method.

Approximately 10 mg of its powder, which has no history of heating to a temperature of 300°C or higher, is precisely weighed and stored in a dedicated aluminum pan to measure TG-DTA (thermogravimetric - differential thermal analyzer). The peak temperature is the temperature corresponding to the minimum value of the differential thermal (DTA) curve obtained by heating the aluminum pan under the condition of 10°C/min in the temperature range from 25°C to 600°C in the air atmosphere.

The PTFE of the present disclosure preferably has a melting point of 348°C or lower, more preferably 346°C or lower, and still more preferably 344°C or lower. The melting point is a value measured by the following method.

Approximately 10 mg of its powder, which has no history of heating to a temperature of 300°C or higher, is precisely weighed and stored in a dedicated aluminum pan to measure TG-DTA (thermogravimetric - differential thermal analyzer). The melting point is the temperature corresponding to the minimum value of the differential thermal (DTA) curve obtained by heating the aluminum pan under the condition of 10°C/min in the temperature range from 25°C to 600°C in the air atmosphere.

The PTFE of the present disclosure is substantially free from a fluorine-containing surfactant. In the PTFE of the present disclosure, "substantially free from a fluorine-containing surfactant" means that the amount of the fluorine-containing surfactant is 10 ppm or less with respect to PTFE. The content of the fluorine-containing surfactant is preferably 1 ppm or less, more preferably 100 ppb or less, still more preferably 10 ppb or less, further preferably 1 ppb or less, and particularly preferably the fluorine-containing surfactant is equal or below the detection limit as measured by liquid chromatography-mass spectrometry (LC/MS/MS).

The amount of the fluorine-containing surfactant can be determined by a known method. For example, it can be determined by LC/MS/MS analysis. First, the powder of the obtained PTFE is extracted into an organic solvent of methanol, and the extracted liquid is subjected to LC/MS/MS analysis. Then, the molecular weight information is extracted from the LC/MS/MS spectrum to confirm agreement with the structural formula of the candidate surfactant.

Thereafter, aqueous solutions having five or more different concentration levels of the confirmed surfactant are prepared, and LC/MS/MS analysis is performed for each concentration level to prepare a calibration curve with the area.

The obtained PTFE powder is subjected to Soxhlet extraction with methanol, and the extracted liquid is subjected to LC/MS/MS analysis for quantitative measurement.

The fluorine-containing surfactant is the same as those exemplified in the production method described later. For example, the surfactant may be a fluorine atom-containing surfactant having, in the portion excluding the anionic group, 20 or less carbon atoms in total, may be a fluorine-containing surfactant having an anionic moiety having a molecular weight of 800 or less, and may be a fluorine-containing surfactant having a Log POW of 3.5 or less.

The "anionic moiety" means the portion of the fluorine-containing surfactant excluding the cation. For example, in the case of F(CF₂)ₙ₁COOM represented by the formula (I) described later, the anionic moiety is the "F(CF₂)ₙ₁COO" portion.

Examples of the anionic fluorine-containing surfactant include compounds represented by the general formula (N⁰), and specific examples thereof include compounds represented by the general formula (N¹), compounds represented by the general formula (N²), compounds represented by the general formula (N³), compounds represented by the general formula (N⁴), and compounds represented by the general formula (N⁵). More specific examples thereof include a perfluorocarboxylic acid (I) represented by the general formula (I), an ω-H perfluorocarboxylic acid (II) represented by the general formula (II), a perfluoropolyethercarboxylic acid (III) represented by the general formula (III), a perfluoroalkylalkylenecarboxylic acid (IV) represented by the general formula (IV), a perfluoroalkoxyfluorocarboxylic acid (V) represented by the general formula (V), a perfluoroalkylsulfonic acid (VI) represented by the general formula (VI), an ω-H perfluorosulfonic acid (VII) represented by the general formula (VII), a perfluoroalkylalkylene sulfonic acid (VIII) represented by the general formula (VIII), an alkylalkylene carboxylic acid (IX) represented by the general formula (IX), a fluorocarboxylic acid (X) represented by the general formula (X), an alkoxyfluorosulfonic acid (XI) represented by the general formula (XI), and a compound (XII) represented by the general formula (XII).

It is preferable that the PTFE of the present disclosure has a breaking strength of 29.0 N or more measured under the following condition (X) of a stretched beading produced under the following condition (A) by heat treatment at a temperature of 240°C, and is substantially free from a fluorine-containing surfactant.

### Condition (A):

To 100 g of PTFE powder, 21.7 g of a lubricant is added and mixed for 3 minutes in a glass bottle at room temperature. Then, the glass bottle is left to stand at room temperature (25°C) for at least 1 hour before extrusion to obtain a lubricated resin. The lubricated resin is paste extruded at a reduction ratio of 100:1 at room temperature through an orifice (diameter 2.5 mm, land length 11 mm, entrance angle 30°) into a uniform beading (beading: extruded body). The extrusion speed, i.e. ram speed, is 20 inch/min (51 cm/min).

The PTFE extruded beading containing the lubricant obtained by paste extrusion is dried at 230°C for 30 minutes to remove the lubricant from the beading and thereby to obtain a dried PTFE extruded beading. Next, an appropriate length of the dried PTFE extruded beading is cut and clamped at each end leaving a space of 1.5 inch (38 mm) between clamps, and heated to 300°C in an air circulation furnace. Then, the clamps are moved apart from each other at 1000%/sec until the separation distance corresponds to 2400% to perform the stretching test and obtain a stretched beading. This stretch method essentially followed a method disclosed in U.S. Patent No. 4,576,869, except that the extrusion speed is different (51 cm/min instead of 84 cm/min). "Stretch" is an increase in length due to stretching, usually expressed in relation to original length. In the production method, the stretching rate is 1,000%/sec, and the total stretching is 2,400%.

### Condition (X):

The stretched beading (produced by stretching the beading) is clamped by movable jaws having a gauge length of 5.0 cm, and a tensile test is performed at 25°C at a rate of 300 mm/min, and the strength at the time of breaking is taken as the breaking strength.

As the lubricant, a lubricant can be used which is made of 100% isoparaffin hydrocarbon, has an initial boiling point of 180°C, a dry point of 188°C, a flash point of 54°C, a density (15°C) of 0.758 g/cm³, KB (Kauri-butanol level) 26, an aniline point of 85°C, and an aromatic content of < 0.01% by mass, and specifically, Isopar H (R) manufactured by Exxon can be used as such lubricant.

The PTFE of the present disclosure preferably has a breaking strength of 29.0 N or more measured under the condition (X) of a stretched body produced under the condition (A) by heat treatment at a temperature of 240°C and a thermal instability index (TII) of 20 or more.

The PTFE of the present disclosure preferably has a breaking strength of 29.0 N or more measured under the condition (X) of the stretched body produced under the condition (A). The breaking strength is more preferably 30.0 N or more, still more preferably 32.0 N or more, and more preferably 35.0 N or more. The higher the breaking strength, the better, and the upper limit of the breaking strength is not limited, but may be, for example, 80.0 N or less, or 50.0 N or less. The breaking strength is a value determined by the following method.

After the heat treatment, the stretched body produced under the condition (A) is clamped by movable jaws having a gauge length of 5.0 cm, and a tensile test is performed at 25°C at a rate of 300 mm/min, and the strength at the time of breaking is taken as the breaking strength.

It is preferable that the PTFE of the present disclosure has a breaking strength of 22.0 N or more measured under the condition (X) of a stretched beading produced under the following condition (B) by heat treatment at a temperature of 240°C, and is substantially free from a fluorine-containing surfactant.

### Condition (B):

To 100 g of PTFE powder, 21.7 g of a lubricant is added and mixed for 3 minutes in a glass bottle at room temperature. Then, the glass bottle is left to stand at room temperature (25°C) for at least 1 hour before extrusion to obtain a lubricated resin. The lubricated resin is paste extruded at a reduction ratio of 100:1 at room temperature through an orifice (diameter 2.5 mm, land length 11 mm, entrance angle 30°) into a uniform beading (beading: extruded body). The extrusion speed, i.e. ram speed, is 20 inch/min (51 cm/min).

The PTFE extruded beading containing the lubricant obtained by paste extrusion is dried at 230°C for 30 minutes to remove the lubricant from the beading and thereby to obtain a dried PTFE extruded beading. Next, an appropriate length of the dried PTFE extruded beading is cut and clamped at each end leaving a space of 2.0 inch (51 mm) between clamps, and heated to 300°C in an air circulation furnace. Then, the clamps are moved apart from each other at 100%/sec until the separation distance corresponds to a desired stretch (total stretch: 2,400%) to perform the stretching test and obtain a stretched beading. This stretch method essentially followed a method disclosed in U.S. Patent No. 4,576,869, except that the extrusion speed is different (51 cm/min instead of 84 cm/min). "Stretch" is an increase in length due to stretching, usually expressed in relation to original length.

### Condition (X):

The stretched beading (produced by stretching the beading) is clamped by movable jaws having a gauge length of 5.0 cm, and a tensile test is performed at 25°C at a rate of 300 mm/min, and the strength at the time of breaking is taken as the breaking strength.

As the lubricant, a lubricant can be used which is made of 100% isoparaffin hydrocarbon, has an initial boiling point of 180°C, a dry point of 188°C, a flash point of 54°C, a density (15°C) of 0.758 g/cm³, KB (Kauri-butanol level) 26, an aniline point of 85°C, and an aromatic content of < 0.01% by mass, and specifically, Isopar H (R) manufactured by Exxon can be used as such lubricant.

The PTFE of the present disclosure preferably has a breaking strength of 22.0 N or more of a stretched body produced under the condition (B) by heat treatment at a temperature of 240°C and a thermal instability index (TII) of 20 or more.

The PTFE of the present disclosure preferably has a breaking strength of 22.0 N or more measured under the condition (X) of the stretched body produced under the condition (B). The breaking strength is more preferably 23.0 N or more, still more preferably 25.0 N or more, more preferably 28.0 N or more, and particularly preferably 30.0 N or more. The higher the breaking strength, the better, and the upper limit of the breaking strength is not limited, but may be, for example, 80.0 N or less, or 50.0 N or less. The breaking strength is a value determined by the following method.

The PTFE of the present disclosure preferably contains, with respect to the total mass of solid content, 99.0% by mass or more of PTFE and 1.0% by mass or less of components other than PTFE, more preferably 99.5% by mass or more of PTFE and 0.5% by mass or less of components other than PTFE, still more preferably 99.9% by mass or more of PTFE and 0.1% by mass or less of components other than PTFE, and particularly preferably substantially 100.0% by mass of PTFE.

The PTFE of the present disclosure may be a wet powder and may contain 0.0001 to 50% by mass of an aqueous medium. The amount of the aqueous medium may be 0.0001 to 1.0% by mass or 0.0001 to 0.01% by mass.

The amount of the aqueous medium can be determined by weight loss when dried at 150°C for 60 minutes.

In the PTFE of the present disclosure, the heat treatment is performed at 240°C. More specifically, the heat treatment is performed under the conditions of 240°C and 18 hours.

The heat treatment may be for drying the PTFE of the present disclosure. For example, when the PTFE of the present disclosure is a wet powder of PTFE, the moisture contained in the wet powder may be dried.

In the PTFE of the present disclosure, the stretched body is preferably produced under the above conditions (A) or (B).

It is preferable that the PTFE of the present disclosure has an extrusion pressure of 50.0 MPa or less and a breaking strength measured under the condition (X) of the stretched body produced under the condition (A) of 29.0 N or more, and is substantially free from a fluorine-containing surfactant. The extrusion pressure is more preferably 40.0 MPa or less, preferably 8.0 MPa or more, and more preferably 10.0 MPa or more.

The PTFE of the present disclosure preferably has an extrusion pressure of 50.0 MPa or less, a breaking strength of 29.0 N or more measured under the condition (X) of a stretched body produced under the condition (A), and a thermal instability index (TII) of 20 or more. The extrusion pressure is more preferably 40.0 MPa or less, preferably 8.0 MPa or more, and more preferably 10.0 MPa or more.

It is preferable that the PTFE of the present disclosure has a breaking strength measured under the condition (X) of the stretched body produced under the condition (A) of 34.0 N or more, and is substantially free from a fluorine-containing surfactant. The breaking strength is more preferably 35.0 N or more, still more preferably 37.0 N or more, and more preferably 40.0 N or more. The higher the breaking strength, the better, but the upper limit of the breaking strength is, for example, 100.0 N.

The PTFE of the present disclosure preferably has a breaking strength of 34.0 N or more and a thermal instability index (TII) of 20 or more measured under the condition (X) of the stretched body produced under the above condition (A). The breaking strength is more preferably 35.0 N or more, still more preferably 37.0 N or more, and more preferably 40.0 N or more. The higher the breaking strength, the better, but the upper limit of the breaking strength is, for example, 100.0 N.

It is preferable that the PTFE of the present disclosure has a breaking strength measured under the condition (X) of the stretched body produced under the condition (B) of 29.0 N or more, and is substantially free from a fluorine-containing surfactant. The breaking strength is more preferably 30.0 N or more, still more preferably 32.0 N or more, and more preferably 35.0 N or more. The higher the breaking strength, the better, and the upper limit of the breaking strength is not limited, but may be, for example, 100.0 N or less, or 80.0 N or less.

The PTFE of the present disclosure preferably has a breaking strength of 29.0 N or more and a thermal instability index (TII) of 20 or more measured under the condition (X) of the stretched body produced under the above condition (B). The breaking strength is more preferably 30.0 N or more, still more preferably 32.0 N or more, and more preferably 35.0 N or more. The higher the breaking strength, the better, and the upper limit of the breaking strength is not limited, but may be, for example, 100.0 N or less, or 80.0 N or less.

The PTFE of the present disclosure is preferably stretchable. The term "stretchable" as used herein is determined based on the following criteria.

To 100 g of PTFE powder, 21.7 g of a lubricant (trade name: Isopar H (R), manufactured by Exxon) is added and mixed for 3 minutes in a glass bottle at room temperature. Then, the glass bottle is left to stand at room temperature (25°C) for at least 1 hour before extrusion to obtain a lubricated resin. The lubricated resin is paste extruded at a reduction ratio of 100:1 at room temperature through an orifice (diameter 2.5 mm, land length 11 mm, entrance angle 30°) into a uniform beading. The extrusion speed, i.e. ram speed, is 20 inch/min (51 cm/min). The beading obtained by paste extrusion is heated at 230°C for 30 minutes to remove the lubricant from the beading. Next, an appropriate length of the beading (extruded body) is cut and clamped at each end leaving a space of 1.5 inch (38 mm) between clamps, and heated to 300°C in an air circulation furnace. Then, the clamps are moved apart from each other at a desired rate (stretch rate) until the separation distance corresponds to a desired stretch (total stretch) to perform the stretch test. This stretch method essentially followed a method disclosed in U.S. Patent No. 4,576,869, except that the extrusion speed is different (51 cm/min instead of 84 cm/min). "Stretch" is an increase in length due to stretching, usually expressed in relation to original length. In the production method, the stretching rate was 1,000%/sec, and the total stretching was 2,400%. This means that a stretched beading with a uniform appearance can be obtained without cutting in this stretching test.

The PTFE of the present disclosure preferably has an average particle size (average secondary particle size) of 100 to 2,000 µm. The lower limit of the average secondary particle size is more preferably 200 µm or more, and still more preferably 300 µm or more. The upper limit of the average secondary particle size is preferably 1,000 µm or less, more preferably 800 µm or less, and particularly preferably 700 µm or less. The average particle size is a value measured in conformity with JIS K 6891.

The PTFE of the present disclosure is usually stretchable, fibrillatable and non-molten secondary processible.

The non-molten secondary processible means a property that the melt flow rate cannot be measured at a temperature higher than the peak temperature, that is, a property that does not easily flow even in the melting temperature region, in conformity with ASTM D-1238 and D-2116.

The PTFE of the present disclosure is a tetrafluoroethylene (TFE) homopolymer, or is a modified PTFE obtained by copolymerizing TFE with a modifying monomer.

The PTFE of the present disclosure can be stretched even in the case of TFE homopolymer. The present disclosure provides PTFE which is a TFE homopolymer and is stretchable.

The PTFE of the present disclosure has a higher breaking strength in the case of modified PTFE. The present disclosure provides PTFE which is a modified PTFE and has a breaking strength of 10.0 N or more.

These PTFE may suitably employ various configurations as described for first to third PTFE of the present disclosure.

The modifying monomer may be any modifying monomer copolymerizable with TFE, and examples thereof include perfluoroolefins such as hexafluoropropylene (HFP); hydrogen-containing fluoroolefins such as trifluoroethylene and vinylidene fluoride (VDF); perfluorovinyl ethers; (perfluoroalkyl)ethylenes; and ethylene. Further, one or more of the modifying monomers may be used.

Examples of the perfluorovinyl ether include, but are not limited to, a perfluoro unsaturated compound represented by the following general formula (A):

CF₂=CF-ORf (A)

wherein Rf represents a perfluoroorganic group. The "perfluoroorganic group" as used herein means an organic group in which all hydrogen atoms bonded to the carbon atoms are replaced by fluorine atoms. The perfluoroorganic group optionally has ether oxygen.

Examples of the perfluorovinyl ether include perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include those represented by the general formula (A) in which Rf is a perfluoro(alkoxyalkyl) group having 4 to 9 carbon atoms; those in which Rf is a group represented by the following formula:

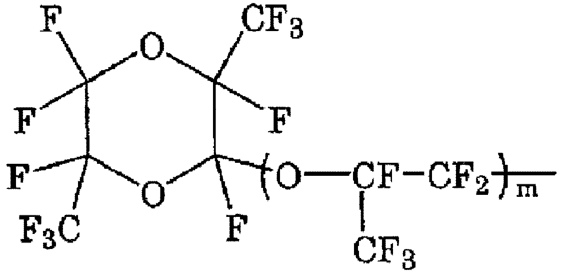

wherein m represents 0 or an integer of 1 to 4; and those in which Rf is a group represented by the following formula: 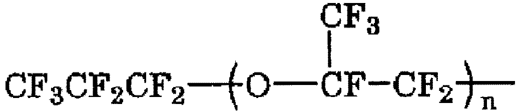 wherein n is an integer of 1 to 4.

Examples of the (perfluoroalkyl)ethylene (PFAE) include, but are not limited to, (perfluorobutyl) ethylene (PFBE), and (perfluorohexyl) ethylene.

The modifying monomer is also preferably exemplified by a comonomer (3) having a monomer reactivity ratio of 0.1 to 8. The presence of the comonomer (3) makes it possible to obtain PTFE particles having a small particle size, and to thereby obtain an aqueous dispersion having high dispersion stability.

Here, the monomer reactivity ratio in copolymerization with TFE is a value obtained by dividing the rate constant in the case that propagating radicals react with TFE by the rate constant in the case that the propagating radicals react with comonomers, in the case that the propagating radicals are terminals of the repeating unit derived from TFE. A smaller monomer reactivity ratio indicates higher reactivity of the comonomers with TFE. The monomer reactivity ratio can be calculated by determining the compositional features of the polymer produced immediately after the initiation of copolymerization of TFE and comonomers and using the Fineman-Ross equation.

The copolymerization is performed using 3,600 g of deionized degassed water, 1,000 ppm of ammonium perfluorooctanoate based on the water, and 100 g of paraffin wax contained in an autoclave made of stainless steel with an internal volume of 6.0 L at a pressure of 0.78 MPa and a temperature of 70°C. A comonomer in an amount of 0.05 g, 0.1 g, 0.2 g, 0.5 g, or 1.0 g is added into the reactor, and then 0.072 g of ammonium persulfate (20 ppm based on the water) is added thereto. To maintain the polymerization pressure at 0.78 MPa, TFE is continuously fed thereinto. When the charged amount of TFE reaches 1,000 g, stirring is stopped and the pressure is released until the pressure in the reactor decreases to the atmospheric pressure. After cooling, the paraffin wax is separated to obtain an aqueous dispersion containing the resulting polymer. The aqueous dispersion is stirred so that the resulting polymer coagulates, and the polymer is dried at 150°C. The composition in the resulting polymer is calculated by appropriate combination of NMR, FT-IR, elemental analysis, and X-ray fluorescence analysis depending on the types of the monomers.

The comonomer (3) having a monomer reactivity ratio of 0.1 to 8 is preferably at least one selected from the group consisting of comonomers represented by the formulas (3a) to (3d):

CH₂=CH-Rf¹ (3a)

wherein Rf¹ is a perfluoroalkyl group having 1 to 10 carbon atoms;

CF₂=CF-O-Rf² (3b)

wherein Rf² is a perfluoroalkyl group having 1 to 2 carbon atoms;

CF₂=CF-O-(CF₂)ₙCF=CF₂ (3c)

wherein n is 1 or 2; and 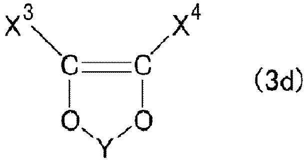 wherein X³ and X⁴ are each F, Cl, or a methoxy group; and Y is represented by the formula Y1 or Y2;

-CF=CF- (Y1)

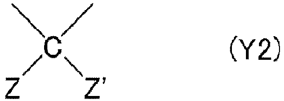

in the formula Y2, Z and **Z'** are each F or a fluorinated alkyl group having 1 to 3 carbon atoms.

The content of the comonomer (3) is preferably in the range of 0.00001 to 1.0% by mass with respect to the PTFE. The lower limit thereof is more preferably 0.0001% by mass, still more preferably 0.001% by mass, further preferably 0.005% by mass, and particularly preferably 0.009% by mass. The upper limit thereof is preferably 0.90% by mass, more preferably 0.50% by mass, still more preferably 0.40% by mass, further preferably 0.30% by mass, still further preferably 0.10% by mass, and particularly preferably 0.05% by mass.

The modifying monomer is preferably at least one selected from the group consisting of hexafluoropropylene, vinylidene fluoride, fluoro(alkyl vinyl ether), (perfluoroalkyl)ethylene, ethylene, and modifying monomers having a functional group capable of reacting by radical polymerization and a hydrophilic group, in view of obtaining an aqueous dispersion of modified polytetrafluoroethylene particles having a small average primary particle size, a small aspect ratio of primary particles, and excellent stability. The use of the modifying monomer allows for obtaining an aqueous dispersion of PTFE having a smaller average primary particle size, a smaller aspect ratio of the primary particles, and excellent dispersion stability. Also, an aqueous dispersion having a smaller amount of uncoagulated polymer can be obtained.

From the viewpoint of reactivity with TFE, the modifying monomer preferably contains at least one selected from the group consisting of hexafluoropropylene, perfluoro(alkyl vinyl ether), and (perfluoroalkyl)ethylene.

More preferably, the modifying monomer contains at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene.

The total amount of the hexafluoropropylene unit, perfluoro(alkyl vinyl ether) unit and (perfluoroalkyl)ethylene unit is preferably in the range of 0.00001 to 1.0% by mass based on the PTFE. The lower limit of the total amount is more preferably 0.0001% by mass, still more preferably 0.0005% by mass, further preferably 0.001% by mass, further preferably 0.005% by mass, and particularly preferably 0.009% by mass. The upper limit thereof is more preferably 0.50% by mass, still more preferably 0.40% by mass, further preferably 0.30% by mass, still further preferably 0.10% by mass, still further preferably 0.08% by mass, particularly preferably 0.05% by mass, and very particularly preferably 0.01% by mass.

It is also preferable that the modifying monomer contains a modifying monomer having a functional group capable of reacting by radical polymerization and a hydrophilic group (hereinafter, referred to as "modifying monomer (A)").

The presence of the modifying monomer (A) makes it possible to obtain PTFE particles having a small primary particle size, and to thereby obtain an aqueous dispersion having high dispersion stability. In addition, the amount of uncoagulated polymer can be reduced. Furthermore, the aspect ratio of the primary particles can be made small.

The amount of the modifying monomer (A) used is preferably an amount exceeding 0.1 ppm of the aqueous medium, more preferably an amount exceeding 0.5 ppm, still more preferably an amount exceeding 1.0 ppm, further preferably 5 ppm or more, and particularly preferably 10 ppm or more. When the amount of the modifying monomer (A) is too small, the average primary particle size of the obtained PTFE may not be reduced.

The modifying monomer (A) may be in the above range, but the upper limit may be, for example, 5,000 ppm. Further, in the production method, the modifying monomer (A) may be added to the system during the reaction in order to improve the stability of the aqueous dispersion during or after the reaction.

Since the modifying monomer (A) is highly water-soluble, even if the unreacted modifying monomer (A) remains in the aqueous dispersion, it can be easily removed in the concentration or the coagulation/washing.

The modifying monomer (A) is incorporated into the resulting polymer in the process of polymerization, but the concentration of the modifying monomer (A) in the polymerization system itself is low and the amount incorporated into the polymer is small, so that there is no problem that the heat resistance of PTFE is lowered or PTFE is colored after sintering.

Examples of the hydrophilic group in the modifying monomer (A) include -NH₂, -PO₃M, -OPO₃M, -SO₃M, -OSO₃M, and -COOM, wherein M represents H, a metal atom, NR⁷₄, imidazolium optionally having a substituent, pyridinium optionally having a substituent, or phosphonium optionally having a substituent, wherein R⁷ is H or an organic group, and may be the same or different, and any two thereof may be bonded to each other to form a ring. Of these, the hydrophilic group is preferably -SO₃M or - COOM. R⁷ is preferably H or a C₁₋₁₀ organic group, more preferably H or a C₁₋₄ organic group, and still more preferably H or a C₁₋₄ alkyl group.

Examples of the metal atom include monovalent and divalent metal atoms, alkali metals (Group 1) and alkaline earth metals (Group 2), and preferred is Na, K, or Li.

Examples of the "functional group capable of reacting by radical polymerization" in the modifying monomer (A) include a group having an ethylenically unsaturated bond such as a vinyl group and an allyl group. The group having an ethylenically unsaturated bond may be represented by the following formula:

CX^{e}X^{g}=CX^{f}R-

wherein X^{e}, X^{f} and X^{g} are each independently F, Cl, H, CF₃, CF₂ H, CFH₂ or CH₃; and R is a linking group. The linking group R include linking groups as R^{a} which will be described later. Preferred are groups having an unsaturated bond, such as -CH=CH₂, -CF=CH₂, -CH=CF₂, - CF=CF₂, -CH₂-CH=CH₂, -CF₂-CF=CH₂, -CF₂-CF=CF₂, -(C=O)-CH=CH₂, -(C=O)-CF=CH₂, -(C=O)-CH=CF₂, -(C=O)-CF=CF₂, - (C=O)-C(CH₃)=CH₂, -(C=O)-C(CF₃)=CH₂, -(C=O)-C(CH₃)=CF₂, - (C=O)-C(CF₃)=CF₂, -O-CH₂-CH=CH₂, -O-CF₂-CF=CH₂, -O-CH₂-CH=CF₂, and -O-CF₂-CF=CF₂.

Since the modifying monomer (A) has a functional group capable of reacting by radical polymerization, it is presumed that when used in the polymerization, it reacts with a fluorine-containing monomer at the initial stage of the polymerization reaction and forms particles with high stability having a hydrophilic group derived from the modifying monomer (A). Therefore, it is considered that the number of particles increases when the polymerization is performed in the presence of the modifying monomer (A).

The polymerization may be performed in the presence of one or more of the modifying monomers (A).

In the polymerization, a compound having an unsaturated bond may be used as the modifying monomer (A).

The modifying monomer (A) is preferably a compound represented by the general formula (4):

CXⁱX^{k}=CX^{j}R^{a}-(CZ¹Z²)ₖ-Y³ (4)

wherein Xⁱ, X^{j}, and X^{k} are each independently F, Cl, H, or CF₃; Y³ is a hydrophilic group; R^{a} is a linking group; Z¹ and Z² are each independently H, F, or CF₃; and k is 0 or 1.

Examples of the hydrophilic group include -NH₂, -PO₃M, -OPO₃M, -SO₃M, -OSO₃M, and -COOM, wherein M represents H, a metal atom, NR⁷₄, imidazolium optionally having a substituent, pyridinium optionally having a substituent, or phosphonium optionally having a substituent, wherein R⁷ is H or an organic group, and may be the same or different, and any two thereof may be bonded to each other to form a ring. Of these, the hydrophilic group is preferably -SO₃M or -COOM. R⁷ is preferably H or a C₁₋₁₀ organic group, more preferably H or a C₁₋₄ organic group, and still more preferably H or a C₁₋₄ alkyl group.

Examples of the metal atom include monovalent and divalent metal atoms, alkali metals (Group 1) and alkaline earth metals (Group 2), and preferred is Na, K, or Li.

The use of the modifying monomer (A) allows for obtaining an aqueous dispersion having a smaller average primary particle size and superior stability. Also, the aspect ratio of the primary particles can be made smaller.

R^{a} is a linking group. The "linking group" as used herein refers to a divalent linking group. The linking group may be a single bond and preferably contains at least one carbon atom, and the number of carbon atoms may be 2 or more, 4 or more, 8 or more, 10 or more, or 20 or more. The upper limit thereof is not limited, but may be 100 or less, and may be 50 or less, for example.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas and carbamates. The linking group may be free from carbon atoms and may be a catenary heteroatom such as oxygen, sulfur, or nitrogen.

R^{a} is preferably a catenary heteroatom such as oxygen, sulfur, or nitrogen, or a divalent organic group.

When R^{a} is a divalent organic group, the hydrogen atom bonded to the carbon atom may be replaced by a halogen other than fluorine, such as chlorine, and may or may not contain a double bond. Further, R^{a} may be linear or branched, and may be cyclic or acyclic. R^{a} may also contain a functional group (e.g., ester, ether, ketone, amine, halide).

R^{a} may also be a fluorine-free divalent organic group or a partially fluorinated or perfluorinated divalent organic group.

R^{a} may be, for example, a hydrocarbon group in which a fluorine atom is not bonded to a carbon atom, a hydrocarbon group in which some of the hydrogen atoms bonded to a carbon atom are replaced by fluorine atoms, a hydrocarbon group in which all of the hydrogen atoms bonded to the carbon atoms are replaced by fluorine atoms, -(C=O)-, -(C=O)-O-, or a hydrocarbon group containing - (C=O)-, and these groups optionally contain an oxygen atom, optionally contain a double bond, and optionally contain a functional group.

R^{a} is preferably -(C=O)-, -(C=O)-O-, or a hydrocarbon group having 1 to 100 carbon atoms that optionally contains an ether bond and optionally contains a carbonyl group, wherein some or all of the hydrogen atoms bonded to the carbon atoms in the hydrocarbon group may be replaced by fluorine.

R^{a} is preferably at least one selected from -(CH₂)ₐ-, -(CF₂)ₐ-, -O-(CF₂)ₐ-, -(CF₂)ₐ-O-(CF₂)_{b}-, -O(CF₂)ₐ-O-(CF₂)_{b}-, -(CF₂)ₐ-[O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-, -O[(CF₂)ₐ-O]_{b}-[(CF₂)_{c}-O]_{d}-, -O-[CF₂CF(CF₃)O]ₐ-(CF₂)_{b}-, -(C=O)-, -(C=O)-O-, -(C=O)-(CH₂)ₐ-, -(C=O)-(CF₂)ₐ-, -(C=O)-O-(CH₂)ₐ-, -(C=O)-O-(CF₂)ₐ-, -(C=O)-[(CH₂)ₐ-O]_{b}-, - (C=O)-[(CF₂)ₐ-O]_{b}-, -(C=O)-O[(CH₂)ₐ-O]_{b}-, -(C=O)-O[(CF₂)ₐ-O]_{b}-, -(C=O)-O[(CH₂)ₐ-O]_{b}-(CH₂)_{c}-, -(C=O)-O[(CF₂)ₐ-O]_{b}-(CF₂)_{c}-, -(C=O)-(CH₂)ₐ-O-(CH₂)_{b}-, -(C=O)-(CF₂)ₐ-O-(CF₂)_{b}-, - (C=O)-O-(CH₂)ₐ-O-(CH₂)_{b}-, -(C=O)-O-(CF₂)ₐ-O-(CF₂)_{b}-, - (C=O)-O-C₆H₄-, and combinations thereof.

In the formula, a, b, c, and d are independently at least 1 or more. a, b, c and d may independently be 2 or more, 3 or more, 4 or more, 10 or more, or 20 or more. The upper limits of a, b, c, and d are 100, for example.

Specific examples suitable for R^{a} include -CF₂-O-, -CF₂-O-CF₂-, -CF₂-O-CH₂-, -CF₂-O-CH₂CF₂-, -CF₂-O-CF₂CF₂-, - CF₂-O-CF₂CH₂-, -CF₂-O-CF₂CF₂CH₂-, -CF₂-O-CF(CF₃)-, -CF₂-O-CF(CF₃)CF₂-, -CF₂-O-CF(CF₃)CF₂-O-, -CF₂-O-CF(CF₃)CH₂-, - (C=O)-, -(C=O)-O-, -(C=O)-(CH₂)-, -(C=O)-(CF₂)-, -(C=O)-O-(CH₂)-, -(C=O)-O-(CF₂)-, -(C=O)-[(CH₂)₂-O]ₙ-, -(C=O)-[(CF₂)₂-O]ₙ-, -(C=O)-O[(CH₂)₂-O]ₙ-, -(C=O)-O[(CF₂)₂-O]ₙ-, -(C=O)-O[(CH₂)₂-O]ₙ-(CH₂)-, -(C=O)-O[(CF₂)₂-O]ₙ-(CF₂)-, -(C=O)-(CH₂)₂-O-(CH₂)-, -(C=O)-(CF₂)₂-O-(CF₂)-, -(C=O)-O-(CH₂)₂-O-(CH₂)-, -(C=O)-O-(CF₂)₂-O-(CF₂)-, and -(C=O)-O-C₆H₄-. In particular, preferred for R^{a} among these is - CF₂-O-, -CF₂-O-CF₂-, -CF₂-O-CF₂CF₂-, -CF₂-O-CF(CF₃)-, -CF₂-O-CF(CF₃)CF₂-, -CF₂-O-CF(CF₃)CF₂-O-, - (C=O)-, -(C=O)-O-,-(C=O)-(CH₂)-, -(C=O)-O-(CH₂)-, -(C=O)-O[(CH₂)₂-O]ₙ-, (C=O)-O[(CH₂)₂-O]ₙ-(CH₂)-, -(C=O)-(CH₂)₂-O-(CH₂)-, or - (C=O)-O-C₆H₄-.

In the formula, n is an integer of 1 to 10.

-R^{a}-(CZ¹Z²)ₖ in the general formula (4) is preferably -CF₂-O-CF₂-, -CF₂-O-CF(CF₃)-, -CF₂-O-C(CF₃)₂-, - CF₂-O-CF₂-CF₂-, -CF₂-O-CF₂-CF(CF₃)-, -CF₂-O-CF₂-C(CF₃)₂-, - CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-, -CF₂-O-CF(CF₃)-CF(CF₃)-, - CF₂-O-CF(CF₃)-C(CF₃)₂-, -CF₂-O-CF(CF₃)-CF₂-, -CF₂-O-CF(CF₃)-CF(CF₃)-, -CF₂-O-CF(CF₃)-C(CF₃)₂-, -CF₂-O-CF(CF₃)CF₂-CF₂-, - CF₂-O-CF(CF₃)CF₂-CF(CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, -CF₂-O-CF(CF₃)CF₂-O-C(CF₃)₂-, -(C=O)-, -(C=O)-O-, -(C=O)-(CH₂)-, -(C=O)-(CF₂)-, -(C=O)-O-(CH₂)-, -(C=O)-O-(CF₂)-, -(C=O)-[(CH₂)₂-O]ₙ-(CH₂)-, -(C=O)[(CF₂)₂-O]ₙ-(CF₂)-, -(C=O)-[(CH₂)₂-O]ₙ-(CH₂)-(CH₂)-, (C=O)[(CF₂)₂-O](CF₂)(CF₂)-, (C=O)-O[(CH₂)₂-O]ₙ-(CF₂)-, -(C=O)-O[(CH₂)₂-O]ₙ-(CH₂)-(CH₂)-, -(C=O)-O[(CF₂)₂-O]ₙ-(CF₂)-, -(C=O)-O[(CF₂)₂-O]ₙ-(CF₂)-(CF₂)-, -(C=O)-(CH₂)₂-O-(CH₂)-(CH₂)-, -(C=O)-(CF₂)₂-O-(CF₂)-(CF₂)-, -(C=O)-O-(CH₂)₂-O-(CH₂)-(CH₂)-, -(C=O)-O-(CF₂)₂-O-(CF₂)-(CF₂)-, -(C=O)-O-(CH₂)₂-O-(CH₂)-C (CF₃)₂-, -(C=O)-O-(CF₂)₂-O-(CF₂)-C(CF₃)₂-, or -(C=O)-O-C₆H₄-C(CF₃)₂-, and is more preferably -CF₂-O-CF(CF₃)-, -CF₂-O-CF₂-CF(CF₃)-, -CF₂-O-CF₂CF₂-CF(CF₃)-, -CF₂-O-CF(CF₃)-CF(CF₃)-, -CF₂-O-CF(CF₃)CF₂-CF(CF₃)-, -CF₂-O-CF(CF₃)CF₂-O-CF(CF₃)-, - (C=O) -, -(C=O)-O-(CH₂)-, -(C=O)-O-(CH₂)-(CH₂)-, -(C=O)-O[(CH₂)₂-O]ₙ-(CH₂)-(CH₂)-, -(C=O)-O-(CH₂)₂-O-(CH₂)-C(CF₃)₂-, or -(C=O)-O-C₆H₄-C(CF₃)₂-.

In the formula, n is an integer of 1 to 10.

Specific examples of the compound represented by the general formula (4) include compounds represented by the following formulas: 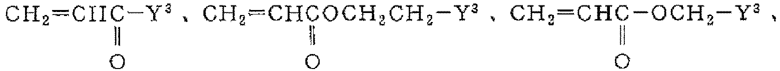 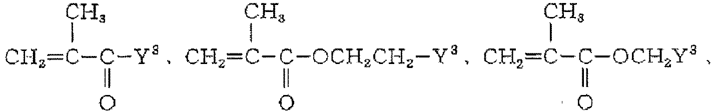 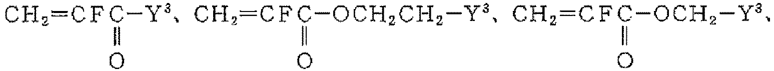 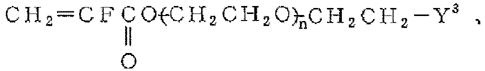 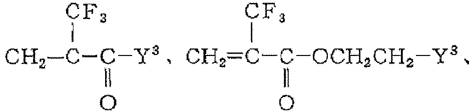 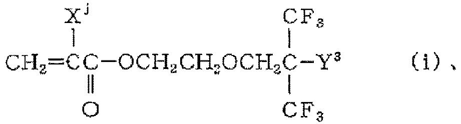 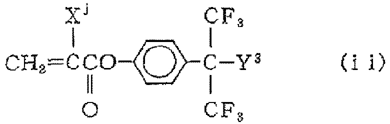 wherein X^{j} and Y³ are as described above; and n is an integer of 1 to 10.

R^{a} is preferably a divalent group represented by the following general formula (r1):

-(C=O)ₕ-(O)ᵢ-CF₂-O-(CX⁶₂)ₑ-{O-CF(CF₃)}_{f}-(O)_{g}- (r1)

wherein X⁶ is each independently H, F, or CF₃; e is an integer of 0 to 3; f is an integer of 0 to 3; g is 0 or 1; h is 0 or 1; and i is 0 or 1,
and is also preferably a divalent group represented by the following general formula (r2):

   -(C=O)ₕ-(O)ᵢ-CF₂-O-(CX⁷₂)ₑ-(O)_{g}- (r2)
wherein X⁷ is each independently H, F, or CF₃; e is an integer of 0 to 3; g is 0 or 1; h is 0 or 1; and i is 0 or 1.

-R^{a}-CZ¹Z²- in the general formula (4) is also preferably a divalent group represented by the following formula (t1):

-(C=O)ₕ-(O)ᵢ-CF₂-O-(CX⁶₂)ₑ-{O-CF(CF₃)}_{f}-(O)_{g}-CZ¹Z²- (t1)

wherein X⁶ is each independently H, F, or CF₃; e is an integer of 0 to 3; f is an integer of 0 to 3; g is 0 or 1; h is 0 or 1; i is 0 or 1; and Z¹ and Z² are each independently F or CF₃,
and is more preferably a group in which one of Z¹ and Z² is F and the other is CF₃ in the formula (t1).

Also, in the general formula (4), -R^{a}-CZ¹Z²- is preferably a divalent group represented by the following formula (t2):

-(C=O)ₕ-(O)ᵢ-CF₂-O-(CX⁷₂)ₑ-(O)_{g}-CZ¹Z²- (t2)

wherein X⁷ is each independently H, F, or CF₃; e is an integer of 0 to 3; g is 0 or 1; h is 0 or 1; i is 0 or 1; and Z¹ and Z² are each independently H, F, or CF₃,
and is more preferably a group in which one of Z¹ and Z² is F and the other is CF₃ in the formula (t2).

The compound represented by the general formula (4) also preferably has a C-F bond and does not have a C-H bond, in the portion excluding the hydrophilic group (Y³). In other words, in the general formula (4), Xⁱ, X^{j}, and X^{k} are all F, and R^{a} is preferably a perfluoroalkylene group having 1 or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by the general formula (4) may be partially fluorinated. In other words, the compound represented by the general formula (4) also preferably has at least one hydrogen atom bonded to a carbon atom and at least one fluorine atom bonded to a carbon atom, in the portion excluding the hydrophilic group (Y³).

The compound represented by the general formula (4) is also preferably a compound represented by the following formula (4a):

CF₂=CF-O-Rf⁰-Y³ (4a)

wherein Y³ is a hydrophilic group; and Rf⁰ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by the general formula (4) is also preferably a compound represented by the following formula (4b):

CH₂=CH-O-Rf⁰-Y³ (4b)

wherein Y³ is a hydrophilic group; and Rf⁰ is a perfluorinated divalent linking group as defined in the formula (4a).

In the general formula (4), Y³ is preferably -OSO₃M. Examples of the polymerized units derived from the compound represented by the general formula (4) when Y³ is -OSO₃M include - [CF₂CF(OCF₂CF₂CH₂OSO₃M)]-, - [CH₂CH((CF₂)₄CH₂OSO₃M)]-, -[CF₂CF(O(CF₂)₄CH₂OSO₃M)] -, - [CF₂CF(OCF₂CF(CF₃)CH₂OSO₃M)]-, - [CF₂CF(OCF₂CF(CF₃)OCF₂CF₂CH₂OSO₃M)] -, - [CH₂CH((CF₂)₄CH₂OSO₃M)]-, - [CF₂CF(OCF₂CF₂SO₂N(CH₃)CH₂CH₂OSO₃M)]-, - [CH₂CH(CF₂CF₂CH₂OSO₃M)]-, - [CF₂CF(OCF₂CF₂CF₂CF₂SO₂N(CH₃)CH₂CH₂OSO₃M)]-, and - [CH₂CH(CF₂CF₂CH₂OSO₃M)]-. In the formula, M is as described above.

In the general formula (4), Y³ is preferably -SO₃M. Examples of the polymerized units derived from the compound represented by the general formula (4) when Y³ is -SO₃M include -[CF₂CF(OCF₂CF₂SO₃M)]-, - [CF₂CF(O(CF₂)₄SO₃M)]-, -[CF₂CF(OCF₂CF(CF₃)SO₃M)]-, - [CF₂CF(OCF₂CF(CF₃)OCF₂CF₂SO₃M)]-, -[CH₂CH(CF₂CF₂SO₃M)]-, - [CF₂CF(OCF₂CF(CF₃)OCF₂CF₂CF₂CF₂SO₃M)]-, -[CH₂CH((CF₂)₄SO₃M)]-, -[CH₂CH(CF₂CF₂SO₃M)]-, and -[CH₂CH((CF₂)₄SO₃M)]-. In the formula, M is as described above.

In the general formula (4), Y³ is preferably -COOM. Examples of the polymerized units derived from the compound represented by the general formula (4) when Y³ is -COOM include -[CF₂CF(OCF₂CF₂COOM)]-, - [CF₂CF(O(CF₂)₅COOM)]-, -[CF₂CF(OCF₂CF(CF₃)COOM)]-, - [CF₂CF(OCF₂CF(CF₃)O(CF₂)ₙCOOM)]- (n is greater than 1), - [CH₂CH(CF₂CF₂COOM)]-, -[CH₂CH((CF₂)₄COOM)]-, - [CH₂CH(CF₂CF₂COOM)]-, -[CH₂CH((CF₂)₄COOM)]-, - [CF₂CF(OCF₂CF₂SO₂NR'CH₂COOM)]-, - [CF₂CF(O(CF₂)₄SO₂NR'CH₂COOM)]-, - [CF₂CF(OCF₂CF(CF₃)SO₂NR'CH₂COOM)]-, - [CF₂CF(OCF₂CF(CF₃)OCF₂CF₂SO₂NR'CH₂COOM)]-, - [CH₂CH(CF₂CF₂SO₂NR'CH₂COOM)]-, - [CF₂CF(OCF₂CF(CF₃)OCF₂CF₂CF₂CF₂SO₂NR'CH₂COOM)]-, - [CH₂CH((CF₂)₄SO₂NR'CH₂COOM)]-, - [CH₂CH(CF₂CF₂SO₂NR'CH₂COOM)]-, and - [CH₂CH((CF₂)₄SO₂NR'CH₂COOM)]-. In the formula, R' is H or a C₁₋₄ alkyl group, and M is as described above.

In the general formula (4), Y³ is preferably -OPO₃M. Examples of the polymerized units derived from the compound represented by the general formula (4) when Y³ is -OPO₃M include -[CF₂CF(OCF₂CF₂CH₂OP(O)(OM)₂)]-, - [CF₂CF(O(CF₂)₄CH₂OP(O)(OM)₂)]-, - [CF₂CF(OCF₂CF(CF₃)CH₂OP(O)(OM)₂)]-, - [CF₂CF(OCF₂CF(CF₃)OCF₂CF₂CH₂OP(O)(OM)₂)]-, - [CF₂CF(OCF₂CF₂SO₂N(CH₃)CH₂CH₂OP(O)(OM)₂)]-, - [CF₂CF(OCF₂CF₂CF₂CF₂SO₂N(CH₃)CH₂CH₂OP(O)(OM)₂)]-, - [CH₂CH(CF₂CF₂CH₂OP(O)(OM)₂)]-, - [CH₂CH((CF₂)₄CH₂OP(O)(OM)₂)]-, - [CH₂CH(CF₂CF₂CH₂OP(O)(OM)₂)]-, and - [CH₂CH((CF₂)₄CH₂OP(O)(OM)₂)]-. In the formula, M is as described above.

In the general formula (4), Y³ is preferably -PO₃M. Examples of the polymerized units derived from the compound represented by the general formula (4) when Y³ is -PO₃M include -[CF₂CF(OCF₂CF₂P(O)(OM)₂)]-, - [CF₂CF(O(CF₂)₄P(O)(OM)₂)]-, -[CF₂CF(OCF₂CF(CF₃)P(O)(OM)₂)]-, -[CF₂CF(OCF₂CF(CF₃)OCF₂CF₂P(O)(OM)₂)]-, - [CH₂CH(CF₂CF₂P(O)(OM)₂)]-, -[CH₂CH((CF₂)₄P(O)(OM)₂)]-, - [CH₂CH(CF₂CF₂P(O)(OM)₂)]-, and -[CH₂CH((CF₂)₄P(O)(OM)₂)]-, wherein M is as described above.

The compound represented by the general formula (4) is preferably at least one selected from the group consisting of:
a monomer represented by the following general formula (5):

   CX₂=CY(-CZ₂-O-Rf-Y³) (5)

   wherein X is the same or different and is -H or -F; Y is -H, -F, an alkyl group, or a fluorine-containing alkyl group; Z is the same or different and -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above;
a monomer represented by the following general formula (6):

   CX₂=CY(-O-Rf-Y³) (6)
wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above; and
a monomer represented by the following general formula (7):

   CX₂=CY(-Rf-Y³) (7)
wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above.

In the general formula (5), each X is -H or -F. X may be both -F, or at least one thereof may be -H. For example, one thereof may be -F and the other may be -H, or both may be -H.

In the general formula (5), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or -CF₃, and more preferably -F.

In the general formula (5), Z is the same or different and is -H, -F, an alkyl group, or a fluoroalkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Z is preferably -H, -F, or -CF₃, and more preferably -F.

In the general formula (5), at least one of X, Y, and Z preferably contains a fluorine atom. For example, X, Y, and Z may be -H, -F, and -F, respectively.

In the general formula (5), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group also preferably has 30 or less carbon atoms, more preferably 20 or less carbon atoms, and still more preferably 10 or less carbon atoms. Examples of the fluorine-containing alkylene group include -CF₂-, -CH₂CF₂-, -CF₂CF₂-, -CF₂CH₂-, -CF₂CF₂CH₂-, -CF(CF₃)-, -CF(CF₃)CF₂-, and -CF(CF₃)CH₂-. The fluorine-containing alkylene group is preferably a perfluoroalkylene group.

The fluorine-containing alkylene group having an ether bond preferably has 3 or more carbon atoms. The fluorine-containing alkylene group having an ether bond also preferably has 60 or less carbon atoms, more preferably 30 or less carbon atoms, and still more preferably 12 or less carbon atoms.

For example, the fluorine-containing alkylene group having an ether bond is preferably a divalent group represented by the following formula: 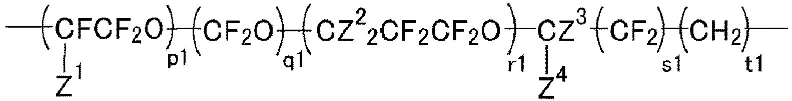 wherein Z¹ is F or CF₃; Z² and Z³ are each H or F; Z⁴ is H, F, or CF₃; p1+q1+r1 is an integer of 0 to 10; s1 is 0 or 1; and t1 is an integer of 0 to 5, with the proviso that when Z³ and Z⁴ are both H, p1+q1+r1+s1 is not 0.

Specific examples of the fluorine-containing alkylene group having an ether bond include -CF(CF₃)CF₂-O-CF(CF₃)-, -(CF(CF₃)CF₂-O)ₙ-CF(CF₃)- (where n is an integer of 1 to 10), -CF(CF₃)CF₂-O-CF(CF₃)CH₂-, - (CF(CF₃)CF₂-O)ₙ-CF(CF₃)CH₂- (where n is an integer of 1 to 10), -CH₂CF₂CF₂O-CH₂CF₂CH₂-, -CF₂CF₂CF₂O-CF₂CF₂-, - CF₂CF₂CF₂O-CF₂CF₂CH₂-, -CF₂CF₂O-CF₂-, -CF₂CF₂O-CF₂CH₂-, and - CF(CF₃)CH₂-.

The fluorine-containing alkylene group having an ether bond is preferably a perfluoroalkylene group.

In the general formula (5), Y³ is -COOM, -SO₃M, or -OSO₃M, wherein M is H, a metal atom, NR⁷₄, imidazolium optionally having a substituent, pyridinium optionally having a substituent, or phosphonium optionally having a substituent, wherein R⁷ is H or an organic group, and may be the same or different, and any two thereof may be bonded to each other to form a ring.

R⁷ is preferably H or a C₁₋₁₀ organic group, more preferably H or a C₁₋₄ organic group, and still more preferably H or a C₁₋₄ alkyl group.

Examples of the metal atom include alkali metals (Group 1) and alkaline earth metals (Group 2), and preferred is Na, K, or Li.

M is preferably -H, a metal atom, or -NR⁷₄, more preferably -H, an alkali metal (Group 1), an alkaline earth metal (Group 2), or -NR⁷₄, still more preferably -H, -Na, -K, -Li, or -NH₄, further preferably -Na, -K, or - NH₄, particularly preferably -Na or -NH₄, and most preferably -NH₄.

Y³ is preferably -COOM or -SO₃M, and more preferably -COOM.

Examples of suitable monomers represented by the general formula (5) include a fluoroallyl ether compound represented by the following formula (5a):

CX^{h}₂=CFCF₂-O-(CF(CF₃)CF₂O)ₙ₅-CF(CF₃)-Y³ (5a)

wherein each X^{h} is the same, and represents F or H; n5 represents 0 or an integer of 1 to 10; and Y³ is as defined above.

In the general formula (5a), n5 is preferably 0 or an integer of 1 to 5, more preferably 0, 1, or 2, and still more preferably 0 or 1 from the viewpoint of obtaining PTFE particles having a small primary particle size. Y³ is preferably -COOM from the viewpoint of obtaining appropriate water-solubility and surface activity, and M is preferably H or NH₄ from the viewpoint of being less likely to remain as impurities and improving the heat resistance of the resulting composition and the stretched body obtained from the composition.

The monomer represented by the general formula (5) is preferably a monomer (5b) represented by the following general formula (5b):

CH₂=CF(-CF₂-O-Rf-Y³) (5b)

wherein Rf and Y³ are as described above.

Specific examples of the monomer represented by the general formula (5b) include a monomer represented by the following formula: 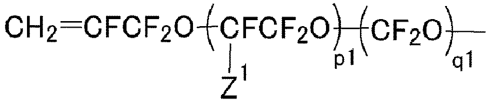 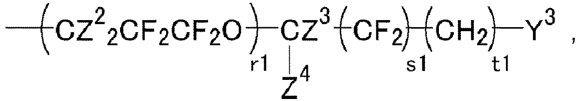 wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5; and Y³ is as described above, with the proviso that when Z³ and Z⁴ are both H, p1+q1+r1+s1 is not 0. More specifically, preferred examples thereof include:

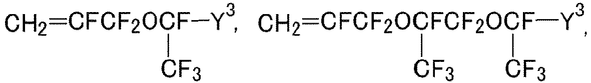

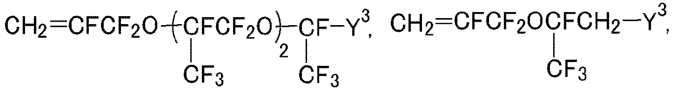

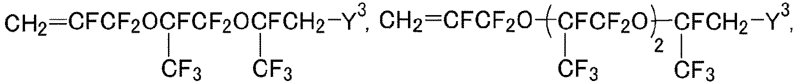

CH₂=CFCF₂OCH₂CF₂-Y³, CH₂=CFCF₂O(CH₂CF₂CF₂O)CH₂CF₂-Y³,

CH₂=CFCF₂OCH₂CF₂CH₂-Y³,

CH₂=CFCF₂O(CH₂CF₂CF₂O)CH₂CF₂CH₂-Y³,

CH₂=CFCF₂OCF₂OF₂-Y³, CH₂=CFCF₂O(CF₂CF₂CF₂O)CF₂CF₂-Y³,

CH₂=CFCF₂OCF₂CF₂CH₂-Y³,

CH₂=CFCF₂O(CF₂CF₂CF₂O)CF₂CF₂CH₂-Y³,

CH₂=CFCF₂OCF₂-Y³, CH₂=CFCF₂O(CF₂CF₂O)CF₂-Y³,

CH₂=CFCF₂OCF₂CH₂-Y³,

CH₂=CFCF₂O(CF₂CF₂O)CF₂CH₂-Y³,

Of these, preferred are:

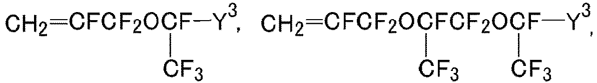

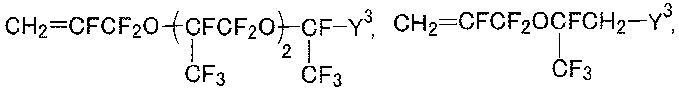

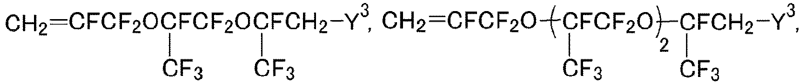

In the monomer represented by the general formula (5b), Y³ in the formula (5b) is preferably -COOM. Specifically, the monomer represented by the general formula (5b) is preferably at least one selected from the group consisting of CH₂=CFCF₂OCF(CF₃)COOM and CH₂=CFCF₂OCF(CF₃)CF₂OCF(CF₃)COOM (wherein M is as defined above), and more preferably CH₂=CFCF₂OCF(CF₃)COOM.

The monomer represented by the general formula (5) is preferably a monomer (5c) represented by the following general formula (5c):

CX²₂=CFCF₂-O-(CF(CF₃)CF₂O)ₙ₅-CF(CF₃)-Y³ (5c)

wherein each X² is the same, and each represent F or H; n5 represents 0 or an integer of 1 to 10; and Y³ is as defined above.

In the formula (5c), n5 is preferably 0 or an integer of 1 to 5, more preferably 0, 1, or 2, and still more preferably 0 or 1 from the viewpoint of stability of the resulting aqueous dispersion. Y³ is preferably -COOM¹ from the viewpoint of obtaining appropriate water-solubility and stability of the aqueous dispersion, and M¹ is preferably H or NH₄ from the viewpoint of being less likely to remain as impurities and improving the heat resistance of the resulting molded body.

Examples of the perfluorovinylalkyl compound represented by the formula (5c) include CH₂=CFCF₂OCF(CF₃)COOM¹ and CH₂=CFCF₂OCF(CF₃)CF₂OCF(CF₃)COOM¹, wherein M¹ is as defined above.

Examples of the monomer represented by the general formula (5) further include a monomer represented by the following general formula (5d) and a monomer represented by the following general formula (5e):

CF₂=CFCF₂-O-Rf-Y³ (5d)

CF₂=CF-Rf-Y³ (5e)

wherein Rf and Y³ are as described above.

More specific examples thereof include:

CF₂=CFCF₂OCF₂CF₂CF₂-Y³,

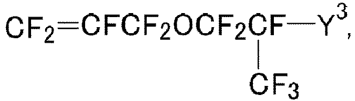

CF₂=CFCF₂OCF₂CF₂CF₂CH₂-Y³,

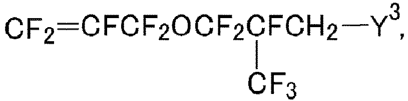

In the general formula (6), each X is -H or -F. X may be both -F, or at least one thereof may be -H. For example, one thereof may be -F and the other may be -H, or both may be -H.

In the general formula (6), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or -CF₃, and more preferably -F.

In the general formula (6), at least one of X and Y preferably contains a fluorine atom. For example, X, Y, and Z may be -H, -F, and -F, respectively.

In the general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group also preferably has 30 or less carbon atoms, more preferably 20 or less carbon atoms, and still more preferably 10 or less carbon atoms. Examples of the fluorine-containing alkylene group include -CF₂-, -CH₂CF₂-, -CF₂CF₂-, -CF₂CH₂-, -CF₂CF₂CH₂-, -CF(CF₃)-, -CF(CF₃)CF₂-, and -CF(CF₃)CH₂-. The fluorine-containing alkylene group is preferably a perfluoroalkylene group.

The monomer represented by the general formula (6) is preferably at least one selected from the group consisting of monomers represented by the following general formulas (6a), (6b), (6c), and (6d):

CF₂=CF-(CF₂)ₙ₁-Y³ (6a)

wherein n1 represents an integer of 1 to 10; Y³ represents -SO₃M¹ or -COOM¹; M¹ represents H, a metal atom, NR⁷₄, imidazolium optionally having a substituent, pyridinium optionally having a substituent, or phosphonium optionally having a substituent; and R⁷ represents H or an organic group;

CF₂=CF-(CF₂C(CF₃)F)ₙ₂-Y³ (6b)

wherein n2 represents an integer of 1 to 5, and Y³ is as defined above;

CF₂=CF-O-(CFX¹)ₙ₃-Y³ (6c)

wherein X¹ represents F or CF₃; n3 represents an integer of 1 to 10; and Y³ is as defined above; and

CF₂=CF-O-(CF₂CFX¹O)ₙ₄-CF₂CF₂-Y³ (6d)

wherein n4 represents an integer of 1 to 10; and Y³ and X¹ are as defined above.

In the formula (6a), n1 is preferably an integer of 5 or less, and more preferably an integer of 2 or less. Y³ is preferably -COOM¹ from the viewpoint of obtaining appropriate water-solubility and stability of the aqueous dispersion, and M¹ is preferably H or NH₄ from the viewpoint of being less likely to remain as impurities and improving the heat resistance of the resulting molded body.

Examples of the perfluorovinylalkyl compound represented by the formula (6a) include CF₂=CFCF₂COOM¹, wherein M¹ is as defined above.

In the formula (6b), n2 is preferably an integer of 3 or less from the viewpoint of stability of the resulting aqueous dispersion, Y³ is preferably -COOM¹ from the viewpoint of obtaining appropriate water-solubility and stability of the aqueous dispersion, and M¹ is preferably H or NH₄ from the viewpoint of being less likely to remain as impurities and improving the heat resistance of the resulting molded body.

In the formula (6c), n3 is preferably an integer of 5 or less from the viewpoint of water-solubility, Y³ is preferably -COOM¹ from the viewpoint of obtaining appropriate water-solubility and stability of the aqueous dispersion, and M¹ is preferably H or NH₄ from the viewpoint of improving dispersion stability.

In the formula (6d), X¹ is preferably -CF₃ from the viewpoint of stability of the aqueous dispersion, n4 is preferably an integer of 5 or less from the viewpoint of water-solubility, Y³ is preferably -COOM¹ from the viewpoint of obtaining appropriate water-solubility and stability of the aqueous dispersion, and M¹ is preferably H or NH₄.

Examples of the perfluorovinyl ether compound represented by the formula (6d) include CF₂=CFOCF₂CF(CF₃)OCF₂CF₂COOM¹, wherein M¹ represents H, NH₄, or an alkali metal.

In the general formula (7), Rf is preferably a fluorine-containing alkylene group having 1 to 40 carbon atoms. In the general formula (7), at least one of X and Y preferably contains a fluorine atom.

The monomer represented by the general formula (7) is preferably at least one selected from the group consisting of:
a monomer represented by the following general formula (7a):

   CF₂=CF-(CF₂)ₙ₁-Y³ (7a)

   wherein n1 represents an integer of 1 to 10; and Y³ is as defined above; and
a monomer represented by the following general formula (7b):

   CF₂=CF-(CF₂C(CF₃)F)ₙ₂-Y³ (7b)

   wherein n2 represents an integer of 1 to 5; and Y³ is as defined above.
Y³ is preferably -SO₃M¹ or -COOM¹, and M¹ is preferably H, a metal atom, NR⁷₄, imidazolium optionally having a substituent, pyridinium optionally having a substituent, or phosphonium optionally having a substituent. R⁷ represents H or an organic group.

In the formula (7a), n1 is preferably an integer of 5 or less, and more preferably an integer of 2 or less. Y³ is preferably -COOM¹ from the viewpoint of obtaining appropriate water-solubility and stability of the aqueous dispersion, and M¹ is preferably H or NH₄ from the viewpoint of being less likely to remain as impurities and improving the heat resistance of the resulting molded body.

Examples of the perfluorovinylalkyl compound represented by the formula (7a) include CF₂=CFCF₂COOM¹, wherein M¹ is as defined above.

In the formula (7b), n2 is preferably an integer of 3 or less from the viewpoint of stability of the resulting aqueous dispersion, Y³ is preferably -COOM¹ from the viewpoint of obtaining appropriate water-solubility and stability of the aqueous dispersion, and M¹ is preferably H or NH₄ from the viewpoint of being less likely to remain as impurities and improving the heat resistance of the resulting molded body.

The modified monomer preferably contains a modifying monomer (A), and preferably contains at least one selected from the group consisting of compounds represented by the general formulas (5c), (6a), (6b), (6c), and (6d), and more preferably contains a compound represented by the general formula (5c).

The content of the modifying monomer (A) is preferably in the range of 0.00001 to 1.0% by mass. The lower limit thereof is more preferably 0.0001% by mass, still more preferably 0.0005% by mass, further preferably 0.001% by mass, still further preferably 0.005% by mass, and particularly preferably 0.009% by mass. The upper limit thereof is preferably 0.90% by mass, more preferably 0.50% by mass, still more preferably 0.40% by mass, still further preferably 0.30% by mass, still further preferably 0.10% by mass, still further preferably 0.08% by mass, particularly preferably 0.05% by mass, and very particularly preferably 0.01% by mass.

The modifying monomer is preferably at least one selected from the group consisting of hexafluoropropylene, vinylidene fluoride, fluoro(alkyl vinyl ether), (perfluoroalkyl)ethylene, and ethylene from the viewpoint of obtaining a stretched body having a high strength, more preferably at least one selected from the group consisting of perfluoro(methyl vinyl ether), perfluoro(propyl vinyl ether), (perfluorobutyl)ethylene, (perfluorohexyl)ethylene, and (perfluorooctyl)ethylene, and still more preferably perfluoro(methyl vinyl ether).

The modified PTFE has modifying monomer units in the range of 0.00001 to 1.0% by mass. The lower limit of the modifying monomer unit is more preferably 0.0001% by mass, still more preferably 0.0005% by mass, further preferably 0.001% by mass, still more preferably 0.005% by mass, and particularly preferably 0.009% by mass. The upper limit of the modifying monomer is preferably 0.90% by mass, more preferably 0.50% by mass, still more preferably 0.30% by mass, further preferably 0.10% by mass, further preferably 0.08% by mass, still further preferably 0.05% by mass, and very particularly preferably 0.01% by mass. The term "modifying monomer unit" as used herein means a portion of the molecular structure of the modified PTFE as a part derived from the modifying monomer, and the term "all the monomer units" herein means all the portions derived from monomers in the molecular structure of the modified PTFE.

The contents of the respective monomers constituting the PTFE can be calculated herein by any appropriate combination of NMR, FT-IR, elemental analysis, and X-ray fluorescence analysis in accordance with the types of the monomers.

The PTFE is preferably a PTFE that has no history of being heated at a temperature equal to or higher than the primary peak temperature.

The PTFE may be non-sintered PTFE or semi-sintered PTFE. Non-sintered PTFE is preferable from the viewpoint of a simple process or easy control of thickness and pore size. Semi-sintered PTFE is preferable from the viewpoint of increasing the strength of the biaxially stretched film or reducing the pore size.

Examples of the non-sintered PTFE include a PTFE as polymerized.

The non-sintered PTFE is a PTFE that has no history of being heated to a temperature equal to or higher than the secondary peak temperature, and the semi-sintered PTFE is a PTFE that has no history of being heated to a temperature equal to or higher than the primary peak temperature and heated at a temperature less than the primary peak temperature and equal to or higher than the secondary peak temperature.

The primary peak temperature means the maximum peak temperature of the endothermic curve that appears on the crystal melting curve when non-sintered PTFE is measured by a differential scanning calorimeter.

The secondary peak temperature means the maximum peak temperature of the endothermic curve that appears on the crystal melting curve when the PTFE heated to a temperature equal to or higher than the primary peak temperature (for example, 360°C) is measured by a differential scanning calorimeter.

The endothermic curve herein is obtained by raising the temperature at a temperature-increasing rate of 10°C/min using a differential scanning calorimeter.

The PTFE may have a core-shell structure. Examples of the polytetrafluoroethylene having a core-shell structure include a modified polytetrafluoroethylene containing a high-molecular-weight polytetrafluoroethylene core in the particles and a lower-molecular-weight polytetrafluoroethylene or modified polytetrafluoroethylene shell.

An example of such a modified polytetrafluoroethylene is a polytetrafluoroethylene disclosed in National Publication of International Patent Application No. 2005-527652.

The PTFE of the present disclosure is obtained by a production method including a step of performing emulsion polymerization of tetrafluoroethylene alone or emulsion polymerization of tetrafluoroethylene and a modifying monomer copolymerizable with the tetrafluoroethylene in the presence of a specific hydrocarbon surfactant in an aqueous medium, and a step of continuously adding the specific hydrocarbon surfactant in the step. The PTFE of the present disclosure is preferably obtained by the production method.

Adding the specific hydrocarbon surfactant continuously means, for example, adding the specific hydrocarbon surfactant not all at once, but adding over time and without interruption or adding in portions. The specific hydrocarbon surfactant is, for example, a hydrocarbon surfactant having one or more carbonyl groups which are not in a carboxyl group or a hydrocarbon surfactant obtained by radically treating or oxidizing the hydrocarbon surfactant having one or more carbonyl groups which are not in a carboxyl group. The radical treatment may be any treatment that generates radicals in the hydrocarbon surfactant having one or more carbonyl groups which are not in a carboxyl group, for example, a treatment in which deionized water and the hydrocarbon surfactant are added to the reactor, the reactor is hermetically sealed, the inside of the reactor is replaced with nitrogen, the reactor is heated and pressurized, a polymerization initiator is charged, the reactor is stirred for a certain time, and then the reactor is depressurized to the atmospheric pressure, and the reactor is cooled. The oxidation treatment is a treatment in which an oxidizing agent is added to a hydrocarbon surfactant having one or more carbonyl groups which are not in a carboxyl group. Examples of the oxidizing agent include oxygen, ozone, hydrogen peroxide solution, manganese(IV) oxide, potassium permanganate, potassium dichromate, nitric acid, and sulfur dioxide. By obtaining the PTFE of the present disclosure by such a production method, the PTFE of the present disclosure can have an SSG of 2.175 or less and excellent stretchability even when the PTFE is obtained in the presence of a hydrocarbon surfactant. In other words, even without using a conventional fluorine-containing surfactant, the production method using a specific hydrocarbon surfactant can surprisingly produce PTFE having a molecular weight equivalent to that of PTFE obtained by a production method using such a conventional fluorine-containing surfactant.

The present disclosure also provides a polytetrafluoroethylene obtained by a production method including a step of performing emulsion polymerization of tetrafluoroethylene alone or emulsion polymerization of tetrafluoroethylene and a modifying monomer copolymerizable with the tetrafluoroethylene in the presence of a specific hydrocarbon surfactant in an aqueous medium, and a step of continuously adding the specific hydrocarbon surfactant in the step.

In the production method, the step of continuously adding the specific hydrocarbon surfactant is preferably a step of starting to add the hydrocarbon surfactant to the aqueous medium when the solid content of the PTFE formed in the aqueous medium is less than 0.60% by mass. The specific hydrocarbon surfactant is preferably started to be added to the aqueous medium when the solid content is 0.5% by mass or less. The specific hydrocarbon surfactant is more preferably started to be added when the solid content is 0.3% by mass or less, still more preferably started to be added when the solid content is 0.2% by mass or less, further preferably started to be added when the solid content is 0.1% by mass or less, and particularly preferably started to be added when the polymerization is initiated. The solid content is a concentration based on the total amount of the aqueous medium and the PTFE.

In the step of continuously adding the specific hydrocarbon surfactant, the amount of the specific hydrocarbon surfactant added is preferably 0.01 to 10% by mass based on 100% by mass of the aqueous medium. The lower limit thereof is more preferably 0.05% by mass, still more preferably 0.1% by mass while the upper limit thereof is more preferably 5% by mass, still more preferably 1% by mass.

In the step of performing emulsion polymerization of tetrafluoroethylene alone or emulsion polymerization of tetrafluoroethylene and a modifying monomer copolymerizable with the tetrafluoroethylene in the presence of a specific hydrocarbon surfactant in an aqueous medium, the amount of the specific hydrocarbon surfactant is preferably large, and is preferably 0.0001 to 10% by mass based on 100% by mass of the aqueous medium. The lower limit thereof is more preferably 0.001% by mass, while the upper limit thereof is more preferably 1% by mass. Less than 0.0001% by mass of the surfactant may cause insufficient dispersibility. More than 10% by mass of the surfactant may fail to give the effects corresponding to its amount; on the contrary, such an amount of the surfactant may cause a reduction in the polymerization rate or even stop the reaction. The amount of the specific hydrocarbon surfactant is appropriately determined depending on the type of monomer used, and the molecular weight of the target PTFE.

The specific hydrocarbon surfactant is preferably a surfactant represented by the formula: R-X, wherein R is a fluorine-free organic group having one or more carbonyl groups which are not in a carboxyl group and having 1 to 2,000 carbon atoms, X is, -OSO₃X¹, -COOX¹, or -SO₃X¹, wherein X¹ is H, a metal atom, NR¹₄, imidazolium optionally having a substituent, pyridinium optionally having a substituent, or phosphonium optionally having a substituent, wherein R¹ is H or an organic group and is the same or different. R preferably has 500 or less carbon atoms, more preferably 100 or less, still more preferably 50 or less, and further preferably 30 or less.

The specific hydrocarbon surfactant is preferably at least one selected from the group consisting of a surfactant represented by the following formula (a): 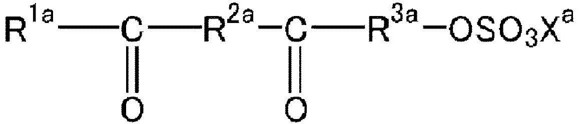 wherein R^{1a} is a linear or branched alkyl group having 1 or more carbon atoms or a cyclic alkyl group having 3 or more carbon atoms, with a hydrogen atom bonded to a carbon atom therein being optionally replaced by a hydroxy group or a monovalent organic group containing an ester bond, optionally contains a carbonyl group when having 2 or more carbon atoms, and optionally contains a monovalent or divalent heterocycle or optionally forms a ring when having 3 or more carbon atoms; R^{2a} and R^{3a} are each independently a single bond or a divalent linking group; the total number of carbon atoms of R^{1a}, R^{2a}, and R^{3a} is 6 or more; X^{a} is H, a metal atom, NR^{4a}₄, imidazolium optionally having a substituent, pyridinium optionally having a substituent, or phosphonium optionally having a substituent, wherein R^{4a} is H or an organic group and is the same or different; and any two of R^{1a}, R^{2a}, and R^{3a} optionally bind to each other to form a ring;
a surfactant (b) represented by the following formula (b): 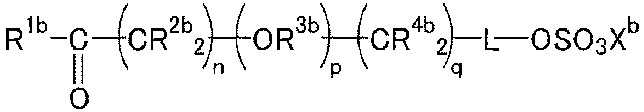 wherein R^{1b} is a linear or branched alkyl group having 1 or more carbon atoms and optionally having a substituent or a cyclic alkyl group having 3 or more carbon atoms and optionally having a substituent, and optionally contains a monovalent or divalent heterocycle or optionally forms a ring when having 3 or more carbon atoms; R^{2b} and R^{4b} are each independently H or a substituent; R^{3b} is an alkylene group having 1 to 10 carbon atoms and optionally having a substituent; n is an integer of 1 or more; p and q are each independently an integer of 0 or more; X^{b} is H, a metal atom, NR^{5b}₄, imidazolium optionally having a substituent, pyridinium optionally having a substituent, or phosphonium optionally having a substituent, wherein R^{5b} is H or an organic group and is the same or different; any two of R^{1b}, R^{2b}, R^{3b}, and R^{4b} optionally bind to each other to form a ring; L is a single bond, -CO₂-B-*, -OCO-B-*, - CONR^{6b}-B-*, -NR^{6b}CO-B-*, or -CO- other than the carbonyl groups in -CO₂-B-, -OCO-B-, -CONR^{6b}-B-, and -NR⁶CO-B-, wherein B is a single bond or an alkylene group having 1 to 10 carbon atoms and optionally having a substituent, R^{6b} is H or an alkyl group having 1 to 4 carbon atoms and optionally having a substituent; and * indicates the side bonded to -OSO₃X^{b} in the formula;
a surfactant (c) presented by the following formula (c) : 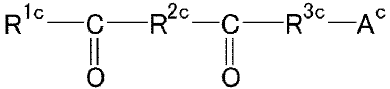 wherein R^{1c} is a linear or branched alkyl group having 1 or more carbon atoms or a cyclic alkyl group having 3 or more carbon atoms, with a hydrogen atom bonded to a carbon atom therein being optionally replaced by a hydroxy group or a monovalent organic group containing an ester bond, optionally contains a carbonyl group when having 2 or more carbon atoms, and optionally contains a monovalent or divalent heterocycle or optionally forms a ring when having 3 or more carbon atoms; R^{2c} and R^{3c} are each independently a single bond or a divalent linking group; the total number of carbon atoms of R^{1c}, R^{2c}, and R^{3c} is 5 or more; A^{c} is -COOX^{c} or - SO₃X^{c}, wherein X^{c} is H, a metal atom, NR^{4c}₄, imidazolium optionally having a substituent, pyridinium optionally having a substituent, or phosphonium optionally having a substituent, wherein R^{4c} is H or an organic group and is the same or different; any two of R^{1c}, R^{2c}, and R^{3c} optionally bind to each other to form a ring; and
a surfactant (d) represented by the following formula (d): 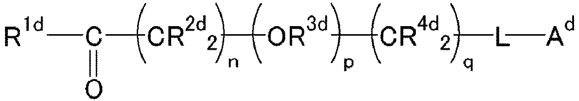 wherein R^{1d} is a linear or branched alkyl group having 1 or more carbon atoms and optionally having a substituent or a cyclic alkyl group having 3 or more carbon atoms and optionally having a substituent, and optionally contains a monovalent or divalent heterocycle or optionally forms a ring when having 3 or more carbon atoms; R^{2d} and R^{4d} are each independently H or a substituent; R^{3d} is an alkylene group having 1 to 10 carbon atoms and optionally having a substituent; n is an integer of 1 or more; p and q are each independently an integer of 0 or more; A^{d} is -SO₃X^{d} or -COOX^{d}, wherein X^{d} is H, a metal atom, NR^{5d}₄, imidazolium optionally having a substituent, pyridinium optionally having a substituent, or phosphonium optionally having a substituent, wherein R^{5d} is H or an organic group and is the same or different; any two of R^{1d}, R^{2d}, R^{3d}, and R^{4d} optionally bind to each other to form a ring; L is a single bond, - CO₂-B-*, -OCO-B-*, -CONR^{6d}-B-*, -NR^{6d}CO-B-*, or -CO- other than the carbonyl groups in -CO₂-B-, -OCO-B-, -CONR^{6d}-B-, and -NR^{6d}CO-B-, wherein B is a single bond or an alkylene group having 1 to 10 carbon atoms and optionally having a substituent, R^{6d} is H or an alkyl group having 1 to 4 carbon atoms and optionally having a substituent; and * indicates the side bonded to A^{d} in the formula; and
a surfactant (e) presented by the following formula (e) : 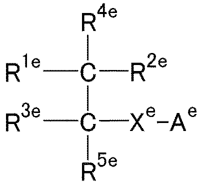 wherein R^{1e} to R^{5e} each represent H or a monovalent substituent, with the proviso that at least one of R^{1e} or R^{3e} represents a group represented by the general formula: -Y^{e}-R^{6e} and at least one of R^{2e} or R^{5e} represents a group represented by the general formula: -X^{e}-A^{e} or a group represented by the general formula: -Y^{e}-R^{6e};
X^{e} is the same or different at each occurrence and represents a divalent linking group or a bond;
A^{e} is the same or different at each occurrence and represents -COOM^{e}, -SO₃M^{e}, or -OSO₃M^{e}, wherein M^{e} is H, a metal atom, NR^{7e}₄, an imidazolium optionally having a substituent, a pyridinium optionally having a substituent, or a phosphonium optionally having a substituent, wherein R^{7e} is H or an organic group; and
Y^{w} is the same or different at each occurrence and represents a divalent linking group selected from the group consisting of -S(=O)₂-, -O-, -COO-, -OCO-, -CONR^{8e}-, and -NR^{8e}CO-, or a bond, wherein R^{8e} is H or an organic group;
R^{6e} is the same or different at each occurrence and represents an alkyl group having 2 or more carbon atoms optionally containing, between carbon atoms, at least one selected from the group consisting of a carbonyl group, an ester group, an amide group, and a sulfonyl group; and
any two of R^{1e} to R^{5e} optionally bind to each other to form a ring.

The surfactant (a) is described below.

In the formula (a), R^{1a} is a linear or branched alkyl group having 1 or more carbon atoms or a cyclic alkyl group having 3 or more carbon atoms.

When having 3 or more carbon atoms, the alkyl group optionally contains a carbonyl group (-C(=O)-) between two carbon atoms. When having 2 or more carbon atoms, the alkyl group optionally contains the carbonyl group at an end of the alkyl group. In other words, acyl groups such as an acetyl group represented by CH₃-C(=O)- are also included in the alkyl group.

When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1a}, a divalent heterocycle may be present between two carbon atoms, or a divalent heterocycle may be present at an end and bind to -C(=O)-, or a monovalent heterocycle may be present at an end of the alkyl group.

The "number of carbon atoms" in the alkyl group as used herein includes the number of carbon atoms constituting the carbonyl groups and the number of carbon atoms constituting the heterocycles. For example, the number of carbon atoms in the group represented by CH₃-C(=O)-CH₂- is 3, the number of carbon atoms in the group represented by CH₃-C(=O) -C₂H₄-C(=O) -C₂H₄- is 7, and the number of carbon atoms in the group represented by CH₃-C(=O)- is 2.

In the alkyl group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{101a}, wherein R^{101a} is an alkyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula, R^{2a} and R^{3a} are each independently a single bond or a divalent linking group.

Preferably, R^{2a} and R^{3a} are each independently a single bond, or a linear or branched alkylene group having 1 or more carbon atoms, or a cyclic alkylene group having 3 or more carbon atoms.

The alkylene group constituting R^{2a} and R^{3a} is preferably free from a carbonyl group.

In the alkylene group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{102a}, wherein R^{102a} is an alkyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms of R^{1a}, R^{2a}, and R^{3a} is 6 or more. The total number of carbon atoms is preferably 8 or more, more preferably 9 or more, still more preferably 10 or more, and preferably 20 or less, more preferably 18 or less, still more preferably 15 or less.

Any two of R^{1a}, R^{2a}, and R^{3a} optionally bind to each other to form a ring.

In the formula (a), X^{a} is H, a metal atom, NR^{4a}₄, imidazolium optionally having a substituent, pyridinium optionally having a substituent, or phosphonium optionally having a substituent, wherein R^{4a} is H or an organic group. The four R^{4a} may be the same as or different from each other. The organic group in R^{4a} is preferably an alkyl group. R^{4a} is preferably H or an organic group having 1 to 10 carbon atoms, more preferably H or an organic group having 1 to 4 carbon atoms, and still more preferably H or an alkyl group having 1 to 4 carbon atoms. Examples of the metal atom include alkali metals (Group 1) and alkaline earth metals (Group 2), and preferred is Na, K, or Li.

X^{a} is preferably H, an alkali metal (Group 1), an alkaline earth metal (Group 2), or NR^{4a}₄, more preferably H, Na, K, Li, or NH₄ because they are easily dissolved in water, still more preferably Na, K, or NH₄ because they are more easily dissolved in water, particularly preferably Na or NH₄, and most preferably NH₄ because it can be easily removed. When X^{a} is NH₄, the solubility of the surfactant in an aqueous medium is excellent, and the metal component is unlikely to remain in the PTFE or the final product.

R^{1a} is preferably a linear or branched alkyl group having 1 to 8 carbon atoms and free from a carbonyl group, a cyclic alkyl group having 3 to 8 carbon atoms and free from a carbonyl group, a linear or branched alkyl group having 2 to 45 carbon atoms and containing 1 to 10 carbonyl groups, a cyclic alkyl group having 3 to 45 carbon atoms and containing a carbonyl group, or an alkyl group having 3 to 45 carbon atoms and containing a monovalent or divalent heterocycle.

R^{1a} is more preferably a group represented by the following formula: 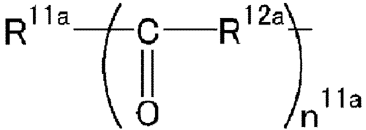 wherein n^{11a} is an integer of 0 to 10; R^{11a} is a linear or branched alkyl group having 1 to 5 carbon atoms or a cyclic alkyl group having 3 to 5 carbon atoms; R^{12a} is an alkylene group having 0 to 3 carbon atoms; and when n^{11a} is an integer of 2 to 10, each R^{12a} may be the same or different.
n^{11a} is preferably an integer of 0 to 5, more preferably an integer of 0 to 3, and still more preferably an integer of 1 to 3.

The alkyl group for R^{11a} is preferably free from a carbonyl group.

In the alkyl group for R^{11a}, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{103a}, wherein R^{103a} is an alkyl group.

In the alkyl group for R^{11a}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R^{12a} is an alkylene group having 0 to 3 carbon atoms. The alkylene group preferably has 1 to 3 carbon atoms.

The alkylene group for R^{12a} may be either linear or branched.

The alkylene group for R^{12a} is preferably free from a carbonyl group. R^{12a} is more preferably an ethylene group (-C₂H₄-) or a propylene group (-C₃H₆-).

In the alkylene group for R^{12a}, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{104a}, wherein R^{104a} is an alkyl group.

In the alkylene group for R^{12a}, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

R^{2a} and R^{3a} are preferably each independently an alkylene group having 1 or more carbon atoms and free from a carbonyl group, more preferably an alkylene group having 1 to 3 carbon atoms and free from a carbonyl group, and still more preferably an ethylene group (-C₂H₄-) or a propylene group (-C₃H₆-).

Examples of the surfactant (a) include the following surfactants. In each formula, X^{a} is defined as described above.

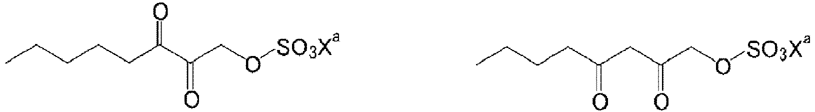

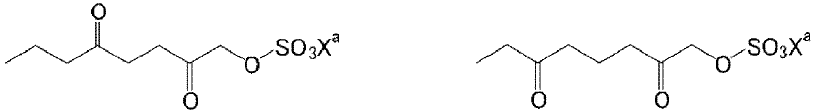

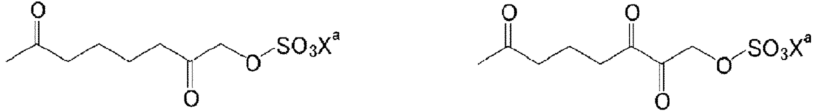

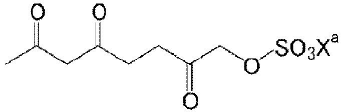

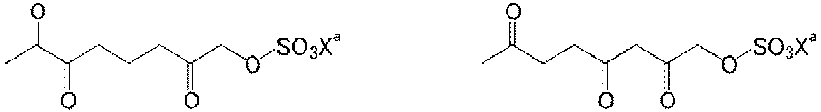

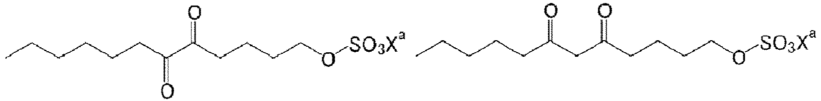

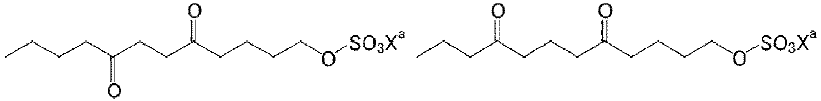

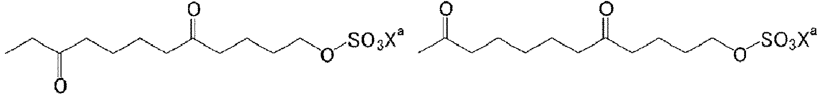

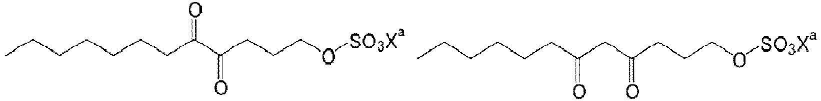

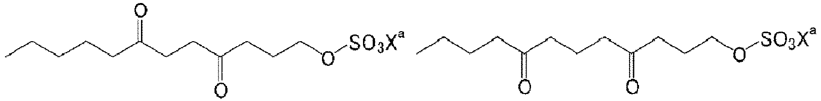

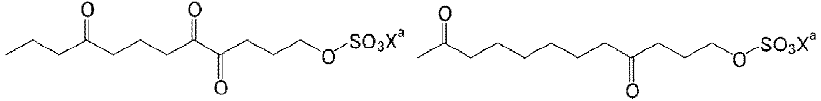

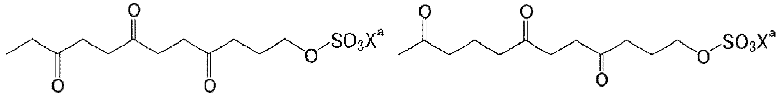

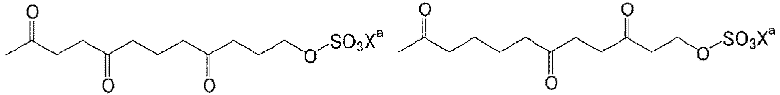

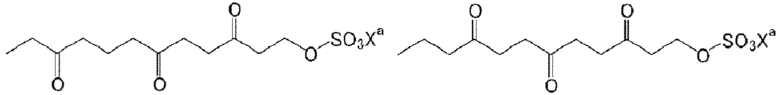

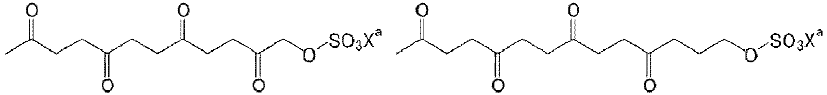

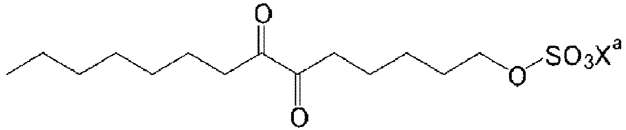

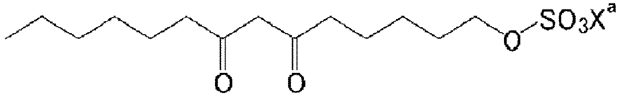

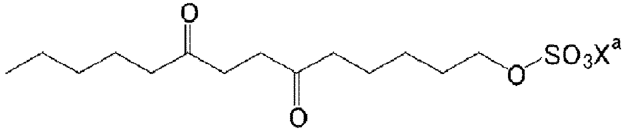

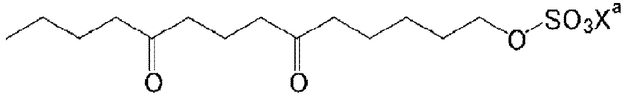

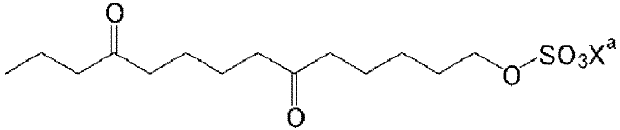

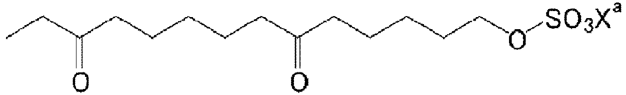

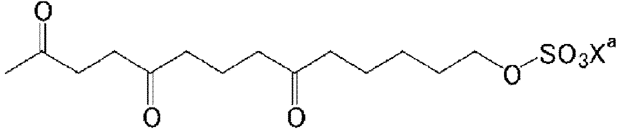

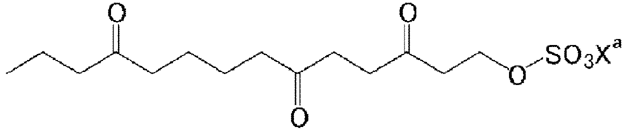

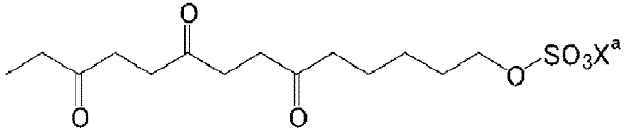

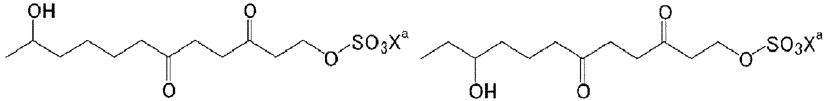

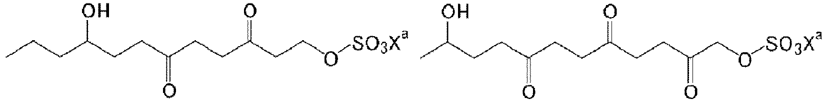

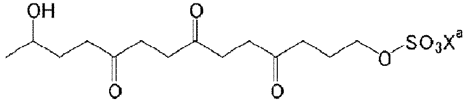

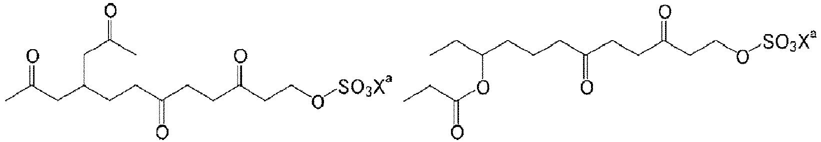

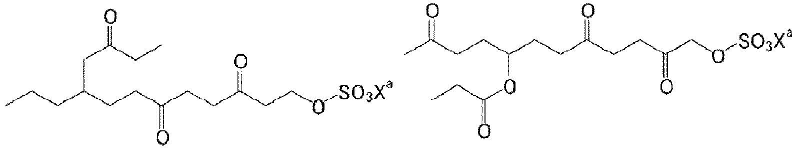

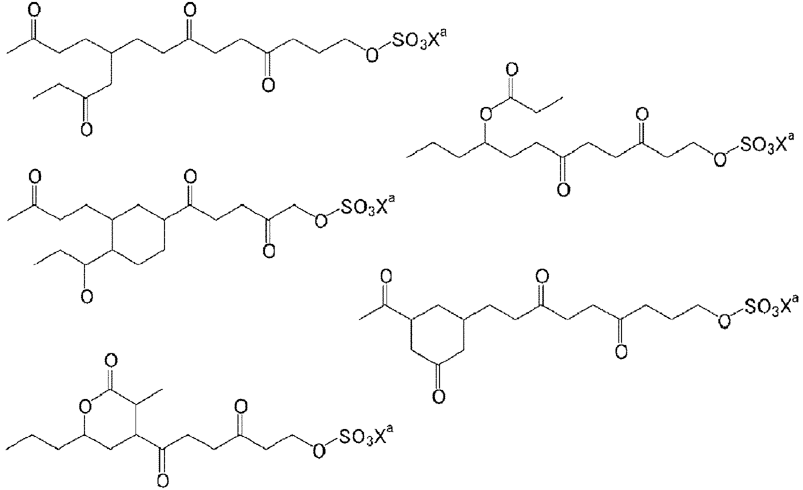

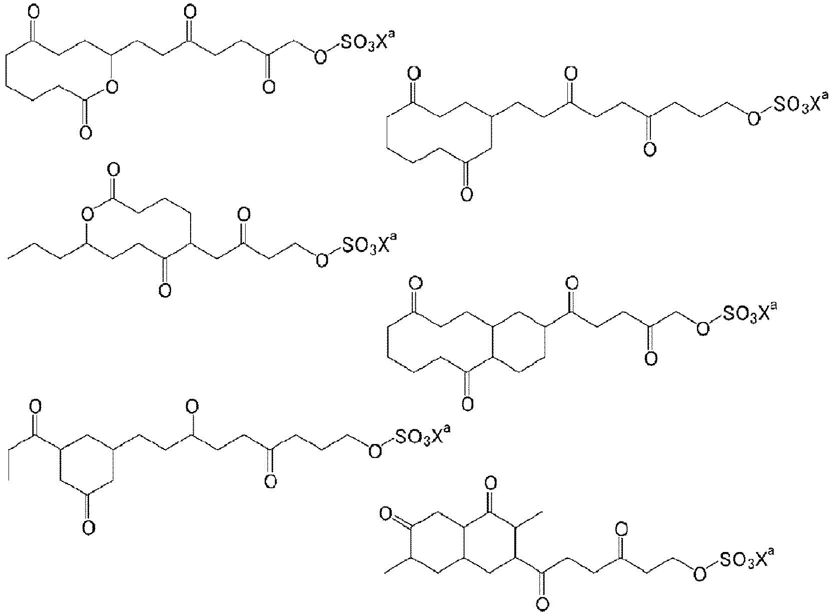

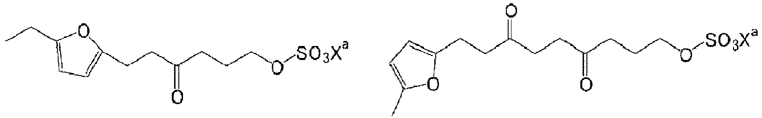

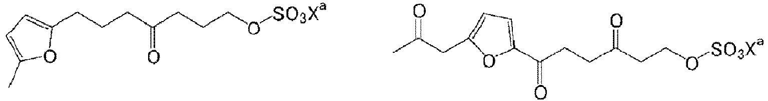

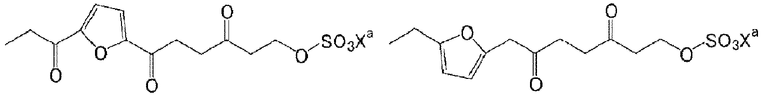

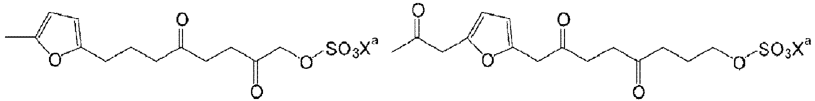

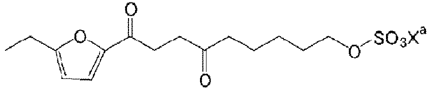

The surfactant (a) is a novel compound, and may be produced by any of the following production methods, for example.

The surfactant (a) may be produced by a production method including:
a step (11a) of reacting a compound (10a) represented by the formula: 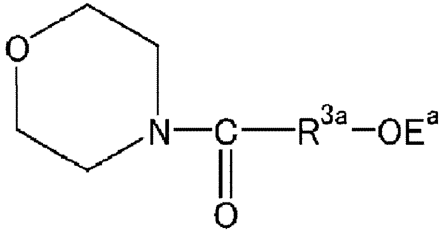 (wherein R^{3a} is defined as described above; and E^{a} is a leaving group), lithium, and a chlorosilane compound represented by the formula: R^{201a} ₃Si-Cl (wherein each R^{201a} is independently an alkyl group or an aryl group) to provide a compound (11a) represented by the formula: 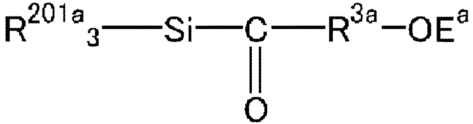 (wherein R^{3a}, R^{201a}, and E^{a} are defined as described above) ;
a step (12a) of reacting the compound (11a) and an olefin represented by the formula: 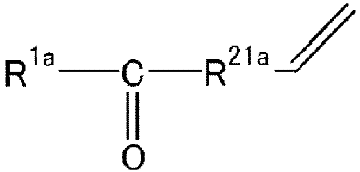 (wherein R^{1a} is defined as described above; and R^{21a} is a single bond or a divalent linking group) to provide a compound (12a) represented by the formula: 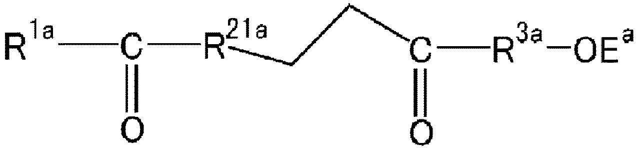 (wherein R^{1a}, R^{21a}, R^{3a}, and E^{a} are defined as described above);
a step (13a) of eliminating the leaving group in the compound (12a) to provide a compound (13a) represented by the formula: 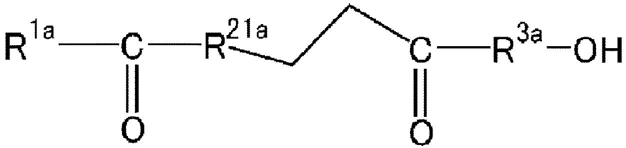 (wherein R^{1a}, R^{21a}, and R^{3a} are defined as described above); and
a step (14a) of reacting the compound (13a) and a chlorosulfonic acid represented by the formula: 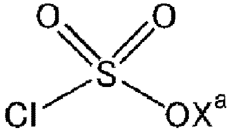 (wherein X^{a} is defined as described above) to provide a compound (14a) represented by the formula: 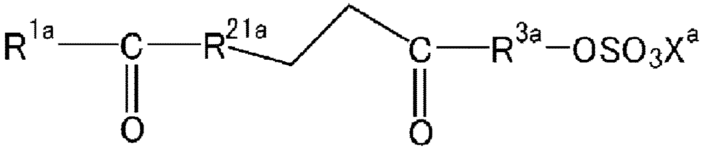 (wherein R^{1a}, R^{21a}, R^{3a}, and X^{a} are defined as described above).

When R^{1a} contains a furan ring, the furan ring may be cleaved by an acid and converted into a dicarbonyl derivative, for example. Examples of the acid include acetic acid, hydrochloric acid, and p-toluene sulfone, of which acetic acid is preferred.

In the step (11a), it is preferable that lithium and the chlorosilane compound are reacted in advance to obtain a syroxylithium compound, and then the syroxylithium compound and the compound (10a) are reacted to obtain the compound (11a).

E^{a} represents a leaving group. Examples of the leaving group include a tert-butyldimethylsilyl (TBS) group, a triethylsilyl (TES) group, a triisopropylsilyl (TIPS) group, a tert-butyldiphenylsilyl (TBDPS) group, and a benzyl (Bn) group.

R^{21a} is preferably a single bond or a linear or branched alkylene group having 1 or more carbon atoms.

Examples of the chlorosilane compound include:

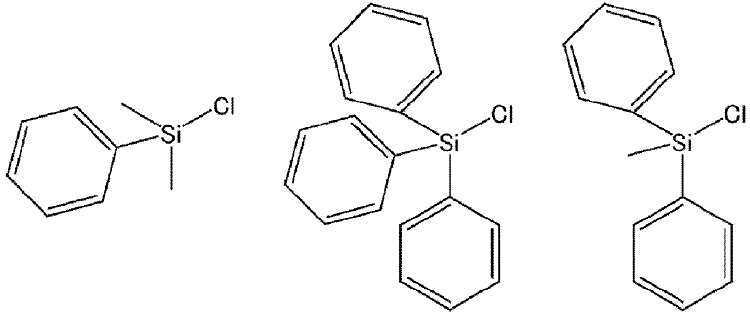

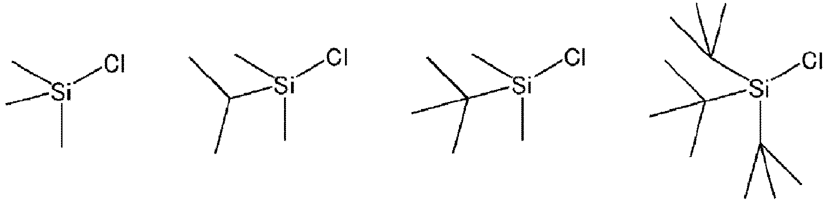

Any of the reactions in the step (11a) may be performed in a solvent. The solvent is preferably an organic solvent, more preferably an aprotic polar solvent, and still more preferably an ether. Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature of lithium and the chlorosilane compound in the step (11a) is preferably 10 to 40°C, and more preferably 20 to 30°C.

The reaction temperature of the siloxylithium compound and the compound (10a) in the step (11a) is preferably -100 to 0°C, and more preferably -80 to -50°C.

The reaction pressure of lithium and the chlorosilane compound in the step (11a) is preferably 0.1 to 5 MPa, and more preferably 0.1 to 1 MPa.

The reaction pressure of the siloxylithium compound and the compound (10a) in the step (11a) is preferably 0.1 to 5 MPa, and more preferably 0.1 to 1 MPa.

The reaction time of lithium and the chlorosilane compound in the step (11a) is preferably 0.1 to 72 hours, and more preferably 6 to 10 hours.

The reaction time of the siloxylithium compound and the compound (10a) in the step (11a) is preferably 0.1 to 72 hours, and more preferably 1 to 2 hours.

Regarding the reaction ratio between the compound (11a) and the olefin in the step (12a), the amount of the olefin is preferably 1 to 2 mol, and more preferably 1 to 1.1 mol, based on 1 mol of the compound (11a) in consideration of the improvement of the yield and the reduction of the waste.

The reaction in the step (12a) may be performed in a solvent in the presence of a thiazolium salt and a base.

Examples of the thiazolium salt include 3-ethyl-5-(2-hydroxyethyl)-4-methylthiazolium bromide and 3-benzyl-5-(2-hydroxyethyl)-4-methylthiazolium chloride.

Examples of the base include 1,8-diazabicyclo[5.4.0]-7-undecene and triethylamine.

The solvent is preferably an organic solvent, more preferably an aprotic polar solvent, and still more preferably an alcohol or an ether.

Examples of the alcohol include methanol, ethanol, 1-propanol, and isopropanol.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature in the step (12a) is preferably 40 to 60°C, and more preferably 50 to 55°C.

The reaction pressure in the step (12a) is preferably 0.1 to 5 MPa, and more preferably 0.1 to 1 MPa.

The reaction duration in the step (12a) is preferably 0.1 to 72 hours, and more preferably 6 to 10 hours.

The elimination reaction for the leaving group in the step (13a) may be performed using a fluoride ion or an acid. Examples of methods of eliminating the leaving group include a method using hydrofluoric acid; a method using an amine complex of hydrogen fluoride such as pyridine-nHF or triethylamine-nHF; a method using an inorganic salt such as cesium fluoride, potassium fluoride, lithium tetrafluoroborate (LiBF₄), or ammonium fluoride; and a method using an organic salt such as tetrabutylammonium fluoride (TBAF).

The elimination reaction for the leaving group in the step (13a) may be performed in a solvent. The solvent is preferably an organic solvent, more preferably an aprotic polar solvent, and still more preferably an ether.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature in the step (13a) is preferably 0 to 40°C, and more preferably 0 to 20°C.

The reaction pressure in the step (13a) is preferably 0.1 to 5 MPa, and more preferably 0.1 to 1 MPa.

The reaction duration in the step (13a) is preferably 0.1 to 72 hours, and more preferably 3 to 8 hours.

Regarding the reaction ratio between the compound (13a) and the chlorosulfonic acid in the step (14a), the amount of the chlorosulfonic acid is preferably 1 to 2 mol, and more preferably 1 to 1.1 mol, based on 1 mol of the compound (13a) in consideration of the improvement of the yield and the reduction of the waste.

The reaction in the step (14a) is preferably performed in the presence of a base. Examples of the base include alkali metal hydroxides, alkaline earth metal hydroxides, and amines, of which amines are preferred.

Examples of the amines in the step (14a) include tertiary amines such as trimethylamine, triethylamine, tributylamine, N,N-dimethylaniline, dimethylbenzylamine, and N,N,N',N'-tetramethyl-1,8-naphthalenediamine, heteroaromatic amines such as pyridine, pyrrole, uracil, collidine, and lutidine, and cyclic amines such as 1,8-diaza-bicyclo[5.4.0]-7-undecene and 1,5-diazabicyclo[4.3.0]-5-nonene. Of these, triethylamine and pyridine are preferred.

The amount of the base used in the step (14a) is preferably 1 to 2 mol, and more preferably 1 to 1.1 mol, based on 1 mol of the compound (13a) in consideration of the improvement of the yield and the reduction of the waste.

The reaction in the step (14a) may be performed in a polar solvent. The solvent is preferably an organic solvent, more preferably an aprotic polar solvent, and still more preferably an ether.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which diethyl ether is preferred.

The reaction temperature in the step (14a) is preferably 0 to 40°C, and more preferably 0 to 20°C.

The reaction pressure in the step (14a) is preferably 0.1 to 5 MPa, and more preferably 0.1 to 1 MPa.

The reaction duration in the step (14a) is preferably 0.1 to 72 hours, and more preferably 3 to 12 hours.

When the reaction in step (14a) is performed in a solvent, a solution containing compound (14a) is obtained after the reaction is completed. High-purity compound (14a) may be recovered by adding water to the above solution, allowing it to stand to separate it into two phases, recovering the aqueous phase, and distilling off the solvent. When the compound (14a) has a group represented by -OSO₃H (that is, when X is H), it is also possible to convert the -OSO₃H to sulfate groups by using an alkaline aqueous solution such as aqueous sodium hydrogen carbonate or aqueous ammonia instead of water.

After the completion of each step, the solvent may be distilled off, or distillation or purification may be performed to increase the purity of each resulting compound.

The surfactant (a) may also be produced by a production method including:
a step (21a) of reacting a ketone represented by the formula: 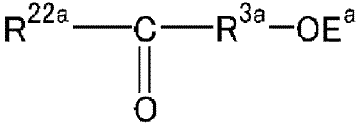 (wherein R^{3a} is defined as described above; R^{22a} is a monovalent organic group; and E^{a} is a leaving group) and a carboxylate represented by the formula: 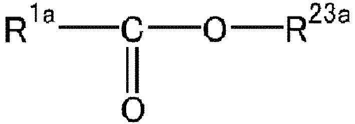
(wherein R^{1a} is defined as described above; and R^{23a} is a monovalent organic group) to provide a compound (21a) represented by the formula: 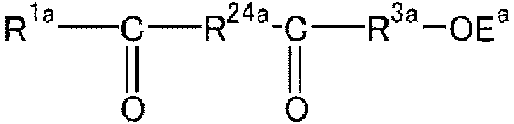 (wherein R^{1a}, R^{3a}, and E^{a} are defined as described above; and R^{24a} is a single bond or a divalent linking group) ;
a step (22a) of eliminating the leaving group in the compound (21a) to provide a compound (22a) represented by the formula: 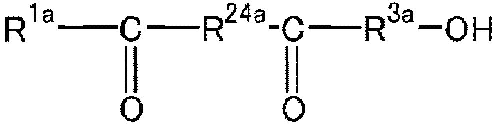 (wherein R^{1a}, R^{24a}, and R^{3a} are defined as described above); and
a step (23a) of reacting the compound (22a) and a chlorosulfonic acid represented by the formula: 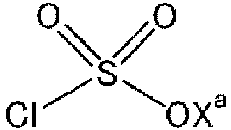 (wherein X^{a} is defined as described above) to provide a compound (23a) represented by the formula: 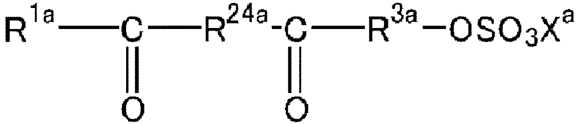 (wherein R^{1a}, R^{24a}, R^{3a}, and X^{a} are defined as described above).

When R^{1a} contains a furan ring, the furan ring may be cleaved by an acid and converted into a dicarbonyl derivative, for example. Examples of the acid include acetic acid, hydrochloric acid, and p-toluene sulfone, of which acetic acid is preferred.

E^{a} represents a leaving group. Examples of the leaving group include a tert-butyldimethylsilyl (TBS) group, a triethylsilyl (TES) group, a triisopropylsilyl (TIPS) group, a tert-butyldiphenylsilyl (TBDPS) group, and a benzyl (Bn) group.

R^{22a} is preferably a linear or branched alkyl group having 1 or more carbon atoms, and more preferably a methyl group.

R^{23a} is preferably a linear or branched alkyl group having 1 or more carbon atoms, and more preferably a methyl group.

R^{24a} is preferably a linear or branched alkylene group having 1 or more carbon atoms, and more preferably a methylene group (-CH₂-).

The reaction in the step (21a) may be performed in a solvent in the presence of a base.

Examples of the base include sodium amide, sodium hydride, sodium methoxide, and sodium ethoxide.

The solvent is preferably an organic solvent, more preferably an aprotic polar solvent, and still more preferably an alcohol or an ether.

Examples of the alcohol include methanol, ethanol, 1-propanol, and isopropanol.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature in the step (21a) is preferably 0 to 40°C, and more preferably 0 to 20°C.

The reaction pressure in the step (21a) is preferably 0.1 to 5 MPa, and more preferably 0.1 to 1 MPa.

The reaction duration in the step (21a) is preferably 0.1 to 72 hours, and more preferably 3 to 8 hours.

The elimination reaction for the leaving group in the step (22a) may be performed using a fluoride ion or an acid. Examples of methods of eliminating the leaving group include a method using hydrofluoric acid; a method using an amine complex of hydrogen fluoride such as pyridine-nHF or triethylamine-nHF; a method using an inorganic salt such as cesium fluoride, potassium fluoride, lithium tetrafluoroborate (LiBF₄), or ammonium fluoride; and a method using an organic salt such as tetrabutylammonium fluoride (TBAF).

The elimination reaction for the leaving group in the step (22a) may be performed in a solvent. The solvent is preferably an organic solvent, more preferably an aprotic polar solvent, and still more preferably an ether.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature in the step (22a) is preferably 0 to 40°C, and more preferably 0 to 20°C.

The reaction pressure in the step (22a) is preferably 0.1 to 5 MPa, and more preferably 0.1 to 1 MPa.

The reaction duration in the step (22a) is preferably 0.1 to 72 hours, and more preferably 3 to 8 hours.

Regarding the reaction ratio between the compound (22a) and the chlorosulfonic acid in the step (23a), the amount of the chlorosulfonic acid is preferably 1 to 2 mol, and more preferably 1 to 1.1 mol, based on 1 mol of the compound (22a) in consideration of the improvement of the yield and the reduction of the waste.

The reaction in the step (23a) is preferably performed in the presence of a base. Examples of the base include alkali metal hydroxides, alkaline earth metal hydroxides, and amines, of which amines are preferred.

Examples of the amines in the step (23a) include tertiary amines such as trimethylamine, triethylamine, tributylamine, N,N-dimethylaniline, dimethylbenzylamine, and N,N,N',N'-tetramethyl-1,8-naphthalenediamine, heteroaromatic amines such as pyridine, pyrrole, uracil, collidine, and lutidine, and cyclic amines such as 1,8-diaza-bicyclo[5.4.0]-7-undecene and 1,5-diazabicyclo[4.3.0]-5-nonene. Of these, triethylamine and pyridine are preferred.

The amount of the base used in the step (23a) is preferably 1 to 2 mol, and more preferably 1 to 1.1 mol, based on 1 mol of the compound (22a) in consideration of the improvement of the yield and the reduction of the waste.

The reaction in the step (23a) may be performed in a polar solvent. The solvent is preferably an organic solvent, more preferably an aprotic polar solvent, and still more preferably an ether.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which diethyl ether is preferred.

The reaction temperature in the step (23a) is preferably 0 to 40°C, and more preferably 0 to 20°C.

The reaction pressure in the step (23a) is preferably 0.1 to 5 MPa, and more preferably 0.1 to 1 MPa.

The reaction duration in the step (23a) is preferably 0.1 to 72 hours, and more preferably 3 to 12 hours.

When the reaction in step (23a) is performed in a solvent, a solution containing compound (23a) is obtained after the reaction is completed. High-purity compound (23a) may be recovered by adding water to the above solution, allowing it to stand to separate it into two phases, recovering the aqueous phase, and distilling off the solvent. When the compound (23a) has a group represented by -OSO₃H (that is, when X is H), it is also possible to convert the -OSO₃H to sulfate groups by using an alkaline aqueous solution such as aqueous sodium hydrogen carbonate or aqueous ammonia instead of water.

After the completion of each step, the solvent may be distilled off, or distillation or purification may be performed to increase the purity of each resulting compound.

The surfactant (a) may also be produced by a production method including:
a step (31a) of reacting an alkyl halide represented by the formula: Y^{a}-R^{3a}-OE^{a}
   (wherein R^{3a} is defined as described above; Y^{a} is a halogen atom; and E^{a} is a leaving group) and lithium acetylide represented by the formula: 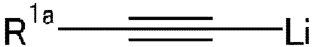 (wherein R^{1a} is defined as described above) to provide a compound (31a) represented by the formula: 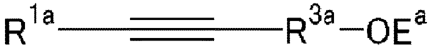 (wherein R^{1a}, R^{3a}, and E^{a} are defined as described above);
a step (32a) of oxidizing the compound (31a) to provide a compound (32a) represented by the formula: 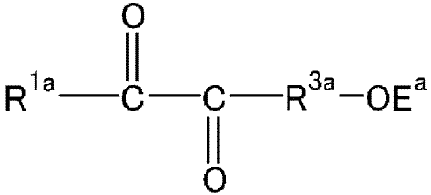 (wherein R^{1a}, R^{3a}, and E^{a} are defined as described above);
a step (33a) of eliminating the leaving group in the compound (32a) to provide a compound (33a) represented by the formula: 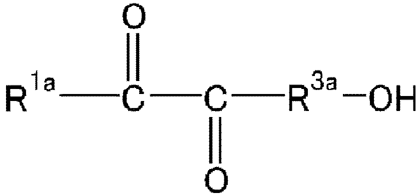 (wherein R^{1a} and R^{3a} are defined as described above); and
a step (34a) of reacting the compound (33a) and a chlorosulfonic acid represented by the formula: 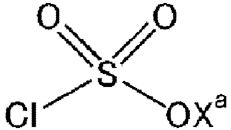 (wherein X^{a} is defined as described above) to provide a compound (34a) represented by the formula: 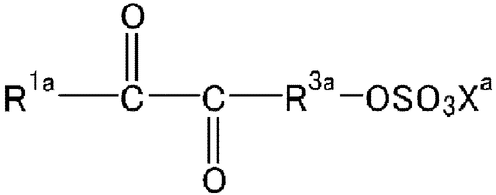 (wherein R^{1a}, R^{3a}, and X^{a} are defined as described above) .

When R^{1a} contains a furan ring, the furan ring may be cleaved by an acid and converted into a dicarbonyl derivative, for example. Examples of the acid include acetic acid, hydrochloric acid, and p-toluene sulfone, of which acetic acid is preferred.

E^{a} represents a leaving group. Examples of the leaving group include a tert-butyldimethylsilyl (TBS) group, a triethylsilyl (TES) group, a triisopropylsilyl (TIPS) group, a tert-butyldiphenylsilyl (TBDPS) group, and a benzyl (Bn) group.

Regarding the reaction ratio between the alkyl halide and the lithium acetylide in the step (31a), the lithium acetylide is preferably used in an amount of 1 to 2 mol, and more preferably 1 to 1.2 mol, based on 1 mol of the alkyl halide in consideration of the improvement of the yield and the reduction of the waste.

The reaction in the step (31a) may be performed in a solvent. Hexane is preferable as the solvent.

The reaction temperature in the step (31a) is preferably -100 to -40°C, and more preferably -80 to - 50°C.

The reaction pressure in the step (31a) is preferably 0.1 to 5 MPa, and more preferably 0.1 to 1 MPa.

The reaction duration in the step (31a) is preferably 0.1 to 72 hours, and more preferably 6 to 10 hours.

The oxidation in the step (32a) may be performed in a nitrile solvent using a complex generated by treating [(Cn*)Ru^{III}(CF₃CO₂)₃]·H₂O (wherein Cn* is 1,4,7-trimethyl-1,4,7-triazabicyclononane) with (NH₄)₂Ce(NO₃)₆ and trifluoroacetic acid and then adding sodium perchlorate thereto.

After the completion of the oxidation, the product may be neutralized with an alkali, and then an organic solvent such as an ether may be used to extract the compound (32a).

The reaction temperature in the step (32a) is preferably 30 to 100°C, and more preferably 40 to 90°C.

The reaction pressure in the step (32a) is preferably 0.1 to 5 MPa, and more preferably 0.1 to 1 MPa.

The reaction duration in the step (32a) is preferably 0.1 to 72 hours, and more preferably 3 to 8 hours.

The elimination reaction for the leaving group in the step (33a) may be performed using a fluoride ion or an acid. Examples of methods of eliminating the leaving group include a method using hydrofluoric acid; a method using an amine complex of hydrogen fluoride such as pyridine-nHF or triethylamine-nHF; a method using an inorganic salt such as cesium fluoride, potassium fluoride, lithium tetrafluoroborate (LiBF₄), or ammonium fluoride; and a method using an organic salt such as tetrabutylammonium fluoride (TBAF).

The elimination reaction for the leaving group in the step (33a) may be performed in a solvent. The solvent is preferably an organic solvent, more preferably an aprotic polar solvent, and still more preferably an ether.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature in the step (33a) is preferably 0 to 40°C, and more preferably 0 to 20°C.

The reaction pressure in the step (33a) is preferably 0.1 to 5 MPa, and more preferably 0.1 to 1 MPa.

The reaction duration in the step (33a) is preferably 0.1 to 72 hours, and more preferably 3 to 8 hours.

Regarding the reaction ratio between the compound (33a) and the chlorosulfonic acid in the step (34a), the amount of the chlorosulfonic acid is preferably 1 to 2 mol, and more preferably 1 to 1.1 mol, based on 1 mol of the compound (33a) in consideration of the improvement of the yield and the reduction of the waste.

The reaction in the step (34a) is preferably performed in the presence of a base. Examples of the base include alkali metal hydroxides, alkaline earth metal hydroxides, and amines, of which amines are preferred.

Examples of the amines in the step (34a) include tertiary amines such as trimethylamine, triethylamine, tributylamine, N,N-dimethylaniline, dimethylbenzylamine, and N,N,N',N'-tetramethyl-1,8-naphthalenediamine, heteroaromatic amines such as pyridine, pyrrole, uracil, collidine, and lutidine, and cyclic amines such as 1,8-diaza-bicyclo[5.4.0]-7-undecene and 1,5-diazabicyclo[4.3.0]-5-nonene. Of these, triethylamine and pyridine are preferred.

The amount of the base used in the step (34a) is preferably 1 to 2 mol, and more preferably 1 to 1.1 mol, based on 1 mol of the compound (33a) in consideration of the improvement of the yield and the reduction of the waste.

The reaction in the step (34a) may be performed in a polar solvent. The solvent is preferably an organic solvent, more preferably an aprotic polar solvent, and still more preferably an ether.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which diethyl ether is preferred.

The reaction temperature in the step (34a) is preferably 0 to 40°C, and more preferably 0 to 20°C.

The reaction pressure in the step (34a) is preferably 0.1 to 5 MPa, and more preferably 0.1 to 1 MPa.

The reaction duration in the step (34a) is preferably 0.1 to 72 hours, and more preferably 3 to 12 hours.

When the reaction in step (34a) is performed in a solvent, a solution containing compound (34a) is obtained after the reaction is completed. High-purity compound (34a) may be recovered by adding water to the above solution, allowing it to stand to separate it into two phases, recovering the aqueous phase, and distilling off the solvent. When the compound (34a) has a group represented by -OSO₃H (that is, when X is H), it is also possible to convert the -OSO₃H to sulfate groups by using an alkaline aqueous solution such as aqueous sodium hydrogen carbonate or aqueous ammonia instead of water.

After the completion of each step, the solvent may be distilled off, or distillation or purification may be performed to increase the purity of each resulting compound.

The surfactant (a) may also be produced by a production method including:
a step (41a) of reacting an alkene represented by the formula: 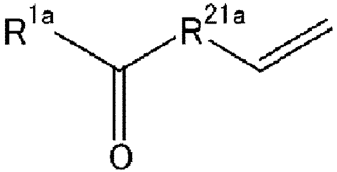 (wherein R^{1a} is defined as described above; and R^{21a} is a single bond or a divalent linking group) and an alkyne represented by the formula: 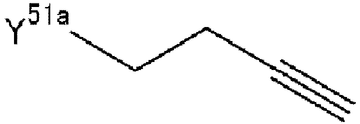 (wherein Y^{51a} is an alkoxyl group) to provide a compound (41a) represented by the formula: 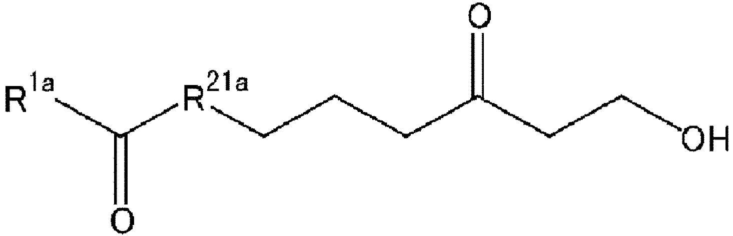 (wherein R^{1a} and R^{21a} are defined as mentioned above); and
a step (42a) of reacting the compound (41a) and a chlorosulfonic acid represented by the formula: 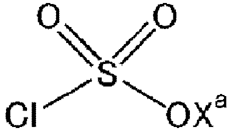 (wherein X^{a} is defined as described above) to provide a compound (42a) represented by the formula: 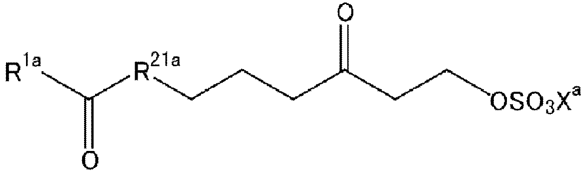 (wherein R^{1a}, R^{21a}, and X^{a} are defined as described above) .

When R^{1a} contains a furan ring, the furan ring may be cleaved by an acid and converted into a dicarbonyl derivative, for example. Examples of the acid include acetic acid, hydrochloric acid, and p-toluene sulfone, of which acetic acid is preferred.

R^{21a} is preferably a single bond or a linear or branched alkylene group having 1 or more carbon atoms.

Regarding the reaction ratio between the alkene and the alkyne in the step (41a), the alkene is preferably used in an amount of 0.5 to 2 mol, and more preferably 0.6 to 1.2 mol, based on 1 mol of the alkyne in consideration of the improvement of the yield and the reduction of the waste.

The reaction in the step (41a) is preferably performed in the presence of a metal catalyst. An example of the metal is ruthenium.

The amount of the metal catalyst used in the step (41a) is preferably 0.01 to 0.4 mol, and more preferably 0.05 to 0.1 mol, based on 1 mol of the alkene in consideration of the improvement of the yield and the reduction of the waste.

The reaction in the step (41a) may be performed in a polar solvent. The solvent is preferably water, acetonitrile, dimethylacetamide, or dimethylformamide.

The reaction temperature in the step (41a) is preferably 20 to 160°C, and more preferably 40 to 140°C.

The reaction pressure in the step (41a) is preferably 0.1 to 5 MPa, and more preferably 0.1 to 1 MPa.

The reaction duration in the step (41a) is preferably 0.1 to 72 hours, and more preferably 4 to 8 hours.

Regarding the reaction ratio between the compound (41a) and the chlorosulfonic acid in the step (42a), the amount of the chlorosulfonic acid is preferably 1 to 2 mol, and more preferably 1 to 1.1 mol, based on 1 mol of the compound (41a) in consideration of the improvement of the yield and the reduction of the waste.

The reaction in the step (42a) is preferably performed in the presence of a base. Examples of the base include alkali metal hydroxides, alkaline earth metal hydroxides, and amines, of which amines are preferred.

Examples of the amines in the step (42a) include tertiary amines such as trimethylamine, triethylamine, tributylamine, N,N-dimethylaniline, dimethylbenzylamine, and N,N,N',N'-tetramethyl-1,8-naphthalenediamine, heteroaromatic amines such as pyridine, pyrrole, uracil, collidine, and lutidine, and cyclic amines such as 1,8-diaza-bicyclo[5.4.0]-7-undecene and 1,5-diaza-bicyclo[4.3.0]-5-nonene. Of these, triethylamine and pyridine are preferred.

The amount of the base used in the step (42a) is preferably 1 to 2 mol, and more preferably 1 to 1.1 mol, based on 1 mol of the compound (41a) in consideration of the improvement of the yield and the reduction of the waste.

The reaction in the step (42a) may be performed in a polar solvent. The solvent is preferably an organic solvent, more preferably an aprotic polar solvent, and still more preferably an ether.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which diethyl ether is preferred.

The reaction temperature in the step (42a) is preferably 0 to 40°C, and more preferably 0 to 20°C.

The reaction pressure in the step (42a) is preferably 0.1 to 5 MPa, and more preferably 0.1 to 1 MPa.

The reaction duration in the step (42a) is preferably 0.1 to 72 hours, and more preferably 3 to 12 hours.

When the reaction in step (42a) is performed in a solvent, a solution containing compound (42a) is obtained after the reaction is completed. High-purity compound (42a) may be recovered by adding water to the above solution, allowing it to stand to separate it into two phases, recovering the aqueous phase, and distilling off the solvent. When the compound (42a) has a group represented by -OSO₃H (that is, when X is H), it is also possible to convert the -OSO₃H to sulfate groups by using an alkaline aqueous solution such as aqueous sodium hydrogen carbonate or aqueous ammonia instead of water.

After the completion of each step, the solvent may be distilled off, or distillation or purification may be performed to increase the purity of each resulting compound.

Next, the surfactant (b) is described below.

In the formula (b), R^{1b} is a linear or branched alkyl group having 1 or more carbon atoms and optionally having a substituent or a cyclic alkyl group having 3 or more carbon atoms and optionally having a substituent.

When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1b}, a divalent heterocycle may be present between two carbon atoms, or a divalent heterocycle may be present at an end and bind to -C(=O)-, or a monovalent heterocycle may be present at an end of the alkyl group.

The "number of carbon atoms" in the alkyl group as used herein includes the number of carbon atoms constituting the heterocycles.

The substituent which may be contained in the alkyl group for R^{1b} is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for R^{1b} is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{1b} is preferably a linear or branched alkyl group having 1 to 10 carbon atoms and optionally having a substituent or a cyclic alkyl group having 3 to 10 carbon atoms and optionally having a substituent, more preferably a linear or branched alkyl group having 1 to 10 carbon atoms and free from a carbonyl group or a cyclic alkyl group having 3 to 10 carbon atoms and free from a carbonyl group, still more preferably a linear or branched alkyl group having 1 to 10 carbon atoms and not having a substituent, further preferably a linear or branched alkyl group having 1 to 3 carbon atoms and not having a substituent, particularly preferably a methyl group (-CH₃) or an ethyl group (-C₂H₅), and most preferably a methyl group (-CH₃).

In the formula (b), R^{2b} and R^{4b} are each independently H or a substituent. A plurality of R^{2b} and R^{4b} may be the same or different.

The substituent for each of R^{2b} and R^{4b} is preferably a halogen atom, a linear or branched alkyl group having 1 to 10 carbon atoms, a cyclic alkyl group having 3 to 10 carbon atoms, or a hydroxy group, and particularly preferably a methyl group or an ethyl group.

The alkyl group for each of R^{2b} and R^{4b} is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

The alkyl group for each of R^{2b} and R^{4b} is preferably a linear or branched alkyl group having 1 to 10 carbon atoms and free from a carbonyl group or a cyclic alkyl group having 3 to 10 carbon atoms and free from a carbonyl group, more preferably a linear or branched alkyl group having 1 to 10 carbon atoms and free from a carbonyl group, still more preferably a linear or branched alkyl group having 1 to 3 carbon atoms and not having a substituent, and particularly preferably a methyl group (-CH₃) or an ethyl group (-C₂H₅).

R^{2b} and R^{4b} are preferably each independently H or a linear or branched alkyl group having 1 to 10 carbon atoms and free from a carbonyl group, more preferably H or a linear or branched alkyl group having 1 to 3 carbon atoms and not having a substituent, still more preferably H, a methyl group (-CH₃), or an ethyl group (-C₂H₅), and particularly preferably H.

In the formula (b), R^{3b} is an alkylene group having 1 to 10 carbon atoms and optionally having a substituent. When a plurality of R^{3b} are present, they may be the same or different.

The alkylene group is preferably free from a carbonyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkyl group free from halogen atoms such as fluorine atoms and chlorine atoms.

The alkylene group preferably does not have any substituent.

The alkylene group is preferably a linear or branched alkylene group having 1 to 10 carbon atoms and optionally having a substituent or a cyclic alkylene group having 3 to 10 carbon atoms and optionally having a substituent, preferably a linear or branched alkylene group having 1 to 10 carbon atoms and free from a carbonyl group or a cyclic alkylene group having 3 to 10 carbon atoms and free from a carbonyl group, more preferably a linear or branched alkylene group having 1 to 10 carbon atoms and not having a substituent, and still more preferably a methylene group (-CH₂-), an ethylene group (-C₂H₄-), an isopropylene group (-CH(CH₃)CH₂-), or a propylene group (-C₃H₆-).

Any two of R^{1b}, R^{2b}, R^{3b}, and R^{4b} optionally bind to each other to form a ring, but preferably not to form a ring.

In the formula (b), n is an integer of 1 or more. In the formula, n is preferably an integer of 1 to 40, more preferably an integer of 1 to 30, still more preferably an integer of 5 to 25, and particularly preferably an integer of 5 to 9 and 11 to 25.

In the formula (b), p and q are each independently an integer of 0 or more. p is preferably an integer of 0 to 10, more preferably 0 or 1. q is preferably an integer of 0 to 10, more preferably an integer of 0 to 5.

The sum of n, p, and q is preferably an integer of 5 or more. The sum of n, p, and q is more preferably an integer of 8 or more. The sum of n, p, and q is also preferably an integer of 60 or less, more preferably an integer of 50 or less, and still more preferably an integer of 40 or less.

In the formula (b), X^{b} is H, a metal atom, NR^{5b}₄, imidazolium optionally having a substituent, pyridinium optionally having a substituent, or phosphonium optionally having a substituent, wherein R^{5b} is H or an organic group. The four R^{5b} may be the same as or different from each other. The organic group in R^{5b} is preferably an alkyl group. R^{5b} is preferably H or an organic group having 1 to 10 carbon atoms, more preferably H or an organic group having 1 to 4 carbon atoms, and still more preferably H or an alkyl group having 1 to 4 carbon atoms. Examples of the metal atom include alkali metals (Group 1) and alkaline earth metals (Group 2), and preferred is Na, K, or Li. X^{b} may be a metal atom or NR^{5b}₄, wherein R^{5b} is defined as described above.

X^{b} is preferably H, an alkali metal (Group 1), an alkaline earth metal (Group 2), or NR^{5b}₄, more preferably H, Na, K, Li, or NH₄ because they are easily dissolved in water, still more preferably Na, K, or NH₄ because they are more easily dissolved in water, particularly preferably Na or NH₄, and most preferably NH₄ because it can be easily removed. When X^{b} is NH₄, the solubility of the surfactant in an aqueous medium is excellent, and the metal component is unlikely to remain in the PTFE or the final product.

In the formula (b), L is a single bond, -CO₂-B-*, -OCO-B-*, -CONR^{6b}-B-*, -NR^{6b}CO-B-*, or -CO- other than the carbonyl groups in -CO₂-B-, -OCO-B-, -CONR⁶-B-, and - NR^{6b}CO-B-, wherein B is a single bond or an alkylene group having 1 to 10 carbon atoms and optionally having a substituent, R^{6b} is H or an alkyl group having 1 to 4 carbon atoms and optionally having a substituent. The alkylene group more preferably has 1 to 5 carbon atoms. R^{6b} is more preferably H or a methyl group; and * indicates the side bonded to -OSO₃X^{b} in the formula.

L is preferably a single bond.

The surfactant (b) is preferably a compound represented by the following formula: 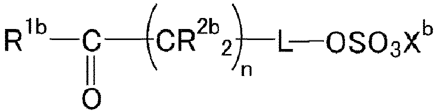 (wherein R^{1b}, R^{2b}, L, n, and X^{b} are defined as described above).

The surfactant (b) preferably has a ¹H-NMR spectrum in which all peak intensities observed in a chemical shift range of 2.0 to 5.0 ppm give an integral value of 10% or higher.

The surfactant (b) preferably has a ¹H-NMR spectrum in which all peak intensities observed in a chemical shift range of 2.0 to 5.0 ppm give an integral value within the above range. In this case, the surfactant preferably has a ketone structure in the molecule.

The integral value of the surfactant (b) is more preferably 15 or more, and preferably 95 or less, more preferably 80 or less, and still more preferably 70 or less.

The integral value is determined using a heavy water solvent at room temperature. The heavy water content is adjusted to 4.79 ppm.

Examples of the surfactant (b) include:

CH₃C(O)CH₂CH₂CH₂CH₂CH₂CH₂CH₂CH₂CH₂OSO₃Na,

CH₃C(O)CH₂CH₂CH₂CH₂CH₂CH₂CH₂CH₂OSO₃Na,

CH₃C(O)CH₂CH₂CH₂CH₂CH₂CH₂CH₂OSO₃Na,

CH₃C(O)CH₂CH₂CH₂CH₂CH₂CH₂OSO₃Na,

CH₃C(O)CH₂CH₂CH₂CH_{2C}H₂OSO₃Na,

CH₃C(O)CH₂CH₂CH₂CH₂OSO₃Na,

(CH₃)₃CC(O)CH₂CH₂CH₂CH₂CH₂CH₂CH₂CH₂CH₂OSO₃Na,

(CH₃)₂CHC(O)CH₂CH₂CH₂CH₂CH₂CH₂CH₂CH₂CH₂OSO₃Na,

(CH₂)₅CHC(O)CH₂CH₂CH₂CH₂CH₂CH₂CH₂CH₂CH₂OSO₃Na,

CH₃CH₂C(O)CH₂CH₂CH₂CH₂CH₂CH₂CH₂CH₂OSO₃Na,

CH₃CH₂CH₂C(O)CH₂CH₂CH₂CH₂CH₂CH₂CH₂OSO₃Na,

CH₃CH₂CH₂CH₂C(O)CH₂CH₂CH₂CH₂CH₂CH₂OSO₃Na,

CH₃CH₂CH₂CH₂CH₂C(O)CH₂CH₂CH₂CH₂CH₂OSO₃Na,

CH₃CH₂CH₂CH₂CH₂CH₂C(O)CH₂CH₂CH₂CH₂OSO₃Na,

CH₃CH₂CH₂CH₂CH₂CH₂CH₂C(O)CH₂CH₂CH₂OSO₃Na,

CH₃CH₂CH₂CH₂CH₂CH₂CH₂CH₂C(O)CH₂CH₂OSO₃Na,

CH₃CH₂CH₂CH₂CH₂CH₂CH₂CH₂CH₂C(O)CH₂OSO₃Na,

CH₃C(O)CH₂CH₂CH₂CH₂CH₂CH₂CH₂CH₂CH₂OCH₂CH₂OSO₃Na,

CH₃C(O)CH₂CH₂CH₂CH₂CH₂CH₂CH₂CH₂CH₂C(O)NHCH₂OSO₃Na,

CH₃C(O)CH₂CH₂CH₂CH₂CH₂CH₂CH₂CH₂CH₂NHC(O)CH₂OSO₃Na,

CH₃C(O)CH₂CH₂CH₂CH₂CH₂CH₂CH₂CH₂CH₂C(O)OSO₃Na,

CH₃C(O)CH₂CH₂CH₂CH₂CH₂CH₂CH₂CH₂CH₂C(O)OCH₂OSO₃Na,

CH₃C(O)CH₂CH₂CH₂CH₂CH₂CH₂CH₂CH₂CH₂OC(O)CH₂OSO₃Na,

CH₃C(O)CH₂CH₂CH₂CH₂CH₂CH₂CH₂CH₂CH₂OSO₃H,

CH₃C(O)CH₂CH₂CH₂CH₂CH₂CH₂CH₂CH₂CH₂OSO₃Li,

CH₃C(O)CH₂CH₂CH₂CH₂CH₂CH₂CH₂CH₂CH₂OSO₃K,

CH₃C(O)CH₂CH₂CH₂CH₂CH₂CH₂CH₂CH₂CH₂OSO₃NH₄,

CH₃C(O)CH₂CH₂CH₂CH₂CH₂CH₂CH₂CH₂CH(CH₃)₂OSO₃Na,

CH₃C(O)CH₂CH₂CH₂CH₂CH₂CH₂CH₂CH₂CH₂CH₂CH₂CH₂CH₂CH₂CH₂CH₂CH₂OSO₃N a,

CH₃C(O)CH₂CH₂CH₂CH₂CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂OSO₃Na,

(CH₃)₃CC(O)CH₂CH₂CH₂CH₂CH₂CH₂CH₂CH₂CH₂CH₂CH₂CH₂CH₂CH₂CH₂CH₂CH₂O SO₃Na,

(CH₃)₂CHC(O)CH₂CH₂CH₂CH₂CH₂CH₂CH₂CH₂CH₂CH₂CH₂CH₂CH₂CH₂CH₂CH₂CH₂ OSO₃Na,

(CH₂)₅CHC(O)CH₂CH₂CH₂CH₂CH₂CH₂CH₂CH₂CH₂CH₂CH₂CH₂CH₂CH₂CH₂CH₂CH₂ OSO₃Na,

CH₃CH₂C(O)CH₂CH₂CH₂CH₂CH₂CH₂CH₂CH₂CH₂CH₂CH₂CH₂CH₂CH₂CH₂CH₂OSO₃N a,

CH₃CH₂CH₂CH₂CH₂C(O)CH₂CH₂CH₂CH₂CH₂CH₂CH₂CH₂CH₂CH₂CH₂CH₂CH₂OSO₃N a,

CH₃CH₂CH₂CH₂CH₂CH₂CH₂CH₂C(O)CH₂CH₂CH₂CH₂CH₂CH₂CH₂CH₂CH₂CH₂OSO₃N a,

CH₃CH₂CH₂CH₂CH₂CH₂CH₂CH₂CH₂CH₂CH₂C(O)CH₂CH₂CH₂CH₂CH₂CH₂CH₂OSO₃N a,

CH₃CH₂CH₂CH₂CH₂CH₂CH₂CH₂CH₂CH₂CH₂CH₂CH₂CH₂C(O)CH₂CH₂CH₂CH₂OSO₃N a,

CH₃CH₂C(O)CH₂CH₂CH₂CH₂CH₂CH₂CH₂CH₂CH₂CH₂CH₂CH₂CH₂CH₂CH₂CH₂OCH₂C H₂OSO₃Na,

CH₃CH₂C(O)CH₂CH₂CH₂CH₂CH₂CH₂CH₂CH₂CH₂CH₂CH₂CH₂CH₂CH₂CH₂CH₂C(O)N HCH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂NHC(O )CH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂C(O)O CH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂OC(O) CH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂C(O)O SO₃Na,

CH₃CH₂C(O)CH₂CH₂CH₂CH₂CH₂CH₂CH₂CH₂CH₂CH₂CH₂CH₂CH₂CH₂CH₂CH₂OSO₃H,

CH₃CH₂C(O)CH₂CH₂CH₂CH₂CH₂CH₂CH₂CH₂CH₂CH₂CH₂CH₂CH₂CH₂CH₂CH₂OSO₃L i,

CH₃CH₂C(O)CH₂CH₂CH₂CH₂CH₂CH₂CH₂CH₂CH₂CH₂CH₂CH₂CH₂CH₂CH₂CH₂OSO₃K,

CH₃CH₂C(O)CH₂CH₂CH₂CH₂CH₂CH₂CH₂CH₂CH₂CH₂CH₂CH₂CH₂CH₂CH₂CH₂OSO₃N H₄,

and

CH₃C(O)CH₂CH₂CH₂CH₂CH₂CH₂CH₂CH₂CH₂CH₂CH₂CH₂CH₂CH₂CH₂CH₂CH₂CH₂CH ₂CH₂CH₂OSO₃Na.

The surfactant (b) is a novel compound, and may be produced by any of the following production methods, for example.

The surfactant (b) may be produced by a production method including:
a step (11b) of hydroxylating a compound (10b) represented by the following formula:

   R^{11b}-CH=CH-(CR^{2b}₂)ₙ-(OR^{3b})ₚ-(CR^{4b}₂)_{q}-L-OH

   (wherein R^{2b} to R^{4b}, n, p, and q are defined as described above; R^{11b} is H, a linear or branched alkyl group having 1 or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms; L is a single bond, -CO₂-B-*, -OCO-B-*, -CONR^{6b}-B-*, -NR^{6b}CO-B-*, or -CO- other than the carbonyl groups in - CO₂-B-, -OCO-B-, -CONR^{6b}-B-, and -NR^{6b}CO-B-, wherein B is a single bond or an alkylene group having 1 to 10 carbon atoms and optionally having a substituent, R^{6b} is H or an alkyl group having 1 to 4 carbon atoms and optionally having a substituent; * indicates the side bonded to -OH in the formula) to provide a compound (11b) represented by the following formula: 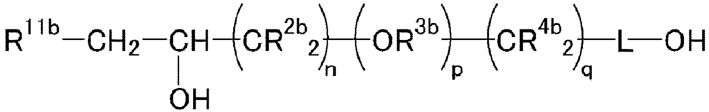 (wherein L, R^{2b} to R^{4b}, R^{11b}, n, p, and q are defined as described above);
a step (12b) of oxidizing the compound (11b) to provide a compound (12b) represented by the following formula: 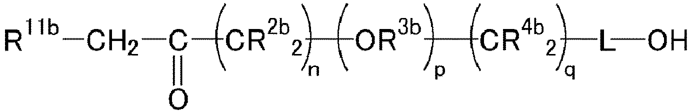 (wherein L, R^{2b} to R^{4b}, R^{11b}, n, p, and q are defined as described above); and
a step (13b) of sulfuric-esterifying the compound (12b) to provide a compound (13b) represented by the following formula: 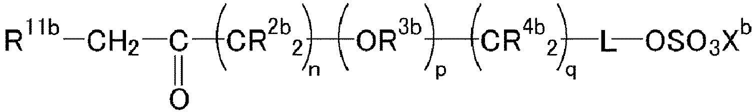 wherein L, R^{2b} to R^{4b}, R^{11b}, n, p, q, and X ^{b} are defined as described above.

The alkyl group for R^{11b} is preferably free from a carbonyl group.

In the alkyl group for R^{11b}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{11b} is preferably H, a linear or branched alkyl group having 1 to 9 carbon atoms and optionally having a substituent, or a cyclic alkyl group having 3 to 9 carbon atoms and optionally having a substituent, more preferably H, a linear or branched alkyl group having 1 to 9 carbon atoms and free from a carbonyl group, or a cyclic alkyl group having 3 to 9 carbon atoms and free from a carbonyl group, still more preferably H or a linear or branched alkyl group having 1 to 9 carbon atoms and not having a substituent, further preferably H, a methyl group (-CH₃), or an ethyl group (-C₂H₅), particularly preferably H or a methyl group (-CH₃), and most preferably H.

The hydroxylation in the step (11b) may be performed by a method (1) in which iron(II) phthalocyanine (Fe(Pc)) and sodium borohydride are caused to act on the compound (10b) in an oxygen atmosphere or a method (2) in which isopinocampheylborane (IpcBH₂) is caused to act on the compound (10b) and then the resulting intermediate (dialkyl borane) is oxidized.

In the method (1), iron(II) phthalocyanine may be used in a catalytic amount, and may be used in an amount of 0.001 to 1.2 mol based on 1 mol of the compound (10b).

In the method (1), sodium borohydride may be used in an amount of 0.5 to 20 mol based on 1 mol of the compound (10b).

The reaction in the method (1) may be performed in a solvent. The solvent is preferably an organic solvent, and examples thereof include ethers, halogenated hydrocarbons, aromatic hydrocarbons, nitriles, and nitrogen-containing polar organic compounds.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

Examples of the nitrile include acetonitrile, propionitrile, butyronitrile, isobutyronitrile, and benzonitrile, of which acetonitrile is preferred.

Examples of the nitrogen-containing polar organic compound include N,N-dimethylformamide, N,N-dimethylacetamide, N-methyl-2-pyrrolidone, 2-pyrrolidone, and 1,3-dimethyl-2-imidazolidinone, of which N,N-dimethylformamide, N,N-dimethylacetamide, and N-methyl-2-pyrrolidone are preferred.

The reaction temperature in the method (1) is preferably -78 to 200°C, and more preferably 0 to 150°C.

The reaction pressure in the method (1) is preferably 0 to 5.0 MPa, and more preferably 0.1 to 1.0 MPa.

The reaction duration in the method (1) is preferably 0.1 to 72 hours, and more preferably 0.1 to 48 hours.

In the method (2), isopinocampheylborane may be used in an amount of 1.0 to 10.0 mol based on 1 mol of the compound (10b).

The reaction of the compound (10b) and isopinocampheylborane may be performed in a solvent. The solvent is preferably an organic solvent, and examples thereof include ethers, halogenated hydrocarbons, and aromatic hydrocarbons.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

The reaction temperature of the compound (10b) and isopinocampheylborane is preferably -78 to 200°C, and more preferably 0 to 150°C.

The reaction pressure of the compound (10b) and isopinocampheylborane is preferably 0 to 5.0 MPa, and more preferably 0.1 to 1.0 MPa.

The duration of the reaction of the compound (10b) and isopinocampheylborane is preferably 0.1 to 72 hours, and more preferably 0.1 to 48 hours.

The oxidation in the method (2) may be performed by causing an oxidizing agent to act on the intermediate. An example of the oxidizing agent is hydrogen peroxide. The oxidizing agent may be used in an amount of 0.7 to 10 mol based on 1 mol of the intermediate.

The oxidation in the method (2) may be performed in a solvent. Examples of the solvent include water, methanol, and ethanol, of which water is preferred.

The oxidation temperature in the method (2) is preferably 0 to 100°C, and more preferably 0 to 80°C.

The oxidation pressure in the method (2) is preferably 0 to 5.0 MPa, and more preferably 0.1 to 1.0 MPa.

The oxidation duration in the method (2) is preferably 0.1 to 72 hours, and more preferably 0.1 to 48 hours.

Examples of the method of oxidizing the compound (11b) in the step (12b) include (a) a method of using Jones reagent (CrO₃/H₂SO₄) (Jones oxidation), (b) a method of using Dess-Martin periodinane (DMP) (Dess-Martin oxidation), (c) a method of using pyridinium chlorochromate (PCC), (d) a method of causing a bleaching agent (5% to 6% aqueous solution of NaOCl) to act in the presence of a nickel compound such as NiCl₂, and (e) a method of causing a hydrogen acceptor such as an aldehyde or a ketone to act in the presence of an aluminum catalyst such as Al(CH₃)₃ or Al[OCH(CH₃)₂]₃ (Oppenauer oxidation).

The oxidation in the step (12b) may be performed in a solvent. The solvent is preferably water or an organic solvent, and examples thereof include water, ketones, ethers, halogenated hydrocarbons, aromatic hydrocarbons, and nitriles.

Examples of the ketones include acetone, methyl ethyl ketone, methyl isobutyl ketone, cyclohexanone, and diacetone alcohol, of which acetone is preferred.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

Examples of the nitrile include acetonitrile, propionitrile, butyronitrile, isobutyronitrile, and benzonitrile, of which acetonitrile is preferred.

The oxidation temperature in the step (12b) is preferably -78 to 200°C, and may appropriately be selected in accordance with the method used.

The oxidation pressure in the step (12b) is preferably 0 to 5.0 MPa, and may appropriately be selected in accordance with the method used.

The oxidation duration in the step (12b) is preferably 0.1 to 72 hours, and may appropriately be selected in accordance with the method used.

The sulfuric-esterification in the step (13b) may be performed by reacting the compound (12b) and a sulfating reagent. Examples of the sulfating reagent include sulfur trioxide amine complexes such as a sulfur trioxide pyridine complex, a sulfur trioxide trimethylamine complex, and a sulfur trioxide triethylamine complex, sulfur trioxide amide complexes such as a sulfur trioxide dimethylformamide complex, sulfuric acid-dicyclohexylcarbodiimide, chlorosulfuric acid, concentrated sulfuric acid, and sulfamic acid. The amount of the sulfating reagent used is preferably 0.5 to 10 mol, more preferably 0.5 to 5 mol, and still more preferably 0.7 to 4 mol, based on 1 mol of the compound (12b).

The sulfuric-esterification in the step (13b) may be performed in a solvent. The solvent is preferably an organic solvent, and examples thereof include ethers, halogenated hydrocarbons, aromatic hydrocarbons, pyridines, dimethyl sulfoxide, sulfolane, and nitriles.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

Examples of the nitrile include acetonitrile, propionitrile, butyronitrile, isobutyronitrile, and benzonitrile, of which acetonitrile is preferred.

The sulfuric-esterification temperature in the step (13b) is preferably -78 to 200°C, and more preferably -20 to 150°C.

The sulfuric-esterification pressure in the step (13b) is preferably 0 to 10 MPa, and more preferably 0.1 to 5 MPa.

The sulfuric-esterification duration in the step (13b) is preferably 0.1 to 72 hours, and more preferably 0.1 to 48 hours.

The surfactant (b) may also be produced by a production method including a step (21b) of ozonolyzing a compound (20b) represented by the following formula: 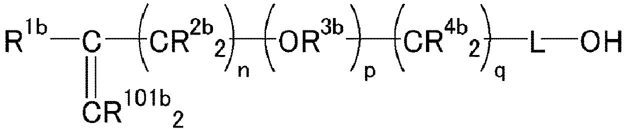 (wherein L, R^{1b} to R^{4b}, n, p, and q are defined as described above; and R^{101b} is an organic group) to provide a compound (21b) represented by the following formula: 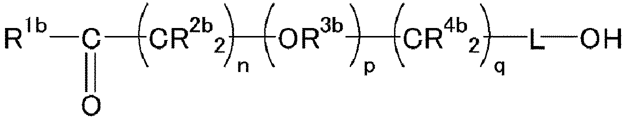 (wherein L, R^{1b} to R^{4b}, n, p, and q are defined as described above); and
a step (22b) of sulfuric-esterifying the compound (21b) to provide a compound (22b) represented by the following formula: 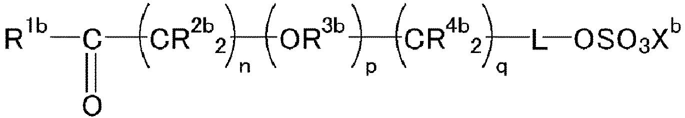 (wherein L, R^{1b} to R^{4b}, n, p, q, and X^{b} are defined as described above).

R^{101b} is preferably an alkyl group having 1 to 20 carbon atoms. The two R^{101b} may be the same as or different from each other.

The ozonolysis in the step (21b) may be performed by causing ozone to act on the compound (20b), followed by post-treatment with a reducing agent.

The ozone may be generated by dielectric barrier discharge in oxygen gas.

Examples of the reducing agent used in the post-treatment include zinc, dimethyl sulfide, thiourea, and phosphines, of which phosphines are preferred.

The ozonolysis in the step (21b) may be performed in a solvent. The solvent is preferably water or an organic solvent, and examples thereof include water, alcohols, carboxylic acids, ethers, halogenated hydrocarbons, and aromatic hydrocarbons.

Examples of the alcohol include methanol, ethanol, 1-propanol, and isopropanol. Of these, methanol and ethanol are preferred.

Examples of the carboxylic acids include acetic acid and propionic acid. Of these, acetic acid is preferred.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

The ozonolysis temperature in the step (21b) is preferably -78 to 200°C, and more preferably 0 to 150°C.

The ozonolysis pressure in the step (21b) is preferably 0 to 5.0 MPa, and more preferably 0.1 to 1.0 MPa.

The ozonolysis duration in the step (21b) is preferably 0.1 to 72 hours, and more preferably 0.1 to 48 hours.

The sulfate esterification in the step (22b) may be performed by reacting the compound (21b) and the sulfating reagent under the same conditions as in the sulfuric-esterification in the step (13b).

The surfactant (b) may also be produced by a production method including:
a step (31b) of epoxidizing a compound (30b) represented by the formula:

   R^{21b}-CH=CH-(CR^{2b}₂)ₙ-(OR^{3b})ₚ-(CR^{4b}₂)_{q}-L-OH

   (wherein L, R^{2b} to R^{4b}, n, p, and q are defined as described above; R^{21b} is H, a linear or branched alkyl group having 1 or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms) to provide a compound (31b) represented by the following formula: 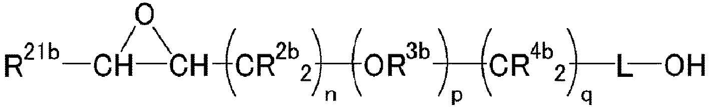 (wherein L, R^{2b} to R^{4b}, R^{21b}, n, p, and q are defined as described above);
a step (32b) of reacting the compound (31b) with a lithium dialkylcopper represented by R^{22b}₂CuLi (wherein R^{22b} is a linear or branched alkyl group having 1 or more carbon atoms and optionally having a substituent or a cyclic alkyl group having 3 or more carbon atoms and optionally having a substituent, and optionally contains a monovalent or divalent heterocycle or optionally forms a ring when having 3 or more carbon atoms) to provide a compound (32b) represented by the following formula: 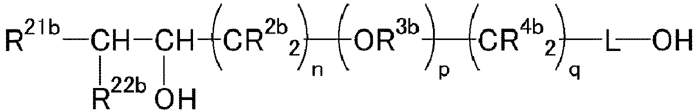 (wherein L, R^{2b} to R^{4b}, R^{21b}, R^{22b}, n, p, and q are defined as described above);
a step (33b) of oxidizing the compound (32b) to provide a compound (33b) represented by the following formula: 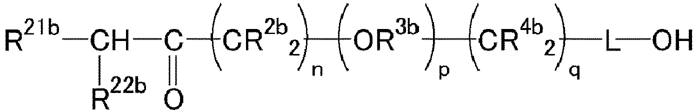 (wherein L, R^{2b} to R^{4b}, R^{21b}, R^{22b}, n, p, and q are defined as described above); and
a step (33b) of sulfuric-esterifying a compound (33b) to provide a compound (34b) represented by the following formula: 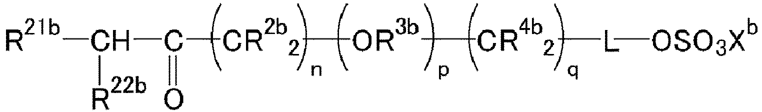 (wherein L, R^{2b} to R^{4b}, L, R^{21b}, R^{22b}, n, p, q, and X ^{b} are defined as described above).

The alkyl group for R^{21b} is preferably free from a carbonyl group.

In the alkyl group for R^{21b}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{21b} is preferably H, a linear or branched alkyl group having 1 to 8 carbon atoms and optionally having a substituent, or a cyclic alkyl group having 3 to 8 carbon atoms and optionally having a substituent, more preferably H, a linear or branched alkyl group having 1 to 8 carbon atoms and free from a carbonyl group, or a cyclic alkyl group having 3 to 8 carbon atoms and free from a carbonyl group, still more preferably H or a linear or branched alkyl group having 1 to 8 carbon atoms and not having a substituent, particularly preferably H or a methyl group (-CH₃), and most preferably H.

The alkyl group for R^{22b} is preferably free from a carbonyl group.

In the alkyl group for R^{22b}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{22b} is preferably a linear or branched alkyl group having 1 to 9 carbon atoms and optionally having a substituent or a cyclic alkyl group having 3 to 9 carbon atoms and optionally having a substituent, more preferably a linear or branched alkyl group having 1 to 9 carbon atoms and free from a carbonyl group or a cyclic alkyl group having 3 to 9 carbon atoms and free from a carbonyl group, still more preferably a linear or branched alkyl group having 1 to 9 carbon atoms and not having a substituent, particularly preferably a methyl group (-CH₃) or an ethyl group (-C₂H₅), and most preferably a methyl group (-CH₃).

The two R^{22b} may be the same as or different from each other.

The total number of carbon atoms of R^{21b} and R^{22b} is preferably 1 to 7, more preferably 1 to 2, and most preferably 1.

The epoxidation in the step (31b) may be performed by causing an epoxidizing agent to act on the compound (30b).

Examples of the epoxidizing agent include peroxy acids such as meta-chloroperbenzoic acid (m-CPBA), perbenzoic acid, hydrogen peroxide, and tert-butyl hydroperoxide, dimethyl dioxolane, and methyl trifluoromethyl dioxolane, of which peroxy acids are preferred, and meta-chloroperbenzoic acid is more preferred.

The epoxidizing agent may be used in an amount of 0.5 to 10.0 mol based on 1 mol of the compound (30b).

The epoxidation in the step (31b) may be performed in a solvent. The solvent is preferably an organic solvent, and examples thereof include ketones, ethers, halogenated hydrocarbons, aromatic hydrocarbons, nitriles, pyridines, nitrogen-containing polar organic compounds, and dimethyl sulfoxide, of which dichloromethane is preferred.

Examples of the ketones include acetone, methyl ethyl ketone, methyl isobutyl ketone, cyclohexanone, and diacetone alcohol, of which acetone is preferred.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

Examples of the nitrile include acetonitrile, propionitrile, butyronitrile, isobutyronitrile, and benzonitrile, of which acetonitrile is preferred.

Examples of the nitrogen-containing polar organic compound include N,N-dimethylformamide, N,N-dimethylacetamide, N-methyl-2-pyrrolidone, 2-pyrrolidone, and 1,3-dimethyl-2-imidazolidinone, of which N,N-dimethylformamide, N,N-dimethylacetamide, and N-methyl-2-pyrrolidone are preferred.

The epoxidation temperature in the step (31b) is preferably -78 to 200°C, and more preferably -40 to 150°C.

The epoxidation pressure in the step (31b) is preferably 0 to 5.0 MPa, and more preferably 0.1 to 1.0 MPa.

The epoxidation duration in the step (31b) is preferably 0.1 to 72 hours, and more preferably 0.1 to 48 hours.

In the step (32b), the lithium dialkylcopper may be used in an amount of 0.5 to 10.0 mol based on 1 mol of the compound (31b).

The reaction in the step (32b) may be performed in a solvent. The solvent is preferably an organic solvent, and examples thereof include ethers, halogenated hydrocarbons, and aromatic hydrocarbons.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

The reaction temperature in the step (32b) is preferably -78 to 200°C, and more preferably -40 to 150°C.

The reaction pressure in the step (32b) is preferably 0 to 5.0 MPa, and more preferably 0.1 to 1.0 MPa.

The reaction duration in the step (32b) is preferably 0.1 to 72 hours, and more preferably 0.1 to 48 hours.

Examples of the method of oxidizing the compound (32b) in the step (33b) include (a) a method of using Jones reagent (CrO₃/H₂SO₄) (Jones oxidation), (b) a method of using Dess-Martin periodinane (DMP) (Dess-Martin oxidation), (c) a method of using pyridinium chlorochromate (PCC), (d) a method of causing a bleaching agent (5% to 6% aqueous solution of NaOCl) to act in the presence of a nickel compound such as NiCl₂, and (e) a method of causing a hydrogen acceptor such as an aldehyde or a ketone to act in the presence of an aluminum catalyst such as Al(CH₃)₃ or Al[OCH(CH₃)₂]₃ (Oppenauer oxidation).

The oxidation in the step (33b) may be performed in a solvent. The solvent is preferably water or an organic solvent, and examples thereof include water, ketones, alcohols, ethers, halogenated hydrocarbons, aromatic hydrocarbons, and nitriles.

Examples of the ketones include acetone, methyl ethyl ketone, methyl isobutyl ketone, cyclohexanone, and diacetone alcohol, of which acetone is preferred.

Examples of the alcohol include methanol, ethanol, 1-propanol, and isopropanol. Of these, methanol and ethanol are preferred.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

Examples of the nitrile include acetonitrile, propionitrile, butyronitrile, isobutyronitrile, and benzonitrile, of which acetonitrile is preferred.

The oxidation temperature in the step (33b) is preferably -78 to 200°C, and may appropriately be selected in accordance with the method used.

The oxidation pressure in the step (33b) is preferably 0 to 5.0 MPa, and may appropriately be selected in accordance with the method used.

The oxidation duration in the step (33b) is preferably 0.1 to 72 hours, and may appropriately be selected in accordance with the method used.

The sulfate esterification in the step (34b) may be performed by reacting the compound (33b) and the sulfating reagent under the same conditions as in the sulfuric-esterification in the step (13b).

The surfactant (b) may also be produced by a production method including:
a step (41b) of oxidizing the compound (10b) represented by the following formula:

   R^{11b}-CH=CH-(CR^{2b}₂)ₙ-(OR^{3b})ₚ-(CR^{4b}₂)_{q}-L-OH

   (wherein L, R^{2b} to R^{4b}, R^{11b}, n, p, and q are defined as described above) to provide a compound (41b) represented by the following formula: 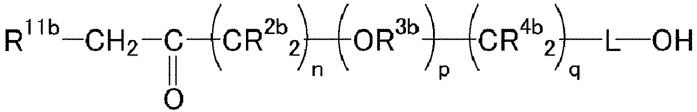 (wherein L, R^{2b} to R^{4b}, L, R^{11b}, n, p, and q are defined as described above); and
a step (42b) of sulfuric-esterifying the compound (41b) to provide a compound (42b) represented by the following formula: 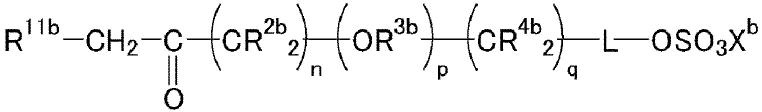 (wherein L, R^{2b} to R^{4b}, R^{11b}, n, p, q, and X ^{b} are defined as described above).

The oxidation in the step (41b) may be performed by causing an oxidizing agent to act on the compound (10b) in the presence of water and a palladium compound.

Examples of the oxidizing agent include monovalent or divalent copper salts such as copper chloride, copper acetate, copper cyanide, and copper trifluoromethanethiolate, iron salts such as iron chloride, iron acetate, iron cyanide, iron trifluoromethanethiolate, and hexacyanoferrates, benzoquinones such as 1,4-benzoquinone, 2,3-dichloro-5,6-dicyano-1,4-benzoquinone, tetrachloro-1,2-benzoquinone, and tetrachloro-1,4-benzoquinone, H₂O₂, MnO₂, KMnO₄, RuO₄, m-chloroperbenzoic acid, and oxygen. Of these, copper salts, iron salts, and benzoquinones are preferred, and copper chloride, iron chloride, and 1,4-benzoquinone are more preferred.

The oxidizing agent may be used in an amount of 0.001 to 10 mol based on 1 mol of the compound (10b).

The water may be used in an amount of 0.5 to 1,000 mol based on 1 mol of the compound (10b).

An example of the palladium compound is palladium dichloride. The palladium compound may be used in a catalytic amount, and may be used in an amount of 0.0001 to 1.0 mol based on 1 mol of the compound (10b).

The oxidation in the step (41b) may be performed in a solvent. Examples of the solvent include water, esters, aliphatic hydrocarbons, aromatic hydrocarbons, alcohols, carboxylic acids, ethers, halogenated hydrocarbons, nitrogen-containing polar organic compounds, nitriles, dimethyl sulfoxide, and sulfolane.

Examples of the esters include ethyl acetate, butyl acetate, ethylene glycol monomethyl ether acetate, and propylene glycol monomethyl ether acetate (PGMEA, also known as 1-methoxy-2-acetoxypropane), of which ethyl acetate is preferred.

Examples of the aliphatic hydrocarbons include hexane, cyclohexane, heptane, octane, nonane, decane, undecane, dodecane, and mineral spirits, of which cyclohexane and heptane are preferred.

Examples of the aromatic hydrocarbon include benzene, toluene, and xylene, of which benzene and toluene are preferred.

Examples of the alcohol include methanol, ethanol, 1-propanol, and isopropanol.

Examples of the carboxylic acids include acetic acid and propionic acid. Of these, acetic acid is preferred.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the nitrogen-containing polar organic compound include N,N-dimethylformamide, N,N-dimethylacetamide, N-methyl-2-pyrrolidone, 2-pyrrolidone, and 1,3-dimethyl-2-imidazolidinone, of which N,N-dimethylformamide, N,N-dimethylacetamide, and N-methyl-2-pyrrolidone are preferred.

Examples of the nitrile include acetonitrile, propionitrile, butyronitrile, isobutyronitrile, and benzonitrile, of which acetonitrile is preferred.

The oxidation temperature in the step (41b) is preferably -78 to 200°C, and more preferably -20 to 150°C.

The oxidation pressure in the step (41b) is preferably 0 to 10 MPa, and more preferably 0.1 to 5.0 MPa.

The oxidation duration in the step (41b) is preferably 0.1 to 72 hours, and more preferably 0.1 to 48 hours.

The sulfate esterification in the step (42b) may be performed by reacting the compound (41b) and the sulfating reagent under the same conditions as in the sulfuric-esterification in the step (13b).

The surfactant (b) may also be produced by a production method including:
a step (51b) of reacting a compound (50b) represented by the following formula:

   R^{11b}-CH=CH-(CR^{2b}₂)ₙ-OH

   (wherein R^{2b}, R^{11b}, and n are defined as described above) and a halogenating agent to provide a compound (51b) represented by the following formula:

   R^{11b}-CH=CH-(CR^{2b}₂)ₙ-Z^{51b}

   (wherein R^{2b}, R^{11b}, and n are defined as described above; and Z^{51b} is a halogen atom);
a step (52b) of reacting the compound (51b) and an alkylene glycol represented by HO-R^{3b}-L-OH (wherein L and R^{3b} are defined as described above) to provide a compound (52b) represented by the following formula:

   R^{11b}-CH=CH-(CR^{2b}₂)ₙ-O-R^{3b}-L-OH

   (wherein L, R^{2b}, R^{3b}, R^{11b}, and n are defined as described above);
a step (53b) of oxidizing the compound (52b) to provide a compound (53b) represented by the following formula: 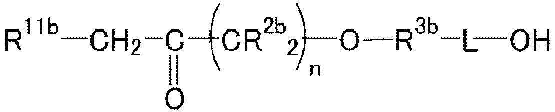 (wherein L, R^{2b}, R^{3b}, R^{11b}, and n are defined as described above); and
a step (54b) of sulfuric-esterifying the compound (53b) to provide a compound (54b) represented by the following formula: 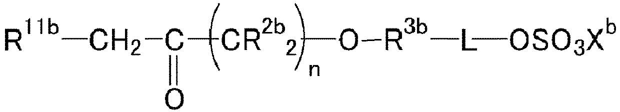 (wherein L, R^{2b}, R^{3b}, R^{11b}, n, and X ^{b} are defined as described above).

Z^{51b} is preferably F, Cl, Br or I, and more preferably Br.

Examples of the halogenating agent used in the step (51b) include N-bromosuccinimide and N-chlorosuccinimide.

The halogenating agent may be used in an amount of 0.5 to 10.0 mol based on 1 mol of the compound (50b).

The reaction of step (51b) may be performed in the presence of phosphines such as triphenylphosphine.

The phosphines may be used in an amount of 0.5 to 10.0 mol based on 1 mol of the compound (50b).

The reaction in the step (51b) may be performed in a solvent. The solvent is preferably an organic solvent, and examples thereof include ethers, halogenated hydrocarbons, and aromatic hydrocarbons.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

The reaction temperature in the step (51b) is preferably -78 to 200°C, and more preferably -40 to 150°C.

The reaction pressure in the step (51b) is preferably 0 to 5.0 MPa, and more preferably 0.1 to 1.0 MPa.

The reaction duration in the step (51b) is preferably 0.1 to 72 hours, and more preferably 0.1 to 48 hours.

In the step (52b), the alkylene glycol may be used in an amount of 0.5 to 10.0 mol based on 1 mol of the compound (51b).

The reaction in the step (52b) may be performed in the presence of a base. Examples of the base include sodium hydride, sodium hydroxide, and potassium hydroxide.

The base may be used in an amount of 0.5 to 10.0 mol based on 1 mol of the compound (51b).

The reaction in the step (52b) may be performed in a solvent. The solvent is preferably an organic solvent, and examples thereof include nitrogen-containing polar organic compounds, ethers, halogenated hydrocarbons, and aromatic hydrocarbons.

Examples of the nitrogen-containing polar organic compound include N,N-dimethylformamide, N,N-dimethylacetamide, N-methyl-2-pyrrolidone, 2-pyrrolidone, and 1,3-dimethyl-2-imidazolidinone, of which N,N-dimethylformamide, N,N-dimethylacetamide, and N-methyl-2-pyrrolidone are preferred.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

The reaction temperature in the step (52b) is preferably -78 to 200°C, and more preferably -40 to 150°C.

The reaction pressure in the step (52b) is preferably 0 to 5.0 MPa, and more preferably 0.1 to 1.0 MPa.

The reaction duration in the step (52b) is preferably 0.1 to 72 hours, and more preferably 0.1 to 48 hours.

The oxidation in the step (53b) may be performed by causing an oxidizing agent to act on the compound (52b) in the presence of water and a palladium compound under the same conditions as in the oxidation in the step (41b) .

The sulfate esterification in the step (54b) may be performed by reacting the compound (53b) and the sulfating reagent under the same conditions as in the sulfuric-esterification in the step (13b).

In any of the production methods described above, after the completion of each step, the solvent may be distilled off, or distillation or purification may be performed to increase the purity of the resulting compounds. Further, when the obtained compound has a group represented by -OSO₃H (that is, when X ^{b} is H), the compounds may be brought into contact with an alkali such as sodium carbonate or ammonia to covert -OSO₃H into a sulfate group.

Among the methods for producing the surfactant (b), production methods including the steps (41b) and (42b) are preferred.

The surfactant (c) will be described.

In the formula (c), R^{1c} is a linear or branched alkyl group having 1 or more carbon atoms or a cyclic alkyl group having 3 or more carbon atoms.

When having 3 or more carbon atoms, the alkyl group optionally contains a carbonyl group (-C(=O)-) between two carbon atoms. When having 2 or more carbon atoms, the alkyl group optionally contains the carbonyl group at an end of the alkyl group. In other words, acyl groups such as an acetyl group represented by CH₃-C(=O)- are also included in the alkyl group.

When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1c}, a divalent heterocycle may be present between two carbon atoms, or a divalent heterocycle may be present at an end and bind to -C(=O)-, or a monovalent heterocycle may be present at an end of the alkyl group.

The "number of carbon atoms" in the alkyl group as used herein includes the number of carbon atoms constituting the carbonyl groups and the number of carbon atoms constituting the heterocycles. For example, the number of carbon atoms in the group represented by CH₃-C(=O)-CH₂- is 3, the number of carbon atoms in the group represented by CH₃-C(=O)-C₂H₄-C(=O)-C₂H₄- is 7, and the number of carbon atoms in the group represented by CH₃-C(=O)- is 2.

In the alkyl group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{101c}, wherein R^{101c} is an alkyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula (c), R^{2c} and R^{3c} are each independently a single bond or a divalent linking group.

Preferably, R^{2c} and R^{3c} are each independently a single bond, a linear or branched alkylene group having 1 or more carbon atoms, or a cyclic alkylene group having 3 or more carbon atoms.

The alkylene group constituting R^{2c} and R^{3c} is preferably free from a carbonyl group.

In the alkylene group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{102c}, wherein R^{102c} is an alkyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms of R^{1c}, R^{2c}, and R^{3c} is 5 or more. The total number of carbon atoms is preferably 7 or more, more preferably 9 or more, and preferably 20 or less, more preferably 18 or less, still more preferably 15 or less.

Any two of R^{1c}, R^{2c}, and R^{3c} optionally bind to each other to form a ring.

In the formula (c), A^{c} is -COOX^{c} or -SO₃X^{c}, wherein X^{c} is H, a metal atom, NR^{4c}₄, imidazolium optionally having a substituent, pyridinium optionally having a substituent, or phosphonium optionally having a substituent, wherein R^{4c} is H or an organic group and may be the same or different. The organic group in R^{4c} is preferably an alkyl group. R^{4c} is preferably H or an organic group having 1 to 10 carbon atoms, more preferably H or an organic group having 1 to 4 carbon atoms, and still more preferably H or an alkyl group having 1 to 4 carbon atoms. Examples of the metal atom include alkali metals (Group 1) and alkaline earth metals (Group 2), and preferred is Na, K, or Li.

X² is preferably H, an alkali metal (Group 1), an alkaline earth metal (Group 2), or NR^{4c}₄, more preferably H, Na, K, Li, or NH₄ because they are easily dissolved in water, still more preferably Na, K, or NH₄ because they are more easily dissolved in water, particularly preferably Na or NH₄, and most preferably NH₄ because it can be easily removed. When X^{c} is NH₄, the solubility of the surfactant in an aqueous medium is excellent, and the metal component is unlikely to remain in the PTFE or the final product.

R^{1c} is preferably a linear or branched alkyl group having 1 to 8 carbon atoms and free from a carbonyl group, a cyclic alkyl group having 3 to 8 carbon atoms and free from a carbonyl group, a linear or branched alkyl group having 2 to 45 carbon atoms and containing 1 to 10 carbonyl groups, a cyclic alkyl group having 3 to 45 carbon atoms and containing a carbonyl group, or an alkyl group having 3 to 45 carbon atoms and containing a monovalent or divalent heterocycle.

R^{1c} is more preferably a group represented by the following formula: 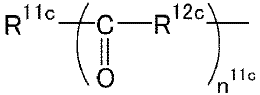 wherein n^{11c} is an integer of 0 to 10; R^{11c} is a linear or branched alkyl group having 1 to 5 carbon atoms or a cyclic alkyl group having 3 to 5 carbon atoms; R^{12c} is an alkylene group having 0 to 3 carbon atoms; and when n^{11c} is an integer of 2 to 10, each R^{12c} may be the same or different.

In the formula, n^{11c} is preferably an integer of 0 to 5, more preferably an integer of 0 to 3, and still more preferably an integer of 1 to 3.

The alkyl group for R^{11c} is preferably free from a carbonyl group.

In the alkyl group for R^{11c}, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{103c}, wherein R^{103c} is an alkyl group.

In the alkyl group for R^{11b}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R^{12c} is an alkylene group having 0 to 3 carbon atoms. The alkylene group preferably has 1 to 3 carbon atoms.

The alkylene group for R^{12c} may be either linear or branched.

The alkylene group for R^{12c} is preferably free from a carbonyl group. R^{12c} is more preferably an ethylene group (-C₂H₄-) or a propylene group (-C₃H₆-).

In the alkylene group for R^{12c}, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{104c}, wherein R^{104c} is an alkyl group.

In the alkylene group for R^{12c}, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

R^{2c} and R^{3c} are preferably each independently an alkylene group having 1 or more carbon atoms and free from a carbonyl group, more preferably an alkylene group having 1 to 3 carbon atoms and free from a carbonyl group, and still more preferably an ethylene group (-C₂H₄-) or a propylene group (-C₃H₆-).

Examples of the surfactant (c) include the following surfactants. In each formula, A^{c} is defined as described above.

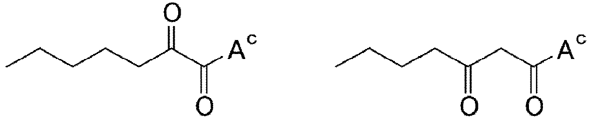

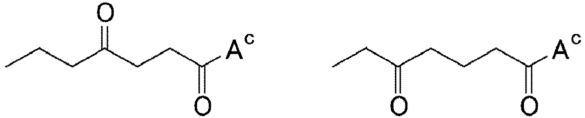

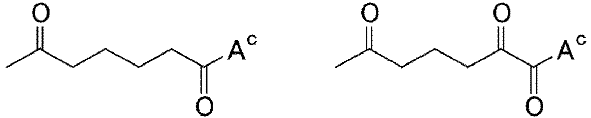

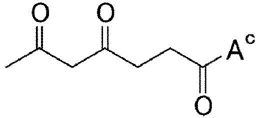

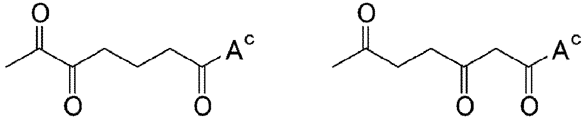

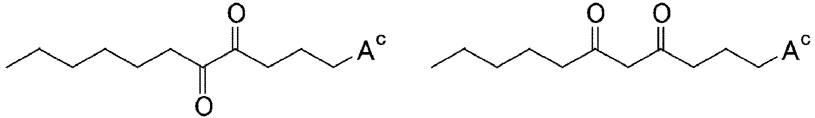

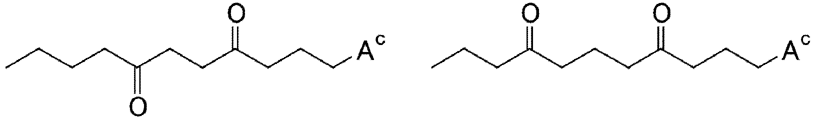

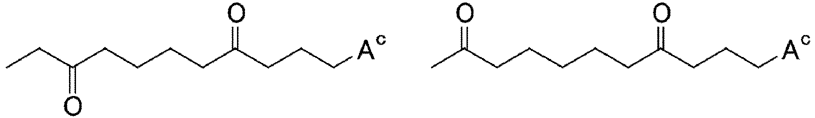

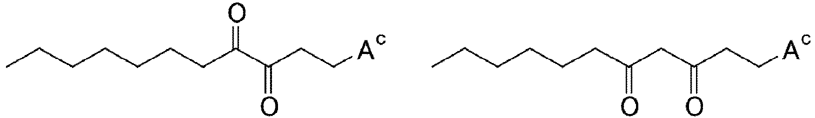

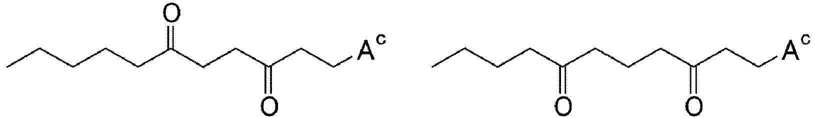

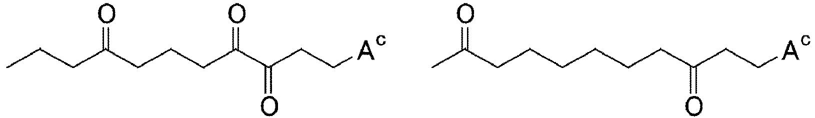

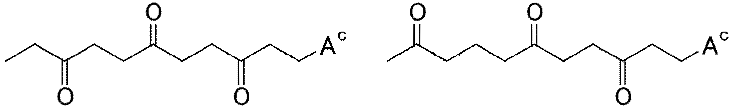

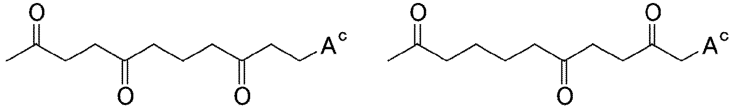

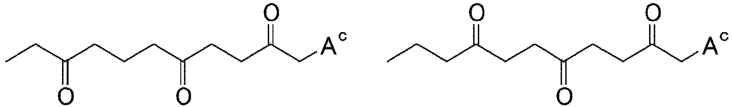

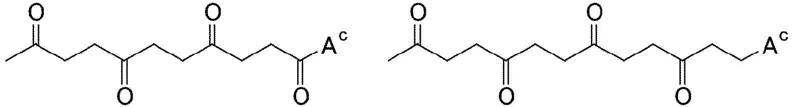

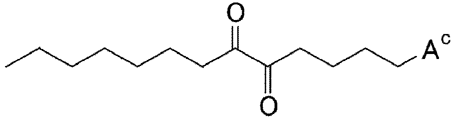

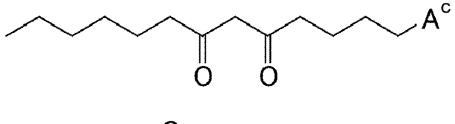

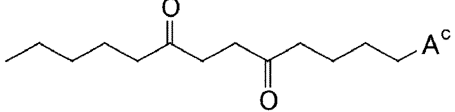

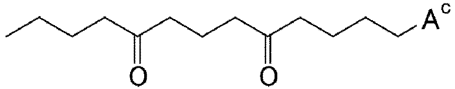

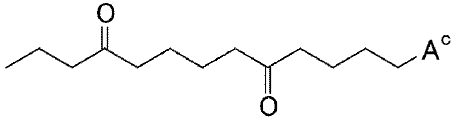

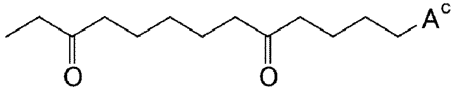

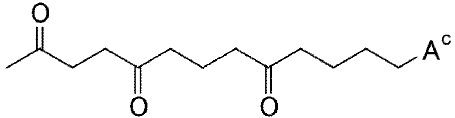

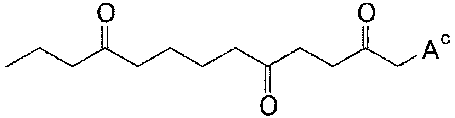

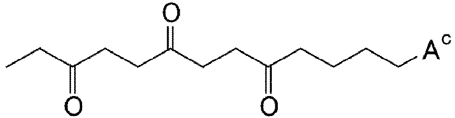

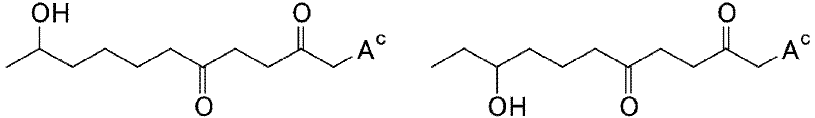

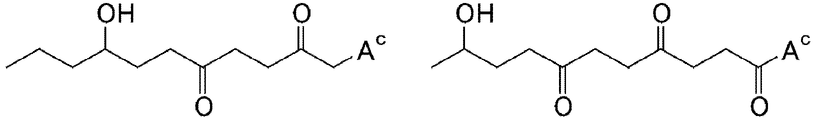

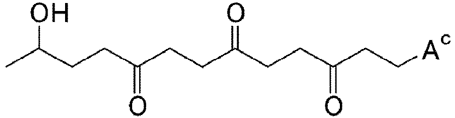

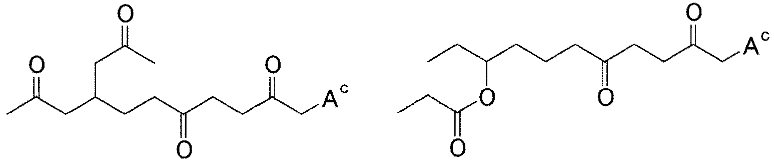

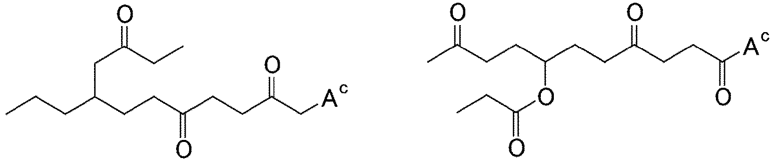

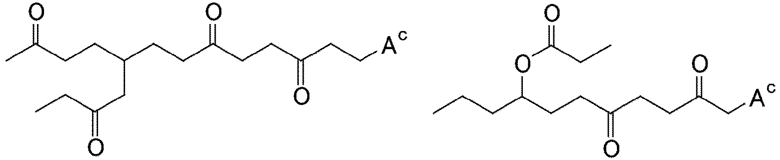

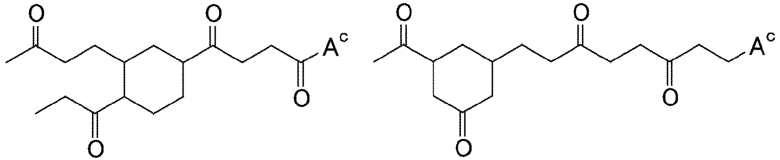

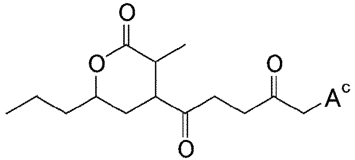

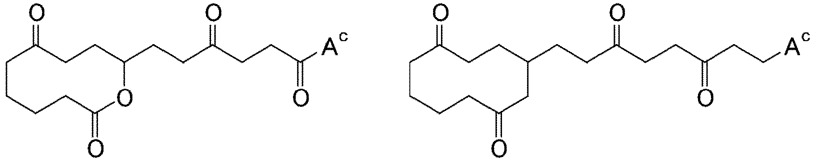

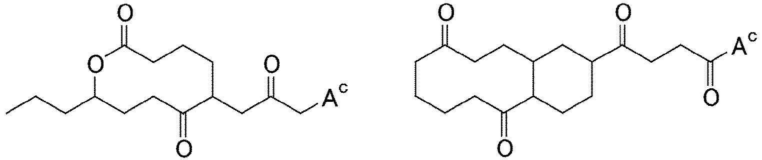

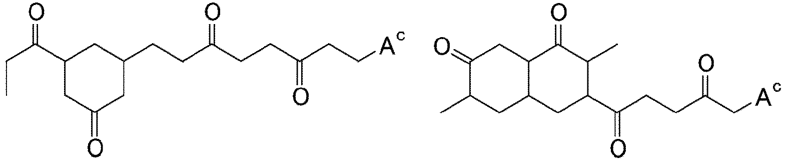

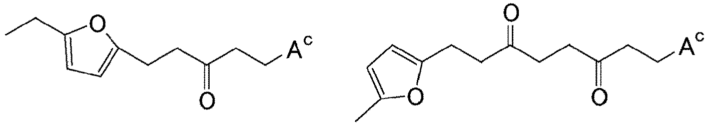

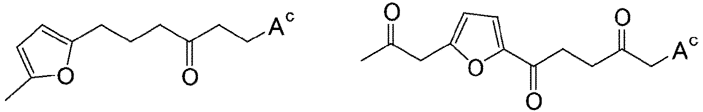

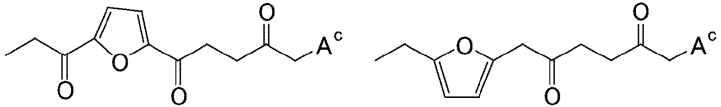

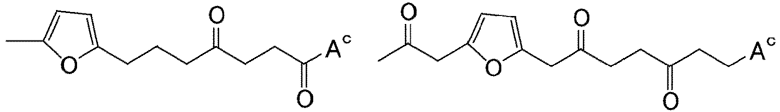

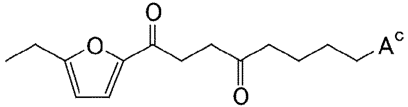

The surfactant (c) is a novel compound, and may be produced by any of the following production methods, for example.

The surfactant (c) may be suitably produced by a production method including:
a step (11c) of reacting a compound (10c) represented by the formula: 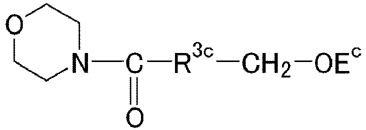 (wherein R^{3c} is defined as described above; and E^{C} is a leaving group), lithium, and a chlorosilane compound represented by the formula: R^{201c}₃Si -Cl (wherein each R^{201c} is independently an alkyl group or an aryl group) to provide a compound (11c) represented by the formula: 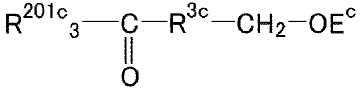 (wherein R^{3c}, R^{201c}, and E^{c} are defined as described above);
a step (12c) of reacting the compound (11c) and an olefin represented by the formula: 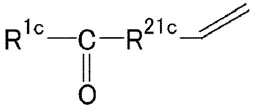 (wherein R^{1c} is defined as described above; and R^{21c} is a single bond or a divalent linking group) to provide a compound (12a) represented by the formula: 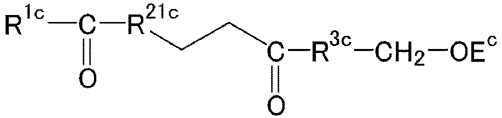 (wherein R^{1c}, R^{21c}, R^{3c}, and E^{c} are defined as described above);
a step (13c) of eliminating the leaving group in the compound (12c) to provide a compound (13c) represented by the formula: 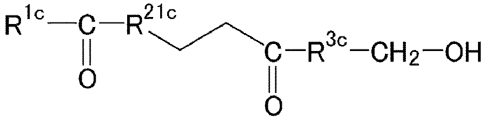 (wherein R^{1c}, R^{21c}, and R^{3c} are defined as described above); and
a step (14c) of oxidizing the compound (13c) to provide a compound (14a) represented by the formula: 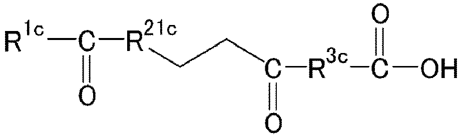 (wherein R^{1c}, R^{21c}, and R^{3c} are defined as described above) .

When R^{1c} contains a furan ring, the furan ring may be cleaved by an acid and converted into a dicarbonyl derivative, for example. Examples of the acid include acetic acid, hydrochloric acid, and p-toluene sulfone, of which acetic acid is preferred.

In the step (11c), it is preferable that lithium and the chlorosilane compound are reacted in advance to obtain a syroxylithium compound, and then the syroxylithium compound and the compound (10c) are reacted to obtain the compound (11c).

E^{c} represents a leaving group. Examples of the leaving group include a tert-butyldimethylsilyl (TBS) group, a triethylsilyl (TES) group, a triisopropylsilyl (TIPS) group, a tert-butyldiphenylsilyl (TBDPS) group, and a benzyl (Bn) group.

R^{21c} is preferably a single bond or a linear or branched alkylene group having 1 or more carbon atoms.

Examples of the chlorosilane compound include:

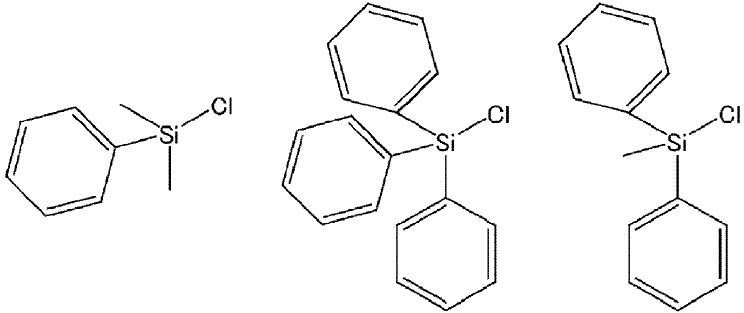

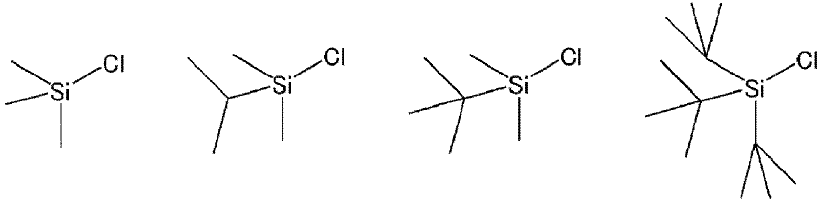

Any of the reactions in the step (11c) may be performed in a solvent. The solvent is preferably an organic solvent, more preferably an aprotic polar solvent, and still more preferably an ether. Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature of lithium and the chlorosilane compound in the step (11c) is preferably -78 to 100°C, more preferably 10 to 40°C.

The reaction temperature of the siloxylithium compound and the compound (10c) in the step (11c) is preferably -100 to 0°C, more preferably -80 to -50°C.

The reaction pressure of lithium and the chlorosilane compound in the step (11c) is preferably 0.1 to 5 MPa, and more preferably 0.1 to 1 MPa.

The reaction pressure of the siloxylithium compound and the compound (10c) in the step (11c) is preferably 0.1 to 5 MPa, and more preferably 0.1 to 1 MPa.

The reaction time of lithium and the chlorosilane compound in the step (11c) is preferably 0.1 to 72 hours, and more preferably 6 to 10 hours.

The reaction time of the siloxylithium compound and the compound (10c) in the step (11c) is preferably 0.1 to 72 hours, and more preferably 1 to 2 hours.

Regarding the reaction ratio between the compound (11c) and the olefin in the step (12c), the amount of the olefin is preferably 1 to 2 mol, and more preferably 1 to 1.1 mol, based on 1 mol of the compound (11c) in consideration of the improvement of the yield and the reduction of the waste.

The reaction in the step (12c) may be performed in a solvent in the presence of a thiazolium salt and a base.

Examples of the thiazolium salt include 3-ethyl-5-(2-hydroxyethyl)-4-methylthiazolium bromide and 3-benzyl-5-(2-hydroxyethyl)-4-methylthiazolium chloride.

Examples of the base include 1,8-diazabicyclo[5.4.0]-7-undecene and triethylamine.

The solvent is preferably an organic solvent, more preferably an aprotic polar solvent, and still more preferably an alcohol or ether.

Examples of the alcohol include methanol, ethanol, 1-propanol, and isopropanol.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature in the step (12c) is preferably 40 to 60°C, and more preferably 50 to 55°C.

The reaction pressure in the step (12c) is preferably 0.1 to 5 MPa, and more preferably 0.1 to 1 MPa.

The reaction duration in the step (12c) is preferably 0.1 to 72 hours, and more preferably 6 to 10 hours.

The elimination reaction for the leaving group in the step (13c) may be performed using a fluoride ion or an acid. Examples of methods of eliminating the leaving group include a method using hydrofluoric acid; a method using an amine complex of hydrogen fluoride such as pyridine-nHF or triethylamine-nHF; a method using an inorganic salt such as cesium fluoride, potassium fluoride, lithium tetrafluoroborate (LiBF₄), or ammonium fluoride; and a method using an organic salt such as tetrabutylammonium fluoride (TBAF).

The elimination reaction for the leaving group in the step (13c) may be performed in a polar solvent. The solvent is preferably an organic solvent, more preferably an aprotic polar solvent, and still more preferably an ether.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature in the step (13c) is preferably 0 to 40°C, and more preferably 0 to 20°C.

The reaction pressure in the step (13c) is preferably 0.1 to 5 MPa, and more preferably 0.1 to 1 MPa.

The reaction duration in the step (13c) is preferably 0.1 to 72 hours, and more preferably 3 to 8 hours.

The oxidation in the step (14c) may be performed in a solvent in the presence of sodium chlorite.

The solvent may be an alcohol, such as methanol, ethanol, 1-propanol, isopropanol, 1-butanol, or tert-butyl alcohol, or water. A disodium hydrogen phosphate solution may be used as the buffer.

The compound (14c) may be brought into contact with an alkali to convert -COOH into a salt form. Examples of the alkali include sodium hydroxide, potassium hydroxide, lithium hydroxide, and ammonia; for example, an aqueous solution of ammonia is preferably used.

After the completion of each step, the solvent may be distilled off, or distillation or purification may be performed to increase the purity of each resulting compound.

The surfactant (c) may also be suitably produced by a production method including:
a step (21c) of reacting a ketone represented by the formula: 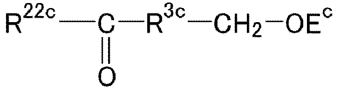 (wherein R^{3c} is defined as described above; R^{22c} is a monovalent organic group; and E^{c} is a leaving group) and a carboxylate represented by the formula: 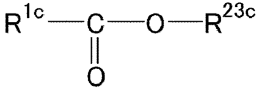 (wherein R^{1c} is defined as described above; and R^{23c} is a monovalent organic group) to provide a compound (21c) represented by the formula: 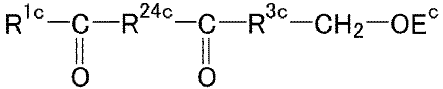 (wherein R^{1c}, R^{3c}, and E^{c} are defined as described above; and R^{24c} is a single bond or a divalent linking group) ;
a step (22c) of eliminating the leaving group in the compound (21c) to provide a compound (22c) represented by the formula: 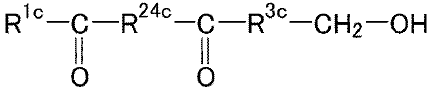 (wherein R^{1c}, R^{24c}, and R^{3c} are defined as described above); and
a step (23c) of oxidizing the compound (22c) to provide a compound (23c) represented by the formula: 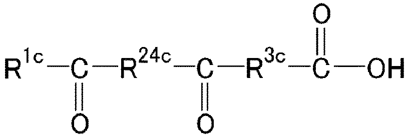 wherein R^{1c}, R^{24c}, and R^{3c} are defined as described above.

When R^{1c} contains a furan ring, the furan ring may be cleaved by an acid and converted into a dicarbonyl derivative, for example. Examples of the acid include acetic acid, hydrochloric acid, and p-toluene sulfone, of which acetic acid is preferred.

E^{c} represents a leaving group. Examples of the leaving group include a tert-butyldimethylsilyl (TBS) group, a triethylsilyl (TES) group, a triisopropylsilyl (TIPS) group, a tert-butyldiphenylsilyl (TBDPS) group, and a benzyl (Bn) group.

R^{22c} is preferably a linear or branched alkyl group having 1 or more carbon atoms, and more preferably a methyl group.

R^{23c} is preferably a linear or branched alkyl group having 1 or more carbon atoms, and more preferably a methyl group.

R^{24c} is preferably a linear or branched alkylene group having 1 or more carbon atoms, and more preferably a methylene group (-CH₂-).

The reaction in the step (21c) may be performed in a solvent in the presence of a base.

Examples of the base include sodium amide, sodium hydride, sodium methoxide, and sodium ethoxide.

The solvent is preferably an organic solvent, more preferably an aprotic polar solvent, and still more preferably an alcohol or an ether.

Examples of the alcohol include methanol, ethanol, 1-propanol, and isopropanol.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature in the step (21c) is preferably 0 to 40°C, and more preferably 0 to 20.

The reaction pressure in the step (21c) is preferably 0.1 to 5 MPa, and more preferably 0.1 to 1 MPa.

The reaction duration in the step (21c) is preferably 0.1 to 72 hours, and more preferably 3 to 8 hours.

The elimination reaction for the leaving group in the step (22c) may be performed using a fluoride ion or an acid. Examples of methods of eliminating the leaving group include a method using hydrofluoric acid; a method using an amine complex of hydrogen fluoride such as pyridine-nHF or triethylamine-nHF; a method using an inorganic salt such as cesium fluoride, potassium fluoride, lithium tetrafluoroborate (LiBF₄), or ammonium fluoride; and a method using an organic salt such as tetrabutylammonium fluoride (TBAF).

The elimination reaction for the leaving group in the step (22c) may be performed in a solvent. The solvent is preferably an organic solvent, more preferably an aprotic polar solvent, and still more preferably an ether.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature in the step (22c) is preferably 0 to 40°C, and more preferably 0 to 20°C.

The reaction pressure in the step (22c) is preferably 0.1 to 5 MPa, and more preferably 0.1 to 1 MPa.

The reaction duration in the step (22c) is preferably 0.1 to 72 hours, and more preferably 3 to 8 hours.

The oxidation in the step (23c) may be performed in a solvent in the presence of sodium chlorite.

The solvent may be an alcohol or water. A disodium hydrogen phosphate solution may be used as the buffer.

The compound (23c) may be brought into contact with an alkali to convert -COOH into a salt form. Examples of the alkali include sodium hydroxide, potassium hydroxide, lithium hydroxide, and ammonia; for example, an aqueous solution of ammonia is preferably used.

After the completion of each step, the solvent may be distilled off, or distillation or purification may be performed to increase the purity of each resulting compound.

The surfactant (c) may also be suitably produced by a production method including:
a step (31c) of reacting an alkyl halide represented by the formula: Y^{c}-R^{3c}-CH₂-OE^{c}
   (wherein R^{3c} is defined as described above; Y° is a halogen atom; and E^{c} is a leaving group) and lithium acetylide represented by the formula: 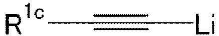 (wherein R^{1c} is defined as described above) to provide a compound (31c) represented by the formula: 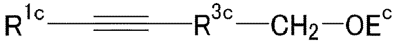 (wherein R^{1c}, R^{3c}, and E^{c} are defined as described above);
a step (32c) of oxidizing the compound (31c) to provide a compound (32c) represented by the formula: 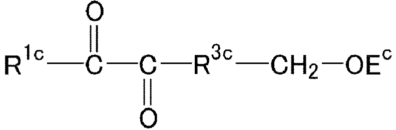 (wherein R^{1c}, R^{3c}, and E^{c} are defined as described above);
a step (33c) of eliminating the leaving group in the compound (32c) to provide a compound (33c) represented by the formula: 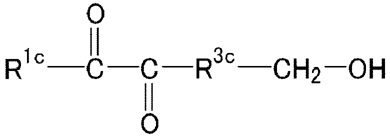 (wherein R^{1c} and R^{3c} are defined as described above); and
a step (34c) of oxidizing the compound (33c) to provide a compound (34c) represented by the formula: 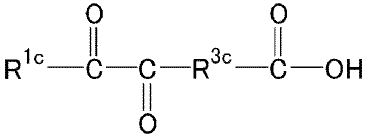 (wherein R^{1c} and R^{3c} are defined as described above).

When R^{1c} contains a furan ring, the furan ring may be cleaved by an acid and converted into a dicarbonyl derivative, for example. Examples of the acid include acetic acid, hydrochloric acid, and p-toluene sulfone, of which acetic acid is preferred.

E^{c} represents a leaving group. Examples of the leaving group include a tert-butyldimethylsilyl (TBS) group, a triethylsilyl (TES) group, a triisopropylsilyl (TIPS) group, a tert-butyldiphenylsilyl (TBDPS) group, and a benzyl (Bn) group.

Regarding the reaction ratio between the alkyl halide and the lithium acetylide in the step (31c), the lithium acetylide is preferably used in an amount of 1 to 2 mol, and more preferably 1 to 1.2 mol, based on 1 mol of the alkyl halide in consideration of the improvement of the yield and the reduction of the waste.

The reaction in the step (31c) may be performed in a solvent. Hexane is preferable as the solvent.

The reaction temperature in the step (31c) is preferably -100 to -40°C, and more preferably -80 to - 50°C.

The reaction pressure in the step (31c) is preferably 0.1 to 5 MPa, and more preferably 0.1 to 1 MPa.

The reaction duration in the step (31c) is preferably 0.1 to 72 hours, and more preferably 6 to 10 hours.

The oxidation in the step (32c) may be performed in a nitrile solvent using a complex generated by treating [(Cn*)Ru^{III}(CF₃CO₂)₃]·H₂O (wherein Cn* is 1,4,7-trimethyl-1,4,7-triazabicyclononane) with (NH₄)₂Ce(NO₃)₆ and trifluoroacetic acid and then adding sodium perchlorate thereto.

After the completion of the oxidation, the product may be neutralized with an alkali, and then an organic solvent such as an ether may be used to extract the compound (32c).

The reaction temperature in the step (32c) is preferably -30 to 100°C, and more preferably 40 to 90°C.

The reaction pressure in the step (32c) is preferably 0.1 to 5 MPa, and more preferably 0.1 to 1 MPa.

The reaction duration in the step (32c) is preferably 0.1 to 72 hours, and more preferably 3 to 8 hours.

The elimination reaction for the leaving group in the step (33c) may be performed using a fluoride ion or an acid. Examples of methods of eliminating the leaving group include a method using hydrofluoric acid; a method using an amine complex of hydrogen fluoride such as pyridine-nHF or triethylamine-nHF; a method using an inorganic salt such as cesium fluoride, potassium fluoride, lithium tetrafluoroborate (LiBF₄), or ammonium fluoride; and a method using an organic salt such as tetrabutylammonium fluoride (TBAF).

The elimination reaction for the leaving group in the step (33c) may be performed in a solvent. The solvent is preferably an organic solvent, more preferably an aprotic polar solvent, and still more preferably an ether.

Examples of the ether include ethyl methyl ether, diethyl ether, monoglyme (ethylene glycol dimethyl ether), diglyme (diethylene glycol dimethyl ether), triglyme (triethylene glycol dimethyl ether), tetrahydrofuran, tetraglyme (tetraethylene glycol dimethyl ether), and crown ether (15-crown-5, 18-crown-6), of which tetrahydrofuran and diethyl ether is preferred.

The reaction temperature in the step (33c) is preferably 0 to 40°C, and more preferably 0 to 20°C.

The reaction pressure in the step (33c) is preferably 0.1 to 5 MPa, and more preferably 0.1 to 1 MPa.

The reaction duration in the step (33c) is preferably 0.1 to 72 hours, and more preferably 3 to 8 hours.

The oxidation in the step (34c) may be performed in a solvent in the presence of sodium chlorite.

The solvent may be an alcohol or water. A disodium hydrogen phosphate solution may be used as the buffer.

The compound (34c) may be brought into contact with an alkali to convert -COOH into a salt form. Examples of the alkali include sodium hydroxide, potassium hydroxide, lithium hydroxide, and ammonia; for example, an aqueous solution of ammonia is preferably used.

After the completion of each step, the solvent may be distilled off, or distillation or purification may be performed to increase the purity of each resulting compound.

The surfactant (c) may also be suitably produced by a production method including:
a step (51c) of reacting divinyl ketone represented by the formula: 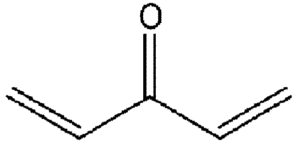
and 2-methylfuran represented by the formula: 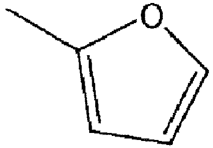
to provide a compound (51c) represented by the formula: 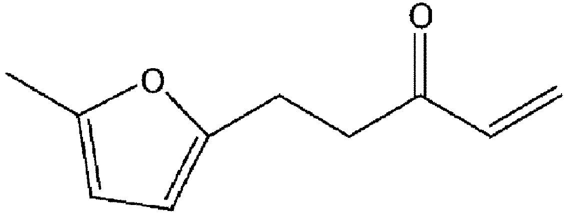
a step (52c) of reacting the compound (51c) and furan represented by the formula: 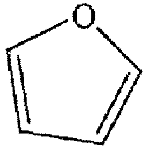
to provide a compound (52c) represented by the formula: 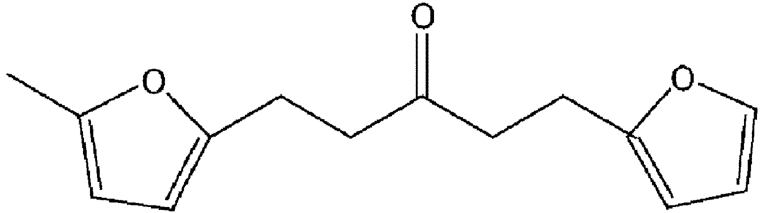
a step (53c) of heating the compound (52c) in the presence of an acid to provide a compound (53c) represented by the formula: 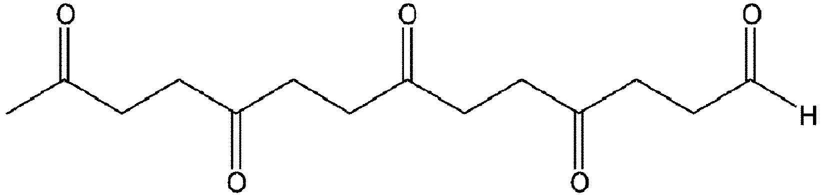 ; and
a step (54c) of oxidizing the compound (53c) to provide a compound (54c) represented by the formula:

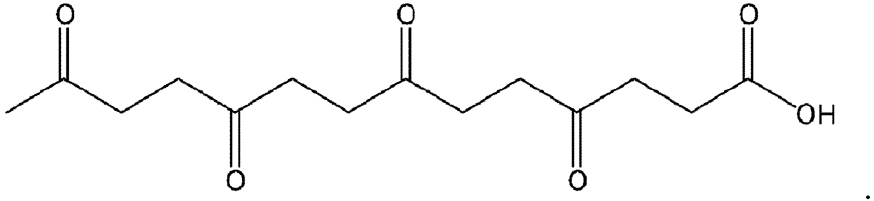

Regarding the reaction ratio between divinyl ketone and 2-methyl furan in the step (51c), 2-methyl furan is preferably used in an amount of 0.5 to 1 mol, and more preferably 0.6 to 0.9 mol, based on 1 mol of divinyl ketone in consideration of the improvement of the yield and the reduction of the waste.

The reaction in the step (51c) is preferably performed in the presence of an acid. Examples of the acid include acetic acid, hydrochloric acid, and p-toluene sulfone, of which acetic acid is preferred.

The amount of the acid used in the step (51c) is preferably 0.1 to 2 mol, and more preferably 0.1 to 1 mol, based on 1 mol of the divinyl ketone in consideration of the improvement of the yield and the reduction of the waste.

The reaction in the step (51c) may be performed in a polar solvent. The solvent is preferably water or acetonitrile.

The reaction temperature in the step (51c) is preferably 20 to 100°C, and more preferably 40 to 100°C.

The reaction pressure in the step (51c) is preferably 0.1 to 5 MPa, and more preferably 0.1 to 1 MPa.

The reaction duration in the step (51c) is preferably 0.1 to 72 hours, and more preferably 4 to 8 hours.

Regarding the reaction ratio between the compound (51c) and the furan in the step (52c), the amount of the furan is preferably 1 to 2 mol, and more preferably 1 to 1.1 mol, based on 1 mol of the compound (51c) in consideration of the improvement of the yield and the reduction of the waste.

The reaction in the step (52c) is preferably performed in the presence of an acid. Examples of the acid include acetic acid, hydrochloric acid, and p-toluene sulfone, of which acetic acid is preferred.

The amount of the acid used in the step (52c) is preferably 0.1 to 2 mol, and more preferably 0.1 to 1 mol, based on 1 mol of the compound (51c) in consideration of the improvement of the yield and the reduction of the waste.

The reaction in the step (52c) may be performed in a polar solvent. Water is preferable as the solvent.

The reaction temperature in the step (52c) is preferably 20 to 100°C, and more preferably 40 to 100°C.

The reaction pressure in the step (52c) is preferably 0.1 to 5 MPa, and more preferably 0.1 to 1 MPa.

The reaction duration in the step (52c) is preferably 0.1 to 72 hours, and more preferably 4 to 8 hours.

In the step (53c), the furan ring is cleaved by heating the compound (52c) in the presence of an acid.

The acid is preferably hydrochloric acid or sulfuric acid.

The reaction in the step (53c) may be performed in a polar solvent. Water is preferable as the solvent.

The reaction temperature in the step (53c) is preferably 50 to 100°C, and more preferably 70 to 100°C.

The reaction pressure in the step (53c) is preferably 0.1 to 5 MPa, and more preferably 0.1 to 1 MPa.

The reaction duration in the step (53c) is preferably 0.1 to 72 hours, and more preferably 1 to 12 hours.

The oxidation in the step (54c) may be performed in a solvent in the presence of sodium chlorite.

The solvent may be tert-butyl alcohol or water. A disodium hydrogen phosphate solution may be used as the buffer.

The compound (54c) may be brought into contact with an alkali to convert -COOH into a salt form. Examples of the alkali include sodium hydroxide, potassium hydroxide, lithium hydroxide, and ammonia; for example, an aqueous solution of ammonia is preferably used.

After the completion of each step, the solvent may be distilled off, or distillation or purification may be performed to increase the purity of each resulting compound.

The surfactant (c) may also be suitably produced by a production method including:
a step (61c) of reacting an alkene represented by the formula: 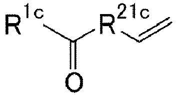 (wherein R^{1c} is defined as described above; and R^{21c} is a single bond or a divalent linking group) and an alkyne represented by the formula: 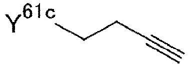 (wherein Y^{61c} is an alkyl ester group) to provide a compound (61c) represented by the formula: 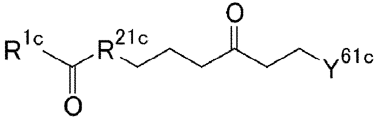 (wherein R^{1c}, R^{21c}, and Y^{61c} are defined as described above); and
a step (62c) of causing an alkali to act on the compound (61c) and then causing an acid to act thereon to provide a compound (62c) represented by the formula: 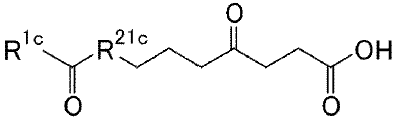 (wherein R^{1c} and R^{21c} are defined as described above) .

When R^{1c} contains a furan ring, the furan ring may be cleaved by an acid and converted into a dicarbonyl derivative, for example. Examples of the acid include acetic acid, hydrochloric acid, and p-toluene sulfone, of which acetic acid is preferred.

R^{21c} is preferably a single bond or a linear or branched alkylene group having 1 or more carbon atoms.

Regarding the reaction ratio between the alkene and the alkyne in the step (61c), the alkene is preferably used in an amount of 0.5 to 2 mol, and more preferably 0.6 to 1.2 mol, based on 1 mol of the alkyne in consideration of the improvement of the yield and the reduction of the waste.

The reaction in the step (61c) is preferably performed in the presence of a metal catalyst. An example of the metal is ruthenium.

The amount of the metal catalyst used in the step (61c) is preferably 0.01 to 0.4 mol, and more preferably 0.05 to 0.1 mol, based on 1 mol of the alkene in consideration of the improvement of the yield and the reduction of the waste.

The reaction in the step (61c) may be performed in a polar solvent. The solvent is preferably water, acetonitrile, dimethylacetamide, or dimethylformamide.

The reaction temperature in the step (61c) is preferably 20 to 160°C, and more preferably 40 to 140°C.

The reaction pressure in the step (61c) is preferably 0.1 to 5 MPa, and more preferably 0.1 to 1 MPa.

The reaction duration in the step (61c) is preferably 0.1 to 72 hours, and more preferably 4 to 8 hours.

Regarding the reaction ratio between the compound (61c) and the alkali in the step (62c), the amount of the alkali is preferably 0.6 to 2 mol, and more preferably 0.8 to 1.1 mol, based on 1 mol of the compound (61c) in consideration of the improvement of the yield and the reduction of the waste.

The amount of the acid used in the step (62c) is preferably 1.0 to 20.0 mol, and more preferably 1.0 to 10.0 mol, based on 1 mol of the compound (61c) in consideration of the improvement of the yield and the reduction of the waste.

The reaction in the step (62c) may be performed in a polar solvent. Water is preferable as the solvent.

The reaction temperature in the step (62c) is preferably 0 to 100°C, and more preferably 20 to 100°C.

The reaction pressure in the step (62c) is preferably 0.1 to 5 MPa, and more preferably 0.1 to 1 MPa.

The reaction duration in the step (62c) is preferably 0.1 to 72 hours, and more preferably 4 to 8 hours.

The compound (62c) may be brought into contact with an alkali to convert -COOH into a salt form. Examples of the alkali include sodium hydroxide, potassium hydroxide, lithium hydroxide, and ammonia; for example, an aqueous solution of ammonia is preferably used.

After the completion of each step, the solvent may be distilled off, or distillation or purification may be performed to increase the purity of each resulting compound.

The surfactant (d) will be described.

In the formula (d), R^{1d} is a linear or branched alkyl group having 1 or more carbon atoms and optionally having a substituent or a cyclic alkyl group having 3 or more carbon atoms and optionally having a substituent.

When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1d}, a divalent heterocycle may be present between two carbon atoms, or a divalent heterocycle may be present at an end and bind to -C(=O)-, or a monovalent heterocycle may be present at an end of the alkyl group.

The "number of carbon atoms" in the alkyl group as used herein includes the number of carbon atoms constituting the heterocycles.

The substituent which may be contained in the alkyl group for R^{1d} is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for R^{1d} is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{1d} is preferably a linear or branched alkyl group having 1 to 10 carbon atoms and optionally having a substituent or a cyclic alkyl group having 3 to 10 carbon atoms and optionally having a substituent, more preferably a linear or branched alkyl group having 1 to 10 carbon atoms and free from a carbonyl group or a cyclic alkyl group having 3 to 10 carbon atoms and free from a carbonyl group, still more preferably a linear or branched alkyl group having 1 to 10 carbon atoms and not having a substituent, further preferably a linear or branched alkyl group having 1 to 3 carbon atoms and not having a substituent, particularly preferably a methyl group (-CH₃) or an ethyl group (-C₂H₅), and most preferably a methyl group (-CH₃).

In the formula (d), R^{2d} and R^{4d} are each independently H or a substituent. A plurality of R^{2d} and R^{4d} may be the same or different.

The substituent for each of R^{2d} and R^{4d} is preferably a halogen atom, a linear or branched alkyl group having 1 to 10 carbon atoms, a cyclic alkyl group having 3 to 10 carbon atoms, or a hydroxy group, and particularly preferably a methyl group or an ethyl group.

The alkyl group for each of R^{2d} and R^{4d} is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

The alkyl group for each of R^{2d} and R^{4d} is preferably a linear or branched alkyl group having 1 to 10 carbon atoms and free from a carbonyl group or a cyclic alkyl group having 3 to 10 carbon atoms and free from a carbonyl group, more preferably a linear or branched alkyl group having 1 to 10 carbon atoms and free from a carbonyl group, still more preferably a linear or branched alkyl group having 1 to 3 carbon atoms and not having a substituent, and particularly preferably a methyl group (-CH₃) or an ethyl group (-C₂H₅).

R^{2d} and R^{4d} are preferably each independently H or a linear or branched alkyl group having 1 to 10 carbon atoms and free from a carbonyl group, more preferably H or a linear or branched alkyl group having 1 to 3 carbon atoms and not having a substituent, still more preferably H, a methyl group (-CH₃), or an ethyl group (-C₂H₅), and particularly preferably H.

In the formula (d), R^{3d} is an alkylene group having 1 to 10 carbon atoms and optionally having a substituent. When a plurality of R^{3d} are present, they may be the same or different.

The alkylene group is preferably free from a carbonyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkyl group free from halogen atoms such as fluorine atoms and chlorine atoms.

The alkylene group preferably does not have any substituent.

The alkylene group is preferably a linear or branched alkylene group having 1 to 10 carbon atoms and optionally having a substituent or a cyclic alkylene group having 3 to 10 carbon atoms and optionally having a substituent, preferably a linear or branched alkylene group having 1 to 10 carbon atoms and free from a carbonyl group or a cyclic alkylene group having 3 to 10 carbon atoms and free from a carbonyl group, more preferably a linear or branched alkylene group having 1 to 10 carbon atoms and not having a substituent, and still more preferably a methylene group (-CH₂-), an ethylene group (-C₂H₄-), an isopropylene group (-CH(CH₃)CH₂-), or a propylene group (-C₃H₆-).

Any two of R^{1b}, R^{2b}, R^{3b}, and R^{4b} optionally bind to each other to form a ring.

In the formula (d), n is an integer of 1 or more. In the formula, n is preferably an integer of 1 to 40, more preferably an integer of 1 to 30, and still more preferably an integer of 5 to 25.

In the formula (d), p and q are each independently an integer of 0 or more. p is preferably an integer of 0 to 10, more preferably 0 or 1. q is preferably an integer of 0 to 10, more preferably an integer of 0 to 5.

The sum of n, p, and q is preferably an integer of 6 or more. The sum of n, p, and q is more preferably an integer of 8 or more. The sum of n, p, and q is also preferably an integer of 60 or less, more preferably an integer of 50 or less, and still more preferably an integer of 40 or less.

In the formula (d), A^{d} is -SO₃X^{d} or -COOX^{d}, wherein X^{d} is H, a metal atom, NR^{5d}₄, imidazolium optionally having a substituent, pyridinium optionally having a substituent, or phosphonium optionally having a substituent, wherein R^{5d} is H or an organic group and may be the same or different; The organic group in R^{5d} is preferably an alkyl group. R^{5d} is preferably H or an organic group having 1 to 10 carbon atoms, more preferably H or an organic group having 1 to 4 carbon atoms, and still more preferably H or an alkyl group having 1 to 4 carbon atoms. Examples of the metal atom include alkali metals (Group 1) and alkaline earth metals (Group 2), and preferred is Na, K, or Li. X^{d} may be a metal atom or NR^{5d}₄, wherein R^{5d} is defined as described above.

X^{d} is preferably H, an alkali metal (Group 1), an alkaline earth metal (Group 2), or NR^{5d}₄, more preferably H, Na, K, Li, or NH₄ because they are easily dissolved in water, still more preferably Na, K, or NH₄ because they are more easily dissolved in water, particularly preferably Na or NH₄, and most preferably NH₄ because it can be easily removed. When X^{d} is NH₄, the solubility of the surfactant in an aqueous medium is excellent, and the metal component is unlikely to remain in the PTFE or the final product.

In the formula (d), L is a single bond, -CO₂-B-*, -OCO-B-*, -CONR^{6d}-B-*, -NR^{6d}CO-B-*, or -CO- other than the carbonyl groups in -CO₂-B-, -OCO-B-, -CONR^{6d}-B-, and - NR^{6d}CO-B-, wherein B is a single bond or an alkylene group having 1 to 10 carbon atoms and optionally having a substituent, R^{6d} is H or an alkyl group having 1 to 4 carbon atoms and optionally having a substituent. The alkylene group more preferably has 1 to 5 carbon atoms. R^{6d} is more preferably H or a methyl group. * indicates the side bonded to A^{d} in the formula.

L is preferably a single bond.

The surfactant preferably has a ¹H-NMR spectrum in which all peak intensities observed in a chemical shift range of 2.0 to 5.0 ppm give an integral value of 10 or higher.

The surfactant preferably has a ¹H-NMR spectrum in which all peak intensities observed in a chemical shift range of 2.0 to 5.0 ppm give an integral value within the above range. In this case, the surfactant preferably has a ketone structure in the molecule.

The integral value of the surfactant is more preferably 15 or more, and preferably 95 or less, more preferably 80 or less, and still more preferably 70 or less.

The integral value is determined using a heavy water solvent at room temperature. The heavy water content is adjusted to 4.79 ppm.

Examples of the surfactant (d) include:

CH₃C(O)CH₂CH₂CH₂CH₂CH₂CH₂CH₂CH₂COOK,

CH₃C(O)CH₂CH₂CH₂CH₂CH₂CH₂CH₂COONa,

CH₃C(O)CH₂CH₂CH₂CH₂CH₂CH₂COONa,

CH₃C(O)CH₂CH₂CH₂CH₂CH₂COONa,

CH₃C(O)CH₂CH₂CH₂CH₂COONa,

CH₃C(O)CH₂CH₂CH₂COONa,

CH₃C(O)CH₂CH₂CH₂CH₂CH₂CH₂CH₂CH₂CH₂CH₂CH₂CH₂CH₂COONa,

CH₃C(O)CH₂CH₂CH₂CH₂CH₂CH₂CH₂CH₂CH₂CH₂CH₂CH₂CH₂CH₂CH₂CH₂CH₂CH₂CO ONa,

(CH₃)₃CC(O)CH₂CH₂CH₂CH₂CH₂CH₂CH₂CH₂COONa,

(CH₃)₂CHC(O)CH₂CH₂CH₂CH₂CH₂CH₂CH₂CH₂COONa,

(CH₂)₅CHC(O)CH₂CH₂CH₂CH₂CH₂CH₂CH₂CH₂COONa,

CH₃CH₂C(O)CH₂CH₂CH₂CH₂CH₂CH₂CH₂COONa,

CH₃CH₂CH₂C(O)CH₂CH₂CH₂CH₂CH₂CH₂COONa,

CH₃CH₂CH₂CH₂C(O)CH₂CH₂CH₂CH₂CH₂COONa,

CH₃CH₂CH₂CH₂CH₂C(O)CH₂CH₂CH₂CH₂COONa,

CH₃CH₂CH₂CH₂CH₂CH₂C(O)CH₂CH₂CH₂COONa,

CH₃CH₂CH₂CH₂CH₂CH₂CH₂C(O)CH₂CH₂COONa,

CH₃CH₂CH₂CH₂CH₂CH₂CH₂CH₂C(O)CH₂COONa,

CH₃C(O)CH₂CH₂CH₂CH₂CH₂CH₂CH₂CH₂OCH₂CH₂COONa,

CH₃C(O)CH₂CH₂CH₂CH₂CH₂CH₂CH₂CH₂C(O)NHCH₂COOK,

CH₃C(O)CH₂CH₂CH₂CH₂CH₂CH₂CH₂CH₂NHC(O)CH₂COOK,

CH₃C(O)CH₂CH₂CH₂CH₂CH₂CH₂CH₂CH₂C(O)OCH₂COONa,

CH₃C(O)CH₂CH₂CH₂CH₂CH₂CH₂CH₂CH₂OC(O)CH₂COONa,

CH₃C(O)CH₂CH₂CH₂CH₂CH₂CH₂CH₂CH₂C(O)COONa,

CH₃C(O)CH₂CH₂CH₂CH₂CH₂CH₂CH₂CH₂C(O)COOH,

CH₃C(O)CH₂CH₂CH₂CH₂CH₂CH₂CH₂CH₂C(O)COOLi,

CH₃C(O)CH₂CH₂CH₂CH₂CH₂CH₂CH₂CH₂C(O)COONH₄,

CH₃C(O)CH₂CH₂CH₂CH₂CH₂CH₂CH₂CH₂C(O)COONa, CH₃C(O)CH₂CH₂CH₂CH₂C H₂CH₂CH₂C(CH₃)₂COOK,

CH₃C(O)CH₂CH₂CH₂CH₂CH₂CH₂CH₂CH₂CH₂SO₃Na,

CH₃C(O)CH₂CH₂CH₂CH₂CH₂CH₂CH₂CH₂SO₃Na,

CH₃C(O)CH₂CH₂CH₂CH₂CH₂CH₂CH₂SO₃Na,

CH₃C(O)CH₂CH₂CH₂CH₂CH₂CH₂SO₃Na,

CH₃C(O)CH₂CH₂CH₂CH₂CH₂SO₃Na,

CH₃C(O)CH₂CH₂CH₂CH₂SO₃Na,

CH₃C(O)CH₂CH₂CH₂CH₂CH₂CH₂CH₂CH₂CH₂CH₂CH₂CH₂CH₂SO₃Na,

CH₃C(O)CH₂CH₂CH₂CH₂CH₂CH₂CH₂CH₂CH₂CH₂CH₂CH₂CH₂CH₂CH₂CH₂CH₂CH₂SO ₃Na,

CH₃C(O)CH₂CH₂CH₂CH₂CH₂CH₂CH₂CH₂CH₂CH₂SO₃Na,

(CH₃)₃CC(O)CH₂CH₂CH₂CH₂CH₂CH₂CH₂CH₂CH₂SO₃Na,

(CH₃)₂CHC(O)CH₂CH₂CH₂CH₂CH₂CH₂CH₂CH₂CH₂SO₃Na,

(CH₂)₅CHC(O)CH₂CH₂CH₂CH₂CH₂CH₂CH₂CH₂CH₂SO₃Na,

CH₃C(O)CH₂CH₂CH₂CH₂CH₂CH₂CH₂CH₂SO₃Na,

CH₃C(O)CH₂CH₂CH₂CH₂CH₂CH₂CH₂SO₃Na,

CH₃C(O)CH₂CH₂CH₂CH₂CH₂CH₂SO₃Na,

CH₃C(O)CH₂CH₂CH₂CH₂CH₂SO₃Na,

CH₃C(O)CH₂CH₂CH₂CH₂SO₃Na,

CH₃C(O)CH₂CH₂CH₂SO₃Na,

CH₃C(O)CH₂CH₂SO₃Na,

CH₃C(O)CH₂SO₃Na,

CH₃C(O)CH₂CH₂CH₂CH₂CH₂CH₂CH₂CH₂CH₂OCH₂CH₂CH₂SO₃Na,

CH₃C(O)CH₂CH₂CH₂CH₂CH₂CH₂CH₂CH₂CH₂C(O)NHCH₂SO₃Na,

CH₃C(O)CH₂CH₂CH₂CH₂CH₂CH₂CH₂CH₂CH₂NHC(O)CH₂SO₃Na,

CH₃C(O)CH₂CH₂CH₂CH₂CH₂CH₂CH₂CH₂CH₂C(O)SO₃Na,

CH₃C(O)CH₂CH₂CH₂CH₂CH₂CH₂CH₂CH₂CH₂C(O)OCH₂SO₃Na,

CH₃C(O)CH₂CH₂CH₂CH₂CH₂CH₂CH₂CH₂CH₂OC(O)CH₂SO₃Na,

CH₃C(O)CH₂CH₂CH₂CH₂CH₂CH₂CH₂CH₂CH₂SO₃H,

CH₃C(O)CH₂CH₂CH₂CH₂CH₂CH₂CH₂CH₂CH₂SO₃K,

CH₃C(O)CH₂CH₂CH₂CH₂CH₂CH₂CH₂CH₂CH₂SO₃Li,

CH₃C(O)CH₂CH₂CH₂CH₂CH₂CH₂CH₂CH₂CH₂SO₃NH₄,

and

CH₃C(O)CH₂CH₂CH₂CH₂CH₂CH₂CH₂CH₂C(CH₃)₂SO₃Na.

The surfactant (d) is a novel compound, and may be produced by any of the following production methods, for example.

The surfactant (d) may be suitably produced by a production method including:
a step (11d) of reacting a compound (10d) represented by the following formula: 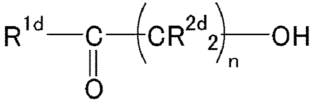 (wherein R^{1d}, R^{2d}, and n are defined as described above)
and a sultone represented by the following formula: 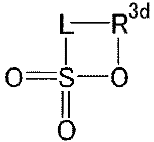 (wherein R^{3d} is defined as described above; L is a single bond, -CO₂-B-*, -OCO-B-*, -CONR^{6d}-B-*, -NR^{6d}CO-B-*, or -CO- other than the carbonyl groups in -CO₂-B-, -OCO-B-, -CONR^{6d}-B-, and -NR^{6d}CO-B-, wherein B is a single bond or an alkylene group having 1 to 10 carbon atoms and optionally having a substituent, R^{6d} is H or an alkyl group having 1 to 4 carbon atoms and optionally having a substituent; and * indicates the side bonded to -S(=O)₂ - in the formula) to provide a compound (11d) represented by the following formula: 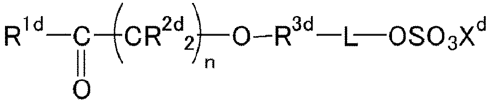 wherein R^{1d} to R^{3d}, n, and X^{d} are defined as described above; L is a single bond, -CO₂-B-*,-OCO-B-*, -CONR^{6d}-B-*, -NR^{6d}CO-B-*, or -CO- other than the carbonyl groups in - CO₂-B-, -OCO-B-, -CONR^{6d}-B-, and -NR^{6d}CO-B-, wherein B is a single bond or an alkylene group having 1 to 10 carbon atoms and optionally having a substituent, R^{6d} is H or an alkyl group having 1 to 4 carbon atoms and optionally having a substituent; and * indicates the side bonded to -OSO₃X^{d} in the formula.

The reaction in the step (11d) may be performed in the presence of a base.

Examples of the base include sodium hydride, sodium hydroxide, potassium hydroxide, and triethylamine. The base may be used in an amount of 0.5 to 20 mol based on 1 mol of the compound (10d).

The reaction in the step (11d) may be performed in a solvent.

The solvent is preferably an organic solvent, and more preferably an aprotic polar solvent. Examples of the organic solvent include ethers, aromatic compounds, nitriles, and halogenated hydrocarbons.

Examples of the ether include diethyl ether, tetrahydrofuran, dioxane, and diethylene glycol diethyl ether, of which diethyl ether and tetrahydrofuran are preferred.

Examples of the aromatic compound include benzene, toluene, and xylene, of which benzene is preferred.

Examples of the nitrile include acetonitrile, propionitrile, butyronitrile, isobutyronitrile, and benzonitrile, of which acetonitrile is preferred.

Examples of the halogenated hydrocarbon include dichloromethane, dichloroethane, chloroform, chlorobenzene, and o-dichlorobenzene, of which dichloromethane and chloroform are preferred.

The reaction temperature in the step (11d) is preferably -78 to 150°C, and more preferably -20 to 100°C.

The reaction pressure in the step (11d) is preferably 0 to 10 MPa, and more preferably 0 to 1.0 MPa.

The reaction duration in the step (11d) is preferably 0.1 to 72 hours, and more preferably 0.1 to 48 hours.

The surfactant (d) may also be suitably produced by a production method including:
a step (21d) of oxidizing a compound (20d) represented by the following formula: 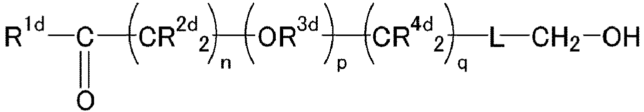 (wherein R^{1d} to R^{4d}, n, p, and q are defined as described above; L is a single bond, -CO₂-B-*,-OCO-B-*, -CONR^{6d}-B-*, -NR^{6d}CO-B-*, or -CO- other than the carbonyl groups in -CO₂-B-, -OCO-B-, -CONR^{6d}-B-, and -NR^{6d}CO-B-, wherein B is a single bond or an alkylene group having 1 to 10 carbon atoms and optionally having a substituent, R^{6d} is H or an alkyl group having 1 to 4 carbon atoms and optionally having a substituent; and * indicates the side bonded to -CH₂-OH in the formula)
to provide a compound (21d) represented by the following formula: 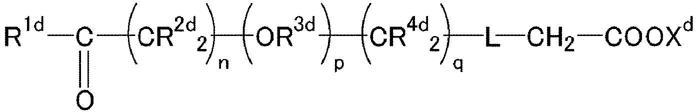 wherein R^{1d} to R^{4d}, n, p, q, and X^{d} are defined as described above; L is a single bond, -CO₂-B-*,-OCO-B-*, -CONR^{6d}-B-*, -NR^{6d}CO-B-*, or -CO- other than the carbonyl groups in -CO₂-B-, -OCO-B-, -CONR^{6d}-B-, and -NR^{6d}CO-B-, wherein B is a single bond or an alkylene group having 1 to 10 carbon atoms and optionally having a substituent, R^{6d} is H or an alkyl group having 1 to 4 carbon atoms and optionally having a substituent; and * indicates the side bonded to -CH₂-COOX^{d} in the formula.

The oxidation in the step (21d) may performed by causing a nitrosating agent to act on the compound (20d).

The nitrosating agent may be sodium nitrite, nitrosyl sulfuric acid, or isoamyl nitrite.

The nitrosating agent may be used in an amount of 0.5 to 10 mol based on 1 mol of the compound (20d).

The oxidation in the step (21d) may be performed in a solvent. The solvent may be trifluoroacetic acid or acetonitrile.

The oxidation temperature in the step (21d) is preferably -78 to 200°C, and more preferably -20 to 100°C.

The oxidation pressure in the step (21d) is preferably 0 to 10 MPa, and more preferably 0 to 1.0 MPa.

The oxidation duration in the step (21d) is preferably 0.1 to 72 hours, and more preferably 0.1 to 24 hours.

The compound (10d) and the compound (20d) may be produced by a production method including:
a step (101d) of hydroxylating a compound (100d) represented by the following formula:

   R^{11d}-CH=CH-Y^{1d}-OH

   (wherein R^{11d} is H, a linear or branched alkyl group having 1 or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms; Y^{1d} is -(CR^{2d}₂)ₙ- or -(CR^{2d}₂)-(OR^{3d})ₚ-(CR^{4d}₂)_{q}-L-CH₂-, wherein R^{2d} to R^{4d}, n, p, and q are defined as described above; L is a single bond, -CO₂-B-*,-OCO-B-*, -CONR^{6d}-B-*, -NR^{6d}CO-B-*, or -CO- other than the carbonyl groups in - CO₂-B-, -OCO-B-, -CONR^{6d}-B-, and -NR^{6d}CO-B-, wherein B is a single bond or an alkylene group having 1 to 10 carbon atoms and optionally having a substituent, R^{6d} is H or an alkyl group having 1 to 4 carbon atoms and optionally having a substituent; and * indicates the side bonded to -CH₂- in the formula) to provide a compound (101d) represented by the following formula: 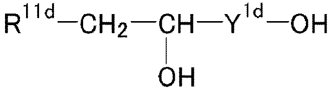 (wherein R^{11d} and Y^{1d} are defined as described above); and
a step (102d) of oxidizing the compound (101d) to provide a compound (102d) represented by the following formula: 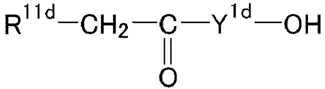 (wherein R^{11d} and Y^{1d} are defined as described above).

The alkyl group for R^{11d} is preferably free from a carbonyl group.

In the alkyl group for R^{11d}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{11d} is preferably H, a linear or branched alkyl group having 1 to 9 carbon atoms and optionally having a substituent, or a cyclic alkyl group having 3 to 9 carbon atoms and optionally having a substituent, more preferably H, a linear or branched alkyl group having 1 to 9 carbon atoms and free from a carbonyl group, or a cyclic alkyl group having 3 to 9 carbon atoms and free from a carbonyl group, still more preferably H or a linear or branched alkyl group having 1 to 9 carbon atoms and not having a substituent, further preferably H, a methyl group (-CH₃), or an ethyl group (-C₂H₅), particularly preferably H or a methyl group (-CH₃), and most preferably H.

The hydroxylation in the step (101b) may be performed by a method (1d) in which iron(II) phthalocyanine (Fe(Pc)) and sodium borohydride are caused to act on the compound (100d) in an oxygen atmosphere or a method (2d) in which isopinocampheylborane (IpcBH₂) is caused to act on the compound (100d) and then the resulting intermediate (dialkyl borane) is oxidized.

In the method (1d), iron(II) phthalocyanine may be used in a catalytic amount, and may be used in an amount of 0.001 to 1.2 mol based on 1 mol of the compound (100b).

In the method (1d), sodium borohydride may be used in an amount of 0.5 to 20 mol based on 1 mol of the compound (100d).

The reaction in the method (1d) may be performed in a solvent. The solvent is preferably an organic solvent, and examples thereof include ethers, halogenated hydrocarbons, aromatic hydrocarbons, nitriles, and nitrogen-containing polar organic compounds.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

Examples of the nitrile include acetonitrile, propionitrile, butyronitrile, isobutyronitrile, and benzonitrile, of which acetonitrile is preferred.

Examples of the nitrogen-containing polar organic compound include N,N-dimethylformamide, N,N-dimethylacetamide, N-methyl-2-pyrrolidone, 2-pyrrolidone, and 1,3-dimethyl-2-imidazolidinone, of which N,N-dimethylformamide, N,N-dimethylacetamide, and N-methyl-2-pyrrolidone are preferred.

The reaction temperature in the method (1d) is preferably -78 to 200°C, and more preferably 0 to 150°C.

The reaction pressure in the method (1d) is preferably 0 to 5.0 MPa, and more preferably 0.1 to 1.0 MPa.

The reaction duration in the method (1d) is preferably 0.1 to 72 hours, and more preferably 0.1 to 48 hours.

In the method (2d), isopinocampheylborane may be used in an amount of 1.0 to 10.0 mol based on 1 mol of the compound (100d).

The reaction of the compound (100d) and isopinocampheylborane may be performed in a solvent. The solvent is preferably an organic solvent, and examples thereof include ethers, halogenated hydrocarbons, and aromatic hydrocarbons.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

The reaction temperature of the compound (100d) and isopinocampheylborane is preferably -78 to 200°C, and more preferably 0 to 150°C.

The reaction pressure of the compound (100d) and isopinocampheylborane is preferably 0 to 5.0 MPa, and more preferably 0.1 to 1.0 MPa.

The duration of the reaction of the compound (100d) and isopinocampheylborane is preferably 0.1 to 72 hours, and more preferably 0.1 to 48 hours.

The oxidation in the method (2d) may be performed by causing an oxidizing agent to act on the intermediate. An example of the oxidizing agent is hydrogen peroxide. The oxidizing agent may be used in an amount of 0.7 to 10 mol based on 1 mol of the intermediate.

The oxidation in the method (2d) may be performed in a solvent. Examples of the solvent include water, methanol, and ethanol, of which water is preferred.

The oxidation temperature in the step (2d) is preferably 0 to 100°C, and more preferably 0 to 80°C.

The oxidation pressure in the method (2d) is preferably 0 to 5.0 MPa, and more preferably 0.1 to 1.0 MPa.

The oxidation duration in the step (2d) is preferably 0.1 to 72 hours, and more preferably 0.1 to 48 hours.

Examples of the method of oxidizing the compound (101d) in the step (102d) include (a) a method of using Jones reagent (CrO₃/H₂SO₄) (Jones oxidation), (d) a method of using Dess-Martin periodinane (DMP) (Dess-Martin oxidation), (c) a method of using pyridinium chlorochromate (PCC), (d) a method of causing a bleaching agent (5% to 6% aqueous solution of NaOCl) to act in the presence of a nickel compound such as NiCl₂, and (e) a method of causing a hydrogen acceptor such as an aldehyde or a ketone to act in the presence of an aluminum catalyst such as Al(CH₃)₃ or Al[OCH(CH₃)₂]₃ (Oppenauer oxidation).

The oxidation in the step (102d) may be performed in a solvent. The solvent is preferably water or an organic solvent, and examples thereof include water, ketones, ethers, halogenated hydrocarbons, aromatic hydrocarbons, and nitriles.

Examples of the ketones include acetone, methyl ethyl ketone, methyl isobutyl ketone, cyclohexanone, and diacetone alcohol, of which acetone is preferred.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

Examples of the nitrile include acetonitrile, propionitrile, butyronitrile, isobutyronitrile, and benzonitrile, of which acetonitrile is preferred.

The oxidation temperature in the step (102d) is preferably -78 to 200°C, and may appropriately be selected in accordance with the method used.

The oxidation pressure in the step (102d) is preferably 0 to 5.0 MPa, and may appropriately be selected in accordance with the method used.

The oxidation duration in the step (102d) is preferably 0.1 to 72 hours, and may appropriately be selected in accordance with the method used.

The compound (10d) and the compound (20d) may also be produced by a production method including a step (201d) of ozonolyzing a compound (200d) represented by the following formula: 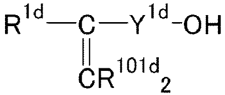 (wherein R^{1d} and Y^{1d} are defined as described above; and R^{101b} is an organic group); and to provide a compound (201d) represented by the following formula: 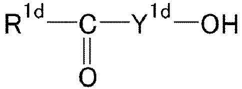 wherein R^{1d} and Y^{1d} are defined as described above.

R^{101d} is preferably an alkyl group having 1 to 20 carbon atoms. The two R^{101d} may be the same as or different from each other.

The ozonolysis in the step (201d) may be performed by causing ozone to act on the compound (200d), followed by post-treatment with a reducing agent.

The ozone may be generated by dielectric barrier discharge in oxygen gas.

Examples of the reducing agent used in the post-treatment include zinc, dimethyl sulfide, thiourea, and phosphines, of which phosphines are preferred.

The ozonolysis in the step (201d) may be performed in a solvent. The solvent is preferably water or an organic solvent, and examples thereof include water, alcohols, carboxylic acids, ethers, halogenated hydrocarbons, and aromatic hydrocarbons.

Examples of the alcohol include methanol, ethanol, 1-propanol, and isopropanol. Of these, methanol and ethanol are preferred.

Examples of the carboxylic acids include acetic acid and propionic acid. Of these, acetic acid is preferred.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

The ozonolysis temperature in the step (201d) is preferably -78 to 200°C, and more preferably 0 to 150°C.

The ozonolysis pressure in the step (201d) is preferably 0 to 5.0 MPa, and more preferably 0.1 to 1.0 MPa.

The ozonolysis duration in the step (201d) is preferably 0.1 to 72 hours, and more preferably 0.1 to 48 hours.

The compound (10d) and the compound (20d) may also be produced by a production method including:
a step (301d) of epoxidizing a compound (300d) represented by the following formula:

   R^{21d}-CH=CH-Y^{1d}-OH

   (wherein Y^{1d} is defined as described above; and R^{21d} is H, a linear or branched alkyl group having 1 or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms) to provide a compound (301d) represented by the following formula: 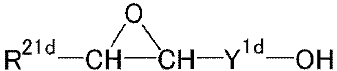 (wherein R^{21d} and Y^{1d} are defined as described above);
a step (302d) of reacting the compound (301d) with a lithium dialkylcopper represented by R^{22d}₂CuLi (wherein R^{22b} is a linear or branched alkyl group having 1 or more carbon atoms and optionally having a substituent or a cyclic alkyl group having 3 or more carbon atoms and optionally having a substituent, and optionally contains a monovalent or divalent heterocycle or optionally forms a ring when having 3 or more carbon atoms) to provide a compound (302d) represented by the following formula: 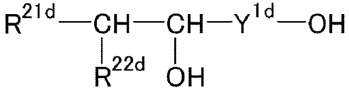 (wherein R^{21d}, R^{22d}, and Y^{1d} are defined as described above); and
a step (303d) of oxidizing the compound (302d) to provide a compound (303d) represented by the following formula: 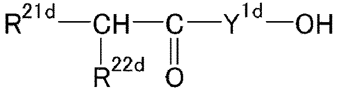 (wherein R^{21d}, R^{22d}, and Y^{1d} are defined as described above) .

The alkyl group for R^{21d} is preferably free from a carbonyl group.

In the alkyl group for R^{21d}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{21d} is preferably H, a linear or branched alkyl group having 1 to 8 carbon atoms and optionally having a substituent, or a cyclic alkyl group having 3 to 8 carbon atoms and optionally having a substituent, more preferably H, a linear or branched alkyl group having 1 to 8 carbon atoms and free from a carbonyl group, or a cyclic alkyl group having 3 to 8 carbon atoms and free from a carbonyl group, still more preferably H or a linear or branched alkyl group having 1 to 8 carbon atoms and not having a substituent, particularly preferably H or a methyl group (-CH₃), and most preferably H.

The alkyl group for R^{22d} is preferably free from a carbonyl group.

In the alkyl group for R^{22d}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{22d} is preferably a linear or branched alkyl group having 1 to 9 carbon atoms and optionally having a substituent or a cyclic alkyl group having 3 to 9 carbon atoms and optionally having a substituent, more preferably a linear or branched alkyl group having 1 to 9 carbon atoms and free from a carbonyl group or a cyclic alkyl group having 3 to 9 carbon atoms and free from a carbonyl group, still more preferably a linear or branched alkyl group having 1 to 9 carbon atoms and not having a substituent, particularly preferably a methyl group (-CH₃) or an ethyl group (-C₂H₅), and most preferably a methyl group (-CH₃).

The two R^{22d} may be the same as or different from each other.

The total number of carbon atoms of R^{21d} and R^{22d} is preferably 1 to 7, more preferably 1 to 2, and most preferably 1.

The epoxidation in the step (301d) may be performed by causing an epoxidizing agent to act on the compound (300d).

Examples of the epoxidizing agent include peroxy acids such as meta-chloroperbenzoic acid (m-CPBA), perbenzoic acid, hydrogen peroxide, and tert-butyl hydroperoxide, dimethyl dioxolane, and methyl trifluoromethyl dioxolane, of which peroxy acids are preferred, and meta-chloroperbenzoic acid is more preferred.

The epoxidizing agent may be used in an amount of 0.5 to 10.0 mol based on 1 mol of the compound (300d).

The epoxidation in the step (301d) may be performed in a solvent. The solvent is preferably an organic solvent, and examples thereof include ketones, ethers, halogenated hydrocarbons, aromatic hydrocarbons, nitriles, pyridines, nitrogen-containing polar organic compounds, and dimethyl sulfoxide, of which dichloromethane is preferred.

Examples of the ketones include acetone, methyl ethyl ketone, methyl isobutyl ketone, cyclohexanone, and diacetone alcohol, of which acetone is preferred.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

Examples of the nitrile include acetonitrile, propionitrile, butyronitrile, isobutyronitrile, and benzonitrile, of which acetonitrile is preferred.

Examples of the nitrogen-containing polar organic compound include N,N-dimethylformamide, N,N-dimethylacetamide, N-methyl-2-pyrrolidone, 2-pyrrolidone, and 1,3-dimethyl-2-imidazolidinone, of which N,N-dimethylformamide, N,N-dimethylacetamide, and N-methyl-2-pyrrolidone are preferred.

The epoxidation temperature in the step (301d) is preferably -78 to 200°C, and more preferably -40 to 150°C.

The epoxidation pressure in the step (301d) is preferably 0 to 5.0 MPa, and more preferably 0.1 to 1.0 MPa.

The epoxidation duration in the step (301d) is preferably 0.1 to 72 hours, and more preferably 0.1 to 48 hours.

In the step (302d), the lithium dialkylcopper may be used in an amount of 0.5 to 10.0 mol based on 1 mol of the compound (301d).

The reaction in the step (302d) may be performed in a solvent. The solvent is preferably an organic solvent, and examples thereof include ethers, halogenated hydrocarbons, and aromatic hydrocarbons.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

The reaction temperature in the step (302d) is preferably -78 to 200°C, and more preferably -40 to 150°C.

The reaction pressure in the step (302d) is preferably 0 to 5.0 MPa, and more preferably 0.1 to 1.0 MPa.

The reaction duration in the step (302d) is preferably 0.1 to 72 hours, and more preferably 0.1 to 48 hours.

Examples of the method of oxidizing the compound (302d) in the step (303d) include (a) a method of using Jones reagent (CrO₃/H₂SO₄) (Jones oxidation), (b) a method of using Dess-Martin periodinane (DMP) (Dess-Martin oxidation), (c) a method of using pyridinium chlorochromate (PCC), (d) a method of causing a bleaching agent (5% to 6% aqueous solution of NaOCl) to act in the presence of a nickel compound such as NiCl₂, and (e) a method of causing a hydrogen acceptor such as an aldehyde and a ketone to act in the presence of an aluminum catalyst such as Al(CH₃)₃ or Al[OCH(CH₃)₂]₃ (Oppenauer oxidation).

The oxidation in the step (303d) may be performed in a solvent. The solvent is preferably water or an organic solvent, and examples thereof include water, ketones, alcohols, ethers, halogenated hydrocarbons, aromatic hydrocarbons, and nitriles.

Examples of the ketones include acetone, methyl ethyl ketone, methyl isobutyl ketone, cyclohexanone, and diacetone alcohol, of which acetone is preferred.

Examples of the alcohol include methanol, ethanol, 1-propanol, and isopropanol. Of these, methanol and ethanol are preferred.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the aromatic hydrocarbon include benzene, toluene, and xylene, of which benzene and toluene are preferred.

Examples of the nitrile include acetonitrile, propionitrile, butyronitrile, isobutyronitrile, and benzonitrile, of which acetonitrile is preferred.

The oxidation temperature in the step (303d) is preferably -78 to 200°C, and may appropriately be selected in accordance with the method used.

The oxidation pressure in the step (303d) is preferably 0 to 5.0 MPa, and may appropriately be selected in accordance with the method used.

The oxidation duration in the step (303d) is preferably 0.1 to 72 hours, and may appropriately be selected in accordance with the method used.

The compound (10d) and the compound (20d) may also be produced by a production method including a step (401d) of oxidizing a compound (100d) represented by the following formula:

R^{11d}-CH=CH-Y^{1d}-OH

(wherein R^{11d} and Y^{1d} are defined as described above) to provide a compound (401d) represented by the following formula: 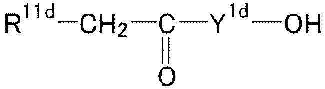 (wherein R^{11d} and Y^{1d} are defined as described above).

The oxidation in the step (401d) may be performed by causing an oxidizing agent to act on the compound (100d) in the presence of water and a palladium compound.

Examples of the oxidizing agent include monovalent or divalent copper salts such as copper chloride, copper acetate, copper cyanide, and copper trifluoromethanethiolate, iron salts such as iron chloride, iron acetate, iron cyanide, iron trifluoromethanethiolate, and hexacyanoferrates, benzoquinones such as 1,4-benzoquinone, 2,3-dichloro-5,6-dicyano-1,4-benzoquinone, tetrachloro-1,2-benzoquinone, and tetrachloro-1,4-benzoquinone, H₂O₂, MnO₂, KMnO₄, RuO₄, m-chloroperbenzoic acid, and oxygen. Of these, copper salts, iron salts, and benzoquinones are preferred, and copper chloride, iron chloride, and 1,4-benzoquinone are more preferred.

The oxidizing agent may be used in an amount of 0.001 to 10 mol based on 1 mol of the compound (100d).

The water may be used in an amount of 0.5 to 1,000 mol based on 1 mol of the compound (100d).

An example of the palladium compound is palladium dichloride. The palladium compound may be used in a catalytic amount, and may be used in an amount of 0.0001 to 1.0 mol based on 1 mol of the compound (100d).

The oxidation in the step (401d) may be performed in a solvent. Examples of the solvent include water, esters, aliphatic hydrocarbons, aromatic hydrocarbons, alcohols, carboxylic acids, ethers, halogenated hydrocarbons, nitrogen-containing polar organic compounds, nitriles, dimethyl sulfoxide, and sulfolane.

Examples of the esters include ethyl acetate, butyl acetate, ethylene glycol monomethyl ether acetate, and propylene glycol monomethyl ether acetate (PGMEA, also known as 1-methoxy-2-acetoxypropane), of which ethyl acetate is preferred.

Examples of the aliphatic hydrocarbons include hexane, cyclohexane, heptane, octane, nonane, decane, undecane, dodecane, and mineral spirits, of which cyclohexane and heptane are preferred.

Examples of the aromatic hydrocarbon include benzene, toluene, and xylene, of which benzene and toluene are preferred.

Examples of the alcohol include methanol, ethanol, 1-propanol, and isopropanol.

Examples of the carboxylic acids include acetic acid and propionic acid. Of these, acetic acid is preferred.

Examples of the ether include diethyl ether, tetrahydrofuran, dioxane, and diethylene glycol diethyl ether, of which diethyl ether and tetrahydrofuran are preferred.

Examples of the halogenated hydrocarbon include dichloromethane, dichloroethane, chloroform, chlorobenzene, and o-dichlorobenzene, of which dichloromethane and chloroform are preferred.

Examples of the nitrogen-containing polar organic compound include N,N-dimethylformamide, N,N-dimethylacetamide, N-methyl-2-pyrrolidone, 2-pyrrolidone, and 1,3-dimethyl-2-imidazolidinone, of which N,N-dimethylformamide, N,N-dimethylacetamide, and N-methyl-2-pyrrolidone are preferred.

Examples of the nitrile include acetonitrile, propionitrile, butyronitrile, isobutyronitrile, and benzonitrile, of which acetonitrile is preferred.

The oxidation temperature in the step (401d) is preferably -78 to 200°C, and more preferably -20 to 150°C.

The oxidation pressure in the step (401d) is preferably 0 to 10 MPa, and more preferably 0.1 to 5.0 MPa.

The oxidation duration in the step (401d) is preferably 0.1 to 72 hours, and more preferably 0.1 to 48 hours.

The surfactant (d) may also be produced by a production method including:
a step (31d) of oxidizing a compound (30d) represented by the following formula:

R^{11d}-CH=CH-(CR^{2d}₂)ₙ-(OR^{3d})ₚ-(CR^{4d}₂)_{q}-L-COOX^{d}

(wherein R^{2d} to R^{4d}, R^{11d}, n, p, q, and X^{d} are defined as described above; L is a single bond, -CO₂-B-*, -OCO-B-*, -CONR^{6d}-B-*, -NR^{6d}CO-B-*, or -CO- other than the carbonyl groups in -CO₂-B-, -OCO-B-, -CONR^{6d}-B-, and - NR^{6d}CO-B-, wherein B is a single bond or an alkylene group having 1 to 10 carbon atoms and optionally having a substituent, R^{6d} is H or an alkyl group having 1 to 4 carbon atoms and optionally having a substituent; and the alkylene group more preferably has 1 to 5 carbon atoms; R^{6d} is more preferably H or a methyl group; and * indicates the side bonded to -COOX^{d} in the formula) to provide a compound (31d) represented by the following formula: 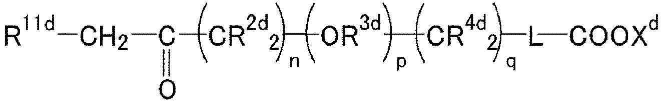 (wherein R^{2d} to R^{4d}, L, R^{11d}, n, p, q, and X^{d} are defined as described above).

The oxidation in the step (31d) may be performed by causing an oxidizing agent to act on the compound (30d) in the presence of water and a palladium compound under the same conditions as in the oxidation in the step (401d).

In any of the production methods described above, after the completion of each step, the solvent may be distilled off, or distillation or purification may be performed to increase the purity of the resulting compounds. For the resulting compounds in which X^{d} is H, such as those containing -SO₃H or -COOH, the compounds may be brought into contact with an alkali such as sodium carbonate or ammonia to covert these groups into the form of a salt.

The surfactant (e) will be described.

In the formula (e), R^{1e} to R^{5e} each represent H or a monovalent substituent, with the proviso that at least one of R^{1e} or R^{3e} represents a group represented by the general formula: -Y^{e}-R^{6e} and at least one of R^{2e} or R^{5e} represents a group represented by the general formula: - X^{e}-A^{e} or a group represented by the general formula: -Y^{e}-R^{6e}. Any two of R^{1e} to R^{5e} optionally bind to each other to form a ring.

The substituent which may be contained in the alkyl group for R^{1e} is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for R^{1e} is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{1e} is preferably a linear or branched alkyl group having 1 to 10 carbon atoms and optionally having a substituent or a cyclic alkyl group having 3 to 10 carbon atoms and optionally having a substituent, more preferably a linear or branched alkyl group having 1 to 10 carbon atoms and free from a carbonyl group or a cyclic alkyl group having 3 to 10 carbon atoms and free from a carbonyl group, still more preferably a linear or branched alkyl group having 1 to 10 carbon atoms and not having a substituent, further preferably a linear or branched alkyl group having 1 to 3 carbon atoms and not having a substituent, particularly preferably a methyl group (-CH₃) or an ethyl group (-C₂H₅), and most preferably a methyl group (-CH₃).

The monovalent substituent is preferably a group represented by the general formula: -Y^{e}-R^{6e}, a group represented by the general formula: -X^{e}-A^{e}, -H, and an alkyl group having 1 to 20 carbon atoms and optionally having a substituent, -NH₂, -NHR^{9e} (wherein R^{9e} is an organic group), -OH, -COOR^{9e} (wherein R^{9e} is an organic group) or -OR^{9e} (R^{9e} is an organic group). The alkyl group preferably has 1 to 10 carbon atoms.

R^{9e} is preferably an alkyl group having 1 to 10 carbon atoms or an alkylcarbonyl group having 1 to 10 carbon atoms, and more preferably an alkyl group having 1 to 4 carbon atoms or an alkylcarbonyl group having 1 to 4 carbon atoms.

In the formula, X^{e} is the same or different at each occurrence and represents a divalent linking group or a bond.

When R^{6e} does not contain none of a carbonyl group, an ester group, an amide group, and a sulfonyl group, X^{e} is preferably a divalent linking group containing at least one selected from the group consisting of a carbonyl group, an ester group, an amide group, and a sulfonyl group.

X^{e} is preferably a divalent linking group containing at least one bond selected from the group consisting of -CO-, -S(=O)₂-, -O-, -COO-, -OCO-, -S(=O)₂-O-, -O-S(=O)₂-, -CONR^{8e}-, and -NR^{8e}CO-, a C₁₋₁₀ alkylene group, or a bond. R^{8e} represents H or an organic group.

The alkyl group is preferable as the organic group in R^{8e}. R^{8e} is preferably H or an organic group having 1 to 10 carbon atoms, more preferably H or an organic group having 1 to 4 carbon atoms, still more preferably H or an alkyl group having 1 to 4 carbon atoms, and further preferably H.

In the formula (e), A^{e} is the same or different at each occurrence and represents -COOM^{e}, -SO₃M^{e}, or -OSO₃M^{e}, wherein M^{e} is H, a metal atom, NR^{7e}₄, an imidazolium optionally having a substituent, a pyridinium optionally having a substituent, or a phosphonium optionally having a substituent, wherein R^{7e} is H or an organic group; and the four R^{7e} may be the same as or different from each other. In a preferred embodiment, in the formula (e), A^{e} is -COOM^{e}.

The alkyl group is preferable as the organic group in R^{7e}. R^{7e} is preferably H or an organic group having 1 to 10 carbon atoms, more preferably H or an organic group having 1 to 4 carbon atoms, and still more preferably H or an alkyl group having 1 to 4 carbon atoms.

Examples of the metal atom include alkali metals (Group 1) and alkaline earth metals (Group 2), and preferred is Na, K, or Li.

M^{e} is preferably H, a metal atom, or NR^{7e}₄, more preferably H, an alkali metal (Group 1), an alkaline earth metal (Group 2), or NR^{7e}₄, still more preferably H, Na, K, Li, or NH₄, further preferably Na, K, or NH₄, particularly preferably Na or NH₄, and most preferably NH₄.

In the formula (e), Y^{e} is the same or different at each occurrence and represents a divalent linking group selected from the group consisting of -S(=O)₂-, -O-, - COO-, -OCO-, -CONR^{8e}-, and -NR^{8e}CO-, or a bond, wherein R^{8e} is H or an organic group.

Y^{e} is preferably a divalent linking group selected from the group consisting of a bond, -O-, -COO-, -OCO-, - CONR^{8e}-, and -NR^{8e}CO-, more preferably a divalent linking group selected from the group consisting of a bond, -COO-, and -OCO-.

The alkyl group is preferable as the organic group in R^{8e}. R^{8e} is preferably H or an organic group having 1 to 10 carbon atoms, more preferably H or an organic group having 1 to 4 carbon atoms, still more preferably H or an alkyl group having 1 to 4 carbon atoms, and further preferably H.

In the formula (e), R^{6e} is the same or different at each occurrence and represents an alkyl group having 2 or more carbon atoms and optionally containing, between carbon atoms, at least one selected from the group consisting of a carbonyl group, an ester group, an amide group, and a sulfonyl group. The organic group represented by R^{6e} preferably has 2 to 20 carbon atoms, more preferably 2 to 10 carbon atoms.

The alkyl group for R^{6e} optionally contains, between carbon atoms, one or two or more of at least one selected from the group consisting of a carbonyl group, an ester group, an amide group, and a sulfonyl group, but the alkyl group contains no such groups at ends. In the alkyl group for R^{6e}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R^{6e} is preferably
a group represented by the general formula: -R^{10e}-COR^{11e},
a group represented by the general formula: -R^{10e}-COO-R^{11e},
a group represented by the general formula: -R^{11e},
a group represented by the general formula: -R^{10e}-NR^{8e}CO-R^{11e}, or
a group represented by the general formula: -R^{10e}-CONR^{8e}-R^{11e},
wherein R^{8e} is H or an organic group; R^{10e} is an alkylene group; and R^{11e} is an alkyl group optionally having a substituent.
R^{6e} is more preferably a group represented by the general formula: -R^{10e}-Co-R^{11e}.

The alkyl group is preferable as the organic group in R^{8e}. R^{8e} is preferably H or an organic group having 1 to 10 carbon atoms, more preferably H or an organic group having 1 to 4 carbon atoms, still more preferably H or an alkyl group having 1 to 4 carbon atoms, and further preferably H.

The alkylene group for R^{10e} preferably has 1 or more, and more preferably 3 or more carbon atoms, and preferably 20 or less, more preferably 12 or less, still more preferably 10 or less, and particularly preferably 8 or less carbon atoms. Further, the alkylene group for R^{10e} preferably has 1 to 20, more preferably 1 to 10, and still more preferably 3 to 10 carbon atoms.

The alkyl group for R^{11e} may have 1 to 20 carbon atoms, and preferably has 1 to 15, more preferably 1 to 12, still more preferably 1 to 10, further preferably 1 to 8, still further preferably 1 to 6, still much more preferably 1 to 3, particularly preferably 1 or 2, and most preferably 1 carbon atom. The alkyl group for R^{11e} preferably consists only of primary carbons, secondary carbons, and tertiary carbons, and particularly preferably consists only of primary carbons and secondary carbons. In other words, R^{11e} is preferably a methyl group, an ethyl group, an n-propyl group, or an isopropyl group, and most preferably a methyl group.

In a preferred embodiment, in the general formula (e), at least one of R^{2e} or R^{5e} is a group represented by the general formula: -X^{e}-A^{e}, and the A^{e} is -COOM^{e}.

The surfactant (e) is preferably a compound represented by the following general formula (e-1), a compound represented by the following general formula (e-2), or a compound represented by the following general formula (e-3), more preferably a compound represented by the general formula (e-1) or a compound represented by the general formula (e-2): 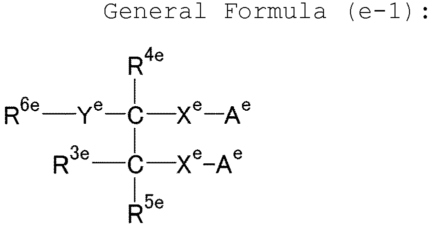 (wherein R^{3e} to R^{6e}, X^{e}, A^{e} and Y^{e} are defined as described above). 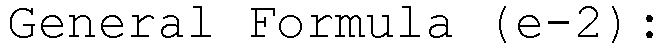 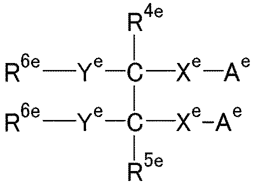 (wherein R^{4e} to R^{6e}, X^{e}, A^{e}, and Y^{e} are defined as described above). 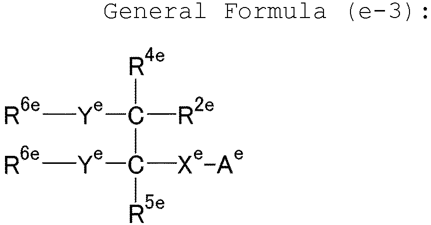 (wherein R^{2e}, R^{4e} to R^{6e}, X^{e}, A^{e} and Y^{e} are defined as described above).

The group represented by the general formula: -X^{e}-A^{e} is preferably

-COOM^{e},

-R^{12e}COOM^{e},

-SO₃M^{e},

-OSO₃M^{e},

-R^{12e}SO₃M^{e},

-R^{12e}OSO₃M^{e},

-OCO-R^{12e}-COOM^{e},

-OCo-R^{12e}-SO₃M^{e},

-OCo-R^{12e}-OSO₃M^{e},

-COO-R^{12e}-COOM^{e},

-COO-R^{12e}-SO₃M^{e},

-COO-R^{12e}-OSO₃M^{e}

-CONR^{8e}-R^{12e}-COOM^{e},

-CONR^{8e}-R^{12e}-SO₃M^{e},

-CONR^{8e}-R^{12e}-OSO₃M^{e},

-NR^{8e}CO-R^{12e}-COOM^{e},

-NR^{8e}CO-R^{12e}-SO₃M^{e},

-NR^{8e}CO-R^{12e}-OSO₃M^{e},

-OS(=O)₂-R^{12e}-COOM^{e},

-OS(=O)₂-R^{12e}-SO₃M^{e},

or

-OS(=O)₂-R^{12e}-OSO₃M^{e}

(wherein R^{8e} and M^{e} are defined as described above; and R^{12e} is an alkylene group having 1 to 10 carbon atoms).

In the alkylene group for R^{12e}, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free of halogen atoms such as fluorine atoms and chlorine atoms.

The group represented by the general formula: -Y^{e}-R^{6e} is preferably
a group represented by the general formula: -R^{10e}-COR^{11e},
a group represented by the general formula: -OCO-R^{10e}-CO-R^{11e},
a group represented by the general formula: -COO-R^{10e}-CO-R^{11e},
a group represented by the general formula: -OCO-R^{10e}-COO-R^{11e},
a group represented by the general formula: -COO-R^{11e}, a group represented by the general formula: -NR^{8e}COR^{10e}-CO-R^{11e}, or
a group represented by the general formula: -CONR^{8e}-R^{10e}-NR^{8e}CO-R^{11e},
(wherein R^{8e}, R^{10e}, and R^{11e} are defined as described above).

In the formula, R^{4e} and R^{5e} are each independently preferably H or an alkyl group having 1 to 4 carbon atoms.

In the alkyl groups for R^{4e} and R^{5e}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R^{3e} in the general formula (e-1) is preferably H or an alkyl group having 1 to 20 carbon atoms and optionally having a substituent, more preferably H or an alkyl group having 1 to 20 carbon atoms and having no substituent, and still more preferably H.

In the alkyl group for R^{3e}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R^{2e} in the general formula (e-3) is preferably H, OH, or an alkyl group having 1 to 20 carbon atoms and optionally having a substituent, more preferably H, OH, or an alkyl group having 1 to 20 carbon atoms and having no substituent, and still more preferably H or OH.

In the alkyl group for R^{2e}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The surfactant (e) can be produced by a known production method.

It is also preferable that the specific hydrocarbon surfactant is a carboxylic acid-type hydrocarbon surfactant. The carboxylic acid-type hydrocarbon surfactant is not limited as long as it has a carboxyl group (-COOH) or a group in which the hydrogen atom of the carboxyl group is substituted with an inorganic cation (for example, metal atoms, ammonium), and for example, a hydrocarbon surfactant having a group in which the hydrogen atom of the carboxyl group or the carboxyl group is substituted with an inorganic cation can be used from among the specific hydrocarbon surfactants described above.

The carboxylic acid-type hydrocarbon surfactant preferably has a carboxyl group (-COOH) or a group in which the hydrogen atom of the carboxyl group is replaced with an inorganic cation (for example, metal atoms, ammonium), among at least one selected from the group consisting of the surfactant (c) represented by the formula (c) and the surfactant (d) represented by the formula (d).

The PTFE of the present disclosure can be efficiently produced by using at least one of the specific hydrocarbon surfactants. The PTFE of the present disclosure may be produced by simultaneously using two or more of the specific hydrocarbon surfactants, or may be produced by simultaneously using a compound having surfactant function other than the specific hydrocarbon surfactants, as long as the compound has volatility or may remain in a molded body made of PTFE.

As the other compounds having a surfactant function, for example, those disclosed in National Publication of International Patent Application No. 2013-542308, National Publication of International Patent Application No. 2013-542309, and National Publication of International Patent Application No. 2013-542310 can be used.

The other compounds having a surfactant function may be a surfactant having a hydrophilic moiety and a hydrophobic moiety on the same molecule, for example, a hydrocarbon surfactant. These may be cationic, nonionic or anionic.

Cationic surfactants usually have a positively charged hydrophilic moiety such as alkylated ammonium halide such as alkylated ammonium bromide and a hydrophobic moiety such as long chain fatty acids.

Anionic surfactants usually have a hydrophilic moiety such as a carboxylate, a sulfonate or a sulfate and a hydrophobic moiety that is a long chain hydrocarbon moiety such as alkyl.

Nonionic surfactants are usually free from charged groups and have hydrophobic moieties that are long chain hydrocarbons. The hydrophilic moiety of the nonionic surfactant contains water-soluble functional groups such as chains of ethylene ether derived from polymerization with ethylene oxide.

### Examples of nonionic surfactants

Polyoxyethylene alkyl ether, polyoxyethylene alkyl phenyl ether, polyoxyethylene alkyl ester, sorbitan alkyl ester, polyoxyethylene sorbitan alkyl ester, glycerol ester, and derivatives thereof.

Specific examples of polyoxyethylene alkyl ethers: polyoxyethylene lauryl ether, polyoxyethylene cetyl ether, polyoxyethylene stearyl ether, polyoxyethylene oleyl ether, and polyoxyethylene behenyl ether.

Specific examples of polyoxyethylene alkyl phenyl ether: polyoxyethylene nonylphenyl ether, and polyoxyethylene octylphenyl ether.

Specific examples of polyoxyethylene alkyl esters: polyethylene glycol monolaurylate, polyethylene glycol monooleate, and polyethylene glycol monostearate.

Specific examples of sorbitan alkyl ester: polyoxyethylene sorbitan monolaurate, polyoxyethylene sorbitan monopalmitate, polyoxyethylene sorbitan monostearate, and polyoxyethylene sorbitan monooleate.

Specific examples of polyoxyethylene sorbitan alkyl ester: polyoxyethylene sorbitan monolaurate, polyoxyethylene sorbitan monopalmitate, and polyoxyethylene sorbitan monostearate.

Specific examples of glycerol ester: glycerol monomyristate, glycerol monostearate, and glycerol monooleate.

Specific examples of the above derivatives: polyoxyethylene alkylamine, polyoxyethylene alkylphenyl-formaldehyde condensate, and polyoxyethylene alkyl ether phosphate.

The ethers and esters may have an HLB value of 10 to 18.

Examples of nonionic surfactants include Triton (R) Triton (R) X series (X15, X45, X100), Tergitol (R) 15-S series, and Tergitol (R) manufactured by Dow Chemical Company. TMN series (TMN-6, TMN-10, TMN-100), Tergitol (R) L series, Pluronic (R) R series (31R1, 17R2, 10R5, 25R4 (m to 22, n to 23), and Iconol (R) TDA series (TDA-6, TDA-9, TDA-10) manufactured by BASF.

Examples of the anionic hydrocarbon surfactant include Versatic (R) 10 manufactured by Resolution Performance Products, and Avanel S series (S-70, S-74) manufactured by BASF.

Examples of other compounds having surfactant function include an anionic surfactant represented by R-L-M, wherein R is a linear or branched alkyl group having 1 or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms; L is -ArSO₃⁻, -SO₃⁻, -SO₄-, -PO₃⁻ or -COO⁻, and, M is, H, a metal atom, NR⁵₄, where each R⁵ may be the same or different and are H or an organic group, imidazolium optionally having a substituent, pyridinium optionally having a substituent, or phosphonium optionally having a substituent; and -ArSO₃⁻ is an aryl sulfonate. R⁵ is preferably H or an organic group having 1 to 10 carbon atoms, and more preferably H or an organic group having 1 to 4 carbon atoms.

Specific examples thereof include a compound represented by CH₃-(CH₂)ₙ-L-M, wherein n is an integer of 6 to 17, as represented by lauryl acid. L and M are the same as described above.

Mixtures of those in which R is an alkyl group having 12 to 16 carbon atoms and L-M is sulfate or sodium dodecyl sulfate (SDS) can also be used.

Examples of other compounds having surfactant function include an anionic surfactant represented by R⁶-(L-M)₂, wherein R⁶ is H, a linear or branched alkylene group having 1 or more carbon atoms and optionally having a substituent, or a cyclic alkylene group having 3 or more carbon atoms and optionally having a substituent, and optionally contains a monovalent or divalent heterocycle or optionally forms a ring when having 3 or more carbon atoms; L is -ArSO₃⁻, -SO₃⁻, -SO₄-, -PO₃⁻ or - COO⁻, and, M is, H, a metal atom, NR⁵₄, imidazolium optionally having a substituent, pyridinium optionally having a substituent, or phosphonium optionally having a substituent, where each R⁵ is H or an organic group, and -ArSO₃⁻ is an aryl sulfonate.

Examples of other compounds having surfactant function include an anionic surfactant represented by R⁷-(L-M)₃, wherein R⁷ is H, a linear or branched alkylidine group having 1 or more carbon atoms and optionally having a substituent, or a cyclic alkylidine group having 3 or more carbon atoms and optionally having a substituent, and optionally contains a monovalent or divalent heterocycle or optionally forms a ring when having 3 or more carbon atoms; L is -ArSO₃⁻, -SO₃⁻, -SO₄-, -PO₃⁻ or - COO⁻, and, M is, H, a metal atom, NR⁵₄, imidazolium optionally having a substituent, pyridinium optionally having a substituent, or phosphonium optionally having a substituent, each R⁵ are H or an organic group; and - ArSO₃⁻ is an aryl sulfonate.

Examples of the siloxane hydrocarbon surfactant include those described in Silicone Surfactants, R.S. M. Hill, Marcel Dekker, Inc., ISBN: 0-8247-00104. The structure of the siloxane surfactant includes defined hydrophobic and hydrophilic moieties. The hydrophobic moiety contains one or more dihydrocarbyl siloxane units, where the substituents on the silicone atoms are completely hydrocarbon.

In the sense that the carbon atoms of the hydrocarbyl groups are fully substituted with hydrogen atoms where they can be substituted by halogen such as fluorine, these siloxane surfactants can also be regarded as hydrocarbon surfactants, i.e. the monovalent substituents on the carbon atoms of the hydrocarbyl groups are hydrogen.

The hydrophilic moiety of the siloxane hydrocarbon surfactant may contain one or more polar moieties including ionic groups such as sulfate, sulfonate, phosphonate, phosphate ester, carboxylate, carbonate, sulfosuccinate, taurate (as the free acid, a salt or an ester), phosphine oxides, betaine, betaine copolyol, or quaternary ammonium salts. Ionic hydrophobic moieties may also contain ionically functionalized siloxane grafts.

Examples of such siloxane hydrocarbon surfactants include polydimethylsiloxane-graft-(meth)acrylic acid salts, polydimethylsiloxane-graft-polyacrylate salts, and polydimethylsiloxane-grafted quaternary amines.

The polar moieties of the hydrophilic moiety of the siloxane surfactant may contain nonionic groups formed by polyethers, such as polyethylene oxide (PEO), and mixed polyethylene oxide/polypropylene oxide polyethers (PEO/PPO); mono- and disaccharides; and water-soluble heterocycles such as pyrrolidinone. The ratio of ethylene oxide to propylene oxide (EO/PO) may be varied in mixed polyethylene oxide/polypropylene oxide polyethers.

The hydrophilic moiety of the siloxane hydrocarbon surfactant may also contain a combination of ionic and nonionic moieties. Such moieties include, for example, ionically end-functionalized or randomly functionalized polyether or polyol. Preferred for carrying out the present disclosure is a siloxane having a nonionic moiety, i.e., a nonionic siloxane hydrocarbon surfactant.

The arrangement of the hydrophobic and hydrophilic moieties of the structure of a siloxane hydrocarbon surfactant may take the form of a diblock polymer (AB), triblock polymer (ABA), wherein the "B" represents the siloxane portion of the molecule, or a multi-block polymer. Alternatively, the siloxane hydrocarbon surfactant may contain a graft polymer.

The siloxane hydrocarbon surfactants also include those disclosed in U.S. Patent No. 6,841,616.

Examples of the siloxane-based anionic hydrocarbon surfactant include Noveon (R) by Lubrizol Advanced Materials, Inc. and SilSense^{™} PE-100 silicone and SilSense^{™} CA-1 silicone available from Consumer Specialties.

Examples of the anionic hydrocarbon surfactant also include a sulfosuccinate surfactant Lankropol (R) K8300 by Akzo Nobel Surface Chemistry LLC.

Examples of the sulfosuccinate surfactant include sodium diisodecyl sulfosuccinate (Emulsogen (R) SB10 by Clariant) and sodium diisotridecyl sulfosuccinate (Polirol (R) TR/LNA by Cesapinia Chemicals).

Examples of other compounds having a surfactant function also include PolyFox (R) surfactants by Omnova Solutions, Inc. (PolyFox^{™} PF-156A, PolyFox^{™} PF-136A).

The other compound having a surfactant function is preferably an anionic hydrocarbon surfactant. The anionic hydrocarbon surfactant used may be those described above, including the following preferred hydrocarbon surfactants.

The anionic hydrocarbon surfactant includes a compound (α) represented by the following formula (α):

R¹⁰⁰-COOM (α)

wherein R¹⁰⁰ is a monovalent organic group containing 1 or more carbon atoms; and M is H, a metal atom, NR¹⁰¹₄, imidazolium optionally having a substituent, pyridinium optionally having a substituent, or phosphonium optionally having a substituent, wherein R¹⁰¹ is H or an organic group and may be the same or different. The organic group for R¹⁰¹ is preferably an alkyl group. R¹⁰¹ is preferably H or an organic group having 1 to 10 carbon atoms, more preferably H or an organic group having 1 to 4 carbon atoms, and still more preferably H or an alkyl group having 1 to 4 carbon atoms.

From the viewpoint of surfactant function, the number of carbon atoms in R¹⁰⁰ is preferably 2 or more, and more preferably 3 or more. From the viewpoint of water-solubility, the number of carbon atoms in R¹⁰⁰ is preferably 29 or less, and more preferably 23 or less.

Examples of the metal atom as M include alkali metals (Group 1) and alkaline earth metals (Group 2), and preferred is Na, K, or Li. M is preferably H, a metal atom, or NR¹⁰¹₄, more preferably H, an alkali metal (Group 1), an alkaline earth metal (Group 2), or NR¹⁰¹₄, still more preferably H, Na, K, Li, or NH₄, further preferably Na, K, or NH₄, particularly preferably Na or NH₄, and most preferably NH₄.

Examples of the compound (α) include R¹⁰²-COOM, wherein R¹⁰² is a linear or branched, alkyl group, alkenyl group, alkylene group, or alkenylene group having 1 or more carbon atoms and optionally having a substituent, or a cyclic alkyl group, alkenyl group, alkylene group, or alkenylene group having 3 or more carbon atoms and optionally having a substituent, each of which optionally contains an ether bond; when having 3 or more carbon atoms, R¹⁰² optionally contains a monovalent or divalent heterocycle, or optionally forms a ring; and M is as described above.

Specific examples thereof include a compound represented by CH₃-(CH₂)ₙ-COOM, wherein n is an integer of 2 to 28, and M is as described above.

From the viewpoint of emulsion stability, the compound (α) is preferably free from a carbonyl group which is not in a carboxyl group.

Preferred examples of the hydrocarbon-containing surfactant free from a carbonyl group include a compound of the following formula (B):

R¹⁰³-COO-M (A)

wherein R¹⁰³ is an alkyl group, an alkenyl group, an alkylene group, or an alkenylene group containing 6 to 17 carbon atoms, each of which optionally contains an ether bond; M is H, a metal atom, NR¹⁰¹₄, imidazolium optionally having a substituent, pyridinium optionally having a substituent, or phosphonium optionally having a substituent; and R¹⁰¹ is the same or different and is H or an organic group.

In the formula (B), R¹⁰³ is preferably an alkyl group or an alkenyl group, each of which optionally contains an ether group. The alkyl group or alkenyl group for R¹⁰³ may be linear or branched. The number of carbon atoms in R¹⁰³ may be, but is not limited to, 2 to 29.

When the alkyl group is linear, the number of carbon atoms in R¹⁰³ is preferably 3 to 29, and more preferably 5 to 23. When the alkyl group is branched, the number of carbon atoms in R¹⁰³ is preferably 5 to 35, and more preferably 11 to 23.

When the alkenyl group is linear, the number of carbon atoms in R¹⁰³ is preferably 2 to 29, and more preferably 9 to 23. When the alkenyl group is branched, the number of carbon atoms in R¹⁰³ is preferably 2 to 29, and more preferably 9 to 23.

Examples of the alkyl group and alkenyl group include a methyl group, an ethyl group, an isobutyl group, a t-butyl group, and a vinyl group.

Examples of other compounds having a surfactant function include butylic acid, valeric acid, caproic acid, enanthic acid, caprylic acid, pelargonic acid, capric acid, lauric acid, myristic acid, pentadecylic acid, palmitic acid, palmitoleic acid, margaric acid, stearic acid, oleic acid, vaccenic acid, linoleic acid, (9,12,15)-linolenic acid, (6,9,12)linolenic acid, eleostearic acid, arachidic acid, 8,11-eicosadienoic acid, mead acid, arachidonic acid, behenic acid, lignoceric acid, nervonic acid, cerotic acid, montanic acid, melissic acid, crotonic acid, myristoleic acid, palmitoleic acid, sapienoic acid, oleic acid, elaidic acid, vaccenic acid, gadoleic acid, eicosenoic acid, erucic acid, nervonic acid, linoleic acid, eicosadienoic acid, docosadienoic acid, linolenic acid, pinolenic acid, α-eleostearic acid, β-eleostearic acid, mead acid, dihomo-γ-linolenic acid, eicosatrienoic acid, stearidonic acid, arachidonic acid, eicosatetraenoic acid, adrenic acid, boseopentaenoic acid, eicosapentaenoic acid, osbond acid, sardine acid, tetracosapentaenoic acid, docosahexaenoic acid, nisinic acid, and salts thereof.

Particularly, preferred is at least one selected from the group consisting of lauric acid, capric acid, myristic acid, pentadecylic acid, palmitic acid, and salts thereof.

Examples of the salts include, but are not limited to, those in which hydrogen of the carboxyl group is a metal atom, NR¹¹₄, imidazolium optionally having a substituent, pyridinium optionally having a substituent, or phosphonium optionally having a substituent as M in the formula described above.

Examples of the anionic hydrocarbon surfactant also include a surfactant (1-0A) represented by the following formula (1-0A): 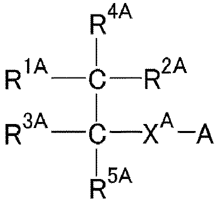
wherein R^{1A} to R^{5A} are H, a monovalent hydrocarbon group optionally containing, between carbon atoms, an ester group, or a group represented by general formula: - X^{A}-A, with the proviso that at least one of R^{2A} or R^{5A} represents a group represented by the general formula: - X^{A}-A;
X^{A} is the same or different at each occurrence and represents a divalent hydrocarbon group or a bond;
A is the same or different at each occurrence and represents -COOM, wherein M is H, a metal atom, NR⁷₄, imidazolium optionally having a substituent, pyridinium optionally having a substituent, or phosphonium optionally having a substituent, wherein R⁷ is H or an organic group; and
any two of R^{1A} to R^{5A} may be bonded to each other to form a ring.

In the general formula (1-0A), in R^{1A} to R^{5A}, the monovalent hydrocarbon group optionally containing, between carbon atoms, an ester group preferably has 1 to 50 carbon atoms, and more preferably 5 to 20 carbon atoms. Any two of R^{1A} to R^{5A} optionally bind to each other to form a ring. The monovalent hydrocarbon group optionally containing, between carbon atoms, an ester group is preferably an alkyl group.

In the formula, in X^{A}, the number of carbon atoms in the divalent hydrocarbon group is 1 to 50, and more preferably 5 to 20. Examples of the divalent hydrocarbon group include an alkylene group and an alkanediyl group, and preferred is an alkylene group.

In the general formula (1-0A), any one of R^{2A} and R^{5A} is preferably a group represented by the formula: -X^{A}-A, and more preferably, R^{2A} is a group represented by the formula: -X²-A.

In a preferred embodiment, in the general formula (1-0A), R^{2A} is a group represented by the general formula: -X²-A, and R^{1A}, R^{3A}, R^{4A} and R^{5A} are H. In this case, X^{A} is preferably a bond or an alkylene group having 1 to 5 carbon atoms.

Another preferred embodiment is an embodiment in which in general formula (1-0A), R^{2A} is a group represented by general formula: -X^{A}-A, R^{1A} and R^{3A} are groups represented by -Y^{A}-R⁶, Y^{A} is the same or different at each occurrence, and is -COO-, -OCO-, or a bond, and R⁶ is the same or different at each occurrence, and is an alkyl group having 2 or more carbon atoms. In this case, it is preferable that R^{4A} and R^{5A} are H.

Examples of the hydrocarbon surfactant represented by the general formula (1-0A) include glutaric acid or a salt thereof, adipic acid or a salt thereof, pimelic acid or a salt thereof, suberic acid or a salt thereof, azelaic acid or a salt thereof, and sebacic acid or a salt thereof.

The aliphatic carboxylic acid-type hydrocarbon surfactant represented by the general formula (1-0A) may be a 2-chain 2-hydrophilic type synthetic surfactant, and examples of the gemini type surfactant include geminiserf (CHUKYO YUSHI CO.,LTD.), Gemsurf α142 (carbon number: 12, lauryl group), Gemsurf α102 (carbon number: 10), and Gemsurf α182 (carbon number: 14).

The PTFE of the present disclosure can be obtained by a production method including a polymerization step of polymerizing tetrafluoroethylene alone or polymerizing tetrafluoroethylene and a modifying monomer copolymerizable with tetrafluoroethylene in an aqueous medium having a pH of 4.0 or more in the presence of a hydrocarbon surfactant and a polymerization initiator to obtain PTFE even in a case where the specific hydrocarbon surfactant is not used.

Conventionally, the pH of the aqueous medium used in the polymerization was less than 4.0 because the polymerization step for producing PTFE used an acidic polymerization initiator. As a result of diligent studies by the present disclosers, surprisingly, it has been found that by setting the pH of the aqueous medium used for polymerization to 4.0 or more, the stability of polymerization is improved and PTFE having a high molecular weight can be produced.

The production method includes polymerizing tetrafluoroethylene alone or tetrafluoroethylene and a modifying monomer copolymerizable with tetrafluoroethylene in an aqueous medium having a pH of 4.0 or more. The pH may be 4.0 or more, preferably more than 4.0, more preferably 4.5 or more, still more preferably 5.0 or more, further preferably 5.5 or more, still further preferably more than 6.0 or more, particularly preferably 6.5 or more, particularly preferably 7.0 or more, particularly preferably 7.5 or more, and particularly preferably 8.0 or more. The upper limit of the pH is not limited, but may be, for example, 13.0 or less. From the viewpoint of corrosion of the polymerization tank, it is preferably 12.0 or less, more preferably 11.5 or less, and still more preferably 11.0 or less.

The pH can be measured with a pH meter.

In the production method, the method of adjusting the pH of the aqueous medium to 4.0 or more is not limited, but the pH can be made 4.0 or more by using, for example, an alkaline aqueous solution, an alkaline aqueous dispersion, or a pH adjuster, but the method is not limited.

Further, even in a case where a polymerization initiator that shows acidity when dissolved in an aqueous medium is used, the pH can be adjusted to 4.0 or more by further adding an alkaline compound such as sodium hydroxide. The alkali compound may be any compound which dissolves in water and ionizes to produce OH⁻, and examples thereof include, but not limited to, a hydroxide of an alkali metal such as sodium hydroxide or potassium hydroxide; a hydroxide of alkaline earth metals; ammonia; and amines. The polymerization step may include a step of adding an alkaline compound to an aqueous medium.

In the production method, the pH of the aqueous medium may be 4.0 or more during the entire period of the polymerization step. Further, the pH may be 4.0 or more in the middle of the polymerization step, or the pH may be 4.0 or more in the latter half of the polymerization step. Further, the pH may be 4.0 or more in the middle and the latter half of the polymerization step.

For example, in the polymerization step, the pH of the aqueous medium is preferably 4.0 or more when the polymer solid concentration is 3% by mass or more. In other words, the production method includes a polymerization step of polymerizing tetrafluoroethylene alone or polymerizing tetrafluoroethylene and a modifying monomer copolymerizable with tetrafluoroethylene in an aqueous medium in the presence of a hydrocarbon surfactant and a polymerization initiator to obtain PTFE, and the aqueous medium preferably has a pH of 4.0 or more when the polymer solid concentration is 3% by mass or more. The aqueous medium preferably has a pH of 4.0 or more when the polymer solid concentration is 5% by mass or more, more preferably has a pH of 4.0 or more when the polymer solid concentration is 8% by mass or more, still more preferably has a pH of 4.0 or more when the polymer solid concentration is 10% by mass or more, further preferably has a pH of 4.0 or more when the polymer solid concentration is 15% by mass or more, particularly preferably has a pH of 4.0 or more when the polymer solid concentration is 18% by mass or more, more preferably has a pH of 4.0 or more when the polymer solid concentration is 20% by mass or more, and still more preferably has a pH of 4.0 or more when the polymer solid concentration is 25% by mass or more.

In the polymerization step, the pH of the aqueous medium is preferably maintained at 4.0 or more from the time when the polymer solid concentration becomes 25% by mass to the completion of polymerization, more preferably maintained at 4.0 or more from the time when the polymer solid concentration becomes 20% by mass to the completion of polymerization, still more preferably maintained at 4.0 or more from the time when the polymer solid concentration becomes 18% by mass to the completion of polymerization, further preferably maintained at 4.0 or more from the time when the polymer solid concentration becomes 15% by mass to the completion of polymerization, still further preferably maintained at 4.0 or more from the time when the polymer solid concentration becomes 10% by mass to the completion of polymerization, particularly preferably maintained at 4.0 or more from the time when the polymer solid concentration becomes 8% by mass to the completion of polymerization, more preferably maintained at 4.0 or more from the time when the polymer solid concentration becomes 5% by mass to the completion of polymerization, and still more preferably maintained at 4.0 or more from the time when the polymer solid concentration becomes 3% by mass to the completion of polymerization.

In the polymerization step, the pH of the aqueous medium is also preferably 4.0 or more when the polymer solid concentration is less than 15% by mass. In the polymerization step, the pH of the aqueous medium is more preferably 4.0 or more when the polymer solid concentration is 3% by mass or more and less than 15% by mass, the pH of the aqueous medium is more preferably 4.0 or more when the polymer solid concentration is 5% by mass or more and less than 15% by mass, the pH of the aqueous medium is still more preferably 4.0 or more when the polymer solid concentration is 8% by mass or more and less than 15% by mass, and the pH of the aqueous medium is further preferably 4.0 or more when the polymer solid concentration is 10% by mass or more and less than 15% by mass.

In the polymerization step, the pH of the aqueous medium is preferably maintained at 4.0 or more while the polymer solid concentration is 10% by mass or more and up to 15% by mass, the pH of the aqueous medium is preferably maintained at 4.0 or more while the polymer solid concentration is at 8% by mass or more and up to 15% by mass, and the pH of the aqueous medium is further preferably maintained at 4.0 or more while polymer solid concentration is 5% by mass or more and up to 15% by mass.

The pH of the aqueous medium is preferably more than 4.0 in any case, more preferably 4.5 or more, still more preferably 5.0 or more, further preferably 5.5 or more, still further preferably 6.0 or more, particularly preferably 6.5 or more, more preferably 7.0 or more, still more preferably 7.5 or more, and further preferably 8.0 or more.

In the polymerization step, from the time of the initiation of the polymerization to the time when the polymer solid concentration is 3% by mass (preferably 5% by mass, more preferably 8% by mass, still more preferably 10% by mass, further preferably 15% by mass, still further preferably 18% by mass, yet still further preferably 20% by mass, particularly preferably 25% by mass), the pH of the aqueous medium is preferably 4.0 or more during a period of 60% or more (preferably 70% or more, more preferably 80% or more, still more preferably 90% or more, further preferably 95% or more, still further preferably 99% or more, particularly preferably 100%).

In the polymerization step, during a period of 60% or more (preferably 70% or more, more preferably 80% or more, still more preferably 90% or more, further preferably 95% or more, still further preferably 99% or more, particularly preferably 100%) from the time when the polymer solid concentration is 10% by mass (preferably 8% by mass, more preferably 5% by mass, still more preferably 3% by mass, further preferably polymerization initiation) to the time when the polymer solid concentration is 15% by mass, the pH of the aqueous medium is preferably 4.0 or more.

In the polymerization step, during a period of 60% or more (preferably 70% or more, more preferably 80% or more, still more preferably 90% or more, further preferably 95% or more, still further preferably 99% or more, particularly preferably 100%) from the time when the polymer solid concentration is 15% by mass to the time when the polymer solid concentration is 18% by mass (preferably 20% by mass, more preferably 25% by mass), the pH of the aqueous medium is preferably 4.0 or more.

In the polymerization step, during a period of 60% or more (preferably 70% or more, more preferably 80% or more, still more preferably 90% or more, further preferably 95% or more, more preferably 99% or more, particularly preferably 100%) from the time when the polymer solid concentration is 25% by mass (preferably 20% by mass, more preferably 18% by mass, still more preferably 15% by mass, further preferably 10% by mass, still further preferably 8% by mass, particularly preferably 5% by mass, more preferably 3% by mass, and still more preferably polymerization initiation) to the time when the polymerization is completed, the pH of the aqueous medium is preferably 4.0 or more.

The pH of the aqueous medium is preferably more than 4.0 in any case, more preferably 4.5 or more, still more preferably 5.0 or more, further preferably 5.5 or more, still further preferably 6.0 or more, particularly preferably 6.5 or more, more preferably 7.0 or more, still more preferably 7.5 or more, and further preferably 8.0 or more.

In the production method, the hydrocarbon surfactant is preferably an anionic hydrocarbon surfactant, and more preferably a carboxylic acid-type hydrocarbon surfactant. The anionic hydrocarbon surfactant and the carboxylic acid-type hydrocarbon surfactant suitably used may be, for example, but not limited to, the compound (α) exemplified in the other compounds having a surfactant function.

The PTFE of the present disclosure can be obtained by a production method including a polymerization step of polymerizing tetrafluoroethylene alone or polymerizing tetrafluoroethylene and a modifying monomer copolymerizable with tetrafluoroethylene in an aqueous medium in the presence of an anionic hydrocarbon surfactant and a polymerization initiator to obtain PTFE even in a case where the specific hydrocarbon surfactant is not used, in which the hydrocarbon surfactant contains a salt of the hydrocarbon surfactant. In other words, at least a part of the anionic hydrocarbon surfactant in the polymerization step is in the form of a salt.

As a result of diligent studies by the present disclosers and others, surprisingly, it has been found that by containing a salt of an anionic hydrocarbon surfactant, the stability of polymerization is improved and PTFE having a high molecular weight can be produced.

The anionic hydrocarbon surfactant will be described later.

It can be confirmed by measuring the conductivity that the anionic hydrocarbon surfactant contains a salt of the hydrocarbon surfactant.

In the production method, the anionic hydrocarbon surfactant preferably has a salt concentration of 50% by mass or more, more preferably 60% by mass or more, still more preferably 70% by mass or more, further preferably 80% by mass or more, still further preferably 90% by mass or more, and particularly preferably 95% by mass or more, based on the total mass of the anionic hydrocarbon surfactant.

The ratio of the salt can be measured by the solution concentration and the conductivity.

In the production method, the hydrocarbon surfactant is more preferably a carboxylic acid-type hydrocarbon surfactant.

In the salt of an anionic hydrocarbon surfactant, the cation that replaces the hydrogen atom of the acid (excluding hydrogen atom) are, for example, a metal atom, NR^{y}₄ (each R^{y} may be the same or different and H or an organic group), imidazolium optionally having a substituent, pyridinium optionally having a substituent, or phosphonium optionally having a substituent. The R^{Y} is preferably H or an alkyl group, more preferably H or an alkyl group having 1 to 10 carbon atoms, and still more preferably H or an alkyl group having 1 to 4 carbon atoms.

The cation in the salt of the anionic hydrocarbon surfactant is preferably a metal atom or NR^{y}₄, more preferably NR^{y}₄, and still more preferably NH₄.

Since the conductivity varies greatly depending on the temperature, the conductivity is measured using a thermostatic bath while keeping the sample liquid temperature at 25°C and the cell temperature of the pH meter at the same temperature.

In the production method, the polymerization step is preferably performed substantially in the absence of the hydrocarbon surfactant in the form of an organic acid. By polymerizing substantially in the absence of the hydrocarbon surfactant in the form of an organic acid, the stability of the polymerization is further improved and a high-molecular-weight PTFE can be obtained.

Substantially in the absence of the hydrocarbon surfactant in the form of an organic acid, the concentration of the organic acid is preferably 1.0% by mass or less, more preferably 0.5% by mass or less, still more preferably 0.1% by mass or less, further preferably 0.05% by mass or less, and particularly preferably 0.01% by mass or less, based on the mass of the resulting aqueous dispersion.

As used herein, the term "organic acid" means an organic compound that exhibits acidity. Examples of the organic acid include a carboxylic acid having a -COOH group, and a sulfonic acid having a -SO₃H group, and preferred is a carboxylic acid from the viewpoint that the pH of an aqueous solution containing the organic acid can be easily adjusted.

Further, "form of an organic acid" is a form in which H is not free from the acidic group contained in the organic acid (for example, -COOH group, -SO₃H group).

In the production method, the hydrocarbon surfactant is an anionic hydrocarbon surfactant.

In the polymerization step, the amount of the hydrocarbon surfactant at the initiation of the polymerization is preferably more than 50 ppm based on the aqueous medium. The amount of the hydrocarbon surfactant at the initiation of the polymerization is preferably 60 ppm or more, more preferably 70 ppm or more, still more preferably 80 ppm or more, and further preferably 100 ppm or more. The upper limit thereof is preferably, but not limited to, 10,000 ppm, and more preferably 5,000 ppm, for example. When the amount of the hydrocarbon surfactant at the initiation of polymerization is in the above range, it is possible to obtain an aqueous dispersion having a smaller average primary particle size and superior stability.

It can be said that the polymerization started when the gas TFE in the reactor became PTFE and the pressure drop in the reactor occurred. U.S. Patent No. 3,391,099 (Punderson) discloses a dispersion polymerization of tetrafluoroethylene in an aqueous medium comprising two separate steps of a polymerization process comprising: first the formation of a polymer nucleus as a nucleation site, and then the growth step comprising polymerization of the established particles. The polymerization is usually started when both the monomer to be polymerized and the polymerization initiator are charged in the reactor. Further, in the present disclosure, an additive related to the formation of a nucleation site is referred to as a nucleating agent.

The polymerization step preferably includes an addition step of adding a composition containing a hydrocarbon surfactant after the initiation of the polymerization. By the addition step, the stability of polymerization is further improved, and a higher-molecular-weight PTFE can be obtained.

The hydrocarbon surfactant may be, for example, in the form of a solid (for example, powder of a hydrocarbon surfactant) or in the form of a liquid.

The composition may be any one containing a hydrocarbon surfactant, may be composed of only a hydrocarbon surfactant, or may be a solution or dispersion of a hydrocarbon surfactant containing a hydrocarbon surfactant and a liquid medium. Therefore, the addition step can also be said to be a step of adding a hydrocarbon surfactant alone or a composition containing the hydrocarbon surfactant after the initiation of polymerization.

The hydrocarbon surfactant is not limited to one type, and may be a mixture of two or more types.

The liquid medium may be either an aqueous medium or an organic solvent, or may be a combination of an aqueous medium and an organic solvent.

Specific examples of the composition include an aqueous solution in which a hydrocarbon surfactant is dissolved in an aqueous medium and an aqueous dispersion in which a hydrocarbon surfactant is dispersed in an aqueous medium.

The hydrocarbon surfactant added in the addition step is preferably 0.0001 to 10% by mass based on the aqueous medium. It is more preferably 0.001% by mass or more, still more preferably 0.01% by mass or more, and particularly preferably 0.05% by mass or more based on the aqueous medium. Further, it is more preferably 5% by mass or less, still more preferably 3% by mass or less, and particularly preferably 1% by mass or less based on the aqueous medium.

Since the stability of polymerization is improved and a higher-molecular-weight PTFE can be obtained, the composition is preferably an aqueous solution containing a hydrocarbon surfactant and having a pH of 5.0 or more.

The pH of the aqueous solution is more preferably 6.0 or more, still more preferably 6.5 or more, further preferably 7.0 or more, still further preferably 7.5 or more, and particularly preferably 8.0 or more. The upper limit of pH is not limited, but may be 12.0 or less, or may be 11.0 or less.

The hydrocarbon surfactant in the addition step is preferably an anionic hydrocarbon surfactant, and more preferably a carboxylic acid-type hydrocarbon surfactant.

The anionic hydrocarbon surfactant and the carboxylic acid-type hydrocarbon surfactant suitably used may be, for example, but not limited to, the compound (α) exemplified in the other compounds having a surfactant function.

The hydrocarbon surfactant of a carboxylic acid-type used in the polymerization step and the adding step is preferably at least one selected from a group consisting of a surfactant having a carboxyl group (-COOH) or a group in which the hydrogen atom of the carboxyl group is replaced with an inorganic cation (for example, metal atoms, ammonium) among the surfactant (e), the anionic surfactant represented by R⁶(-L-M)₂ described above, the anionic surfactant represented by R⁷(-L-M)₃ described above, the compound (α), the surfactant (1-0A), and those obtained by radically treating or oxidizing these surfactants. The carboxylic acid-type hydrocarbon surfactant may be used alone or in a mixture of two or more.

The compound (α) includes not only the anionic hydrocarbon surfactant represented by the formula: R¹⁰²-COOM (wherein R¹⁰² and M are the same as above) (preferably, the compound represented by the formula (B)), but also those having a carboxyl group (-COOH) or a group in which the hydrogen atom of the carboxyl group is substituted with an inorganic cation (for example, metal atoms, ammonium) among the anionic surfactant represented by the formula: R-L-M (wherein R, L, and M are the same as above), the surfactant (c), and the surfactant (d).

The carboxylic acid-type hydrocarbon surfactant is preferably the compound (α), and more preferably at least one selected from the group consisting of a compound represented by the formula (B), a compound in which A^{c} is -COOX^{c} in the formula (c), a compound in which A^{d} is - COOX^{d} in the formula (d), a compound in which A^{e} is -COOM^{e} in the formula (e), a compound in which A is -COOM in the formula (1-0A), and those obtained by radically treating or oxidizing these surfactants, and still more preferably at least one selected from the group consisting of a compound represented by the formula (A) and a compound obtained by radically treating or oxidizing the compound.

In particular, preferred is at least one selected from the group consisting of lauric acid, capric acid, myristic acid, pentadecic acid, palmitinic acid, salts thereof, and those obtained by radically treating or oxidizing these compounds. Examples of the salts include, but are not limited to, those in which hydrogen of the carboxyl group is a metal atom, NR¹⁰¹₄, imidazolium optionally having a substituent, pyridinium optionally having a substituent, or phosphonium optionally having a substituent as M in the formula described above.

In the production method, the tetrafluoroethylene is polymerized substantially in the absence of a fluorine-containing surfactant.

The expression "substantially in the absence of a fluorine-containing surfactant" in the production method means that the amount of the fluorine-containing surfactant in the aqueous medium is 10 ppm or less, preferably 1 ppm or less, more preferably 100 ppb or less, still more preferably 10 ppb or less, and further preferably 1 ppb or less.

Examples of the fluorine-containing surfactant include anionic fluorine-containing surfactants.

The anionic fluorine-containing surfactant may be, for example, a fluorine atom-containing surfactant having 20 or less carbon atoms in total in the portion excluding the anionic group.

The fluorine-containing surfactant may also be a surfactant containing fluorine having a molecular weight of 800 or less in the anionic moiety.

The "anionic moiety" means the portion of the fluorine-containing surfactant excluding the cation. For example, in the case of F(CF₂)ₙ₁COOM represented by the formula (I) described later, the anionic moiety is the "F(CF₂)ₙ₁COO" portion.

Examples of the fluorine-containing surfactant also include fluorine-containing surfactants having a Log POW of 3.5 or less. The Log POW is a partition coefficient between 1-octanol and water, which is represented by Log P (wherein P is the ratio between the concentration of the fluorine-containing surfactant in octanol and the concentration of the fluorine-containing surfactant in water in a phase-separated octanol/water (1:1) liquid mixture containing the fluorine-containing surfactant).

Log POW is determined as follows. Specifically, HPLC is performed on standard substances (heptanoic acid, octanoic acid, nonanoic acid, and decanoic acid) each having a known octanol/water partition coefficient using TOSOH ODS-120T (ϕ4.6 mm×250 mm, Tosoh Corp.) as a column and acetonitrile/0.6% by mass HClO4 aqueous solution (=1/1 (vol/vol%)) as an eluent at a flow rate of 1.0 ml/min, a sample amount of 300 µL, and a column temperature of 40°C; with a detection light of UV 210 nm. For each standard substance, a calibration curve is drawn with respect to the elution time and the known octanol/water partition coefficient. Based on the calibration curve, Log POW is calculated from the elution time of the sample liquid in HPLC.

Specific examples of the fluorine-containing surfactant include those disclosed in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO2005/042593, International Publication No. WO2008/060461, International Publication No. WO2007/046377, International Publication No. WO2007/119526, International Publication No. WO2007/046482, International Publication No. WO2007/046345, U.S. Patent Application Publication No. 2014/0228531, International Publication No. WO2013/189824, and International Publication No. WO2013/189826.

Examples of the anionic fluorine-containing surfactant include a compound represented by the following general formula (N⁰):

Xⁿ⁰-Rfⁿ⁰-Y⁰ (N⁰)

wherein Xⁿ⁰ is H, Cl, or F; Rfⁿ⁰ is a linear, branched, or cyclic alkylene group having 3 to 20 carbon atoms in which some or all of Hs are replaced by F; the alkylene group optionally containing one or more ether bonds in which some of Hs are replaced by Cl; and Y⁰ is an anionic group.

The anionic group Y⁰ may be -COOM, -SO₂M, or -SO₃M, and may be -COOM or -SO₃M.

M is H, a metal atom, NR⁷₄, imidazolium optionally having a substituent, pyridinium optionally having a substituent, or phosphonium optionally having a substituent, wherein R⁷ is H or an organic group.

Examples of the metal atom include alkali metals (Group 1) and alkaline earth metals (Group 2), such as Na, K, or Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

Rfⁿ⁰ may be one in which 50% or more of H has been replaced by fluorine.

Examples of the compound represented by the general formula (N⁰) include:
a compound represented by the following general formula (N¹):

   Xⁿ⁰-(CF₂)ₘ₁-Y⁰ (N¹)

   wherein Xⁿ⁰ is H, Cl, and F; m1 is an integer of 3 to 15; and Y⁰ is as defined above;
a compound represented by the following general formula (N²):

   Rf^{r1}-O-(CF(CF₃)CF₂O)ₘ₂CFXⁿ¹-Y⁰ (N²)

   wherein Rfⁿ¹ is a perfluoroalkyl group having 1 to 5 carbon atoms; m2 is an integer of 0 to 3; Xⁿ¹ is F or CF₃; and Y⁰ is as defined above;
a compound represented by the following general formula (N³):

   Rfⁿ²(CH₂)ₘ₃-(Rfⁿ³)_{q}-Y⁰ (N³)

   wherein Rfⁿ² is a partially or fully fluorinated alkyl group having 1 to 13 carbon atoms and optionally containing an ether bond; m3 is an integer of 1 to 3; Rfⁿ³ is a linear or branched perfluoroalkylene group having 1 to 3 carbon atoms; q is 0 or 1; and Y⁰ is as defined above;
a compound represented by the following general formula (N⁴):

   Rfⁿ⁴-O-(CYⁿ¹Yⁿ²)ₚCF₂-Y⁰ (N⁴)

   wherein Rfⁿ⁴ is a linear or branched partially or fully fluorinated alkyl group having 1 to 12 carbon atoms and optionally containing an ether bond; and Yⁿ¹ and Yⁿ² are the same or different and are each H or F; p is 0 or 1; and Y⁰ is as defined above; and
a compound represented by the following general formula (N⁵): 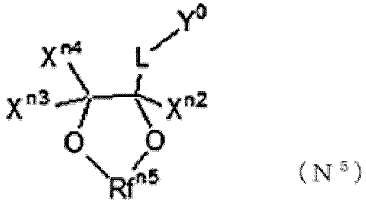 wherein Xⁿ², Xⁿ³, and Xⁿ⁴ may be the same or different and are each H, F, or a linear or branched partial or fully fluorinated alkyl group having 1 to 6 carbon atoms and optionally containing an ether bond; Rfⁿ⁵ is a linear or branched partially or fully fluorinated alkylene group having 1 to 3 carbon atoms and optionally containing an ether bond; L is a linking group; and Y⁰ is as defined above, with the proviso that the total carbon number of Xⁿ², Xⁿ³, Xⁿ⁴, and Rfⁿ⁵ is 18 or less.

More specific examples of the compound represented by the above general formula (N⁰) include a perfluorocarboxylic acid (I) represented by the following general formula (I), an ω-H perfluorocarboxylic acid (II) represented by the following general formula (II), a perfluoropolyethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), and a compound (XII) represented by the following general formula (XII).

The perfluorocarboxylic acid (I) is represented by the following general formula (I):

F(CF₂)ₙ₁COOM (I)

wherein n1 is an integer of 3 to 14; and M is H, a metal atom, NR⁷₄, imidazolium optionally having a substituent, pyridinium optionally having a substituent, or phosphonium optionally having a substituent, wherein R⁷ is H or an organic group.

The ω-H perfluorocarboxylic acid (II) is represented by the following general formula (II):

H(CF₂)ₙ₂COOM (II)

wherein n2 is an integer of 4 to 15; and M is as defined above.

The perfluoropolyethercarboxylic acid (III) is represented by the following general formula (III):

Rf¹-O-(CF(CF₃)CF₂O)ₙ₃CF(CF₃)COOM (III)

wherein Rf¹ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

Rf²(CH₂)ₙ₄Rf³COOM (IV)

wherein Rf² is a perfluoroalkyl group having 1 to 5 carbon atoms; Rf³ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

Rf⁴-O-CY¹Y²CF₂-COOM (V)

wherein Rf⁴ is a linear or branched partially or fully fluorinated alkyl group having 1 to 12 carbon atoms and optionally containing an ether bond; Y¹ and Y² are the same or different and are each H or F; and M is as defined above.

The perfluoroalkylsulfonic acid (VI) is represented by the following general formula (VI):

F(CF₂)ₙ₅SO₃M (VI)

wherein n5 is an integer of 3 to 14; and M is as defined above.

The ω-H perfluorosulfonic acid (VII) is represented by the following general formula (VII):

H (CF₂)ₙ₆SO₃M (VII)

wherein n6 is an integer of 4 to 14; and M is as defined above.

The perfluoroalkylalkylenesulfonic acid (VIII) is represented by the following general formula (VIII):

Rf⁵(CH₂)ₙ₇SO₃M (VIII)

wherein Rf⁵ is a perfluoroalkyl group having 1 to 13 carbon atoms; n7 is an integer of 1 to 3; and M is as defined above.

The alkylalkylenecarboxylic acid (IX) is represented by the following general formula (IX):

Rf⁶(CH₂)ₙ₈COOM (IX)

wherein Rf⁶ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

Rf⁷-O-Rf⁸-O-CF₂-COOM (X)

wherein Rf⁷ is a linear or branched partially or fully fluorinated alkyl group having 1 to 6 carbon atoms and optionally containing an ether bond; Rf⁸ is a linear or branched partially or fully fluorinated alkyl group having 1 to 6 carbon atoms; and M is as defined above.

The alkoxyfluorosulfonic acid (XI) is represented by the following general formula (XI):

Rf⁹-O-CY¹Y²CF₂-SO₃M (XI)

wherein Rf⁹ is a linear or branched partially or fully fluorinated alkyl group having 1 to 12 carbon atoms and optionally containing an ether bond and optionally containing chlorine; Y¹ and Y² are the same or different and are each H or F; and M is as defined above.

The compound (XII) is represented by the following general formula (XII): 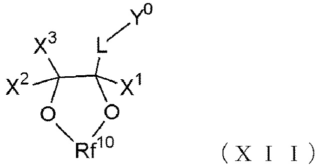 wherein X¹, X², and X³ may be the same or different and are H, F, and a linear or branched partially or fully fluorinated alkyl group having 1 to 6 carbon atoms and optionally containing an ether bond; Rf¹⁰ is a perfluoroalkylene group having 1 to 3 carbon atoms; L is a linking group; and Y⁰ is an anionic group.

Y⁰ may be -COOM, -SO₂M, or -SO₃M, and may be -SO₃M or COOM, where M is as defined above.

Examples of L include a single bond, a partially or fully fluorinated alkylene group having 1 to 10 carbon atoms and optionally containing an ether bond.

As described above, examples of the anionic fluorine-containing surfactant include a carboxylic acid-based surfactant and a sulfonic acid-based surfactant.

The PTFE of the present disclosure can be suitably produced by a production method including an addition step of adding at least one selected from the group consisting of a radical scavenger and a decomposer of a polymerization initiator. The addition step is performed during the step of performing the emulsion polymerization described above in an aqueous medium. The radical concentration during polymerization can be adjusted by adding a radical scavenger or a decomposer of a polymerization initiator. A radical scavenger is preferable from the viewpoint of reducing the radical concentration.

The radical scavenger used may be a compound having no reinitiation ability after addition or chain transfer to a free radical in the polymerization system. Specifically, a compound that readily undergoes a chain transfer reaction with a primary radical or propagating radical and then generates a stable radical that does not react with a monomer or a compound that readily undergoes an addition reaction with a primary radical or propagating radical to generate a stable radical is used.

The activity of what is commonly referred to as a chain transfer agent is characterized by the chain transfer constant and the reinitiation efficiency, but among the chain transfer agents, those having almost 0% reinitiation efficiency are called radical scavenger.

The radical scavenger can also be said to be, for example, a compound having a chain transfer constant with TFE at the polymerization temperature larger than the polymerization rate constant and a reinitiation efficiency of substantially 0%. "Reinitiation efficiency is substantially 0%" means that the generated radicals turn the radical scavenger into stable radicals.

Preferably, the compound has a chain transfer constant (Cs) (= chain transfer rate constant (kc) / polymerization rate constant (kp)) with TFE at the polymerization temperature of 0.1 or larger, and the compound more preferably has a chain transfer constant (Cs) of 0.5 or more, still more preferably 1.0 or more, further preferably 5.0 or more, and particularly preferably 10 or more.

The radical scavenger in the present disclosure is preferably at least one selected from the group consisting of aromatic hydroxy compounds, aromatic amines, N,N-diethylhydroxylamine, quinone compounds, terpenes, thiocyanates, and cupric chloride (CuCl₂).

Examples of the aromatic hydroxy compound include unsubstituted phenols, polyhydric phenols, salicylic acid, m- or p-salicylic acid, gallic acid, and naphthol.

Examples of the unsubstituted phenol include o-, m-, or p-nitrophenol, o-, m-, or p-aminophenol, and p-nitrosophenol. Examples of the polyhydric phenol include catechol, resorcin, hydroquinone, pyrogallol, phloroglucin, and naphthresorcinol.

Examples of the aromatic amines include o-, m-, or p-phenylenediamine and benzidine.

Examples of the quinone compound include o-, m- or p-benzoquinone, 1,4-naphthoquinone, and alizarin.

Examples of the thiocyanate include ammonium thiocyanate (NH₄SCN), potassium thiocyanate (KSCN), and sodium thiocyanate (NaSCN).

The radical scavenger is preferably an aromatic hydroxy compound, more preferably an unsubstituted phenol or a polyhydric phenol, and still more preferably a hydroquinone.

The amount of the radical scavenger added is, from the viewpoint of reducing the standard specific gravity, preferably an amount corresponding to 3 to 500% (molar basis) of the polymerization initiator concentration is preferable. A more preferred lower limit is 5% (molar basis), still more preferably 8% (molar basis), still more preferably 10% (molar basis), further preferably 15% (molar basis), still further preferably 20% (molar basis), particularly preferably 25% (molar basis), particularly preferably 30% (molar basis), and particularly preferably 35% (molar basis). The upper limit thereof is preferably 400% (molar basis), still more preferably 300% (molar basis), further preferably 200% (molar basis), and still further preferably 100% (molar basis).

The decomposer of the polymerization initiator may be any compound capable of decomposing the polymerization initiator to be used, and for example, at least one selected from the group consisting of sulfite, bisulfite, bromate, diimine, diimine salts, oxalic acid, oxalate, copper and iron salts is preferable. Examples of the sulfite include sodium sulfite and ammonium sulfite. An example of the copper salt is copper(II) sulfate and an example of the iron salt is iron(II) sulfate.

The amount of the decomposer of a polymerization initiator added is in the range of 25 to 300% by mass based on the amount of the oxidizing agent combined as a polymerization initiator (redox initiator described later). The amount thereof is preferably 25 to 150% by mass, and still more preferably 50 to 100% by mass.

The amount of the decomposer added to the polymerization initiator is preferably an amount corresponding to 3 to 500% (molar basis) of the polymerization initiator concentration from the viewpoint of reducing the standard specific gravity. The lower limit thereof is preferably 5% (molar basis), still more preferably 8% (molar basis), still more preferably 10% (molar basis), still more preferably 13% (molar basis), and still more preferably 15% (molar basis). The upper limit thereof is preferably 400% (molar basis), still more preferably 300% (molar basis), still further preferably 200% (molar basis), and still further preferably 100% (molar basis).

At least one selected from the group consisting of a radical scavenger and a decomposer of a polymerization initiator is preferably added when the concentration of PTFE formed in the aqueous medium is 5% by mass or more. More preferably, it is added when the concentration thereof is 10% by mass or more.

Further, it is preferable to be added when the concentration of PTFE formed in the aqueous medium is 40% by mass or less. More preferably, it is added when the concentration thereof is 35% by mass or less, and still more preferably, 30% by mass or less.

The addition step may be a step of continuously adding at least one selected from the group consisting of a radical scavenger and a decomposer of a polymerization initiator.

Continuously adding at least one selected from the group consisting of a radical scavenger and a decomposer of a polymerization initiator means, for example, adding the at least one selected from the group consisting of a radical scavenger and a decomposer of a polymerization initiator not all at once, but adding over time and without interruption or adding in portions.

The polymerization step may further polymerize tetrafluoroethylene in the presence of a nucleating agent.

The nucleating agent is preferably at least one selected from the group consisting of, for example, fluoropolyether, nonionic surfactant, and chain transfer agent.

In this case, the polymerization step is preferably a step of polymerizing tetrafluoroethylene in an aqueous medium in the presence of a hydrocarbon surfactant and the nucleating agent to obtain PTFE.

As the fluoropolyether, perfluoropolyether is preferable.

The fluoropolyether preferably has a repeating unit represented by the formulas (1a) to (1d):

(-CFCF₃-CF₂-O-)ₙ (1a)

(-CF₂-CF₂-CF₂-O-)ₙ (1b)

(-CF₂-CF₂-O-)ₙ-(-CF₂-O-)ₘ (1c)

(-CF₂-CFCF₃-O-)ₙ-(-CF₂-O-)ₘ (1d)

wherein m and n are integers of 1 or more.

The fluoropolyether is preferably fluoropolyetheric acid or a salt thereof, and the fluoropolyetheric acid is preferably a carboxylic acid, a sulfonic acid, a sulfonamide, or a phosphonic acid, and more preferably a carboxylic acid. Among the fluoropolyetheric acid or a salt thereof, a salt of fluoropolyetheric acid is preferable, an ammonium salt of fluoropolyetheric acid is more preferable, and an ammonium salt of fluoropolyethercarboxylic acid is still more preferable.

The fluoropolyetheric acid or a salt thereof can have any chain structure in which oxygen atoms in the main chain of the molecule are separated by saturated fluorocarbon groups having 1 to 3 carbon atoms. Two or more types of fluorocarbon groups can be present in the molecule.

The fluoropolyether acid or its salt is preferably a compound represented by the following formula:

CF₃-CF₂-CF₂-O(-CFCF₃-CF₂-O-)ₙCFCF₃-COOH,

CF₃-CF₂-CF₂-O(-CF₂-CF₂-CF₂-O-)ₙ-CF₂-CF₂OOH,

or

HOOC-CF₂-O(-CF₂-CF₂-O-)ₙ-(-CF₂-O-)ₘCF₂COOH,

wherein m and n are the same as above
or a salt thereof.

These structures are described in J. Appl. Polymer Sci., 57, 797(1995) examined by Kasai. As disclosed herein, such fluoropolyethers can have a carboxylic acid group or a salt thereof at one end or both ends. Similarly, such fluoropolyethers may have a sulfonic acid or phosphonic acid group or a salt thereof at one end or both ends. In addition, fluoropolyethers having acid functional groups at both ends may have different groups at each end. Regarding monofunctional fluoropolyether, the other end of the molecule is usually perfluorinated, but may contain a hydrogen or chlorine atom.

Fluoropolyethers having acid groups at one or both ends have at least two ether oxygens, preferably at least four ether oxygens, and still more preferably at least six ether oxygens. Preferably, at least one fluorocarbon group separating ether oxygens, more preferably at least two of such fluorocarbon groups, has 2 or 3 carbon atoms. Still more preferably, at least 50% of the fluorocarbon groups separating ether oxygens has 2 or 3 carbon atoms. Also preferably, the fluoropolyether has at least 15 carbon atoms in total, and for example, a preferable minimum value of n or n + m in the repeating unit structure is preferably at least 5. Two or more fluoropolyethers having an acid group at one end or both ends can be used in the methods according to the present disclosure. Typically, fluoropolyethers may contain a plurality of compounds in varying proportions within the molecular weight range relative to the average molecular weight, unless special care is taken in the production of a single specific fluoropolyether compound.

The fluoropolyether preferably has a number-average molecular weight of 800 g/mol or more. The fluoropolyether acid or the salt thereof preferably has a number-average molecular weight of less than 6,000 g/mol, because the fluoropolyether acid or the salt thereof may be difficult to disperse in an aqueous medium. The fluoropolyether acid or the salt thereof more preferably has a number-average molecular weight of 800 to 3,500 g/mol, and still more preferably 1,000 to 2,500 g/mol.

The amount of the fluoropolyether is preferably 5 to 3,000 ppm, more preferably 5 to 2,000 ppm, still more preferably 10 ppm, and still more preferably 100 ppm based on the aqueous medium.

Examples of the nonionic surfactant as the nucleating agent include the nonionic surfactant described, and preferred is a fluorine-free nonionic surfactant. Examples of the nonionic surfactant include a compound represented by the following general formula (i):

R³-O-A¹-H (i)

wherein R³ is a linear or branched primary or secondary alkyl group having 8 to 18 carbon atoms, and A¹ is a polyoxyalkylene chain.

R³ preferably has 10 to 16, more preferably 12 to 16 carbon atoms. When R³ has 18 or less carbon atoms, the aqueous dispersion tends to have good dispersion stability. Further, when R³ has more than 18 carbon atoms, it is difficult to handle due to its high flowing temperature. When R³ has less than 8 carbon atoms, the surface tension of the aqueous dispersion becomes high, so that the permeability and wettability are likely to decrease.

The polyoxyalkylene chain may be composed of oxyethylene and oxypropylene. The polyoxyalkylene chain is composed of an average repeating number of 5 to 20 oxyethylene groups and an average repeating number of 0 to 2 oxypropylene groups, and is a hydrophilic group. The number of oxyethylene units may have either a broad or narrow monomodal distribution as typically supplied, or a broader or bimodal distribution which may be obtained by blending. When the average repeating number of oxypropylene groups is more than 0, the oxyethylene groups and oxypropylene groups in the polyoxyalkylene chain may be arranged in blocks or randomly.

From the viewpoint of viscosity and stability of the aqueous dispersion, a polyoxyalkylene chain composed of an average repeating number of 7 to 12 oxyethylene groups and an average repeating number of 0 to 2 oxypropylene groups is preferred. In particular, when A¹ has 0.5 to 1.5 oxypropylene groups on average, low foaming properties are good, which is preferable.

More preferably, R³ is (R') (R'')HC-, where R' and R" are the same or different linear, branched, or cyclic alkyl groups, and the total amount of carbon atoms is at least 5, preferably 7 to 17. Preferably, at least one of R' or R" is a branched or cyclic hydrocarbon group.

Specific examples of the polyoxyethylene alkyl ether include C₁₃H₂₇-O-(C₂H₄O)₁₀-H, C₁₂H₂₅-O-(C₂H₄O)₁₀H, C₁₀H₂₁CH(CH₃)CH₂-O-(C₂H₄O)₉-H, C₁₃H₂₇-O-(C₂H₄O)₉-(CH(CH₃)CH₂O)-H, C₁₆H₃₃-O-(C₂H₄O)₁₀-H, and HC(C₅H₁₁)(C₇H₁₅)-O-(C₂H₄O)₉-H. Examples of commercially available products of the polyoxyethylene alkyl ethers include Genapol X080 (product name, available from Clariant), NOIGEN TDS series (available from DKS Co., Ltd.) exemplified by NOIGEN TDS-80 (trade name), LEOCOL TD series (available from Lion Corp.) exemplified by LEOCOL TD-90 (trade name), LIONOL (R) TD series (available from Lion Corp.), T-Det A series (available from Harcros Chemicals Inc.) exemplified by T-Det A 138 (trade name), and TERGITOL (R) 15 S series (available from Dow).

The nonionic surfactant is preferably an ethoxylate of 2,6,8-trimethyl-4-nonanol having 4 to 18 ethylene oxide units on average, an ethoxylate of 2,6,8-trimethyl-4-nonanol having 6 to 12 ethylene oxide units on average, or a mixture thereof. This type of nonionic surfactant is also commercially available, for example, as TERGITOL TMN-6, TERGITOL TMN-10, and TERGITOL TMN-100X (all product names, available from Dow Chemical Co., Ltd.).

The hydrophobic group of the nonionic surfactant may be any of an alkylphenol group, a linear alkyl group, and a branched alkyl group.

Examples of the polyoxyethylene alkylphenyl ether-based nonionic compound include, for example, a compound represented by the following general formula (ii):

R⁴-C₆H₄-O-A²-H (ii)

wherein R⁴ is a linear or branched primary or secondary alkyl group having 4 to 12 carbon atoms, and A² is a polyoxyalkylene chain. Specific examples of the polyoxyethylene alkylphenyl ether-based nonionic compound include Triton X-100 (trade name, available from Dow Chemical Co., Ltd.).

Examples of the nonionic surfactant also include polyol compounds. Specific examples thereof include those described in International Publication No. WO2011/014715.

Typical examples of the polyol compound include compounds having one or more sugar units as polyol unit. The sugar units may have been modified to contain at least one long chain. Examples of suitable polyol compounds containing at least one long chain moiety include alkyl glycosides, modified alkyl glycosides, sugar esters, and combinations thereof. Examples of the sugars include, but are not limited to, monosaccharides, oligosaccharides, and sorbitanes. Examples of monosaccharides include pentoses and hexoses. Typical examples of monosaccharides include ribose, glucose, galactose, mannose, fructose, arabinose, and xylose. Examples of oligosaccharides include oligomers of 2 to 10 of the same or different monosaccharides. Examples of oligosaccharides include, but are not limited to, saccharose, maltose, lactose, raffinose, and isomaltose.

Typically, sugars suitable for use as the polyol compound include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to the carbon ring atoms. Typically, the sugars have been modified in that one or more of the hydrogen atoms of a hydroxy group (and/or hydroxyalkyl group) bonded to the carbon ring atoms has been substituted by the long chain residues such that an ether or ester bond is created between the long chain residue and the sugar moiety.

The sugar-based polyol may contain a single sugar unit or a plurality of sugar units. The single sugar unit or the plurality of sugar units may be modified with long chain moieties as described above. Specific examples of sugar-based polyol compound include glycosides, sugar esters, sorbitan esters, and mixtures and combinations thereof.

A preferred type of polyol compounds are alkyl or modified alkyl glucosides. These type of surfactants contains at least one glucose moiety. Examples of alkyl or modified alkyl glucosides include compounds represented by the formula: 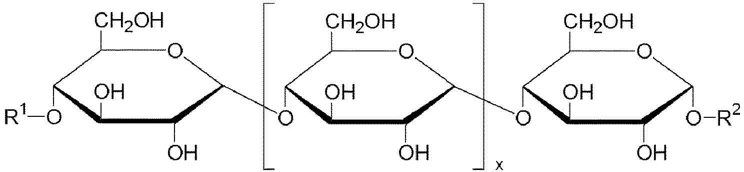 wherein x represents 0, 1, 2, 3, 4, or 5 and R¹ and R² each independently represent H or a long chain unit containing at least 6 carbon atoms, with the proviso that at least one of R¹ or R² is not H. Typical examples of R¹ and R² include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof.

It is understood that the above formula represents specific examples of alkyl poly glucosides showing glucose in its pyranose form but other sugars or the same sugars but in different enantiomeric or diastereomeric forms may also be used.

Alkyl glucosides are available, for example, by acid-catalyzed reactions of glucose, starch, or n-butyl glucoside with aliphatic alcohols which typically yields a mixture of various alkyl glucosides (Alkyl polyglycylside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional block copolymers supplied from BASF as Pluronic (R) R series, tridecyl alcohol alkoxylates supplied from BASF Corporation as Iconol (R) TDA series, and hydrocarbon-containing siloxane surfactants, preferably hydrocarbon surfactants. In the sense that the hydrocarbyl groups are fully substituted with hydrogen atoms where they can be substituted by halogen such as fluorine, these siloxane surfactants can also be regarded as hydrocarbon surfactants, i.e. the monovalent substituents on the hydrocarbyl groups are hydrogen.

Also, in the production method, in addition to the specific hydrocarbon surfactant and other compounds having a surfactant function used as necessary, an additive may also be used to stabilize the compounds. Examples of the additive include a buffer, a pH adjuster, a stabilizing aid, and a dispersion stabilizer.

The stabilizing aid is preferably paraffin wax, fluorine-containing oil, a fluorine-containing solvent, or silicone oil. The stabilizing aids may be used alone or in combination of two or more. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. It is desirable that the stabilizing aid is sufficiently hydrophobic so that the stabilizing aid is completely separated from the PTFE aqueous emulsion after emulsion polymerization of TFE, and does not serve as a contaminating component.

In the production method of the present invention, the emulsion polymerization may be performed by charging a polymerization reactor with an aqueous medium, the hydrocarbon surfactant, a monomer, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, the components such as the monomers, the polymerization initiator, a chain transfer agent, and the surfactant may additionally be added depending on the purpose. The hydrocarbon surfactant may be added after the polymerization reaction is initiated.

In the emulsion polymerization, the polymerization temperature and the polymerization pressure are determined as appropriate in accordance with the types of the monomers used, the molecular weight of the target PTFE, and the reaction rate. Usually, the polymerization temperature is 5 to 150°C, preferably 10°C or higher, more preferably 30°C or higher, still more preferably 50°C or higher. Further, the polymerization temperature is more preferably 120°C or lower, and still more preferably 100°C or lower.

The polymerization pressure is 0.05 to 10 MPaG. The polymerization pressure is more preferably 0.3 MPaG or more, and still more preferably 0.5 MPaG or more. The polymerization pressure is more preferably 5.0 MPaG or less, and still more preferably 3.0 MPaG or less.

In particular, from the viewpoint of improving the yield, the polymerization pressure is preferably 1.0 MPaG or more, more preferably 1.2 MPaG or more, still more preferably 1.5 MPaG or more, further preferably 1.8 MPaG or more, and particularly preferably 2.0 MPaG or more.

In the emulsion polymerization, the hydrocarbon surfactant is preferably added when the concentration of PTFE formed in the aqueous medium is less than 0.60% by mass. More preferably, it is when the concentration is 0.50% by mass or less, still more preferably 0.36% by mass or less, further preferably 0.30% by mass or less, still further preferably 0.20% by mass or less, particularly preferably 0.10% by mass or less, and it is most preferable to add the hydrocarbon surfactant along with the initiation of polymerization. The concentration is the concentration with respect to the total of the aqueous medium and PTFE.

In the emulsion polymerization, the amount of the hydrocarbon surfactant at the initiation of the polymerization is preferably 1 ppm or more based on the aqueous medium. The amount of the hydrocarbon surfactant at the initiation of the polymerization is preferably 10 ppm or more, more preferably 50 ppm or more, still more preferably 100 ppm or more, and further preferably 200 ppm or more. The upper limit thereof is preferably, but not limited to, 100,000 ppm, and more preferably 50,000 ppm, for example. When the amount of the hydrocarbon surfactant at the initiation of polymerization is in the above range, it is possible to obtain an aqueous dispersion having a smaller average primary particle size and superior stability.

The polymerization initiator may be any polymerization initiator capable of generating radicals within the polymerization temperature range, and known oil-soluble and/or water-soluble polymerization initiators may be used. The polymerization initiator may be combined with a reducing agent, for example, to form a redox agent, which initiates the polymerization. The concentration of the polymerization initiator is appropriately determined depending on the types of the monomers, the molecular weight of the target PTFE, and the reaction rate.

The polymerization initiator to be used may be an oil-soluble radical polymerization initiator or a water-soluble radical polymerization initiator.

The oil-soluble radical polymerization initiator may be a known oil-soluble peroxide, and representative examples thereof include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydro-dodecafluoroheptanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples thereof include ammonium salts, potassium salts, and sodium salts of persulfuric acid, perboric acid, perchloric acid, perphosphoric acid, and percarbonic acid, t-butyl permaleate, and t-butyl hydroperoxide. A reducing agent such as a sulfite or a sulfurous acid salt may be contained together, and the amount thereof may be 0.1 to 20 times the amount of the peroxide.

For example, in a case where the polymerization is performed at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, ammonium cerium nitrate, and bromate. Examples of the reducing agent include sulfites, bisulfites, bromates, diimines, and oxalic acid. Examples of the persulfates include ammonium persulfate and potassium persulfate. Examples of the sulfite include sodium sulfite and ammonium sulfite. In order to increase the decomposition rate of the initiator, the combination of the redox initiator may preferably contain a copper salt or an iron salt. An example of the copper salt is copper(II) sulfate and an example of the iron salt is iron(II) sulfate.

In the redox initiator, the oxidizing agent is preferably a permanganic acid or a salt thereof, persulfate, manganese triacetate, a cerium (IV) salt, or bromic acid or a salt thereof, and the reducing agent is preferably a dicarboxylic acid or a salt thereof or diimine.

The oxidizing agent is more preferably a permanganic acid or a salt thereof, persulfate, or bromic acid or a salt thereof, and the reducing agent is more preferably a dicarboxylic acid or a salt thereof.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, either an oxidizing agent or a reducing agent may be charged into a polymerization tank in advance, followed by adding the other continuously or intermittently thereto to initiate the polymerization. For example, in the case of potassium permanganate/ammonium oxalate, preferably, ammonium oxalate is charged into a polymerization tank and potassium permanganate is continuously added thereto.

When the term "potassium permanganate/ammonium oxalate" is used in the redox initiator of the present specification, it means a combination of potassium permanganate and ammonium oxalate. The same applies to other compounds.

The redox initiator used is preferably an oxidizing agent or a reducing agent capable of adjusting the pH of the redox initiator aqueous solution to 4.0 or more. The redox initiator aqueous solution means a 0.50% by mass aqueous solution of an oxidizing agent or a 0.50% by mass aqueous solution of a reducing agent.

That is, at least one of the 0.50% by mass aqueous solution of the oxidizing agent and the 0.50% by mass aqueous solution of the reducing agent may have a pH of 4.0 or more, and it is preferable that both the 0.50% by mass aqueous solution of the oxidizing agent and the 0.50% by mass aqueous solution of the reducing agent have a pH of 4.0 or more.

The pH of the redox initiator aqueous solution (0.50% by mass aqueous solution of oxidizing agent or 0.50% by mass aqueous solution of reducing agent) is more preferably 5.0 or more, and still more preferably 5.5 or more, and particularly preferably 6.0 or more.

The redox initiator is particularly preferably a combination of an oxidizing agent which is a salt and a reducing agent which is a salt.

For example, the oxidizing agent which is a salt is more preferably at least one selected from the group consisting of a persulfate, a permanganate, a cerium (IV) salt and a bromate, still more preferably the permanganate, and particularly preferably potassium permanganate.

Further, the reducing agent which is a salt is more preferably at least one selected from the group consisting of oxalate, malonic acid, succinate, glutarate, and bromate, and still more preferably oxalate, and particularly preferably ammonium oxalate.

Specifically, the redox initiator is preferably at least one selected from the group consisting of potassium permanganate/ammonium oxalate, potassium bromate/ammonium sulfite, manganese triacetate/ammonium oxalate, and ammonium cerium nitrate/ammonium oxalate, more preferably at least one selected from the group consisting of potassium permanganate/ammonium oxalate, potassium bromate/ammonium sulfite, and ammonium cerium nitrate/ammonium oxalate.

By using a redox initiator in the polymerization step, the molecular weight of the obtained PTFE can be increased. Therefore, the SSG can be made small and stretchable.

Further, by using the redox initiator in the polymerization step, the number of PTFE particles generated in the aqueous dispersion can be increased. The yield of PTFE can also be increased.

When a redox initiator is used, the oxidizing agent and the reducing agent may be added all at once at the initial stage of polymerization, or the reducing agent may be added all at once at the initial stage of polymerization and the oxidizing agent may be added continuously, or the oxidizing agent may be added all at once at the initial stage of polymerization and the reducing agent may be added continuously, or both the oxidizing agent and the reducing agent may be added continuously.

When a redox initiator is used as the polymerization initiator, the amount of the oxidizing agent added to the aqueous medium is preferably 5 to 10,000 ppm, more preferably 10 to 1,000 ppm, and the amount of the reducing agent added is preferably 5 to 10,000 ppm, more preferably from 10 to 1,000 ppm.

When a redox initiator is used in the polymerization step, the polymerization temperature is preferably 100°C or lower, more preferably 95°C or lower, and still more preferably 90°C or lower. The polymerization temperature is preferably 10°C or higher, more preferably 20°C or higher, and still more preferably 30°C or higher.

The polymerization initiator may be added in any amount, and the initiator in an amount that does not significantly decrease the polymerization rate (e.g., several parts per million in water) or more may be added at once in the initial stage of polymerization, or may be added successively or continuously. The upper limit thereof falls within a range where the reaction temperature is allowed to increase while the polymerization reaction heat is removed through the device surfaces. The upper limit thereof is more preferably within a range where the polymerization reaction heat can be removed through the device surfaces. More specifically, the amount of the polymerization initiator added is preferably 1 ppm or more, more preferably 10 ppm or more, and still more preferably 50 ppm or more based on the aqueous medium. The amount of the polymerization initiator added is preferably 100,000 ppm or less, more preferably 10,000 ppm or less, and still more preferably 5,000 ppm or less.

The aqueous medium is a reaction medium in which the polymerization is performed, and means a liquid containing water. The aqueous medium may be any medium containing water, and it may be one containing water and, for example, any of fluorine-free organic solvents such as alcohols, ethers, and ketones, and/or fluorine-containing organic solvents having a boiling point of 40°C or lower.

In the emulsion polymerization, a known chain transfer agent may be further added to adjust the polymerization rate and the molecular weight depending on the purpose.

Examples of the chain transfer agent include esters such as dimethyl malonate, diethyl malonate, methyl acetate, ethyl acetate, butyl acetate, and dimethyl succinate, as well as isopentane, methane, ethane, propane, isobutane, methanol, ethanol, isopropanol, acetone, various mercaptans, various halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the following general formula:

R^{a}IₓBr_{y}

wherein x and y are each an integer of 0 to 2 and satisfy 1 ≤ x + y ≤ 2; and R^{a} is a saturated or unsaturated fluorohydrocarbon or chlorofluorohydrocarbon group having 1 to 16 carbon atoms, or a hydrocarbon group having 1 to 3 carbon atoms, each of which optionally contains an oxygen atom. By using a bromine compound or an iodine compound, iodine or bromine is introduced into the polymer, and serves as a crosslinking point.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

Of these, 1,4-diiodoperfluorobutane, 1,6-diiodoperfluorohexane, and 2-iodoperfluoropropane are preferably used from the viewpoints of polymerization reactivity, crosslinkability, and availability.

The amount of the chain transfer agent used is usually 1 to 50,000 ppm, preferably 1 to 20,000 ppm, based on the total amount of the fluoromonomer fed.

The chain transfer agent may be added to the reaction vessel at once before initiation of the polymerization, may be added at once after initiation of the polymerization, may be added in multiple portions during the polymerization, or may be added continuously during the polymerization.

A PTFE aqueous dispersion can be obtained by the production method. The PTFE aqueous dispersion usually contains the PTFE of the present disclosure and an aqueous medium. The solid concentration of the PTFE aqueous dispersion is not limited, but may be, for example, 1.0 to 70% by mass. The solid concentration is preferably 8.0% by mass or more, more preferably 10.0% by mass or more, and more preferably 60.0% by mass or less, more preferably 50.0% by mass or less.

In the production method, the adhesion amount to the finally obtained PTFE is preferably 3.0% by mass or less, more preferably 2.0% by mass or less, more preferably 1.0% by mass or less, still more preferably 0.8% by mass or less, further preferably 0.7% by mass or less, and particularly preferably 0.6% by mass or less.

Examples of the applications of the PTFE aqueous dispersion include, but are not limited to, those in which the aqueous dispersion is directly used, such as coating achieved by applying the aqueous dispersion to a base material, drying the dispersion, and optionally sintering the workpiece; impregnation achieved by impregnating a porous support such as nonwoven fabric or a resin molded article into the aqueous dispersion, drying the dispersion, and preferably sintering the workpiece; and casting achieved by applying the aqueous dispersion to a base material such as glass, drying the dispersion, optionally immersing the workpiece into water to remove the base material and to thereby provide a thin film. Examples of such applications include aqueous dispersion-type coating materials, binders for electrodes, and water repellents for electrodes.

The PTFE aqueous dispersion is substantially free from a fluorine-containing surfactant. The term "substantially free of fluorine-containing surfactant" in the aqueous dispersion as used herein means that the fluorine-containing surfactant is 10 ppm or less based on the polytetrafluoroethylene. The content of the fluorine-containing surfactant is preferably 1 ppm or less, more preferably 100 ppb or less, still more preferably 10 ppb or less, further preferably 1 ppb or less, and particularly preferably the fluorine-containing surfactant is below the detection limit as measured by liquid chromatography-mass spectrometry (LC/MS/MS).

The amount of the fluorine-containing surfactant can be determined by a known method. For example, it can be determined by LC/MS/MS analysis. First, the resulting aqueous dispersion is extracted into an organic solvent of methanol, and the extract liquid is subjected to LC/MS/MS analysis. Then, the molecular weight information is extracted from the LC/MS/MS spectrum to confirm agreement with the structural formula of the candidate surfactant.

Thereafter, aqueous solutions having five or more different concentration levels of the confirmed surfactant are prepared, and LC/MS/MS analysis is performed for each concentration level to prepare a calibration curve with the area.

The obtained aqueous dispersion is subjected to Soxhlet extraction with methanol, and the extracted liquid is subjected to LC/MS/MS analysis for quantitative measurement.

The fluorine-containing surfactant is the same as those exemplified in the production method of the present disclosure. For example, the surfactant may be a fluorine atom-containing surfactant having, in the portion excluding the anionic group, 20 or less carbon atoms in total, may be a fluorine-containing surfactant having an anionic moiety having a molecular weight of 800 or less, and may be a fluorine-containing surfactant having a Log POW of 3.5 or less.

Examples of the anionic fluorine-containing surfactant include compounds represented by the general formula (N⁰), and specific examples thereof include compounds represented by the general formula (N¹), compounds represented by the general formula (N²), compounds represented by the general formula (N³), compounds represented by the general formula (N⁴), and compounds represented by the general formula (N⁵). More specific examples thereof include a perfluorocarboxylic acid (I) represented by the general formula (I), an ω-H perfluorocarboxylic acid (II) represented by the general formula (II), a perfluoropolyethercarboxylic acid (III) represented by the general formula (III), a perfluoroalkylalkylenecarboxylic acid (IV) represented by the general formula (IV), a perfluoroalkoxyfluorocarboxylic acid (V) represented by the general formula (V), a perfluoroalkylsulfonic acid (VI) represented by the general formula (VI), an ω-H perfluorosulfonic group (VII) represented by the general acid (VII), a perfluoroalkylalkylene sulfonic acid (VIII) represented by the general formula (VIII), an alkylalkylene carboxylic acid (IX) represented by the general formula (IX), a fluorocarboxylic acid (X) represented by the general formula (X), an alkoxyfluorosulfonic acid (XI) represented by the general formula (XI), and a compound (XII) represented by the general formula (XII).

The PTFE aqueous dispersion may be any of an aqueous dispersion obtained by the polymerization, a dispersion obtained by concentrating this aqueous dispersion or subjecting the aqueous dispersion to dispersion stabilization treatment, and an aqueous dispersion obtained by dispersing powder of the PTFE into an aqueous medium in the presence of the surfactant.

The PTFE aqueous dispersion may also be produced as a purified aqueous dispersion by a method including a step (I) of bringing the aqueous dispersion obtained by the polymerization into contact with an anion exchange resin or a mixed bed containing an anion exchange resin and a cation exchange resin in the presence of a nonionic surfactant, and/or a step (II) of concentrating the aqueous dispersion obtained by this step such that the solid concentration is 30 to 70% by mass based on 100% by mass of the aqueous dispersion.

The nonionic surfactant may be, but is not limited to, any of those to be described later. The anion exchange resin to be used may be, but is not limited to, a known one. The contact with the anion exchange resin may be performed by a known method.

A method for producing the PTFE aqueous dispersion may include subjecting the aqueous dispersion obtained by the polymerization to the step (I), and subjecting the aqueous dispersion obtained in the step (I) to the step (II) to produce a purified aqueous dispersion. The step (II) may also be carried out without carrying out the step (I) to produce a purified aqueous dispersion. Further, the step (I) and the step (II) may be repeated or combined.

Examples of the anion exchange resin include known ones such as a strongly basic anion exchange resin containing as a functional group a -N⁺X⁻(CH₃)₃ group (wherein X is Cl or OH) or a strongly basic anion exchange resin containing a -N⁺X⁻(CH₃)₃(C₂H₄OH) group (wherein X is as described above). Specific examples thereof include those described in International Publication No. WO99/62858, International Publication No. WO03/020836, International Publication No. WO2004/078836, International Publication No. WO2013/027850, and International Publication No. WO2014/084399.

Examples of the cation exchange resin include, but are not limited to, known ones such as a strongly acidic cation exchange resin containing as a functional group a -SO₃⁻ group and a weakly acidic cation exchange resin containing as a functional group a -COO⁻ group. Of these, from the viewpoint of achieving good removal efficiency, a strongly acidic cation exchange resin is preferred, a H⁺ form strongly acidic cation exchange resin is more preferred.

The "mixed bed containing a cation exchange resin and an anion exchange resin" encompasses, but is not limited to, those in which the resins are filled into a single column, those in which the resins are filled into different columns, and those in which the resins are dispersed in an aqueous dispersion.

The concentration may be carried out by a known method. Specific examples include those described in International Publication No. WO2007/046482 and International Publication No. WO2014/084399.

Examples thereof include phase separation, centrifugal sedimentation, cloud point concentration, electric concentration, electrophoresis, filtration treatment using ultrafiltration, filtration treatment using a reverse osmosis membrane (RO membrane), and nanofiltration treatment. The concentration may concentrate the PTFE concentration to be 30 to 70% by mass in accordance with the application thereof. The concentration may impair the stability of the dispersion. In such a case, a dispersion stabilizer may be further added.

The dispersion stabilizer added may be the aforementioned nonionic surfactant or various other surfactants.

The nonionic surfactant can be, for example, appropriately selected from compounds described as nucleating agent above.

Also, the cloud point of the nonionic surfactant is a measure of its solubility in water. The surfactant used in the aqueous dispersion of the present disclosure has a cloud point of 30°C to 90°C, preferably 35°C to 85°C.

The total amount of the dispersion stabilizer is 0.5 to 20% by mass in terms of concentration, based on the solid of the dispersion. When the amount of the dispersion stabilizer is less than 0.5% by mass, the dispersion stability may deteriorate, and when the amount thereof is more than 20% by mass, dispersion effects commensurate with the amount thereof may not be obtained, which is impractical. The lower limit of the amount of the dispersion stabilizer is more preferably 2% by mass, while the upper limit thereof is more preferably 12% by mass.

The surfactant may be removed by the concentration operation.

The aqueous dispersion obtained by the polymerization may also be subjected to a dispersion stabilization treatment without concentration depending on the application, to prepare an aqueous dispersion having a long pot life. Examples of the dispersion stabilizer used include the same as those described above.

Examples of the applications of the PTFE aqueous dispersion include, but are not limited to, those in which the aqueous dispersion is directly used, such as coating achieved by applying the aqueous dispersion to a base material, drying the dispersion, and optionally sintering the workpiece; impregnation achieved by impregnating a porous support such as nonwoven fabric or a resin molded article into the aqueous dispersion, drying the dispersion, and preferably sintering the workpiece; and casting achieved by applying the aqueous dispersion to a base material such as glass, drying the dispersion, optionally immersing the workpiece into water to remove the base material and to thereby provide a thin film. Examples of such applications include aqueous dispersion-type coating materials, tent membranes, conveyor belts, binders for electrodes, and water repellents for electrodes.

The PTFE aqueous dispersion may be used in the form of an aqueous coating material for coating by mixing with a known compounding agent such as a pigment, a thickener, a dispersant, a defoaming agent, an antifreezing agent, a film-forming aid, or by compounding another polymer compound.

In addition, the aqueous dispersion may be used for additive applications, for example, for a binder application for preventing the active material of an electrode from falling off, or for a compound application such as a drip inhibitor.

For the purpose of adjusting the viscosity of the PTFE aqueous dispersion or improving the miscibility with a pigment or filler, the aqueous dispersion may preferably contain an anionic surfactant. The anionic surfactant may be appropriately added to an extent that causes no problems from the economic and environmental viewpoints.

Examples of the anionic surfactant include non-fluorinated anionic surfactants and fluorine-containing anionic surfactants. Preferred are fluorine-free, non-fluorinated anionic surfactants, i.e., hydrocarbon anion surfactants.

For the purpose of adjusting the viscosity, any known anionic surfactants may be used, for example, anionic surfactants disclosed in International Publication No. WO2013/146950 and International Publication No. WO2013/146947. Examples thereof include those having a saturated or unsaturated aliphatic chain having 6 to 40 carbon atoms, preferably 8 to 20 carbon atoms, and more preferably 9 to 13 carbon atoms. The saturated or unsaturated aliphatic chain may be either linear or branched, or may have a cyclic structure. The hydrocarbon may have aromaticity, or may have an aromatic group. The hydrocarbon may contain a hetero atom such as oxygen, nitrogen, or sulfur.

Examples of the anionic surfactants include alkyl sulfonates, alkyl sulfates, and alkyl aryl sulfates, and salts thereof; aliphatic (carboxylic) acids and salts thereof; and phosphoric acid alkyl esters and phosphoric acid alkyl aryl esters, and salts thereof. Of these, preferred are alkyl sulfonates, alkyl sulfates, and aliphatic carboxylic acids, and salts thereof.

Preferred examples of the alkyl sulfates and salts thereof include ammonium lauryl sulfate and sodium lauryl sulfate.

Preferred examples of the aliphatic carboxylic acids or salts thereof include succinic acid, decanoic acid, undecanoic acid, undecenoic acid, lauric acid, hydrododecanoic acid, or salts thereof.

The amount of the anionic surfactant added depends on the types of the anion surfactant and other compounding agents, and is preferably 10 ppm to 5,000 ppm based on the mass of the solid of the PTFE.

The lower limit of the amount of the anionic surfactant added is more preferably 50 ppm or more, still more preferably 100 ppm or more. Too small amount of the anionic surfactant may result in a poor viscosity adjusting effect.

The upper limit of the amount of the anionic surfactant added is more preferably 3,000 ppm or less, still more preferably 2,000 ppm or less. Too large an amount of the anionic surfactant may impair mechanical stability and storage stability of the aqueous dispersion.

For the purpose of adjusting the viscosity of the PTFE aqueous dispersion, components other than the anionic surfactants, such as methyl cellulose, alumina sol, polyvinyl alcohol, and carboxylated vinyl polymers may also be added.

For the purpose of adjusting the pH of the aqueous dispersion, a pH adjuster such as aqueous ammonia may also be added.

The PTFE aqueous dispersion may optionally contain other water soluble polymer compounds to an extent that does not impair the characteristics of the aqueous dispersion.

Examples of the other water soluble polymer compound include, but are not limited to, polyethylene oxide (dispersion stabilizer), polyethylene glycol (dispersion stabilizer), polyvinylpyrrolidone (dispersion stabilizer), phenol resin, urea resin, epoxy resin, melamine resin, polyester resin, polyether resin, silicone acrylic resin, silicone resin, silicone polyester resin, and polyurethane resin.

The aqueous dispersion may further contain a preservative, such as isothiazolone-based, azole-based, pronopol, chlorothalonil, methylsulfonyltetrachloropyridine, carbendazim, fluorfolpet, sodium diacetate, and diiodomethylparatolylsulfone.

The PTFE of the present disclosure may also suitably be obtained by a production method comprising at least one of a step of recovering the PTFE aqueous dispersion obtained by the above method,
a step of agglomerating PTFE in a PTFE aqueous dispersion,
a step of recovering the agglomerated PTFE, and
a step of drying the recovered PTFE at 100 to 300°C.

The upper limit of the drying temperature is preferably 250°C.

A powder can be produced by agglomerating PTFE contained in the aqueous dispersion. The PTFE of the present disclosure may be a powder. The aqueous dispersion of PTFE can be used for various applications as a powder after being agglomerated, washed, and dried. Agglomeration of the aqueous dispersion of the PTFE is usually performed by diluting the aqueous dispersion obtained by polymerization of polymer latex, for example, with water to a polymer concentration of 10 to 20% by mass, optionally adjusting the pH to a neutral or alkaline, and stirring the polymer more vigorously than during the reaction in a vessel equipped with a stirrer. The agglomeration may be performed under stirring while adding a water-soluble organic compound such as methanol or acetone, an inorganic salt such as potassium nitrate or ammonium carbonate, or an inorganic acid such as hydrochloric acid, sulfuric acid, or nitric acid as a coagulating agent. The agglomeration may be continuously performed using a device such as an inline mixer.

Pigment-containing or filler-containing PTFE powder in which pigments and fillers are uniformly mixed can be obtained by adding pigments for coloring and various fillers for improving mechanical properties before or during the aggregation.

The wet powder obtained by agglomerating the PTFE in the aqueous dispersion is usually dried by means of vacuum, high-frequency waves, or hot air while keeping the wet powder in a state in which the wet powder is less fluidized, preferably in a stationary state. Friction between the powder particles especially at high temperature usually has unfavorable effects on the PTFE in the form of fine powder. This is because the particles made of such PTFE are easily formed into fibrils even with a small shearing force and lose its original, stable particulate structure. The drying is performed at a drying temperature of 10 to 300°C, preferably 100 to 300°C. The upper limit of the drying temperature is preferably 250°C.

The PTFE of the present disclosure is a powder, the powder preferably has an average particle size (average secondary particle size) of 100 to 2,000 µm. The lower limit of the average secondary particle size is more preferably 200 µm or more, and still more preferably 300 µm or more. The upper limit of the average secondary particle size is preferably 1,000 µm or less, more preferably 800 µm or less, and particularly preferably 700 µm or less. The average particle size is a value measured in conformity with JIS K 6891.

The powder is substantially free from a fluorine-containing surfactant. The term "substantially free from fluorine-containing surfactant" in the powder as used herein means that the fluorine-containing surfactant is 10 ppm or less based on the polytetrafluoroethylene. The content of the fluorine-containing surfactant is preferably 1 ppm or less, more preferably 100 ppb or less, still more preferably 10 ppb or less, further preferably 1 ppb or less, and particularly preferably the fluorine-containing surfactant is below the detection limit as measured by liquid chromatography-mass spectrometry (LC/MS/MS).

The amount of the fluorine-containing surfactant can be determined by a known method. For example, it can be determined by LC/MS/MS analysis. First, the resulting powder is extracted into an organic solvent of methanol, and the extract liquid is subjected to LC/MS/MS analysis. Then, the molecular weight information is extracted from the LC/MS/MS spectrum to confirm agreement with the structural formula of the candidate surfactant.

Thereafter, aqueous solutions having five or more different concentration levels of the confirmed surfactant are prepared, and LC/MS/MS analysis is performed for each concentration level to prepare a calibration curve with the area.

The resulting powder is subjected to Soxhlet extraction with methanol, and the extracted liquid is subjected to LC/MS/MS analysis for quantitative measurement.

The fluorine-containing surfactant is the same as those exemplified in the production method. For example, the surfactant may be a fluorine atom-containing surfactant having, in the portion excluding the anionic group, 20 or less carbon atoms in total, may be a fluorine-containing surfactant having an anionic moiety having a molecular weight of 800 or less, and may be a fluorine-containing surfactant having a Log POW of 3.5 or less.

Examples of the anionic fluorine-containing surfactant include compounds represented by the general formula (N⁰), and specific examples thereof include compounds represented by the general formula (N¹), compounds represented by the general formula (N²), compounds represented by the general formula (N³), compounds represented by the general formula (N⁴), and compounds represented by the general formula (N⁵). More specific examples thereof include a perfluorocarboxylic acid (I) represented by the general formula (I), an ω-H perfluorocarboxylic acid (II) represented by the general formula (II), a perfluoropolyethercarboxylic acid (III) represented by the general formula (III), a perfluoroalkylalkylenecarboxylic acid (IV) represented by the general formula (IV), a perfluoroalkoxyfluorocarboxylic acid (V) represented by the general formula (V), a perfluoroalkylsulfonic acid (VI) represented by the general formula (VI), an ω-H perfluorosulfonic acid (VII) represented by the general formula (VII), a perfluoroalkylalkylene sulfonic acid (VIII) represented by the general formula (VIII), an alkylalkylene carboxylic acid (IX) represented by the general formula (IX), a fluorocarboxylic acid (X) represented by the general formula (X), an alkoxyfluorosulfonic acid (XI) represented by the general formula (XI), and a compound (XII) represented by the general formula (XII).

The PTFE of the present disclosure has stretchability and non melt processability, and is also useful as a material for a stretched body (porous body). By stretching the PTFE of the present disclosure, a stretched body having excellent breaking strength and stress relaxation time can be obtained. For example, the PTFE powder of the present disclosure mixed with an extrusion aid can be paste-extruded, rolled as necessary, dried to remove the extrusion aid, and then stretched in at least one direction to obtain a stretched body. Stretching allows easy formation of fibrils of PTFE of the present disclosure, resulting in a stretched body including nodes and fibers. This stretched body is also a porous body having a high porosity.

The present disclosure also relates to a stretched body comprising the PTFE described above.

The stretched body of the present disclosure can be produced by paste-extruding and rolling PTFE described above, followed by non-sintering or semi-sintering and stretching it in at least one direction (preferably roll-stretched in the rolling direction and then stretched in the transverse direction by a tenter). As the drawing conditions, a speed of 5 to 1,000%/sec and a drawing magnification of 500% or more are preferably employed. Stretching allows easy formation of fibrils of PTFE, resulting in a stretched body including nodes and fibers. The porosity of the stretched body is not limited, but is generally preferably in the range of 50 to 99%. The stretched body of the present disclosure may contain only PTFE, or may contain PTFE and the pigments and fillers, and it is preferable that the stretched body contains only PTFE.

The stretched body of the present disclosure preferably has a peak temperature of 325 to 350°C. Further, the stretched body of the present disclosure preferably has a peak temperature between 325 and 350°C and between 360 and 390°C. The peak temperature is a temperature corresponding to the maximum value in the heat-of-fusion curve when the stretched body is heated at a rate of 10°C/min using a differential scanning calorimeter (DSC).

The stretched body of the present disclosure more preferably has a breaking strength of 13.0 N or more, still more preferably 16.0 N or more, further preferably 19.0 N or more, further preferably 22.0 N or more, further preferably 23.0 N or more, further preferably 25.0 N or more, further preferably 28.0 N or more, further preferably 29.0 N or more, further preferably 30.0 N or more, further preferably 32.0 N or more, further preferably 35.0 N or more, further preferably 37.0 N or more, and further preferably 40.0 N or more. The higher the breaking strength, the better, but it may be 100 N or less, 80.0 N or less, and 50.0 N or less.

The breaking strength of the stretched body is determined by clamping the stretched body by movable jaws having a gauge length of 5.0 cm and performing a tensile test at 25°C at a rate of 300 mm/min, in which the strength at the time of breaking is taken as the breaking strength.

The stretched body of the present disclosure preferably has a stress relaxation time of 50 seconds or more, more preferably 80 seconds or more, still more preferably 100 seconds or more, and may be preferably 120 seconds or more, 150 seconds or more, 190 seconds or more, 200 seconds or more, 220 seconds or more, 240 seconds or more, or 300 seconds or more. The stress relaxation time is a value measured by the following method.

In order to determine the stress relaxation time of the stretched body, both ends of the stretched body are tied to a fixture to form a tightly stretched sample having an overall length of 8 inches (20 cm), and the fixture is then placed in an oven through a (covered) slit on the side of the oven, while keeping the oven at 390°C. The time it takes for the sample to break after it is placed in the oven is taken as the stress relaxation time.

The stretched body of the present disclosure preferably has a porosity in the range of 30% to 99%. The porosity is preferably 60% or more, more preferably 70% or more. Too small proportion of PTFE in the stretched body may result in insufficient strength of the stretched body, so the porosity is preferably 98% or less, preferably 95% or less, and more preferably 90% or less.

The porosity of the stretched body can be calculated from the following formula using the apparent density ρ. $Porosity \left(%\right) = \left[\left(2.2-ρ\right)/2.2\right] \times 100$

In the formula, 2.2 is the true density (g/cm³) of PTFE.

Regarding the density ρ of the stretched body, when the stretched body is in the form of a film or a sheet, a mass of the sample cut into a specific size is measured by a precision scale, and the density of the sample is calculated from the measured mass and the film thickness of the sample by the following formula. $ρ = M / \left(4.0\times 12.0\times t\right)$
ρ = density (film density) (g/cm³)
M = mass (g)
t = film thickness (cm)

The measurement and calculation are performed at three points, and the average value thereof is taken as the film density.

As for the film thickness, five stretched bodies are stacked and the total film thickness is measured using a film thickness meter, and the value obtained by dividing the value by five is taken as the thickness of one film.

Regarding the density ρ of the stretched body, when the stretched body has a cylindrical shape, a mass of the sample cut into a certain length is measured by a precision scale, and the density of the sample is calculated from the measured mass and the outer diameter of the sample by the following formula. $ρ = M / \left(r\times r\times π\right) \times L$
ρ = density (g/cm³)
M = mass (g)
r = radius (cm)
L = length (cm)
π = pi

The outer diameter of the stretched body is measured using a laser displacement sensor. The radius is the value obtained by dividing the value by 2.

The above measurement and calculation are performed at three points, and the average value thereof is taken as the density.

The stretched body of the present disclosure is substantially free of a fluorine-containing surfactant. In the stretched body herein, the term "substantially free from fluorine-containing surfactant" means that the fluorine-containing surfactant is 10 ppm or less based on the polytetrafluoroethylene. The content of the fluorine-containing surfactant is preferably 1 ppm or less, more preferably 100 ppb or less, still more preferably 10 ppb or less, further preferably 1 ppb or less, and particularly preferably the fluorine-containing surfactant is below the detection limit as measured by liquid chromatography-mass spectrometry (LC/MS/MS).

The amount of the fluorine-containing surfactant can be determined by a known method. For example, it can be determined by LC/MS/MS analysis. First, the resulting refined stretched body is extracted into an organic solvent of methanol, and the extract liquid is subjected to LC/MS/MS analysis. Then, the molecular weight information is extracted from the LC/MS/MS spectrum to confirm agreement with the structural formula of the candidate surfactant.

Thereafter, aqueous solutions having five or more different concentration levels of the confirmed surfactant are prepared, and LC/MS/MS analysis is performed for each concentration level to prepare a calibration curve with the area.

The obtained finely divided stretched body is subjected to Soxhlet extraction with methanol, and the extracted liquid is subjected to LC/MS analysis for quantitative measurement.

The fluorine-containing surfactant is the same as those exemplified in the production method of the present disclosure. For example, the surfactant may be a fluorine atom-containing surfactant having, in the portion excluding the anionic group, 20 or less carbon atoms in total, may be a fluorine-containing surfactant having an anionic moiety having a molecular weight of 800 or less, and may be a fluorine-containing surfactant having a Log POW of 3.5 or less.

Examples of the anionic fluorine-containing surfactant include compounds represented by the general formula (N⁰), and specific examples thereof include compounds represented by the general formula (N¹), compounds represented by the general formula (N²), compounds represented by the general formula (N³), compounds represented by the general formula (N⁴), and compounds represented by the general formula (N⁵). More specific examples thereof include a perfluorocarboxylic acid (I) represented by the general formula (I), an ω-H perfluorocarboxylic acid (II) represented by the general formula (II), a perfluoropolyethercarboxylic acid (III) represented by the general formula (III), a perfluoroalkylalkylenecarboxylic acid (IV) represented by the general formula (IV), a perfluoroalkoxyfluorocarboxylic acid (V) represented by the general formula (V), a perfluoroalkylsulfonic acid (VI) represented by the general formula (VI), an ω-H perfluorosulfonic acid (VII) represented by the general formula (VII), a perfluoroalkylalkylene sulfonic acid (VIII) represented by the general formula (VIII), an alkylalkylene carboxylic acid (IX) represented by the general formula (IX), a fluorocarboxylic acid (X) represented by the general formula (X), an alkoxyfluorosulfonic acid (XI) represented by the general formula (XI), and a compound (XII) represented by the general formula (XII).

The stretched body of the present disclosure is also preferably in the form of a film, a tube, fibers, or rods.

When the stretched body of the present disclosure is in the form of a film (stretched film or porous film), the stretched body can be formed by stretching by a known PTFE stretching method.

Preferably, roll-stretching a sheet-shaped or rod-shaped paste extrudate in an extruding direction can provide a uniaxially stretched film.

Further stretching in a transverse direction using a tenter, for example, can provide a biaxially stretched film.

Semi-sintering treatment is also preferably performed before stretching.

The stretched body of the present disclosure is a porous body having a high porosity, and
can suitably be used as a filter material for a variety of microfiltration filters such as air filters and chemical filters and a support member for polymer electrolyte films.

The PTFE stretched body is also useful as a material of products used in the fields of textiles, of medical treatment, of electrochemistry, of sealants, of air filters, of ventilation/internal pressure adjustment, of liquid filters, and of consumer goods.

The following provides examples of specific applications.

### - Electrochemical field

Examples of the applications in this field include prepregs for dielectric materials, EMI-shielding materials, and heat conductive materials. More specifically, examples thereof include printed circuit boards, electromagnetic interference shielding materials, insulating heat conductive materials, and insulating materials.

### - Sealant field

Examples of the applications in this field include gaskets, packings, pump diaphragms, pump tubes, and sealants for aircraft.

### - Air filter field

Examples of the applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN filters (for industries), catalyst filters (for exhaust gas treatment), adsorbent-attached filters (for HDD embedment), adsorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

### - Ventilation/internal pressure adjustment field

Examples of the applications in this field include materials for freeze drying such as vessels for freeze drying, ventilation materials for automobiles for electronic circuits and lamps, applications relating to vessels such as vessel caps, protective ventilation for electronic devices, including small devices such as tablet terminals and mobile phone terminals, and ventilation for medical treatment.

### - Liquid filter field

Examples of the applications in this field include liquid filters for semiconductors (for production of semiconductors), hydrophilic PTFE filters (for production of semiconductors), filters for chemicals (for liquid chemical treatment), filters for pure water production lines (for production of pure water), and back-washing liquid filters (for treatment of industrial discharge water).

### - Consumer goods field

Examples of the applications in this field include clothes, cable guides (movable wires for motorcycles), clothes for motor cyclists, cast liners (medical supporters), filters for cleaners, bagpipes (musical instrument), cables (signal cables for guitars), and strings (for string instrument).

### - Textile field

Examples of the applications in this field include PTFE fibers (fiber materials), machine threads (textiles), weaving yarns (textiles), and ropes.

### - Medical treatment field

Examples of the applications in this field include implants (stretched articles), artificial blood vessels, catheters, general surgical operations (tissue reinforcing materials), products for head and neck (dura mater alternatives), oral health (tissue regenerative medicine), and orthopedics (bandages).

### EXAMPLES

The present disclosure is described with reference to examples, but the present disclosure is not intended to be limited by these examples.

In Examples, physical properties were measured by the following method.

### (1) Standard specific gravity (SSG)

Using a sample molded in conformity with ASTM D4895-89, the SSG was determined by the water replacement method in conformity with ASTM D-792.

### (2) Thermal instability index (TII)

Measured in conformity with ASTM D4895-89.

### (3) Polymer solid content

In an air dryer, 1 g of PTFE aqueous dispersion was dried at a condition of 150°C for 60 minutes, and the ratio of the mass of the non-volatile matter to the mass of the aqueous dispersion (1 g) was expressed by percentage and taken as the solid concentration thereof.

### (4) Average primary particle size

The PTFE aqueous dispersion was diluted with water to a solid content of 0.15% by mass. The transmittance of incident light at 550 nm relative to the unit length of the resulting diluted latex was determined and the number-based length average particle size was determined by measuring the Feret diameter with a transmission electron microscope (TEM). Based on these values, a calibration curve is drawn. Using this calibration curve, the average primary particle size is determined from the measured transmittance of the projected light at 550 nm of each sample.

### (5) Measurement of extrusion pressure

21.7 g of a lubricant (trade name: Isopar H (R), available from Exxon) was added to 100 g of a fine powder, and mixed for 3 minutes in a glass bottle at room temperature. Then, the glass bottle is left to stand at room temperature (25°C) for at least 1 hour before extrusion to obtain a lubricated resin. The lubricated resin is paste extruded at a reduction ratio of 100:1 at room temperature through an orifice (diameter 2.5 mm, land length 11 mm, entrance angle 30°) into a uniform beading (beading: extruded body). The extrusion speed, i.e. ram speed, is 20 inch/min (51 cm/min). The value obtained by measuring the load when the extrusion load became balanced in the paste extrusion and dividing the measured load by the cross-sectional area of the cylinder used in the paste extrusion was taken as the extrusion pressure.

### (6) Stretching test

The beading obtained by paste extrusion is heated at 230°C for 30 minutes to remove the lubricant from the beading. Next, an appropriate length of the beading (extruded body) is cut and clamped at each end leaving a space of 1.5 inch (38 mm) between clamps, and heated to 300°C in an air circulation furnace. Then, the clamps were moved apart from each other at a desired rate (stretch rate) until the separation distance corresponds to a desired stretch (total stretch) to perform the stretch test. This stretch method essentially followed a method disclosed in U.S. Patent No. 4,576,869, except that the extrusion speed is different (51 cm/min instead of 84 cm/min). "Stretch" is an increase in length due to stretching, usually expressed in relation to original length. In the production method, the stretching rate was 1,000%/sec, and the total stretching was 2,400%.

### (7-1) Breaking strength A

The stretched beading obtained in the stretching test (produced by stretching the beading) was clamped by movable jaws having a gauge length of 5.0 cm, and a tensile test was performed at 25°C at a rate of 300 mm/min, and the strength at the time of breaking was determined as the breaking strength.

### (7-2) Breaking strength B

The stretched beading obtained by the same method except that the clamp spacing was changed to 2.0 inch (51 mm) and the stretch rate was changed to 100%/sec in the stretching test was subjected to a tensile test at a rate of 300 mm/min at 25°C, and the strength at the time of breaking was determined as the breaking strength B.

### (7-3) Breaking strength C

The resulting wet PTFE powder was dried at 285°C for 18 hours to obtain a PTFE powder. The resulting PTFE powder was extruded by the same method as the extrusion pressure measuring method to obtain beadings. The resulting beading was obtained by the same method as in the stretching test to obtain a stretched beading. The resulting stretched beading was subjected to a tensile test at a rate of 300 mm/min at 25°C, and the breaking strength was determined as the breaking strength C.

### (7-4) Breaking strength D

The resulting wet PTFE powder was dried at 285°C for 18 hours to obtain a PTFE powder. The resulting PTFE powder was extruded by the same method as the extrusion pressure measuring method to obtain beadings. The stretched beading was obtained by the same method as the measurement of breaking strength C except that the clamp spacing was changed to 2.0 inch (51 mm) and the stretch rate was changed to 100%/sec in the stretching test. The resulting stretched beading was subjected to a tensile test at a rate of 300 mm/min at 25°C, and the breaking strength was determined as the breaking strength D.

### (8) Stress relaxation time

Both ends of the stretched beading obtained in the stretching test are tied to a fixture to form a tightly stretched beading sample having an overall length of 8 inches (20 cm). The fixture is placed in an oven through a (covered) slit on the side of the oven, while keeping the oven at 390°C. The time it takes for the beading sample to break after it was placed in the oven was determined as the stress relaxation time.

### (9) Appearance of stretched product

The appearance of the stretched beading (those produced by stretching the beadings) obtained in the stretching test was visually observed.

### (10) 0.1% mass loss temperature

Approximately 10 mg of its powder, which has no history of heating to a temperature of 300°C or more, is precisely weighed and stored in a dedicated aluminum pan to measure TG-DTA (thermogravimetric - differential thermal analyzer). The 0.1% mass loss temperature is the temperature corresponding to the point at which the weight of the aluminum pan is reduced by 0.1% by mass by heating the aluminum pan under the condition of 10°C/min in the temperature range from 25°C to 600°C in the air atmosphere.

### (11) 1.0% mass loss temperature

Approximately 10 mg of its powder, which has no history of heating to a temperature of 300°C or more, is precisely weighed and stored in a dedicated aluminum pan to measure TG-DTA (thermogravimetric - differential thermal analyzer). The 1.0% mass loss temperature is the temperature corresponding to the point at which the weight of the aluminum pan is reduced by 1.0% by mass by heating the aluminum pan under the condition of 10°C/min in the temperature range from 25°C to 600°C in the air atmosphere.

### (12) Lightness (L*)

A mold having an inner diameter of 50 mm is filled with 210 g of powder, pressure is applied over 30 seconds until the final pressure reaches 200 kg/cm², and the pressure is maintained for another 5 minutes to produce a premolded body. The premolded body was taken out from the mold, and the premolded body was heat-treated in a hot air circulation electric furnace at 100°C for 2 hours, 200°C for 4 hours, and 370°C for 5 hours, and then cooled to room temperature at a rate of 50°C/hour to obtain a columnar sintered body. This sintered body is cut along the side surface to produce a strip-shaped sheet having a thickness of 0.5 mm. A test piece is cut from this strip-shaped sheet to a size of 100 mm × 50 mm, and the lightness (L*) of the strip-shaped sheet is measured using a color difference meter (CR-400 manufactured by Konica Minolta Optics Co., Ltd.).

### (13) Thermal shrinkage rate

A mold having an inner diameter of 50 mm is filled with 210 g of powder, pressure is applied over 30 seconds until the final pressure reaches 200 kg/cm², and the pressure is maintained for another 5 minutes to produce a premolded body. The premolded body is taken out from the mold, and the diameter (A) of the premolded body is measured. Thereafter, the premolded body was heat-treated in a hot air circulation electric furnace at 100°C for 2 hours, 200°C for 4 hours, and 370°C for 5 hours, and then cooled to room temperature at a rate of 50°C/hour to obtain a columnar sintered body. The diameter (B) of the resulting sintered body is measured, and the thermal shrinkage rate is calculated by the following formula. $Thermal shrinkage rate = \left(\left(A\right)-\left(B\right)\right) / \left(A\right) * 100$

### (14) Contact angle

A mold having an inner diameter of 50 mm is filled with 210 g of powder, pressure is applied over 30 seconds until the final pressure reaches 200 kg/cm², and the pressure is maintained for another 5 minutes to produce a premolded body. The premolded body was taken out from the mold, and the premolded body was heat-treated in a hot air circulation electric furnace at 100°C for 2 hours, 200°C for 4 hours, and 370°C for 5 hours, and then cooled to room temperature at a rate of 50°C/hour to obtain a columnar sintered body. This sintered body is cut along the side surface to produce a strip-shaped sheet having a thickness of 0.5 mm. A test piece is cut from this strip-shaped sheet to a size of 50 mm × 50 mm, and the contact angle of the surface corresponding to the inside of the strip-shaped sheet is measured using a portable contact angle meter (PCA-1 manufactured by Kyowa Interface Science Co., Ltd.). The contact angle was calculated by depositing a water droplet on a test piece, capturing the droplet shape as an image by a CCD camera, obtaining the radius (r) and height (h) of the droplet image by image processing, and substituting them into the following equation. (θ/2 method) $θ = 2 arctan \left(h/r\right)$

### (15) Peak temperature

Approximately 10 mg of its powder, which has no history of heating to a temperature of 300°C or more, is precisely weighed and stored in a dedicated aluminum pan to measure TG-DTA (thermogravimetric - differential thermal analyzer). The peak temperature is set to a temperature corresponding to the minimum value of the differential thermal (DTA) curve by raising the temperature of the aluminum pan under the condition of 10°C/min in the temperature range from 25°C to 600°C under the atmospheric atmosphere.

### (16) Melting point

Approximately 10 mg of its powder, which has no history of heating to a temperature of 300°C or more, is precisely weighed and stored in a dedicated aluminum pan to measure TG-DTA (thermogravimetric - differential thermal analyzer). The melting point is the temperature corresponding to the minimum value of the differential thermal (DTA) curve obtained by heating the aluminum pan under the condition of 10°C/min in the temperature range from 25°C to 600°C in the air atmosphere.

### Synthesis Example 1

A mixture of 10-undecene-1-ol (16 g), 1,4-benzoquinone (10.2 g), DMF (160 mL), water (16 mL), and PdCl2 (0.34 g) was heated and stirred at 90°C for 12 hours.

The solvent was then distilled off under reduced pressure. The resulting residue was purified by liquid separation and column chromatography to obtain 11-hydroxyundecane-2-one (15.4 g).

The spectral data of the resulting 11-hydroxyundecane-2-one is shown below.
1H-NMR (CDCl3) δ ppm: 1.29-1.49 (m, 14H), 2.08 (s, 3H), 2.45 (J = 7.6, t, 2H), 3.51 (J = 6.5, t, 2H)

A mixture of 11-hydroxyundecane-2-one (13 g), sulfur trioxide triethylamine complex (13.9 g) and tetrahydrofuran (140 mL) was stirred at 50°C for 12 hours. A solution of sodium methoxide (3.8 g)/methanol (12 mL) was added dropwise to the reaction solution.

The precipitated solid was filtered under reduced pressure and washed with ethyl acetate to obtain sodium 10-oxoundecyl sulfate (15.5 g) (hereinafter referred to as surfactant A). The spectral data of the resulting sodium 10-oxoundecyl sulfate is shown below.
1H-NMR (CDCl3) δ ppm: 1.08 (J = 6.8, m, 10H), 1.32 (m, 2H), 1.45 (m, 2H), 1.98 (s, 3H), 2.33 (J = 7.6, t, 2H), 3.83 (J = 6.5, t, 2H)

### Synthesis Example 2

To a glass reactor with an internal volume of 1 L and equipped with a stirrer, 588.6 g of deionized water and 70.0 g of the surfactant A were added. The reactor was sealed, and the system was purged with nitrogen, so that oxygen was removed. The reactor was heated up to 90°C and pressurized to 0.4 MPa with nitrogen. Then, 41.4 g of ammonium persulfate (APS) was charged thereinto and stirred for 3 hours. The stirring was stopped, the pressure was released until the reactor was adjusted to the atmospheric pressure, and the reactor was cooled to obtain an aqueous surfactant solution B.

### Example 1

To a reactor made of SUS with an internal volume of 6 L and equipped with a stirrer, 3,600 g of deionized degassed water, 180 g of paraffin wax, and 0.540 g of surfactant A were added. The reactor was sealed and the system was purged with nitrogen, so that oxygen was removed. The reactor was heated up to 70°C and TFE was filled into the reactor such that the reactor was adjusted to 2.70 MPa. Then, 0.620 g of ammonium persulfate (APS) and 1.488 g of disuccinic acid peroxide (DSP) serving as polymerization initiators were charged thereinto. TFE was charged so as to keep the reaction pressure constant at 2.70 MPa. At the same time as TFE was started to be charged, an aqueous surfactant solution B was continuously started to be charged. When 1,400 g of TFE was charged, the stirring was stopped and the pressure was released until the reactor was adjusted to the atmospheric pressure. By the end of the reaction, 103 g of the aqueous surfactant solution B was charged. The content was collected from the reactor and cooled so that the paraffin wax was separated, whereby a PTFE aqueous dispersion was obtained.

The solid content of the resulting PTFE aqueous dispersion was 28.0% by mass, and the average primary particle size was 322 nm.

The resulting aqueous dispersion of PTFE was diluted with deionized water to have a solid content of about 10% by mass and coagulated under a high-speed stirring condition. The coagulated wet powder was dried at 210°C for 18 hours. Various physical properties of the resulting PTFE powder were measured. The results are shown in Tables 1 and 2.

The melting point was 339°C, the same as the peak temperature.

### Example 2

A PTFE aqueous dispersion was obtained in the same manner as in Example 1 except that 20 g of deionized degassed water in which 0.76 g of hydroquinone was dissolved was added when 540 g of TFE was charged, and stirring was stopped when 1,200 g of TFE was charged.

The solid content of the resulting PTFE aqueous dispersion was 25.9% by mass, and the average primary particle size was 290 nm.

Various physical properties of the PTFE powder obtained as in Example 1 were measured. The results are shown in Tables 1 and 2.

The melting point was 344°C, the same as the peak temperature.

### Example 3

To a reactor made of SUS with an internal volume of 6 L and equipped with a stirrer, 3,480 g of deionized water, 100 g of paraffin wax, and 0.122 g of surfactant A were added. The reactor was sealed and the system was purged with nitrogen, so that oxygen was removed. The contents of the reactor were then warmed to 60°C and further purged with TFE. TFE was added into the reactor until the pressure reached 0.73 MPa. 420 mg of ammonium persulfate (APS) initiator and 700 mg of disuccinic acid peroxide (DSP) dissolved in 20 g of deionized water was injected into the reactor and the pressure in the reactor was adjusted to 0.78 MPa. A drop in pressure occurred after injection of the initiators, indicating the initiation of polymerization. TFE was charged so as to standardize the reaction pressure to 0.78 MPa. Immediately after the initiation of polymerization, the aqueous surfactant solution B was continuously added to the reactor. The TFE monomer was added to the reactor to maintain the pressure, and when 740 g of TFE was charged, stirring was stopped and the reaction was completed. By the end of the reaction, 36.8 g of aqueous surfactant solution B was added. Then, the reactor was evacuated to normal pressure, and the contents were taken out from the reactor and cooled. After cooling, the paraffin wax was removed from the PTFE aqueous dispersion.

The solid content of the resulting PTFE aqueous dispersion was 17.5% by mass, and the average primary particle size was 317 nm.

The resulting PTFE aqueous dispersion was diluted with deionized water to have a solid content of about 10% by mass and coagulated under a high-speed stirring condition, and separated into coagulated wet powder and coagulated discharge water. The coagulated wet powder was dried at 210°C for 18 hours. Various physical properties of the resulting PTFE powder were measured. The results are shown in Tables 1 and 2.

The melting point was 344°C, the same as the peak temperature.

### Preparation Example 1

To 16 g of deionized water, 0.273 g of lauric acid was added, and 2.77 g of a 2.8% aqueous solution of ammonia was gradually added with stirring to obtain an aqueous solution C.

### Preparation Example 2

To 100 g of deionized water, 10 g of lauric acid was added, and 25 g of an aqueous solution of 10% ammonia was gradually added with stirring to obtain an aqueous solution D. The pH at this time was 9.6.

### Example 4

To a reactor made of SUS with an internal volume of 3 L and equipped with a stirrer, 1,748 g of deionized water, 90 g of paraffin wax, an aqueous solution C, and 0.5 g of ammonium oxalate were added. The pH of the aqueous dispersion at this time was 9.0. The reactor was sealed and the system was purged with nitrogen to remove oxygen. The reactor was heated up to 70°C, 2.0 g of HFP was added thereto, and the pressure was further raised by TFE to 2.70 MPa. The reaction was performed by continuously charging a 0.5% by mass potassium permanganate aqueous solution as a polymerization initiator into the reactor. TFE was charged so as to standardize the reaction pressure to 2.70 MPa. When 80 g of TFE was charged, the stirring was stopped and the pressure was released until the reaction pressure was adjusted to the atmospheric pressure. The reactor was immediately charged with TFE, the reaction pressure was adjusted to 2.70 MPa, and stirring was restarted to continue the reaction.

The aqueous solution D was immediately started to be continuously charged into the reactor. When 590 g of TFE was charged, the stirring was stopped and the pressure was released until the reactor was adjusted to the atmospheric pressure. By the end of the reaction, 72.4 g of potassium permanganate aqueous solution and 30 g of aqueous solution D were charged. The aqueous dispersion was collected from the reactor and cooled so that the paraffin wax was separated, whereby a PTFE aqueous dispersion was obtained. The pH of the resulting PTFE aqueous dispersion was 8.3.

The resulting PTFE aqueous dispersion was diluted with water to a concentration of 10%, coagulated under high-speed stirring conditions, and separated from water to obtain a wet PTFE powder. The obtained wet PTFE powder was dried at 240°C for 18 hours. The physical properties of the resulting PTFE powder are shown in Tables 2 to 4 below.

### Example 5

The reaction was performed in the same manner as in Example 4, and stirring was stopped when 680 g of TFE was charged. By the end of the reaction, 56.0 g of potassium permanganate aqueous solution and 26.2 g of aqueous solution D were charged. The pH of the resulting PTFE aqueous dispersion was 8.8.

The dispersion was coagulated and dried in the same manner as in Example 4. The physical properties of the resulting PTFE powder are shown in Tables 2 to 4 below.

### Preparation Example 3

To 100 g of deionized water, 9.9 g of lauric acid was added, and with stirring, 14 g of an aqueous solution of 10% ammonia was charged to obtain an aqueous solution E. The pH at this time was 9.5.

### Example 6

Reactants were charged into the reactor in the same manner as in Example 4 except that 0.273 g of lauric acid was used instead of the aqueous solution C. The pH of the aqueous dispersion at this time was 6.7.

Thereafter, the reaction was performed in the same manner as in Example 4. The reaction was continued in the same manner except that the aqueous solution E was continuously charged into the reactor instead of the aqueous solution D during the reaction. When 800 g of TFE was charged, stirring was stopped and the same operation as in Example 4 was performed. By the end of the reaction, 52.2 g of potassium permanganate aqueous solution and 25.5 g of aqueous solution E were charged.

The pH of the resulting PTFE aqueous dispersion was 8.2. The dispersion was coagulated and dried in the same manner as in Example 4. The physical properties of the resulting PTFE powder are shown in Tables 2 to 4 below.

**[Table 1]**

| | Standard specific gravity | Thermal instability index | Extrusion pressure | Breaking strength A | Stress relaxation time | Appearance of stretched body |
|---|---|---|---|---|---|---|
| Unit | - | - | MPa | N | sec | - |
| Example 1 | 2.159 | 46 | 17.5 | 16.6 | 125 | Uniform |
| Example 2 | 2.151 | 42 | 19.5 | 20.3 | 312 | Uniform |
| Example 3 | 2.160 | 34 | 17.0 | 16.2 | 246 | Uniform |

**[Table 2]**

| | 0.1% mass loss temperature | 1.0% mass loss temperature | Lightness (L*) | Peak temperature | Thermal shrinkage rate | Contact angle |
|---|---|---|---|---|---|---|
| Unit | °C | °C | - | °C | % | ° |
| Example 1 | 395 | 490 | 46 | 339 | 7.4 | 114 |
| Example 2 | 397 | 492 | | 344 | | |
| Example 3 | 364 | 492 | | 344 | | |
| Example 4 | 380 | 490 | | 342 | | |
| Example 5 | 391 | 491 | | 342 | | |
| Example 6 | | | | | | |

**[Table 3]**

| | Solid content | Average primary particle size | Standard specific gravity | Thermal instability index | HFP content |
|---|---|---|---|---|---|
| Unit | % by mass | nm | - | - | % by mass |
| Example 4 | 24.1 | 223 | 2.175 | 50 | 0.003 |
| Example 5 | 27.1 | 220 | 2.170 | 44 | 0.002 |
| Example 6 | 30.5 | 218 | 2.175 | 42 | 0.002 |

**[Table 4]**

| | Extrusion pressure | Breaking strength A | Breaking strength B | Breaking strength C | Breaking strength D | Stress relaxation time | Appearance of stretched body |
|---|---|---|---|---|---|---|---|
| Unit | MPa | N | N | N | N | Seconds | - |
| Example 4 | 26.9 | 33.0 | 23.0 | | | 120 | Uniform |
| Example 5 | 28.6 | 36.0 | 30.0 | | | 122 | Uniform |
| Example 6 | 26.7 | 32.3 | 23.5 | 40.6 | 35.4 | 200 | Uniform |

## Claims

1. A polytetrafluoroethylene (PTFE) which is a tetrafluoroethylene (TFE) homopolymer or a copolymer of TFE and 0.00001-1.0 mass% of units of a modifying monomer, and which
(i) has a breaking strength of ≥ 10.0 N;
(ii) has a 0.1% mass loss temperature of ≤ 400°C, measured by the method defined in the description, or
a 1.0% mass loss temperature of ≤ 492°C, measured by the method defined in the description, or
a thermal instability index (TII) of ≥ 20, measured according to ASTM D 4895-89; and
(iii) contains ≤ 10 ppm of fluorine-containing surfactant.

2. The PTFE of claim 1, which has a stress relaxation time of ≥ 50 sec, measured by the method defined in the description.

3. The PTFE of claim 1 or 2, which has an extrusion pressure of ≤ 30.0 MPa, measured by the method defined in the description.

4. The PTFE of any of claims 1-3, wherein a sheet cut out from a sintered body obtained by molding the PTFE and heat-treating at 100°C for 2 h, at 200°C for 4 h and at 370°C for 5 h has a lightness L* of ≤ 90.0, measured by the method defined in the description by using a color difference meter.

5. The PTFE of any of claims 1-4, wherein a sintered body obtained by molding the PTFE and heat-treating at 100°C for 2 h, at 200°C for 4 h and at 370°C for 5 h has a thermal shrinkage rate of ≥ 7.0%, measured by the method defined in the description.

6. The PTFE of any of claims 1-5, wherein the contact angle of a surface corresponding to an inner side of a sintered body of a sheet cut out from the sintered body, the sintered body being obtained by molding the PTFE and heat-treating at 100°C for 2 h, at 200°C for 4 h and at 370°C for 5 h, is ≥ 107°, measured by the method defined in the description by using a portable contact angle meter.

7. The PTFE of any of claims 1-6, which is a powder.

8. A stretched body comprising the PTFE of any of claims 1-7.

## Patentansprüche

1. Polytetrafluorethylen (PTFE), das ein Tetrafluorethylen (TFE)-Homopolymer oder ein Copolymer aus TFE und 0,00001-1,0 Massenprozent Einheiten eines modifizierenden Monomers ist und das
(i) eine Bruchfestigkeit von ≥ 10,0 N aufweist;
(ii) eine Temperatur von ≤ 400 °C bei einem Massenverlust von 0,1 %, gemessen nach dem in der Beschreibung definierten Verfahren, oder
eine Temperatur von ≤ 492 °C bei einem Massenverlust von 1,0 %, gemessen nach dem in der Beschreibung definierten Verfahren, oder
einen thermischen Instabilitätsindex (TII) von ≥ 20 aufweist, gemessen entsprechend ASTM D 4895-89; und
(iii) ≤ 10 ppm eines fluorhaltigen Tensids enthält.

2. PTFE nach Anspruch 1, das eine Spannungsrelaxationszeit von ≥ 50 sec aufweist, gemessen nach dem in der Beschreibung definierten Verfahren.

3. PTFE nach Anspruch 1 oder 2, das einen Extrusionsdruck von ≤ 30,0 MPa aufweist, gemessen nach dem in der Beschreibung definierten Verfahren.

4. PTFE nach einem der Ansprüche 1 bis 3, wobei eine aus einem Sinterkörper ausgeschnittene Folie, die durch Formen des PTFE und Wärmebehandlung bei 100 °C für 2 h, bei 200 °C für 4 h und bei 370 °C für 5 h erhalten wurde, einen Helligkeitswert L* von ≤ 90,0 aufweist, gemessen nach dem in der Beschreibung definierten Verfahren unter Verwendung eines Farbdifferenzmessers.

5. PTFE nach einem der Ansprüche 1 bis 4, wobei ein durch Formen des PTFE und Wärmebehandlung bei 100 °C für 2 h, bei 200 °C für 4 h und bei 370 °C für 5 h erhaltener Sinterkörper eine thermische Schrumpfrate von ≥ 7,0 % aufweist, gemessen nach dem in der Beschreibung definierten Verfahren.

6. PTFE nach einem der Ansprüche 1 bis 5, wobei der Kontaktwinkel einer Oberfläche, die einer Innenseite eines Sinterkörpers einer aus dem Sinterkörper ausgeschnittenen Folie entspricht, wobei der Sinterkörper durch Formen des PTFE und Wärmebehandlung bei 100 °C für 2 h, bei 200 °C für 4 h und bei 370 °C für 5 h erhalten wird, ≥ 107° beträgt, gemessen nach dem in der Beschreibung definierten Verfahren unter Verwendung eines tragbaren Kontaktwinkelmessers.

7. PTFE nach einem der Ansprüche 1 bis 6, das ein Pulver ist.

8. Gestreckter Körper, der das PTFE nach einem der Ansprüche 1 bis 7 umfasst.

## Revendications

1. Polytétrafluoroéthylène (PTFE) qui est un homopolymère de tétrafluoroéthylène (TFE) ou un copolymère de TFE et de 0,00001-1,0 % en masse de motifs d'un monomère modificateur, et qui
(i) présente une résistance à la rupture ≥ 10,0 N ;
(ii) présente une température de perte de masse de 0,1 % ≤ 400 °C, mesurée par le procédé défini dans la description, ou
une température de perte de masse de 1,0 % ≤ 492 °C, mesurée par le procédé défini dans la description, ou
un indice d'instabilité thermique (TII) ≥ 20, mesuré selon la norme ASTM D 4895-89 ; et
(iii) contient ≤ 10 ppm de tensioactif contenant du fluor.

2. PTFE selon la revendication 1, qui présente un temps de relaxation sous contrainte ≥ 50 sec, mesuré par le procédé défini dans la description.

3. PTFE selon la revendication 1 ou la revendication 2, qui présente une pression d'extrusion ≤ 30,0 MPa, mesurée par le procédé défini dans la description.

4. PTFE selon l'une quelconque des revendications 1 à 3, dans lequel une feuille découpée à partir d'un corps fritté obtenu par moulage du PTFE et traitement thermique à 100 °C pendant 2 h, à 200 °C pendant 4 h et à 370 °C pendant 5 h présente une légèreté L* ≤ 90,0, mesurée par le procédé défini dans la description en utilisant un indicateur de différence de couleur.

5. PTFE selon l'une quelconque des revendications 1 à 4, dans lequel un corps fritté obtenu par moulage du PTFE et traitement thermique à 100 °C pendant 2 h, à 200 °C pendant 4 h et à 370 °C pendant 5 h présente un taux de retrait thermique ≥ 7,0 %, mesuré par le procédé défini dans la description.

6. PTFE selon l'une quelconque des revendications 1 à 5, dans lequel l'angle de contact d'une surface correspondant à un côté interne d'un corps fritté d'une feuille découpée à partir du corps fritté, le corps fritté étant obtenu par moulage du PTFE et traitement thermique à 100 °C pendant 2 h, à 200 °C pendant 4 h et à 370 °C pendant 5 h, est ≥ 107 °, mesuré par le procédé défini dans la description en utilisant un appareil de mesure d'angle de contact portable.

7. PTFE selon l'une quelconque des revendications 1 à 6, qui est une poudre.

8. Corps étiré comprenant le PTFE selon l'une quelconque des revendications 1 à 7.
